# EUROPÄISCHE PATENTANMELDUNG

(11) **EP 2 939 540 A1**
(43) Veröffentlichungstag der Anmeldung: **04.11.2015**
(21) Anmeldenummer: 15167336.5
(22) Anmeldetag: 21.11.2009
(51) Int. Cl.: A01N 43/40, A01N 43/56, A01N 43/653, A01N 43/713, A01N 43/76, A01N 43/82, A01N 25/32, A01P 13/00

(54) **HERBIZID-SAFENER-KOMBINATION**

(30) Priorität: 29.11.2008 EP 08020782
(62) Teilanmeldung aus: 09760111.6
(71) Anmelder: Bayer Intellectual Property GmbH, 40789 Monheim am Rhein (DE)
(72) Erfinder: Rosinger, Christopher, 65719 Hofheim (DE); Hacker, Erwin, 88515 Langenenslingen (DE); Ahrens, Hartmut, 63329 Egelsbach (DE); Dietrich, Hansjörg, 65835 Liederbach am Taunus (DE); Ziemer, Frank, 65830 Kriftel (DE)
(74) Vertreter: BIP Patents

(57) **Zusammenfassung**

Beschrieben wird eine Zusammensetzung, enthaltend
(A) die Verbindung 4-Amino-3-chlor-6-(4-chlor-2-fluor-3-methoxyphenyl)pyridin-2-carbonsäuremethylester sowie
(B) einen oder mehrere Safener.

## Beschreibung

Die vorliegende Erfindung betrifft agrochemisch wirksame Herbizid-Safener-Kombinationen, Verfahren zu deren Herstellung sowie deren Verwendung zur Bekämpfung von Schadpflanzen.

Aus verschiedenen Schriften ist bekannt, dass bestimmte Pyridin-Derivate herbizide Eigenschaften besitzen. So sind in WO 2003/011853, WO 2006/062979 und WO 2007/082098 Pyridin-Derivate beschrieben, die ein breites Spektrum von Unkräutern bekämpfen. WO 2009/029518, ein nachveröffentlichter Stand der Technik, offenbart Mischungen von Auxin-Herbiziden mit weiteren herbiziden Wirkstoffen sowie in einigen Fällen Safenern. Eine Erhöhung der Selektivität oder Kulturpflanzenverträglichkeit durch die Benutzung von Safener wird nicht demonstriert, sondern lediglich synergistische Effekte der verschiedenen herbiziden Wirkstoffe. WO 1999/16744 offenbart Safener aus der Klasse der Acylsulfamoylbenzamide. Eine Wirkung auf herbizide Wirkstoffe der vorliegenden Erfindung wird nicht offenbart. WO 2001/035740 offenbart Mischungen von Pyridin-Herbiziden wie Propoxycarbazon mit weiteren Wirkstoffen. Die vorliegenden Pyridin-Herbizide sind allerdings strukturell verschieden von der dort offenbarten Stoffklasse.

Die bereits offenbarten Wirkstoffe bzw. Wirkstoff-kombinationen mit Auxin-Herbiziden sind zum Teil nicht voll verträglich mit einigen wichtigen Kulturpflanzen wie z.B. verschiedenen Getreidearten, Mais oder Reis. Sie können deshalb in manchen Kulturen nicht so eingesetzt werden, dass die erwünschte breite herbizide Wirksamkeit gegenüber Schadpflanzen gewährleistet ist.

Aufgabe der vorliegenden Erfindung ist es daher, herbizide Mittel zu finden, in welchen die Selektivität der oben genannten Herbizide gegenüber wichtigen Kulturpflanzen erhöht ist. Diese Aufgabe wird überraschend durch die erfindungsgemäßen Herbizid-Safener-Kombination gelöst.

Gegenstand der vorliegenden Erfindung ist daher eine Zusammensetzung, enthaltend
(A) eine oder mehrere Verbindungen der Formel (I) oder deren Salze, in welchen 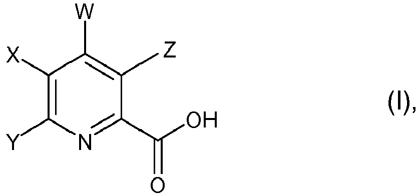
   - X: für Wasserstoff, Halogen, C₁-C₆-Alkyl, C₁-C₆-Alkoxy, C₁-C₆-Alkylthio, Aryloxy, Nitro, C₁-C₆-Haloalkyl, C₁-C₆-Haloalkoxy, Thiocyano oder Cyano steht;
   - Y: für eine Aryl-Gruppe, ausgewählt aus einer Gruppe, bestehend aus Phenyl, Indanyl und Naphthyl, oder für eine Heteroaryl-Gruppe, ausgewählt aus der Gruppe 5- und 6-gliedriger heteroaromatischer Ringe, enthaltend ein oder mehrere Heteroatome, wobei die heteroaromatischen Ringe optional mit einem anderen aromatischen System annelliert sein können, steht; die Aryl-Gruppe oder die Heteroaryl-Gruppe kann unsubstituiert oder substituiert sein mit einem oder mehreren Substituenten aus einer Gruppe bestehend aus Halogen, Hydroxy, Nitro, Cyano, Aryloxy, Formyl, C₁-C₆-Alkyl, Cyclopropyl, C₂-C₆-Alkenyl, C₂-C₆-Alkinyl, C₁-C₆-Alkoxy, halogeniertes C₁-C₆-Alkyl, C₁-C₄-Alkoxy-substituiertes C₁-C₄-Alkyl, halogeniertes C₁-C₆-Alkoxy, C₁-C₄-Alkoxy-substituiertes C₁-C₄-Alkoxy, C₁-C₆-Acyl, fluoriertes Acetyl, fluoriertes Propionyl, wobei die beiden letztgenannten Gruppen jeweils mehrere Fluoratome im Alkylrest enthalten können, C₁-C₆-Alkylthio, C₁-C₆-Alkylsulfinyl, C₁-C₆-Alkylsulfonyl, halogeniertes C₁-C₆-Alkylthio, Aryl, Amino, C₁-C₄-Monoalkylamino, C₂-C₈-Dialkylamino, C₁-C₆-Alkylcarbonyloxy, C₁-C₆-Alkylcarbonylamino, (C=O)OH, C₁-C₆-Alkoxycarbonyl, (C=O)NH₂, C₁-C₆-Alkylaminocarbonyl, C₁-C₆-Dialkylaminocarbonyl, -CH₂CH₂O-, - CH₂CH₂CH₂O-, -OCH₂O-, -O(CH₂)₂O-;
   - Z: für Halogen, C₁-C₆-Alkyl, C₁-C₆-Alkoxy, C₁-C₆-Alkylthio, Aryloxy, Nitro, C₁-C₆-Haloalkyl, C₁-C₆-Haloalkoxy, Thiocyano oder Cyano steht;
   - W: für NO₂, N₃, NR¹R², N=CR³R⁴ oder NHN=CR³R⁴ steht;
   - R¹ und R²: unabhängig voneinander für Wasserstoff, C₁-C₆-Alkyl, C₃-C₆-Alkenyl, C₃-C₆-Alkinyl, Aryl, Heteroaryl, Hydroxy, C₁-C₆-Alkoxy, Amino, C₁-C₆-Acyl, C₁-C₆-Alkoxycarbonyl, C₁-C₆-Alkylaminocarbonyl, C₁-C₆-Alkylsulfonyl, C₁-C₆-Trialkylsilyl oder C₁-C₆-Dialkylphosphonyl stehen; oder
   - R¹ und R²: zusammen mit N für einen fünf- oder sechsgliedrigen gesättigten oder ungesättigten Ring, der optional zusätzlich O-, S- oder N-Heteroatome enthalten kann, stehen;
   - R³ und R⁴: unabhängig voneinander für Wasserstoff, C₁-C₆-Alkyl, C₃-C₆-Alkenyl, C₃-C₆-Alkinyl, Aryl oder Heteroaryl stehen; oder
   - R³ und R⁴: zusammen mit =C für einen fünf- oder sechsgliedrigen gesättigten Ring stehen;
   oder herbizid-aktive Derivate der Carbonsäure-Gruppe,
   sowie
(B) einen oder mehrere Safener,

wobei generell und in allen Ausführungsformen Zusammensetzungen ausgeschlossen sind, die folgende Kombinationen weiterer herbizider Wirkstoffe und Safener enthalten:
- Pinoxaden und Cloquintocet-mexyl,
- Pyroxsulam und Cloquintocet-mexyl,
- Clodinafop-propargyl und Cloquintocet-mexyl,
- Mesosulfuron-methyl und lodosulfuron-methyl-natrium und Mefenpyr-diethyl,
- Fenoxaprop-P-ethyl und Mefenpyr-diethyl.

Gegenstand der vorliegenden Erfindung ist weiterhin die Verwendung der Safener zur Erhöhung der Selektivität und/oder Kulturpflanzenverträglichkeit der Herbizide der Formel (I).

Die erfindungsgemäßen Herbizid-Safener-Kombinationen können zusätzliche weitere Komponenten, beispielsweise Pflanzenschutzmittelwirkstoffe anderer Art und/oder im Pflanzenschutz übliche Zusatzstoffe und/oder Formulierungshilfsmittel, enthalten oder zusammen mit diesen eingesetzt werden.

Die Herbizide (A) und die Safener (B) können auf bekannte Weise angewendet werden, beispielsweise gemeinsam (beispielsweise als Co-Formulierung oder als Tank-Mischung) oder auch zeitlich versetzt (Splitting), z.B. auf die Pflanzen, Pflanzenteile, Pflanzensamen oder die Fläche, auf der die Pflanzen wachsen. Möglich ist z.B. die Anwendung der Einzelwirkstoffe oder der Herbizid-Safener-Kombination in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination. Möglich ist auch die Anwendung der Einzelwirkstoffe oder der Herbizid-Safener-Kombination zur Saatgutbehandlung.

### Verbindung der allgemeinen Formel (I)

Die genannte Formel (I) umfasst alle Stereoisomeren und deren Gemische, insbesondere auch racemische Gemische, und - soweit Enantiomere möglich sind - beide Enantiomere und insbesondere das jeweils biologisch wirksame Enantiomer.

In einer ersten Ausführungsform der vorliegenden Erfindung sind als Herbizid (A) Verbindungen der allgemeinen Formel (I) und deren Salze bevorzugt, worin der Rest
- X: für Wasserstoff oder Fluor
steht.
In einer zweiten Ausführungsform der vorliegenden Erfindung sind als Herbizid (A) Verbindungen der Formel (I) und deren Salze bevorzugt, worin der Rest
- Y: für eine Phenyl-Gruppe oder für eine Pyridinyl-, Benzofuranyl-, Benzothienyl-, Thienyl- oder Thiazolylgruppe steht, wobei die Phenyl-Gruppe oder die Heteroaryl-Gruppe substituiert sein kann mit einem oder mehreren Substituenten, ausgewählt aus der Gruppe, bestehend aus Halogen, C₁-C₂-Alkyl, C₁-C₂-Alkoxy, C₁-C₂-Halogenalkyl und C₁-C₂-Halogenalkoxy.

Als Herbizid (A) besonders bevorzugt sind in dieser zweiten Ausführungsform Verbindungen der Formel (I) und deren Salze, worin der Rest
- Y: für eine Phenyl-Gruppe oder für eine Pyridinyl-, Benzofuranyl-, Benzothienyl-, Thienyl- oder Thiazolylgruppe steht, wobei die Phenyl-Gruppe oder die Heteroaryl-Gruppe substituiert ist mit einem oder mehreren Substituenten, ausgewählt aus der Gruppe, bestehend aus Halogen, C₁-C₂-Alkyl, C₁-C₂-Alkoxy, C₁-C₂-Halogenalkyl und C₁-C₂-Halogenalkoxy.

Als Herbizid (A) noch weiter bevorzugt sind in dieser zweiten Ausführungsform Verbindungen der Formel (I) und deren Salze, worin der Rest
- Y: für eine drei- oder vierfach substituierte Phenyl-Gruppe steht, wobei die Phenyl-Gruppe substituiert ist mit Substituenten, unabhängig voneinander ausgewählt aus der Gruppe, bestehend aus Halogen, C₁-C₂-Alkyl, C₁-C₂-Alkoxy, C₁-C₂-Halogenalkyl und C₁-C₂-Halogenalkoxy.

In einer dritten Ausführungsform der vorliegenden Erfindung sind als Herbizid (A) Verbindungen der Formel (I) und deren Salze bevorzugt, worin der Rest
- Z: für Halogen
steht.

Als Herbizid (A) besonders bevorzugt sind in dieser dritten Ausführungsform Verbindungen der Formel (I) und deren Salze, worin der Rest
- Z: für Chlor
steht.

In einer vierten Ausführungsform der vorliegenden Erfindung sind als Herbizid (A) Verbindungen der Formel (I) und deren Salze bevorzugt, worin der Rest
- W: für NH₂ oder N(R¹)(R²)
steht, wobei
R¹ und R², jeweils unabhängig voneinander, für Wasserstoff oder C₁-C₆-Alkyl stehen.

Die Aminogruppe an der 4-Position kann unsubstituiert oder mit einem oder mehreren C₁-C₆-Alkyl-, C₃-C₆-Alkenyl-, C₃-C₆-Alkinyl-, Aryl-, Heteroaryl-, Hydroxy-, C₁-C₆-Alkoxy- oder Amino-Substituenten substituiert sein. Die Aminogruppe kann ferner als ein Amid, ein Carbamat, ein Harnstoff, ein Sulfonamid, ein Silylamin, ein Phosphoramidat, ein Imin oder ein Hydrazon derivatisiert sein. Diese Derivate können zu dem Amin gespalten werden. Bevorzugt ist eine unsubstituierte oder eine mit ein oder zwei Alkylsubstituenten substituierte Aminogruppe.

Man nimmt an, dass die Carbonsäuren der allgemeinen Formel (I) die Verbindungen sind, die tatsächlich die unerwünschte Vegetation töten oder kontrollieren und diese werden üblicherweise bevorzugt. Analoga dieser Verbindungen, in denen die Säuregruppe der Picolinsäure derivatisiert wurde um einen verwandten Substituenten zu bilden der in den Pflanzen oder in der Umwelt in eine Säure umgewandelt werden kann, besitzen im Wesentlichen die gleiche herbizide Wirkung und liegen im Rahmen der Erfindung. Daher ist ein "herbizid-aktives Derivat" ein beliebiges Salz, Ester, Acylhydrazid, Imidat, Thioimidat, Amidin, Amid, Orthoester, Acylcyanid, Acylhalogenid, Thioester, Thionester, Dithiolester, Nitril oder ein beliebig anderes dem Fachmann bekanntes Säurederivat, das (a) die herbizide Wirkung des aktiven Wirkstoffs, nämlich der 6-Aryl- oder Heteroaryl-4-aminopicolinsäure, nicht wesentlich beeinträchtigt, und (b) in Pflanzen oder im Erdboden zur Picolinsäure der allgemeinen Formel (I) hydrolysiert, oxidiert oder metabolisiert wird oder werden kann, die abhängig vom pH-Wert in der dissoziierten oder in der undissoziierten Form vorliegt. Die bevorzugten herbizid-aktiven Derivate der Carbonsäure sind landwirtschaftlich annehmbare Salze, Ester und Amide. Ebenso ist ein "herbizid-aktives Derivat" hinsichtlich der Amin-Funktionalität in der 4-Position ein beliebiges Salz, Silylamin, Phosphorylamin, Phosphinimin, Phosphoramidat, Sulfonamid, Sulfilimin, Sulfoximin, Aminal, Hemiaminal, Amid, Thioamid, Carbamat, Thiocarbamat, Amidin, Harnstoff, Imin, Nitro, Nitroso, Azid, oder ein beliebig anderes dem Fachmann bekanntes stickstoffhaltiges Derivat, das (a) die herbizide Wirkung des aktiven Wirkstoffs, nämlich der 6-Aryl- oder Heteroaryl-4-aminopicolinsäure, nicht wesentlich beeinträchtigt, und (b) in Pflanzen oder im Erdboden zu einem freien Amin der Formel allgemeinen Formel (I) hydrolysiert wird oder werden kann. N-Oxide, die ebenfalls zu dem Ausgangs-Pyridin der Formel I gespalten werden können, sind ebenfalls im Rahmen der Erfindung umfasst.

Geeignete Salze umfassen jene die von Alkali- oder Erdalkalimetallen abgeleitet sind und jene die von Ammoniak und Aminen abgeleitet sind. Bevorzugte Kationen umfassen Natrium, Kalium, Magnesium, und Ammonium-Kationen der Formel:

R₅R₆R₇NH

worin R₅, R₆ und R₇ jeweils unabhängig voneinander Wasserstoff oder C₁-C₁₂-Alkyl, C₃-C₁₂-Alkenyl oder C₃-C₁₂-Alkinyl darstellen, wobei jedes gegebenenfalls mit einem oder mehreren Hydroxy-, C₁-C₄-Alkoxy-, C₁-C₄-Alkylthio- oder Phenyl-Gruppen substituiert ist, mit der Maßgabe, dass R₅, R₆ und R₇ sterisch kompatibel sind. Zusätzlich können jeweils zwei aus R₅, R₆ und R₇ zusammen eine aliphatische difunktionale Einheit darstellen, die 1 bis 12 Kohlenstoffatome und bis zu zwei Sauerstoff-'oder Schwefelatome enthält. Salze der Verbindungen der allgemeinen Formel (I) können durch Behandlung der Verbindungen der allgemeinen Formel (I) mit einem Metallhydroxid, wie z.B. Natriumhydroxid, oder einem Amin, wie z.B. Ammoniak, Trimethylamin, Diethanolamin, 2-Methylthiopropylamin, Bisallylamin, 2-Butoxyethylamin, Morpholin, Cyclododecylamin, oder Benzylamin hergestellt werden. Die Aminsalze sind oft die bevorzugten Formen der Verbindungen der allgemeinen Formel (I), da sie wasserlöslich sind und sich für die Herstellung der gewünschten Herbizidzusammensetzungen auf Wasser Basis eignen.

Geeignete Ester umfassen jene, die von C₁-C₁₂-Alkyl-, C₃-C₁₂-Alkenyl- oder C₃-C₁₂-Alkinylalkoholen, wie z.B. Methanol, iso-Propanol, Butanol, 2-Ethylhexanol, Butoxyethanol, Methoxypropanol, Allylalkohol, Propargylalkohol oder Cyclohexanol, abgeleitet sind. Ester können durch Kopplung der Picolinsäure mit dem Alkohol unter Verwendung einer beliebigen Anzahl geeigneter Aktivierungsmittel wie z.B. jene, die in den Peptidkopplungen verwendet werden, wie z.B. Dicyclohexylcarbodiimid (DCC) oder Carbonyldiimidazol (CDI), durch Umsetzten des entsprechenden Säurechlorids einer Picolinsäure der allgemeinen Formel (I) mit einem geeigneten Alkohol oder durch Umsetzen der entsprechenden Picolinsäure der allgemeinen Formel (I) mit einem geeigneten Alkohol in Anwesenheit eines Säurekatalysators hergestellt werden. Geeignete Amide umfassen jene, die von Ammoniak oder von C₁-C₁₂-Alkyl, C₃-C₁₂-Alkenyl oder C₃-C₁₂-Alkinyl mono- oder disubstituierten Aminen, wie z.B., aber nicht begrenzt auf, Dimethylamin, Diethanolamin, 2-Methylthiopropylamin, Bisallylamin, 2-Butoxyethylamin, Cyclododecylamin, Benzylamin oder zyklischen oder aromatischen Aminen mit oder ohne zusätzlichen Heteroatomen wie z.B., aber nicht begrenzt auf, Aziridin, Azetidin, Pyrrolidin, Pyrrol, Imidazol, Tetrazol oder Morpholin, abgeleitet sind. Amide können durch Umsetzen des entsprechenden Picolinsäurechlorids, gemischten Anhydrids, oder Carbonsäureesters der allgemeinen Formel (I) mit Ammoniak oder einem geeigneten Amin hergestellt werden.

Die Verbindungen der allgemeinen Formel (I) können ferner durch Anlagerung einer geeigneten anorganischen oder organischen Säure, wie beispielsweise HCl, HBr, H₂SO₄ oder HNO₃, aber auch Oxalsäure oder Sulfonsäuren an eine basische Gruppe, wie z.B. Amino oder Alkylamino, Salze bilden. Geeignete Substituenten, die in deprotonierter Form, wie z.B. Sulfonsäuren oder Carbonsäuren, vorliegen, können innere Salze mit ihrerseits protonierbaren Gruppen, wie Aminogruppen bilden. Salze können ebenfalls dadurch gebildet werden, dass bei geeigneten Substituenten, wie z.B. Sulfonsäuren oder Carbonsäuren, der Wasserstoff durch ein für die Landwirtschaft geeignetes Kation ersetzt wird. Diese Salze sind beispielsweise Metallsalze, insbesondere Alkalimetallsalze oder Erdalkalimetallsalze, insbesondere Natrium- und Kaliumsalze, oder auch Ammoniumsalze, Salze mit organischen Aminen oder quartäre (quaternäre) Ammoniumsalze mit Kationen der Formel [NRR'R"R"']⁺, worin R bis R'" jeweils unabhängig voneinander einen organischen Rest, insbesondere Alkyl, Aryl, Aralkyl oder Alkylaryl darstellen.

Insbesondere können die Verbindungen der allgemeinen Formel (I) auch N-Oxide umfassen. Entsprechende Pyridin-N-Oxide sind über eine Oxidation der entsprechenden Pyridine zugänglich. Geeignete Oxidationsmethoden sind beispielsweise in Houben-Weyl, Methoden der organischen Chemie, Erweiterungs- und Folgebände zur 4. Auflage, Band E 7b, S. 565 f. beschrieben.

Sofern es im Einzelnen nicht anders definiert wird, gelten für die Reste der Formel (I) im Allgemeinen die folgenden Definitionen.

In Formel (I) können die Reste Alkyl, Alkoxyalkyl, Hydroxyalkyl und Alkoxyalkoxyalkyl jeweils geradkettig oder verzweigt sein.

Im Rahmen der vorliegenden Erfindung versteht man unter dem Begriff "Alkyl" insbesondere die Reste Methyl; Ethyl; n-Propyl; iso-Propyl; n-Butyl; sec.-Butyl; tert.-Butyl; oder die verschiedenen Isomere von Pentyl oder Hexyl.

Im Rahmen der vorliegenden Erfindung versteht man unter dem Begriff "Alkoxyalkyl" mit einem Alkoxysubstituenten versehenes Alkyl. Beispiele für den Rest "Alkoxyalkyl" umfassen CH₃OCH₂, CH₃OCH₂CH₂, CH₃CH₂OCH₂, CH₃CH₂CH₂CH₂OCH₂, CH₃CH₂OCH₂CH₂, CH₃CH₂CH₂CH₂OCH₂CH₂ oder CH₃CH₂CH₂CH₂OCH₂CHMe.

Im Rahmen der vorliegenden Erfindung versteht man unter dem Begriff "Alkoxyalkoxy" mit einem Alkoxysubstituenten versehenes Alkoxy.

Im Rahmen der vorliegenden Erfindung versteht man unter dem Begriff "Alkoxyalkoxyalkyl" einen Rest, bei welchem ein Alkoxyalkoxysubstituent an einem Alkylrest gebunden ist. Beispiele für "Alkoxyalkoxyalkyl" umfassen CH₃OCH₂OCH₂, CH₃OCH₂OCH₂CH₂, CH₃CH₂OCH₃OCH₂ und CH₃OCH₃CH₂OCH₂CH₂.

Im Rahmen der vorliegenden Erfindung versteht man unter dem Begriff "Hydroxyalkyl" mit einem Hydroxysubstituenten versehenes Alkyl. Beispiele für "Hydroxyalkyl" umfassen HOCH₂CH₂, HOCH₂CH₂CH₂ und HOCH₂CH₂CH₂CH₂.

Bei Resten mit Kohlenstoff-Atomen sind grundsätzlich solche mit 1 bis 6 Kohlenstofftomen-Atomen, vorzugsweise 1 bis 4 Kohlenstofftomen-Atomen, insbesondere 1 oder 2 Kohlenstofftomen-Atomen, bevorzugt.

Gegenstand der vorliegenden Erfindung sind auch Mischungen, umfassend Stereoisomere, die von Formel (I) oder von den Formeln der Komponente B (Safener) umfasst sind. Solche Verbindungen der Formel (I) oder der Formeln der Komponente B (Safener) enthalten beispielsweise ein oder mehrere asymmetrisch substituierte Kohlenstoff-Atome oder Sulfoxide. Die durch ihre spezifische Raumform definierten möglichen Stereoisomeren, wie Enantiomere und Diastereomere, sind alle von der Formel (I) oder von den Formeln der Komponente B (Safener) umfasst und können nach üblichen Methoden aus Gemischen der Stereoisomeren erhalten oder auch durch stereoselektive Reaktionen in Kombination mit dem Einsatz von stereochemisch reinen Ausgangs- oder Hilfsstoffen hergestellt werden.

Beispiele für als Herbizid (A) verwendete Verbindungen sind im Folgenden aufgeführt:
Methyl-4-amino-3-chlor-6-(5-brom-2-thiazolyl)pyridin-2-carboxylat (Verbindung I-1)
Methyl-4-amino-3,5-dichlor-6-(5-chlor-2-furanyl)pyridin-2-carboxylat (Verbindung I-2)
Methyl-4-amino-3-chlor-6-(1-methyl-1 H-pyrazol-3-yl)pyridin-2-carboxylat (Verbindung I-3)
Methyl-4-amino-3-chlor-6-(1-methyl-1 H-pyrazol-5-yl)pyridin-2-carboxylat (Verbindung I-4)
Methyl-4-amino-3-chlor-6-(3-pyrazolyl)pyridin-2-carboxylat (Verbindung I-5)
Methyl-4-amino-3-chlor-6-(4-triazolyl)pyridin-2-carboxylat (Verbindung I-6)
Methyl-4-amino-3-chlor-6-(5-oxazolyl)pyridin-2-carboxylat (Verbindung I-7)
Methyl-4-amino-3-chlor-6-(2-(5-methyl-1,3,4-thiadiazolyl))pyridin-2-carboxylat (Verbindung I-8)
Methyl-4-amino-3-chlor-6-(2-benzthiazolyl)pyridin-2-carboxylat (Verbindung I-9)
Methyl-4-amino-3-chlor-6-(1-methyl-1H-tetrazol-5-yl)pyridin-2-carboxylat (Verbindung 1-10)
Methyl-4-amino-3-chlor-6-(2-methyl-2H-tetrazol-5-yl)pyridin-2-carboxylat (Verbindung I-11)
Methyl-4-amino-3-chlor-6-(3,4-dimethylphenyl)pyridin-2-carboxylat (Verbindung 1-12)
Methyl-4-amino-3-chlor-6-(2,4-dichlorphenyl)pyridin-2-carboxylat (Verbindung 1-13)
Methyl-4-amino-3-chlor-5-fluor-6-(4-chlorphenyl)pyridin-2-carboxylat (Verbindung 1-14)
Mehyl-4-amino-3,5-dichlor-6-(4-methoxyphenyl)pyridin-2-carboxylat (Verbindung I-15)
Methyl-4-amino-3-chlor-6-phenylpyridin-2-carboxylat (Verbindung I-16)
Methyl-4-amino-3-chlor-6-(4-methoxyphenyl)pyridin-2-carboxylat (Verbindung I-17)
Methyl-4-amino-6-(4-methylphenyl)-3-(trifluormethyl)pyridin-2-carboxylat (Verbindung I-18)
Methyl-4-amino-3-chlor-6-(4-chlorphenyl)pyridin-2-carboxylat (Verbindung I-19)
Methyl-4-amino-3-chlor-6-(4-methylphenyl)pyridin-2-carboxylat (Verbindung I-20)
Methyl-4-amino-3-chlor-6-(3-methylphenyl)pyridin-2-carboxylat (Verbindung I-21)
Methyl-4-amino-3-chlor-6-(4-thiomethoxyphenyl)pyridin-2-carboxylat (Verbindung I-22)
Methyl-4-amino-3-chlor-6-(2-methoxyphenyl)pyridin-2-carboxylat (Verbindung I-23)
Methyl-4-amino-3-chlor-6-(3-methoxyphenyl)pyridin-2-carboxylat (Verbindung I-24)
Methyl-4-amino-3-chlor-6-(2-methylphenyl)pyridin-2-carboxylat (Verbindung I-25)
Methyl-4-amino-3-chlor-6-(2-chlorphenyl)pyridin-2-carboxylat (Verbindung I-26)
Methyl-4-amino-3-chlor-6-(3-chlorphenyl)pyridin-2-carboxylat (Verbindung I-27)
Methyl-4-amino-3-chlor-6-[4-(trifluormethyl)phenyl]pyridin-2-carboxylat (Verbindung I-28)
Methyl-4-amino-3-chlor-6-(3,4-methylendioxyphenyl)pyridin-2-carboxylat (Verbindung I-29)
Methyl-4-amino-3-chlor-6-(4-ethylphenyl)pyridin-2-carboxylat (Verbindung I-30)
Methyl-4-amino-3-chlor-6-(4-acetylphenyl)pyridin-2-carboxylat (Verbindung I-31)
Methyl-4-amino-3-chlor-6-(5-brom-2-methoxyphenyl)pyridin-2-carboxylat (Verbindung I-32)
Methyl-4-amino-3-chlor-6-(2-fluorphenyl)pyridin-2-carboxylat (Verbindung I-33)
Methyl-4-amino3-chlor-6-(3,5-difluorphenyl)pyridin-2-carboxylat (Verbindung I-34)
Methyl-4-amino-3-chlor-6-(4-isopropylphenyl)pyridin-2-carboxylat (Verbindung I-35)
Methyl-4-amino-3-chlor-6-(4-biphenyl)pyridin-2-carboxylat (Verbindung I-36)
Methyl-4-amino-3-chlor-6-(2-fluorphenyl)pyridin-2-carboxylat (Verbindung I-37)
Methyl-4-amino-3-chlor-6-(4-chlor-3-methylphenyl)pyridin-2-carboxylat (Verbindung I-38)
Methyl-4-amino-3-chlor-6-(3-chlor-4-fluorphenyl)pyridin-2-carboxylat (Verbindung I-39)
Methyl-4-amino-3-chlor-6-(3,4-dichlorphenyl)pyridin-2-carboxylat (Verbindung I-40)
Methyl-4-amino-3-chlor-6-(4-formylphenyl)pyridin-2-carboxylat (Verbindung I-41)
Methyl-4-amino-3-chlor-6-(3-cyanophenyl)pyridin-2-carboxylat (Verbindung I-42)
Methyl-4-amino-3-chlor-6-(4-fluorphenyl)pyridin-2-carboxylat (Verbindung I-43)
Methyl-4-amino-3,5-dichlor-6-[4-(trifluormethyl)phenyl]pyridin-2-carboxylat (Verbindung I-44)
Methyl-4-amino-3-chlor-6-(4-chlor-2-methylphenyl)pyridin-2-carboxylat (Verbindung I-45)
Methyl-4-amino-3-chlor-6-(3,5-bis-(trifluormethyl)phenyl)pyridin-2-carboxylat (Verbindung I-46)
Methyl-4-amino-3-chlor-6-(2-naphthyl)pyridin-2-carboxylat (Verbindung I-47)
Methyl-4-amino-3-chlor-5-fluor-6-(4-methylphenyl)-pyridin-2-carboxylat (Verbindung I-48)
Methyl-4-acetamido-3-chlor-5-fluor-6-(2,4-dichlorphenyl)pyridin-2-carboxylat (Verbindung I-49)
Methyl-4-amino-3-chlor-6-(3,4-difluormethylendioxyphenyl)pyridin-2-carboxylat (Verbindung I-50)
Methyl-4-amino-3-chlor-6-(3,5-difluorphenyl)pyridin-2-carboxylat (Verbindung I-51)
Methyl-4-acetamido-3-chlor-6-(4-chlor-2-fluorphenyl)pyridin-2-carboxylat (Verbindung I-52)
Methyl-4-acetamido-3-chlor-6-(4-chlorphenyl)pyridin-2-carboxylat (Verbindung I-53)
Methyl-4-acetamido-3-chlor-6-(2-chlor-4-fluorphenyl)pyridin-2-carboxylat (Verbindung I-54)
Methyl-4-acetamido-3-chlor-6-(2,6-difluorphenyl)pyridin-2-carboxylat (Verbindung I-55)
Methyl-4-amino-3-chlor-6-[4-(trifluormethoxy)phenyl]pyridin-2-carboxylat (Verbindung I-56)
Methyl-4-acetamido-3-chlor-6-(2,5-dichlorphenyl)pyridin-2-carboxylat (Verbindung I-57)
Methyl-4-amino-3-chlor-6-(2-chlor-4-fluorphenyl)pyridin-2-carboxylat (Verbindung I-58)
Methyl-4-amino-3-chlor-6-(4-chlor-2-fluorphenyl)pyridin-2-carboxylat (Verbindung I-59)
Methyl-4-acetamido-3-chlor-6-(4-chlor-3-fluorphenyl)pyridin-2-carboxylat (Verbindung I-60)
Methyl-4-amino-3-chlor-6-(4-chlor-3-fluorphenyl)pyridin-2-carboxylat (Verbindung I-61)
Methyl-4-amino-3-chlor-6-[2-chlor-4-(trifluormethyl)phenyl]pyridin-2-carboxylat (Verbindung I-62)
Methyl-4-acetamido-3-chlor-6-(3,4-dimethoxyphenyl)pyridin-2-carboxylat (Verbindung I-63)
Methyl-4-amino-3-chlor-6-(3,4-dimethoxyphenyl)pyridin-2-carboxylat (Verbindung I-64)
Methyl-4-amino-3-chlor-5-fluor-6-(4-chlorphenyl)pyridin-2-carboxylat (Verbindung I-65)
Methyl-4-acetamido-3-chlor-6-(4-chlor-2-methoxyphenyl)pyridin-2-carboxylat (Verbindung I-66)
Methyl-4-amino-3-chlor-6-(3,4-ethylenedioxyphenyl)pyridin-2-carboxylat (Verbindung I-67)
Methyl-4-amino-3-chlor-6-(4-chlor-2-methoxyphenyl)pyridin-2-carboxylat (Verbindung I-68)
Methyl-4-acetamido-3-chlor-6-(3,4-methylendioxyphenyl)pyridin-2-carboxylat (Verbindung I-69)
Methyl-4-acetamdo-3-chlor-6-(4-chlor-3-methoxymethylphenyl)pyridin-2-carboxylat (Verbindung I-70)
Methyl-4-amino-3-chlor-6-(4-chlor-3-methoxymethylphenyl)pyridin-2-carboxylat (Verbindung I-71)
Methyl-4-acetamido-3-chlor-6-(2-chlor-3,4-methylendioxyphenyl)pyridin-2-carboxylat (Verbindung I-72)
Methyl-4-amino-3-chlor-6-(2-chlor-3,4-methylendioxyphenyl)pyridin-2-carboxylat (Verbindung I-73)
Methyl-4-acetamido-3-chlor-6-(5-indanyl)pyrdin-2-carboxylat (Verbindung I-74)
Methyl-4-amino-3-chlor-6-(5-indanyl)pyridin-2-carboxylat (Verbindung I-75)
Methyl-4-acetamido-3-chlor-6-(2,3-dihydro-5-benzofuranyl)pyridin-2-carboxylat (Verbindung I-76)
Methyl-4-amino-3-chlor-6-(2,3-dihydro-5-benzofuranyl)pyridin-2-carboxylat (Verbindung I-77)
Methyl-4-acetamido-3-chlor-6-(5-chlor-2-fluor-4-methylphenyl)pyridin-2-carboxylat (Verbindung I-78)
Methyl-4-amino-3-chlor-6-(5-chlor-2-fluor-4-methylphenyl)pyridin-2-carboxylat (Verbindung I-79)
Methyl-4-amino-3-chlor-6-(4-methoxy-3-methylphenyl)pyridin-2-carboxylat (Verbindung I-80)
Methyl-4-acetamido-3-chlor-6-(2,5-dimethoxyphenyl)pyridin-2-carboxylat (Verbindung I-81)
Methyl-4-amino-3-chlor-6-(2,5-dimethoxyphenyl)pyridin-2-carboxylat (Verbindung I-82)
Methyl-4-acetamido-3-chlor-6-(4-methylphenyl)pyridin-2-carboxylat (Verbindung I-83)
Methyl-4-amino-3-chlor-5-fluor-6-(3,4-methylendioxyphenyl)pyridin-2-carboxylat (Verbindung I-84)
Methyl-4-amino-3-chlor-5-fluor-6-(2,3-dihydro-5-benzofuranyl)pyridin-2-carboxylat (Verbindung I-85)
Methyl-4-amino-3,5-dichlor-6-(4-chlorphenyl)pyridin-2-carboxylat (Verbindung I-86)
Methyl-4-acetamido-3-chlor-6-(1-methyl-1H-pyrazol-4-yl)pyridin-2-carboxylat (Verbindung I-87)
Methyl-4-amino-3-chlor-5-fluoro-6-(2,4-dichlorphenyl)pyridin-2-carboxylat (Verbindung I-88)
Methyl-4-N-pyrrolyl-3-chlor-6-(4-methylphenyl)pyridin-2-carboxylat (Verbindung I-89)
Methyl-4-amino-3,5-difluor-6-(4-chlorphenyl)pyridin-2-carboxylat (Verbindung I-90)
Methyl-4-amino-3,5-difluor-6-(4-methylphenyl)pyridin-2-carboxylat (Verbindung I-91)
Methyl-4-amino-3,5-difluor-6-(2-chlor-4-methylphenyl)pyridin-2-carboxylat (Verbindung I-92)
Methyl-4-amino-3,5-difluor-6-(4-chlor-2-fluorphenyl)pyridin-2-carboxylat (Verbindung I-93)
Methyl-4-amino-3,5-difluor-6-[4-(trifluormethyl)phenyl]pyridin-2-carboxylat (Verbindung I-94)
Methyl-4-amino-3,5-difluor-6-(3,4-methylendioxyphenyl)pyridin-2-carboxylat (Verbindung I-95)
Methyl-4-amino-3-chlor-6-(2-benzofuranyl)pyridin-2-carboxylat (Verbindung I-96)
Methyl-4-acetamido-3-chlor-6-(2-benzothienyl)pyridin-2-carboxylat (Verbindung I-97)
Methyl-4-amino-3-chlor-6-(5-chlor-2-thienyl)pyridin-2-carboxylat (Verbindung I-98)
Methyl-4-acetamido-6-(2-benzofuranyl)-3-chlorpyridin-2-carboxylat (Verbindung I-99)
Methyl-4-amino-3-chlor-6-(3,5-dimethyl-4-isoxazolyl)pyridin-2-carboxylat (Verbindung I-100)
Methyl-4-acetamido-3-chlor-6-(3-thienyl)pyridin-2-carboxylat (Verbindung I-101)
Methyl-4-amino-3-chlor-6-(3-pyridyl)pyridin-2-carboxylat (Verbindung I-102)
Methyl-4-acetamido-3-chlor-6-(2-thiazolyl)pyridin-2-carboxylat (Verbindung I-103)
Methyl-4-amino-3,5-dichlor-6-(2-furanyl)pyridin-2-carboxylat (Verbindung 1-104)
Methyl-4-amino-3,5-dichlor-6-(2-thienyl)pyridin-2-carboxylat (Verbindung 1-105)
Methyl-4-amino-3-chlor-6-(2-thienyl)pyridin-2-carboxylat (Verbindung 1-106)
Methyl-4-amino-3-chlor-6-(6-methoxy-4-pyridinyl)pyridin-2-carboxylat (Verbindung I-107)
Methyl-4-amino-3-chlor-6-(6-hydroxy-3-pyridinyl)pyridin-2-carboxylat (Verbindung I-108)
Methyl-4-amino-3-chlor-6-(2-pyridinyl)pyridin-2-carboxylat (Verbindung 1-109)
Methyl-4-amino-3-chlor-6-(2-furanyl)pyridin-2-carboxylat (Verbindung I-110)
Methyl-4-amino-3-chlor-6-(5-chlor-2-pyridyl)pyridin-2-carboxylat (Verbindung I-111)
Methyl-4-acetamido-3-chlor-6-(3-(6-methyl)pyridazyl)pyridin-2-carboxylat (Verbindung I-112)
Methyl-4-amino-3-chlor-5-fluor-6-(2-thiazolyl)pyridin-2-carboxylat (Verbindung I-113)
Methyl-4-amino-3-chlor-6-(2-(5-methylthiazolyl))pyridin-2-carboxylat (Verbindung I-114)
Methyl-4-amino-3,5-dichlor-6-(5-thiazolyl)pyridin-2-carboxylat (Verbindung I-115)
Methyl-4-acetamido-3-chlor-6-(5-(2-chlor)pyrimidinyl)-pyridin-2-carboxylat (Verbindung I-116)
Methyl-4-acetamido-3-chlor-6-(5-pyrimidinyl)pyridin-2-carboxylat (Verbindung I-117)
Methyl-4-acetamido-3-chlor-6-(3-(6-methyl)pyridazinyl)pyridin-2-carboxylat (Verbindung I-118)
Methyl-4-acetamido-3-chlor-6-(3-brom-5-isoxazoyl)pyridin-2-carboxylat (Verbindung I-119)
Methyl-4-acetamido-3-chlor-6-(3-brom-4-isoxazoyl)pyridin-2-carboxylat (Verbindung I-120)
Methyl-4-amino-3-chlor-6-(3-(6-methyl)pyridazinyl)pyridin-2-carboxylat (Verbindung I-121)
Methyl-4-amino-3-chlor-6-(3-thienyl)pyridin-2-carboxylat (Verbindung I-122)
Methyl-4-amino-3-chlor-6-(2-thiazolyl)pyridin-2-carboxylat (Verbindung I-123)
Methyl-4-amino-3-chlor-6-(1-methyl-1 H-pyrazol-4-yl)pyridin-2-carboxylat (Verbindung I-124)
Methyl-4-amino-3-chlor-6-(2-benzothienyl)pyridin-2-carboxylat (Verbindung 1-125)
Methyl-4-amino-3-chlor-6-(5-pyrimidinyl)pyridin-2-carboxylat (Verbindung I-126)
Methyl-4-amino-3-chlor-6-(6-hydroxy-3-pyridinyl)pyridin-2-carboxylat (Verbindung I-127)
Methyl-4-amino-3-chlor-6-(6-chloro-3-pyridinyl)pyridin-2- carboxylat (Verbindung I-128)
Methyl-4-amino-3-chlor-6-(4-(2-methylthiazolyl))pyridin-2-carboxylat (Verbindung I-129)
Methyl-4-amino-3-chlor-6-(3-brom-5-isoxazoyl)pyridin-2-carboxylat (Verbindung I-130)
Methyl-4-amino-3-chlor-6-(3-brom-4-isoxazoyl)pyridin-2-carboxylat (Verbindung I-131)
4-Amino-3-chlor-6-(3,4-dimethylphenyl)pyridin-2-carbonsäure (Verbindung I-132)
4-Amino-3,5-dichlor-6-(phenyl)pyridin-2-carbonsäure (Verbindung I-133)
4-Amino-3,5-dichlor-6-(4-methoxyphenyl)pyridin-2-carbonsäure (Verbindung I-134)
4-Amino-3-chlor-6-(phenyl)pyridin-2-carbonsäure (Verbindung I-135)
4-Amino-3-chlor-6-(4-methylphenyl)pyridin-2-carbonsäure (Verbindung I-136)
4-Amino-3-chlor-6-(4-thiomethylphenyl)pyridin-2-carbonsäure (Verbindung I-137)
4-Amino-3-chlor-6-(3-methylphenyl)pyridin-2-carbonsäure (Verbindung I-138)
4-Amino-3-chlor-6-(2-methoxyphenyl)pyridin-2-carbonsäure (Verbindung I-139)
4-Amino-3-chlor-6-(2-chlorphenyl)pyridin-2-carbonsäure (Verbindung I-140)
4-Amino-3-chlor-6-(4-methoxyphenyl)pyridin-2-carbonsäure (Verbindung I-141)
4-Amino-3-chlor-6-(2-fluorphenyl)pyridin-2-carbonsäure (Verbindung 142)
4-Amino-3-chlor-6-(3-chlorphenyl)pyridin-2-carbonsäure (Verbindung I-143)
4-Amino-3-chlor-6-(4-acetylphenyl)pyridin-2-carbonsäure (Verbindung I-144)
4-Amino-3-chlor-6-(2,4-difluorphenyl)pyridin-2-carbonsäure (Verbindung I-145)
4-Amino-3-chlor-6-(2,4-dichlorphenyl)pyridin-2-carbonsäure (Verbindung I-146)
4-Amino-3-chlor-6-(4-isopropylphenyl)pyridin-2-carbonsäure (Verbindung I-147)
4-Amino-3-chlor-6-(4-biphenyl)pyridin-2-carbonsäure (Verbindung I-148)
4-Amino-3-chlor-6-(4-chlor-3-methylphenyl)pyridin-2-carbonsäure (Verbindung I-149)
4-Amino-3-chlor-6-(3,4-dichlorphenyl)pyridin-2-carbonsäure (Verbindung I-150)
4-Amino-3-chlor-6-(3-chlor-4-fluorphenyl)pyridin-2-carbonsäure (Verbindung I-151)
4-Amino-3-chlor-6-[4-(trifluormethyl)phenyl]pyridin-2-carbonsäure (Verbindung I-152)
4-Amino-3-chlor-6-(3,4-methylendioxyphenyl)pyridin-2-carbonsäure (Verbindung I-153)
4-Amino-3-chlor-6-(4-chlorphenyl)pyridin-2-carbonsäure (Verbindung I-154)
4-Amino-3-chlor-6-(4-chlor-2-methylphenyl)pyridin-2-carbonsäure (Verbindung I-155)
4-Amino-3-chlor-6-(4-fluorphenyl)pyridin-2-carbonsäure (Verbindung I-156)
4-Amino-3-chlor-6-[3-(trifluormethyl)phenyl]pyridin-2-carbonsäure (Verbindung I-157)
4-Amino-3-chlor-6-(2-fluor-4-methylphenyl)pyridin-2-carbonsäure (Verbindung I-158)
4-Amino-3-chlor-6-(4-hydroxymethylphenyl)pyridin-2-carbonsäure (Verbindung I-159)
4-Amino-3-chlor-6-[4-(fluormethyl)phenyl]pyridin-2-carbonsäure (Verbindung I-160)
4-Amino-3-chlor-6-[bis-3,5-(trifluormethyl)phenyl]pyridin-2-carbonsäure (Verbindung I-161)
4-Amino-3-chlor-6-(2-napthyl)pyridin-2-carbonsäure (Verbindung I-162)
4-Amino-3-chlor-5-fluor-6-(4-methylphenyl)pyridin-2-carbonsäure (Verbindung I-163)
4-Amino-3-chlor-6-(3-chlor-4-methylphenyl)pyridin-2-carbonsäure (Verbindung I-164)
4-Amino-3-chlor-6-(2-methylphenyl)pyridin-2-carbonsäure (Verbindung I-165)
4-Amino-3-chlor-6-(3,4-difluormethylendioxyphenyl)pyridin-2-carbonsäure (Verbindung I-166)
4-Amino-3-chlor-6-(3,5-difluorphenyl)pyridin-2-carbonsäure (Verbindung I-167)
4-Amino-3-chlor-6-(4-chlor-2-fluorphenyl)pyridin-2-carbonsäure (Verbindung I-168)
4-Amino-3-chlor-6-(2,6-difluorphenyl)pyridin-2-carbonsäure (Verbindung I-169)
4-Amino-3-chlor-6-(2-chlor-4-fluorphenyl)pyridin-2-carbonsäure (Verbindung I-170)
4-Amino-3,5-dichlor-6-[4-(trifluormethyl)phenyl]pyridin-2-carbonsäure (Verbindung I-171)
4-Amino-3-chlor-5-fluor-6-(4-fluorphenyl)pyridin-2-carbonsäure (Verbindung I-172)
4-Amino-3-chlor-5-fluor-6-(4-chlorphenyl)pyridin-2-carbonsäure (Verbindung I-173)
4-Amino-3-chlor-6-[4-(trifluormethoxy)phenyl]pyridin-2-carbonsäure (Verbindung I-174)
4-Amino-3-chlor-6-(4-ethylphenyl)pyridin-2-carbonsäure (Verbindung I-175)
4-Amino-3-chlor-6-(2-fluorphenyl)pyridin-2-carbonsäure (Verbindung I-176)
4-Amino-3-chlor-6-(2,5-dichlorphenyl)pyridin-2-carbonsäure (Verbindung I-177)
4-Amino-3-chlor-6-(2,4-dimethylphenyl)pyridin-2-carbonsäure (Verbindung I-178)
4-Amino-3-chlor-6-(4-chlor-3-(trifluormethyl)phenyl)pyridin-2-carbonsäure (Verbindung I-179)
3-Chlor-6-(4-methylphenyl)-4-(N-pyrrolyl)pyridin-2-carbonsäure (Verbindung I-180)
4-Amino-3-chlor-6-(4-chlor-3-fluorphenyl)pyridin-2-carbonsäure (Verbindung I-181)
4-Amino-3-chlor-6-(4-chlor-2-(trifluormethyl)phenyl)pyridin-2-carbonsäure (Verbindung 1-182)
4-Amino-3-chlor-5-fluor-6-(4-chlorphenyl)pyridin-2-carbonsäure (Verbindung I-183)
4-Amino-3-chlor-6-(2-chlor-4-(trifluormethyl)phenyl)pyridin-2-carbonsäure (Verbindung I-184)
4-Amino-3-chlor-6-(3,4-dimethoxyphenyl)pyridin-2-carbonsäure (Verbindung I-185)
4-Amino-3-chlor-6-(4-chlor-2-methoxyphenyl)pyridin-2-carbonsäure (Verbindung I-186)
4-Amino-3-chlor-6-(2-chlor-3,4-methylendioxyphenyl)pyridin-2-carbonsäure (Verbindung I-187)
4-Amino-3-chlor-6-(5-indanyl)pyridin-2-carbonsäure (Verbindung I-188)
4-Amino-3-chlor-5-fluor-6-(4-chlor-2-fluorphenyl)pyridin-2-carbonsäure (Verbindung I-189)
4-Amino-3-chlor-6-(2-chlor-4-methylphenyl)pyridin-2-carbonsäure (Verbindung I-190)
4-Amino-3-chlor-6-(4-methyl-3-thiomethylphenyl)pyridin-2-carbonsäure (Verbindung
I-191)
4-Amino-3-chlor-6-(5-chlor-2-fluor-4-methylphenyl)pyridin-2-carbonsäure (Verbindung I-192)
4-Amino-3-chlor-6-(4-methoxy-3-methylphenyl)pyridin-2-carbonsäure (Verbindung I-193)
4-Amino-3-chlor-6-(2,5-dimethoxyphenyl)pyridin-2-carbonsäure (Verbindung I-194) 4-Amino-3-chlor-6-(4-chlor-3-methoxymethylphenyl)pyridin-2-carbonsäure (Verbindung I-195)
4-Amino-3-chlor-5-fluor-6-(3,4-methylendioxyphenyl)pyridin-2-carbonsäure (Verbindung I-196)
4-Amino-3-chlor-5-fluor-6-(2,3-dihydro-5-benzofuranyl)pyridin-2-carbonsäure (Verbindung I-197)
4-Amino-3,5-dichlor-6-(4-chlorphenyl)pyridin-2-carbonsäure (Verbindung I-198)
4-Amino-3-chlor-5-fluor-6-(2,4-dichlorphenyl)pyridin-2-carbonsäure (Verbindung I-199)
4-Amino-3,5-difluor-6-(4-(trifluormethyl)phenyl)pyridin-2-carbonsäure (Verbindung I-200)
4-Amino-3-chlor-6-(2,3-dihydro-5-benzofuranyl)pyridin-2-carbonsäure (Verbindung I-201)
4-Amino-3,5-difluor-6-(6-chlorphenyl)pyridin-2-carbonsäure (Verbindung I-202)
4-Amino-3,5-difluor-6-(4-methylphenyl)pyridin-2-carbonsäure (Verbindung I-203)
4-Amino-3,5-difluor-6-(2-chlor-4-methylphenyl)pyridin-2-carbonsäure (Verbindung I-204)
4-Amino-3,5-difluor-6-(2,4-dichlorphenyl)pyridin-2-carbonsäure (Verbindung I-205)
4-Amino-3,5-difluor-6-(4-chlor-2-fluorphenyl)pyridin-2-carbonsäure (Verbindung I-206)
4-Amino-3,5-difluor-6-(3,4-methylendioxyphenyl)pyridin-2-carbonsäure (Verbindung I-207)
4-Amino-3,5-dichlor-6-(2-thienyl)pyridin-2-carbonsäure (Verbindung I-208)
4-Amino-3-chlor-6-(4-pyridinyl)pyridin-2-carbonsäure (Verbindung I-209)
4-Amino-3,5-dichlor-6-(2-furfuryl)pyridin-2-carbonsäure (Verbindung I-210)
4-Amino-3-chlor-6-(2-thienyl)pyridin-2-carbonsäure (Verbindung I-211)
4-Amino-3-chlor-6-(2-furfuryl)pyridin-2-carbonsäure (Verbindung I-212)
4-Amino-3-chlor-6-(6-methoxy-3-pyridinyl)pyridin-2-carbonsäure (Verbindung I-213)
4-Amino-3-chlor-6-(2-pyridinyl)pyridin-2-carbonsäure (Verbindung I-214)
4-Amino-3-chlor-6-(5-chlor-2-thienyl)pyridin-2-carbonsäure (Verbindung I-215)
4-Amino-3-chlor-6-(3-thienyl)pyridin-2-carbonsäure (Verbindung I-216)
4-Amino-3-chlor-6-(2,3-dihydro-5-benzofuranyl)pyridin-2-carbonsäure (Verbindung I-217)
4-Amino-3-chlor-6-(5-methyl-2-thienyl)pyridin-2-carbonsäure (Verbindung I-218)
4-Amino-6-(2-benzofuranyl)-3-chlorpyridin-2-carbonsäure (Verbindung I-219)
4-Amino-3-chlor-6-(2-pyrazinyl)pyridin-2-carbonsäure (Verbindung I-220)
4-Amino-3-chlor-5-fluor-6-(6-chlor-3-pyridinyl)pyridin-2-carbonsäure (Verbindung I-221)
4-Amino-3-chlor-6-(2-thiazolyl)pyridin-2-carbonsäure (Verbindung I-222)
4-Amino-3-chlor-6-(1-methyl-1H-pyrazol-5-yl)pyridin-2-carbonsäure (Verbindung I-223)
4-Amino-3-chlor-6-(2-benzothienyl)pyridin-2-carbonsäure (Verbindung I-224)
4-Amino-3-chlor-6-(6-chlor-3-pyridinyl)pyridin-2-carbonsäure (Verbindung I-225)
4-Amino-3-chlor-6-(2-benzoxazolyl)pyridin-2-carbonsäure (Verbindung I-226)
4-Amino-3-chlor-6-(2-(5-methyl-1,3,4-oxadiazolyl))pyridin-2-carbonsäure (Verbindung I-227)
4-Amino-3-chlor-6-(5-pyrimidinyl)pyridin-2-carbonsäure (Verbindung I-228)
4-Amino-3-chlor-6-(2-(5-methyl-1,3,4-thiadiazolyl))pyridin-2-carbonsäure (Verbindung I-229)
4-Amino-3-chlor-6-(2-benzothiazolyl)pyridin-2-carbonsäure (Verbindung I-230)
4-Amino-3-chlor-6-(5-oxazolyl)pyridin-2-carbonsäure (Verbindung I-231)
4-Amino-3-chlor-6-(2-benzoxazolyl)pyridin-2-carbonsäure (Verbindung I-232)
4-Amino-3-chlor-6- (3-(6-methyl)pyridazinyl)pyridin-2-carbonsäure (Verbindung I-233)
4-Amino-3-chlor-6-(3-(6-methyl)pyridazyl)pyridin-2-carbonsäure (Verbindung I-234)
4-Amino-3-chlor-6-(4-(2-methylthiazolyl))pyridin-2-carbonsäure (Verbindung I-235)
4-Amino-3,5-dichlor-6-(4-(2-methylthiazolyl))pyridin-2-carbonsäure (Verbindung I-236)
4-Amino-3,5-dichlor-6-(5-chlor-2-furanyl)pyridin-2-carbonsäure (Verbindung I-237)
4-Amino-3-chlor-5-fluor-6-(4-(2-methylthiazolyl))pyridin-2-carbonsäure (Verbindung I-238)
4-Amino-3-chlor-6-(2-methoxy-5-pyrimidinyl)-2-carbonsäure (Verbindung I-239)
4-Amino-3-chlor-6-(2-(5-methylthiazolyl))pyridin-2-carbonsäure (Verbindung I-240)
4-Amino-3,5-dichlor-6-(5-thiazolyl)pyridin-2-carbonsäure (Verbindung I-241)
Methyl-4-amino-3-chlor-6-(4-hydroxymethylphenyl)pyridin-2-carboxylat (Verbindung I-242)
Methyl-4-amino-3-chlor-6-[4-(fluormethyl)phenyl]pyridin-2-carboxylat (Verbindung I-243)
n-Decyl-4-amino-3-chlor-5-fluor-6-(4-chlorphenyl)pyridin-2-carboxylat (Verbindung I-244)
(2-Butoxyethyl)-4-amino-3-chlor-5-fluor-6-(4-chlorphenyl)pyridin-2-carboxylat (Verbindung I-245)
(2-Ethylhexyl)-4-amino-3-chlor-5-fluor-6-(4-chlorphenyl)pyridin-2-carboxylat (Verbindung I-246)
(2-Methylheptyl)-4-amino-3-chlor-5-fluor-6-(4-chlorphenyl)pyridin-2-carboxylat (Verbindung I-247)
(2-Butoxyethyl)-4-amino-3-chlor-6-(4-methylphenyl)pyridin-2-carboxylat (Verbindung I-248)
n-Butyl-4-amino-3-chlor-6-(4-methylphenyl)pyridin-2-carboxylat (Verbindung I-249)
(Ethoxybutyl)-4-amino-3-chlor-6-(4-methylphenyl)pyridin-2-carboxylat (Verbindung I-250)
(2-Ethylbutyl)-4-amino-3-chlor-6-(4-methylphenyl)pyridin-2-carboxylat (Verbindung I-251)
Ethyl-4-amino-3-chlor-5-fluor-6-(4-chlorphenyl)pyridin-2-carboxylat (Verbindung I-252)
(Butoxyethyl)-4-amino-3-chlor-5-fluor-6-(4-chlorphenyl)pyridin-2-carboxylat (Verbindung I-253)
(2-Ethylhexyl)-4-amino-3-chlor-5-fluor-6-(4-chlorphenyl)pyridin-2-carboxylat (Verbindung I-254)
Ethyl-4-amino-3-chlor-6-(2,4-dichlorphenyl)pyridin-2-carboxylat (Verbindung I-255)
n-Propyl-4-amino-3-chlor-6-(2,4-dichlorphenyl)pyridin-2-carboxylat (Verbindung I-256)
n-Butyl-4-amino-3-chlor-6-(2,4-dichlorphenyl)pyridin-2-carboxylat (Verbindung I-257)
n-Pentyl-4-amino-3-chlor-6-(2,4-dichlorphenyl)pyridin-2-carboxylat (Verbindung I-258)
(2-Ethylhexyl)-4-amino-3-chlor-6-(2,4-dichlorphenyl)pyridin-2-carboxylat (Verbindung I-259)
n-Decyl-4-amino-3-chlor-6-(2,4-dichlorphenyl)pyridin-2-carboxylat (Verbindung I-260)
(2-Methylethyl)-4-amino-3-chlor-6-(2,4-dichlorphenyl)pyridin-2-carboxylat (Verbindung I-261)
n-Hexyl-4-amino-3-chlor-6-(2,4-dichlorphenyl)pyridin-2-carboxylat (Verbindung I-262)
Ethyl-4-amino-3-chlor-6-(4-methylphenyl)pyridin-2-carboxylat (Verbindung I-263)
4-Amino-3-chlor-5-fluor-6-(4-chlorphenyl)-2-(N-benzyl)picolinamid (Verbindung I-264)
Methyl-4-N-methylamino-3-chlor-5-fluor-6-(4-chlorphenyl)pyridin-2-carboxylat (Verbindung I-265)
Methyl-4-acetamido-3-chlor-6-(4-(2-methylthiazolyl))pyridin-2-carboxylat (Verbindung I-266)
Methyl-4-amino-3,5-dichlor-6-(4-(2-methylthiazolyl))pyridin-2-carboxylat (Verbindung I-267)
Methyl-4-amino-3-chlor-5-fluor-6-(4-(2-methylthiazolyl))pyridin-2-carboxylat (Verbindung I-268)
Methyl-4-amino-3-chlor-6-(4-(2,2,2-trifluormethylthiazolyl))pyridin-2-carboxylat (Verbindung I-269)
Methyl-4-amino-3-chlor-5-fluor-6-(4-(2,2,2-trifluormethylthiazolyl))pyridin-2-carboxylat (Verbindung I-270)
4-Amino-3-chlor-6-(4-chlor-2-fluor-3-thiomethylphenyl)pyridin-2-carbonsäuremethylester (Verbindung I-271)
4-Amino-3-chlor-6-(4-chlor-3-cyano-2-fluorophenyl)pyridin-2-carbonsäuremethylester carbonsäuremethylester (Verbindung I-272)
4-Amino-3-chlor-6-(4-chlor-2-fluor-3-methoxymethylphenyl)pyridin-2-carbonsäuremethylester (Verbindung I-273)
4-Amino-3-chlor-6-(4-chlor-2-fluor-3-difluormethylphenyl)pyridin-2-carbonsäuremethylester (Verbindung I-274)
4-Amino-3-chlor-6-(4-chlor-2-fluor-3-fluormethylphenyl)pyridin-2-carbonsäuremethylester (Verbindung I-275)
4-Amino-3-chlor-6-(4-cyano-2-fluor-3-methoxyphenyl)pyridin-2-carbonsäuremethylester (Verbindung I-276)
4-Amino-3-chlor-6-(2,4-dichlor-3-ethoxyphenyl)pyridin-2-carbonsäuremethylester (Verbindung I-277)
4-Amino-3-chlor-6-[4-chlor-2-fluor-3-(2,2-difluorethoxy)phenyl]pyridin-2-carbonsäuremethylester (Verbindung I-278)
4-Amino-3-chlor-6-(4-chlor-2-fluor-5-ethoxyphenyl)pyridin-2-carbonsäuremethylester (Verbindung I-279)
4-Amino-3-chlor-6-[2,4-dichlor-3-(2,2-difluorethoxy)phenyl]pyridin-2-carbonsäuremethylester (Verbindung I-280)
4-Amino-3-chlor-6-[4-chlor-2-fluor-3-(methoxyethoxy)phenyl]pyridin-2-carbonsäuremethylester (Verbindung I-281)
4-Amino-3-chlor-5-fluor-6-(2-fluor-3,4-methylendioxyphenyl)pyridin-2-carbonsäuremethylester (Verbindung I-282)
4-Amino-3-chlor-6-(2,4-dichlor-3-methylthiophenyl)pyridin-2-carbonsäuremethylester (Verbindung I-283)
4-Amino-3-chlor-5-fluor-6-(4-chlor-2-fluor-3-methoxyphenyl)pyridin-2-carbonsäuremethylester (Verbindung I-284)
4-Amino-3-chlor-5-fluor-6-(4-chlor-2-fluor-5-methoxyphenyl)pyridin-2-carbonsäuremethylester (Verbindung I-285)
4-Amino-3-chlor-6-(4-chlor-3-dimethylamino-2-fluorphenyl)pyridin-2-carbonsäuremethylester (Verbindung I-286)
4-Amino-3-chlor-6-[4-chlor-3-(diethylamino)-2-fluorphenyl]pyridin-2-carbonsäuremethylester (Verbindung I-287)
4-Acetylamino-3-chlor-6-(4-chlor-2-fluor-5-methoxyphenyl)pyridin-2-carbonsäuremethylester (Verbindung I-288)
4-Acetylamino-3-chlor-6-(4-chlor-2-fluor-3-methylphenyl)pyridin-2-carbonsäuremethylester (Verbindung I-289)
-Acetylamino-3-chlor-6-(4-chlor-2-fluor-3-methoxyphenyl)pyridin-2-carbonsäuremethylester (Verbindung I-290)
4-Acetylammo-3-chlor-6-(4-chlor-2-fluor-3-ethoxyphenyl)pyridin-2-carbonsäuremethylester (Verbindung I-291)
4-Acetylamino-3-chlor-6-(2,4-dichlor-3-methoxyphenyl)pyridin-2-carbonsäuremethylester (Verbindung I-292)
4-Acetylamino-3-chlor-6-(2,4-difluor-3-methylphenyl)-pyridin-2-carbonsäuremethylester (Verbindung I-293)
4-Acetylamino-3-chlor-6-(2,4-dichlor-3-methylphenyl)pyridin-2-carbonsäuremethylester (Verbindung I-294)
4-Amino-3-chlor-6-[4-chlor-2-fluor-3-(1-fluor-1-methylethyl)phenyl]-pyridin-2-carbonsäuremethylester (Verbindung I-295)
4-Amino-3-chlor-6-(4-chlor-5-dimethylamino-2-fluorphenyl)pyridin-2-carbonsäuremethylester (Verbindung I-296)
4-Amino-6-(4-brom-2-fluor-3-methoxyphenyl)-3-chlor-pyridin-2-carbonsäuremethylester (Verbindung I-297)
4-Acetylamino-3-chlor-6-(2,4-difluor-3-methoxyphenyl)pyridin-2-carbonsäuremethylester (Verbindung I-298)
4-Acetylamino-3-chlor-6-(2-chlor-4-fluor-3-methoxyphenyl)pyridin-2-carbonsäuremethylester (Verbindung I-299)
4-Acetylamino-3-chlor-6-[2,4-dichlor-3-(difluormethyl)phenyl]pyridin-2-carbonsäuremethylester (Verbindung I-300)
4-Acetylamino-3-chlor-6-[4-chlor-2-fluor-3-(1,2,2,2-tetrafluorethyl)phenyl)pyridin-2-carbonsäuremethylester (Verbindung I-301)
4-Acetylamino-3-chlor-6-[4-chlor-2-fluoro-3-(1-fluorpropyl)phenyl]pyridin-2-carbonsäuremethylester (Verbindung I-302)
4-Acetylamino-3-chlor-6-(2,3,4-trifluorphenyl)pyridin-2-carbonsäuremethylester (Verbindung I-303)
4-Acetylamino-3-chlor-6-(4-chlor-2-fluor-3-methoxymethoxyphenyl)pyridin-2-carbonsäuremethylester (Verbindung I-304)
4-Acetylamino-3-chlor-6-(4-chlor-2-fluor-3-difluormethoxyphenyl)pyridine-2-carbonsäuremethylester (Verbindung I-305)
4-Amino-3-chloro-6-(2-fluor-3-methoxy-4-methylphenyl)pyridin-2-carbonsäuremethylester (Verbindung I-306)
4-Amino-3-chlor-6-[2,4-dichlor-3-(dimethylamino)phenyl]pyridin-2-carbonsäuremethylester (Verbindung I-307)
4-Amino-3-chlor-6-[4-chlor-2-fluor-3-(methylamino)phenyl]pyridin-2-carbonsäuremethylester (Verbindung I-308)
4-Amino-3-chlor-6-[4-chlor-2-fluor-3-(methoxycarbonyl)phenyl]pyridin-2-carbonsäuremethylester (Verbindung I-309)
4-Acetylamino-3-chlor-6-(4-chlor-2,6-difluor-3-methoxyphenyl)pyridin-2-carbonsäuremethylester (Verbindung I-310)
4-Amino-3-chlor-6-(4-chlor-2-fluor-3-ethoxyphenyl)-pyridin-2-carbonsäuremethylester (Verbindung I-311)
4-Amino-3-chlor-6-(4-chlor-2-fluor-3-methoxyphenyl)pyridin-2-carbonsäuremethylester (Verbindung I-312)
4-Amino-3-chlor-6-(4-chlor-2-fluor-5-methoxyphenyl)pyridin-2-carbonsäuremethylester (Verbindung I-313)
4-Amino-3-chlor-6-(2,4-dichlor-3-methoxyphenyl)pyridin-2-carbonsäuremethylester (Verbindung I-314)
4-Amino-3-chlor-6-(2-fluor-3-methoxy-4-trifluormethylphenyl)pyridin-2-carbonsäuremethylester (Verbindung I-315)
4-Amino-3-chlor-6-(2-fluor-3,4-methylendioxyphenyl)pyridin-2-carbonsäuremethylester (Verbindung I-316)
4-Amino-3-chlor-6-(2,4-difluor-3-methylphenyl)pyridin-2-carbonsäuremethylester (Verbindung I-317)
4-Amino-3-chlor-6-(2,4-dichlor-3-methylphenyl)pyridin-2-carbonsäuremethylester (Verbindung I-318)
4-Amino-3-chlor-6-(4-chlor-2-fluor-3-methylphenyl)pyridin-2-carbonsäuremethylester (Verbindung I-319)
4-Amino-3-chlor-6-[4-chlor-3-(dimethylamino)-2,6-difluorphenyl]pyridin-2-carbonsäuremethylester (Verbindung I-320)
4-Amino-3-chlor-6-(2,6-difluor-3-methoxy-4-methylphenyl)pyridin-2-carbonsäuremethylester (Verbindung I-321)
4-Amino-6-(4-bromo-2-chlor-3-methoxyphenyl)-3-chlorpyridin-2-carbonsäuremethylester (Verbindung I-322)
4-Amino-3-chlor-6-(2-chlor-4-difluormethyl-6-fluor-3-methoxyphenyl)pyridin-2-carbonsäuremethylester (Verbindung I-323)
4-Amino-3-chlor-6-(4-chlor-3-difluormethyl-2,6-difluorphenyl)pyridin-2-carbonsäure methylester (Verbindung I-324)
4-Amino-3-chlor-6-(2-chlor-4,6-difluor-3-methoxyphenyl)pyridin-2-carbonsäuremethylester (Verbindung I-325)
4-Amino-3-chlor-6-(2,4,6-trifluor-3-methoxyphenyl)pyridin-2-carbonsäuremethylester (Verbindung I-326)
4-Amino-3-chlor-6-(2,4-dichlor-6-fluor-3-methoxyphenyl)pyridin-2-carbonsäuremethylester (Verbindung I-327)
4-Amino-3-chlor-6-(4-chlor-2,6-difluor-3-methoxyphenyl)pyridin-2-carbonsäuremethylester (Verbindung I-328)
4-Amino-3-chlor-6-(4-chlor-2,6-difluor-3-ethoxyphenyl)pyridin-2-carbonsäuremethylester (Verbindung I-329)
4-Amino-3-chlor-6-(4-chlor-3-butoxy-2-fluorphenyl)pyridin-2-carbonsäuremethylester (Verbindung I-330)
4-Amino-3-chlor-6-[4-chlor-2-fluor-3-(1-fluorethyl)phenyl]pyridin-2-carbonsäuremethylester (Verbindung I-331)
4-Amino-3-chlor-6-(2,4-dichlor-3-difluormethylphenyl)pyridin-2-carbonsäuremethylester (Verbindung I-332)
4-Amino-3-chlor-6-[2,4-dichlor-3-(1-fluor-1-ethyl)phenyl]pyridin-2-carbonsäuremethylester (Verbindung I-333)
4-Amino-3-chlor-6-(4-chlor-3-ethyl-2-fluorphenyl)pyridin-2-carbonsäuremethylester (Verbindung I-334)
4-Amino-3-chlor-6-[4-chlor-2-fluor-3-(1,2,2,2-tetrafluorethyl)phenyl]-pyridin-2-carbonsäuremethylester (Verbindung I-335)
4-Amino-3-chlor-6-[4-chlor-2-fluor-3-(1-fluorpropyl)phenyl]pyridin-2-carbonsäuremethylester (Verbindung I-336)
4-Amino-3-chlor-6-(2,3,4-trifluorphenyl)pyridin-2-carbonsäuremethylester (Verbindung I-337)
4-Amino-3-chlor-6-(4-chlor-2-fluor-3-methoxymethoxyphenyl)pyridin-2-carbonsäuremethylester (Verbindung I-338)
4-Amino-3-chlor-6-(4-chlor-2-fluor-3-difluormethoxyphenyl)pyridin-2-carbonsäuremethyl ester (Verbindung I-339)
4-Amino-3-chlor-6-(2,4-difluor-3-methoxyphenyl)pyridin-2-carbonsäuremethylester (Verbindung I-340)
4-Amino-3-chlor-6-(4-difluormethyl-2-fluor-3-methoxyphenyl)pyridin-2-carbonsäuremethylester (Verbindung I-341)
4-Amino-3-chlor-6-(2-fluor-4-fluormethyl-3-methoxyphenyl)pyridin-2-carbonsäuremethylester (Verbindung I-342)
4-Amino-3-chlor-6-(2,4-difluor-5-methoxyphenyl)pyridin-2-carbonsäuremethylester (Verbindung I-343)
4-Amino-3-chlor-6-(2-chlor-4-fluor-3-methoxyphenyl)pyridin-2-carbonsäuremethylester (Verbindung I-344)
4-Amino-3-chlor-6-(4-chlor-2,6-difluor-3-methylphenyl)pyridin-2-carbonsäuremethylester (Verbindung I-345)
4-Amino-6-(2-brom-4-chlor-3-methoxyphenyl)-3-chlorpyridin-2-carbonsäuremethylester (Verbindung I-346)
4-Amino-6-(4-brom-2,6-difluor-3-methoxyphenyl)-3-chlorpyridin-2-carbonsäuremethylester (Verbindung I-347)
4-Amino-3-chlor-6-(3-difluormethyl-2,4,6-trifluorphenyl)pyridin-2-carbonsäuremethylester (Verbindung I-348)
4-Amino-3-chlor-6-(2-chlor-4-difluormethyl-3-methoxyphenyl)pyridin-2-carbonsäuremethylester (Verbindung I-349)
4-Amino-3-chlor-6-(2,4-difluor-3-ethoxyphenyl)pyridin-2-carbonsäuremethylester (Verbindung I-350)
4-Amino-3-chlor-6-(4-chlor-3-cyclopropyl-2-fluorphenyl)pyridin-2-carbonsäuremethylester (Verbindung I-351)
4-Amino-3-chlor-6-[4-chlor-2-fluor-3-(2,2,2-trifluoracetyl)phenyl]pyridin-2-carbonsäuremethylester (Verbindung I-352)
4-Amino-3-chlor-6-(4-chlor-2-fluor-3-methansulfinylphenyl)pyridin-2-carbonsäuremethylester (Verbindung I-353)
4-Amino-3-chlor-6-(4-chlor-2-fluor-3-methansulfonylphenyl)pyridin-2-carbonsäuremethylester (Verbindung I-354)
4-Amino-3-chlor-6-(4-chlor-2-fluor-3-fluormethylthiophenyl)pyridin-2-carbonsäuremethylester (Verbindung I-355)
4-Amino-3-chlor-6-(4-chlor-2-fluor-3-methoxyphenyl)pyridin-2-carbonsäureethylester (Verbindung I-356)
4-Amino-3-chlor-6-(4-chlor-2-fluor-3-methoxyphenyl)pyridin-2-carbonsäure-(2-butoxy-ethyl)ester (Verbindung I-357)
4-Amino-3-chlor-6-(4-chlor-2,6-difluor-3-methoxyphenyl)pyridin-2-carbonsäure-n-butylester (Verbindung I-358)
4-Amino-3-chlor-6-(2,4-dichlor-3-methoxyphenyl)pyridin-2-carbonsäure-n-butylester (Verbindung I-359)
4-Amino-3-chlor-6-(4-brom-2-fluor-3-methoxyphenyl)pyridin-2-carbonsäure-n-butylester (Verbindung I-360)
4-Amino-3-chlor-6-[4-chlor-2-fluor-3-(1-fluorethyl)phenyl]pyridin-2-carbonsäure-n-butylester (Verbindung I-361)
4-Amino-3-chlor-6-(4-chlor-2-fluor-3-methoxyphenyl)pyridin-2-carbonsäure-(2-butoxy-ethyl)ester (Verbindung I-362)
4-Amino-3-chlor-6-(2,6-difluor-3-methoxy-4-methylphenyl)pyridin-2-carbonsäure (Verbindung I-363)
4-Amino-3-chlor-6-(4-chlor-2,6-difluor-3-dimethylaminophenyl)pyridin-2-carbonsäure (Verbindung I-364)
4-Amino-3-chlor-6-(4-cyano-2,6-difluor-3-methoxyphenyl)pyridin-2-carbonsäuremethylester (Verbindung I-365)
4-Amino-3-chlor-6-(4-chlor-2-fluor-3-(2,2-difluorethoxy)phenyl)pyridin-2-carbonsäure (Verbindung I-366)
4-Amino-3-chlor-6-(2,4-difluor-3-methylphenyl)pyridin-2-carbonsäure (Verbindung I-367)
4-Amino-3-chlor-6-(2,4-dichlor-3-methylphenyl)pyridin-2-carbonsäure (Verbindung I-368)
4-Amino-3-chlor-6-(4-chlor-2-fluor-3-methylphenyl)pyridin-2-carbonsäure (Verbindung I-369)
4-Amino-3-chlor-6-(4-chlor-2-fluor-3-methoxyphenyl)pyridin-2-carbonsäure (Verbindung I-370)
4-Amino-3-chlor-6-(4-chlor-2-fluor-5-methoxyphenyl)pyridin-2-carbonsäure (Verbindung I-371)
4-Amino-3-chlor-6-(4-chlor-2-fluor-3-ethoxyphenyl)pyridin-2-carbonsäure (Verbindung I-372)
4-Amino-3-chlor-6-(2,4-dichlor-3-methoxyphenyl)pyridin-2-carbonsäure (Verbindung I-373)
4-Amino-3-chlor-6-(4-chlor-2-fluor-3-methylthiophenyl)pyridin-2-carbonsäure (Verbindung I-374)
4-Amino-3-chlor-6-(4-chlor-2-fluor-3-methoxymethylphenyl)pyridin-2-carbonsäure (Verbindung I-375)
4-Amino-3-chlor-6-(4-chlor-2-fluor-3-difluormethylphenyl)pyridin-2-carbonsäure (Verbindung I-376)
4-Amino-3-chlor-6-(2-fluor-3-methoxy-4-trifluormethylphenyl)pyridin-2-carbonsäure (Verbindung I-377)
4-Amino-3-chlor-6-(2-fluor-3,4-methylendioxyphenyl)pyridin-2-carbonsäure (Verbindung I-378)
4-Amino-3-chlor-6-(4-chlor-2-fluor-5-ethoxyphenyl)pyridin-2-carbonsäure (Verbindung I-379)
4-Amino-3-chlor-6-(2,4-dichlor-3-methoxyphenyl)pyridin-2-carbonsäure (Verbindung I-380)
4-Amino-3-chlor-6-(4-chlor-5-dimethylamino-2-fluorphenyl)pyridin-2-carbonsäure (Verbindung I-381)
4-Amino-3-chlor-6-(4-chlor-3-dimethylamino-2-fluorphenyl)pyridin-2-carbonsäure (Verbindung I-382)
4-Amino-3-chlor-6-(4-chlor-2-fluor-3-methoxyethoxyphenyl)pyridin-2-carbonsäure (Verbindung I-383)
4-Amino-3-chlor-6-(4-chlor-2-fluor-3-fluormethylphenyl)pyridin-2-carbonsäure (Verbindung I-384)
4-Amino-3-chlor-5-fluor-6-(2-fluor-3,4-methylendioxyphenyl)pyridin-2-carbonsäure (Verbindung I-385)
4-Amino-3-chlor-6-[4-chlor-3-(diethylamino)-2-fluorphenyl]pyridin-2-carbonsäure (Verbindung I-386)
4-Amino-3-chlor-6-[2,4-dichlor-3-(dimethylamino)phenyl]pyridin-2-carbonsäure (Verbindung I-387)
4-Amino-3-chlor-6-[4-chlor-2-fluor-3-(methylamino)phenyl]pyridin-2-carbonsäure (Verbindung I-388)
4-Amino-3-chlor-6-(2-fluor-3-methoxy-4-methylphenyl)pyridin-2-carbonsäure (Verbindung I-389)
4-Amino-6-(4-brom-2-fluor-3-methoxyphenyl)-3-chlorpyridin-2-carbonsäure (Verbindung I-390)
4-Amino-6-(4-brom-2-chlor-3-methoxyphenyl)-3-chlorpyridin-2-carbonsäure (Verbindung I-391)
4-Amino-3-chlor-6-(4-chlor-2-fluor-5-methoxyphenyl)-5-fluorpyridin-2-carbonsäure (Verbindung I-392)
4-Amino-3-chlor-6-(4-chlor-2-fluor-3-methoxyphenyl)-5-fluorpyridin-2-carbonsäure (Verbindung I-393)
4-Amino-3-chlor-6-(4-chlor-3-butoxy-2-fluorphenyl)pyridin-2-carbonsäure (Verbindung I-394)
4-Amino-6-[2,4-dichlor-3-(1-fluorethyl)phenyl]pyridin-2-carbonsäure (Verbindung I-395)
4-Amino-3-chlor-6-(2,4-dichlor-3-difluormethylphenyl)pyridin-2-carbonsäure (Verbindung I-396)
4-Amino-3-chlor-6-[2,4-dichlor-3-(1-fluor-1-methylethyl)phenyl]pyridin-2-carbonsäure (Verbindung I-397)
4-Amino-3-chlor-6-(4-chlor-3-ethyl-2-fluorphenyl)pyridin-2-carbonsäure (Verbindung I-398)
4-Amino-3-chlor-6-[4-chlor-2-fluor-3-(1,2,2,2-tetrafluorethyl)phenyl]pyridin-2-carbonsäure (Verbindung I-399)
4-Amino-3-chlor-6-[4-chlor-2-fluor-3-(1-fluorpropyl)phenyl]pyridin-2-carbonsäuremethylester (Verbindung I-400)
4-Amino-3-chlor-6-(2,3,4-trifluorphenyl)pyridin-2-carbonsäure (Verbindung I-401) 4-Amino-3-chlor-6-(4-chlor-2-fluor-3-methoxymethoxyphenyl)pyridin-2-carbonsäure (Verbindung I-402)
4-Amino-3-chlor-6-(4-chlor-2,6-difluor-3-methoxyphenyl)pyridin-2-carbonsäure (Verbindung I-403)
4-Amino-3-chlor-6-(4-chlor-3-difluormethoxy-2-fluorphenyl)pyridin-2-carbonsäure (Verbindung I-404)
4-Amino-3-chlor-6-(4-chlor-2-fluor-3-methoxyphenyl)pyridin-2-carbonsäure, Triethylamin-Salz (Verbindung I-405)
4-Amino-3-chlor-6-(2,4-dichlor-3-methoxyphenyl)pyridin-2-carbonsäure, Triethylamin-Salz (Verbindung I-406)

Die Aufwandmenge der Herbizide der allgemeinen Formel (I) (A) kann mit den äußeren Bedingungen wie Temperatur, Feuchtigkeit, der Art des verwendeten Herbizids in einem weiten Bereich variieren, beispielsweise zwischen 0,001 g und 2000 g a.i./ha (ai/ha bedeutet dabei im folgenden .Aktivsubstanz pro Hektar"= bezogen auf 100%igen Wirkstoff).

Bei Anwendungen mit Aufwandmengen von 0,01 g bis 1000 g a.i./ha der Herbizide der allgemeinen Formel (I) (A) wird im Vor- und Nachauflaufverfahren ein relativ breites Spektrum an Schadpflanzen bekämpft, z.B. annuellen und perennierenden mono- oder dikotylen Unkräutern sowie an unerwünschten Kulturpflanzen. Bei den erfindungsgemäßen Kombinationen liegen die Aufwandmengen in der Regel niedriger, z. B. im Bereich von 0,1 g bis 800 g a.i./ha, vorzugsweise 1 g bis 500 g a.i./ha, besonders bevorzugt 10 g bis 400 g a.i./ha.

Die Herbizide der allgemeinen Formel (I) sind zur Bekämpfung von Schadpflanzen, z.B. in Pflanzenkulturen geeignet, beispielsweise in wirtschaftlich bedeutenden Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblume und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen. Für die Anwendung der erfindungsgemäßen Herbizid-Safener-Kombinationen (A)+(B) sind diese Kulturen ebenfalls bevorzugt, besonders bevorzugt ist der Einsatz in Getreide (z.B. Weizen, Gerste, Roggen, Hafer), Reis, Mais, Hirse, Zuckerrübe, Zuckerrohr, Sonnenblume, Raps und Baumwolle. Die Herbizid-Safener-Kombinationen (A)+(B) sind auch einsetzbar in toleranten und nicht toleranten Mutantenkulturen und toleranten und nicht toleranten transgenen Kulturen, vorzugsweise von Mais, Reis, Getreide, Raps und Soja, z.B. solche die gegen Imidazolinon-Herbizide, Atrazin, Glufosinate oder Glyphosate resistent sind.

Die Verbindungen der allgemeinen Formel (I) sind aus der WO 03/011853 A bekannt und können nach den dort beschriebenen Verfahren erhalten werden.

### Safener (B):

Unter den als Komponente (B) enthaltenen Safenern werden Verbindungen verstanden, die geeignet sind, phytotoxische Wirkungen von Pflanzenschutzmittelwirkstoffen wie Herbiziden an Kulturpflanzen zu reduzieren.

Im Rahmen der vorliegenden Erfindung werden die Verbindungen der allgemeinen Formel (I) mit folgenden Safener-Verbindungen kombiniert:
S1) Verbindungen aus der Gruppe heterocyclischer Carbonsäurederivate:
S1^{a}) Verbindungen vom Typ der Dichlorphenylpyrazolin-3-carbonsäure (S1^{a}), vorzugsweise Verbindungen wie 1-(2,4-Dichlorphenyl)-5-(ethoxycarbonyl)-5-methyl-2-pyrazolin-3-carbonsäure, 1-(2,4-Dichlorphenyl)-5-(ethoxycarbonyl)-5-methyl-2-pyrazolin-3-carbonsäure-ethylester (S1-1) ("Mefenpyr-diethyl"), und verwandte Verbindungen, wie sie in der WO-A-91/07874 beschrieben sind;
S1^{b}) Derivate der Dichlorphenylpyrazolcarbonsäure (S1^{b}), vorzugsweise Verbindungen wie 1-(2,4-Dichlorphenyl)-5-methylpyrazol-3-carbonsäureethylester (S1-2), 1-(2,4-Dichlorphenyl)-5-isopropylpyrazol-3-carbonsäureethylester (S1-3), 1-(2,4-Dichlorphenyl)-5-(1,1-dimethyl-ethyl)pyrazol-3-carbonsäure-ethylester (S1-4) und verwandte Verbindungen, wie sie in EP-A-333 131 und EP-A-269 806 beschrieben sind;
S1^{c}) Derivate der 1,5-Diphenylpyrazol-3-carbonsäure (S1^{c}), vorzugsweise Verbindungen wie 1-(2,4-Dichlorphenyl)-5-phenylpyrazol-3-carbonsäure-ethylester (S1-5), 1-(2-Chlorphenyl)-5-phenylpyrazol-3-carbonsäuremethylester (S1-6) und verwandte Verbindungen wie sie beispielsweise in der EP-A-268554 beschrieben sind;
S1^{d}) Verbindungen vom Typ der Triazolcarbonsäuren (S1^{d}), vorzugsweise Verbindungen wie Fenchlorazol(-ethylester), d.h. 1-(2,4-Dichlorphenyl)-5-trichlormethyl-(1H)-1,2,4-triazol-3-carbonsäure-ethylester (S1-7), und verwandte Verbindungen, wie sie in EP-A-174 562 und EP-A-346 620 beschrieben sind;
S1^{e}) Verbindungen vom Typ der 5-Benzyl- oder 5-Phenyl-2-isoxazolin-3- carbonsäure, oder der 5,5-Diphenyl-2-isoxazolin-3-carbonsäure(S1^{e}), vorzugsweise Verbindungen wie 5-(2,4-Dichlorbenzyl)-2-isoxazolin-3-carbonsäureethylester (S1-8) oder 5-Phenyl-2-isoxazolin-3-carbonsäureethylester (S1-9) und verwandte Verbindungen, wie sie in WO-A-91/08202 beschrieben sind, bzw. 5,5-Diphenyl-2-isoxazolin-carbonsäure (S1-10) oder 5,5-Diphenyl-2-isoxazolin-carbonsäureethylester (S1-11) ("Isoxadifen-ethyl") oder -n-propylester (S1-12) oder der 5-(4-Fluorphenyl)-5-phenyl-2-isoxazolin-3-carbonsäureethylester (S1-13), wie sie in der Patentanmeldung WO-A-95/07897 beschrieben sind.
S2) Verbindungen aus der Gruppe der 8-Chinolinyloxyderivate (S2):
   S2^{a}) Verbindungen vom Typ der 8-Chinolinoxyessigsäure (S2^{a}), vorzugsweise (5-Chlor-8-chinolinoxy)essigsäure-(1-methylhexyl)-ester ("Cloquintocetmexyl") (S2-1), (5-Chlor-8-chinolinoxy)essigsäure-(1,3-dimethyl-but-1-yl)-ester (S2-2), (5-Chlor-8-chinolinoxy)essigsäure-4-allyl-oxy-butylester (S2-3), (5-Chlor-8-chinolinoxy)essigsäure-1-allyloxy-prop-2-ylester (S2-4), (5-Chlor-8-chinolinoxy)essigsäureethylester (S2-5), (5-Chlor-8-chinolinoxy)essigsäuremethylester (S2-6), (5-Chlor-8-chinolinoxy)essigsäureallylester (S2-7), (5-Chlor-8-chinolinoxy)essigsäure-2-(2-propyliden-iminoxy)-1-ethylester (S2-8), (5-Chlor-8-chinolinoxy)essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind, sowie (5-Chlor-8-chinolinoxy)essigsäure (S2-10), deren Hydrate und Salze, beispielsweise deren Lithium-, Natrium- Kalium-, Kalzium-, Magnesium-, Aluminium-, Eisen-, Ammonium-, quartäre Ammonium-, Sulfonium-, oder Phosphoniumsalze wie sie in der WO-A-2002/34048 beschrieben sind;
   S2^{b}) Verbindungen vom Typ der (5-Chlor-8-chinolinoxy)malonsäure (S2^{b}), vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.
S3) Wirkstoffe vom Typ der Dichloracetamide (S3), die häufig als Vorauflaufsafener (bodenwirksame Safener) angewendet werden, wie z. B.
   "Dichlormid" (N,N-Diallyl-2,2-dichloracetamid) (S3-1),
   "R-29148" (3-Dichloracetyl-2,2,5-trimethyl-1,3-oxazolidin) der Firma Stauffer (S3-2),
   "R-28725" (3-Dichloracetyl-2,2,-dimethyl-1,3-oxazolidin) der Firma Stauffer (S3-3),
   "Benoxacor" (4-Dichloracetyl-3,4-dihydro-3-methyl-2H-1,4-benzoxazin) (S3-4),
   "PPG-1292" (N-Allyl-N-[(1,3-dioxolan-2-yl)-methyl]-dichloracetamid) der Firma PPG Industries (S3-5),
   "DKA-24" (N-Allyl-N-[(allylaminocarbonyl)methyl]-dichloracetamid) der Firma Sagro-Chem (S3-6),
   "AD-67" oder "MON 4660" (3-Dichloracetyl-1-oxa-3-aza-spiro[4,5]decan) der Firma Nitrokemia bzw. Monsanto (S3-7),
   "TI-35" (1-Dichloracetyl-azepan) der Firma TRI-Chemical RT (S3-8),
   "Diclonon" (Dicyclonon) (synonym: "BAS145138" oder "LAB145138") (RS)-1-Dichloracetyl-3,3,8a-trimethylperhydropyrrolo[1,2-a]pyrimidin-6-on der Firma BASF (S3-9),
   "Furilazol" oder "MON 13900" ((RS)-3-Dichloracetyl-5-(2-furyl)-2,2-dimethyloxazolidin) (S3-10), sowie dessen (R)-Isomer (S3-11).
S4) Verbindungen aus der Klasse der Acylsulfonamide (S4):
   S4^{a}) N-Acylsulfonamide der Formel (S4^{a}) und deren Salze wie sie in der WO-A-97/45016 beschrieben sind, 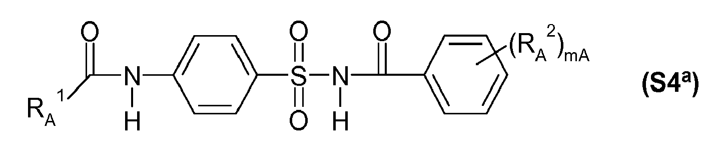 worin
      - R_{A}¹: (C₁-C₆)Alkyl, (C₃-C₆)Cycloalkyl, wobei die 2 letztgenannten Reste durch v_{A} Substituenten aus der Gruppe Halogen, (C₁-C₄)Alkoxy, (C₁-C₆)Haloalkoxy und (C₁-C₄)Alkylthio und im Falle cyclischer Reste auch durch (C₁-C₄)Alkyl und (C₁-C₄)Haloalkyl substituiert sind;
      - R_{A}²: Halogen, (C₁-C₄)Alkyl, (C₁-C₄)Alkoxy, CF₃;
      - m_{A}: 1 oder 2;
      - v_{A}: ist 0, 1, 2 oder 3 bedeuten;
   S4^{b}) Verbindungen vom Typ der 4-(Benzoylsulfamoyl)benzamide der Formel (S4^{b}) und deren Salze, wie sie in der WO-A-99/16744 beschrieben sind, 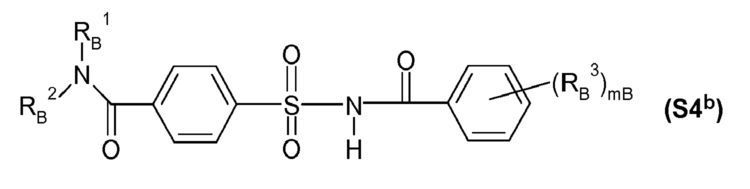 worin
      - R_{B}¹, R_{B}²: unabhängig voneinander Wasserstoff, (C₁-C₆)Alkyl, (C₃-C₆)Cycloalkyl, (C₃-C₆)Alkenyl, (C₃-C₆)Alkinyl,
      - R_{B}³: Halogen, (C₁-C₄)Alkyl, (C₁-C₄)Haloalkyl oder (C₁-C₄)Alkoxy und
      - m_{B}: 1 oder 2 bedeuten,
      z.B. solche worin
      R_{B}¹ = Cyclopropyl, R_{B}² = Wasserstoff und (R_{B}³) = 2-OMe ist (S4-1, "Cyprosulfamide"),
      R_{B}¹ = Cyclopropyl, R_{B}² = Wasserstoff und (R_{B}³) = 5-Cl-2-OMe ist (S4-2),
      R_{B}¹ = Ethyl, R_{B}² = Wasserstoff und (R_{B}³) = 2-OMe ist (S4-3),
      R_{B}¹ = Isopropyl, R_{B}² = Wasserstoff und (R_{B}³) = 5-Cl-2-OMe ist (S4-4) und
      R_{B}¹ = Isopropyl, R_{B}² = Wasserstoff und (R_{B}³) = 2-OMe ist (S4-5).
   S4^{c}) Verbindungen aus der Klasse der Benzoylsulfamoylphenylharnstoffe der Formel (S4^{c}), wie sie in der EP-A-365484 beschrieben sind 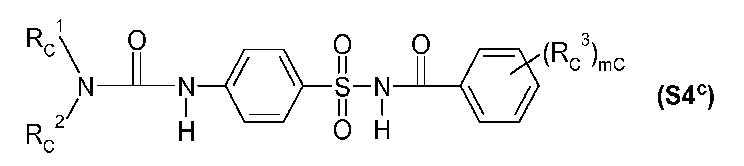 worin
      - R_{C}¹, R_{C}²: unabhängig voneinander Wasserstoff, (C₁-C₈)Alkyl, (C₃-C₈)Cycloalkyl, (C₃-C₆)Alkenyl, (C₃-C₆)Alkinyl,
      - R_{C}³: Halogen, (C₁-C₄)Alkyl, (C₁-C₄)Alkoxy, CF₃
      - m_{C}: 1 oder 2 bedeuten;
   beispielsweise
   1-[4-(N-2-Methoxybenzoylsulfamoyl)phenyl]-3-methylharnstoff,
   1-[4-(N-2-Methoxybenzoylsulfamoyl)phenyl]-3,3-dimethylharnstoff,
   1-[4-(N-4,5-Dimethylbenzoylsulfamoyl)phenyl]-3-methylharnstoff.
S5) Wirkstoffe aus der Klasse der Hydroxyaromaten und der aromatischaliphatischen Carbonsäurederivate (S5), z.B. 3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicyclsäure, 2-Hydroxyzimtsäure, 2,4-Dichlorzimtsäure, wie sie in der WO-A-2004/084631, WO-A-2005/015994, WO-A-2005/016001 beschrieben sind.
S6) Wirkstoffe aus der Klasse der 1,2-Dihydrochinoxalin-2-one (S6), z.B. 1-Methyl-3-(2-thienyl)-1,2-dihydrochinoxalin-2-on, 1-Methyl-3-(2-thienyl)-1,2-dihydrochinoxalin-2-thion, 1-(2-Aminoethyl)-3-(2-thienyl)-1,2-dihydrochinoxalin-2-on-hydrochlorid, 1-(2-Methylsulfonylaminoethyl)-3-(2-thienyl)-1,2-dihydro-chinoxalin-2-on, wie sie in der WO-A-2005/112630 beschrieben sind.
S7) Verbindungen aus der Klasse der Diphenylmethoxyessigsäurederivate (S7), z.B. Diphenylmethoxyessigsäuremethylester (CAS-Reg.Nr. 41858-19-9) (S7-1), Diphenylmethoxyessigsäureethylester oder Diphenylmethoxyessigsäure wie sie in der WO-A-98/38856 beschrieben sind.
S8) Verbindungen der Formel (S8),wie sie in der WO-A-98/27049 beschrieben sind 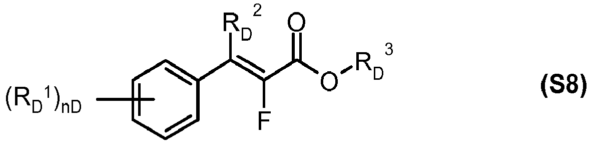 worin die Symbole und Indizes folgende Bedeutungen haben:
   - R_{D}¹: ist Halogen, (C₁-C₄)Alkyl, (C₁-C₄)Haloalkyl, (C₁-C₄)Alkoxy, (C₁-C₄)Haloalkoxy,
   - R_{D}²: ist Wasserstoff oder (C₁-C₄)Alkyl
   - R_{D}³: ist Wasserstoff, (C₁-C₈)Alkyl, (C₂-C₄)Alkenyl, (C₂-C₄)Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze
   - n_{D}: ist eine ganze Zahl von 0 bis 2.
S9) Wirkstoffe aus der Klasse der 3-(5-Tetrazolylcarbonyl)-2-chinolone (S9), z.B. 1,2-Dihydro-4-hydroxy-1-ethyl-3-(5-tetrazolylcarbonyl)-2-chinolon (CAS-Regno: 219479-18-2), 1,2-Dihydro-4-hydroxy-1-methyl-3-(5-tetrazolylcarbonyl)-2-chinolon (CAS-Reg.Nr. 95855-00-8), wie sie in der WO-A-1999/000020 beschrieben sind.
S10) Verbindungen der Formeln (S10^{a}) oder (S10^{b}) wie sie in der WO-A-2007/023719 und WO-A-2007/023764 beschrieben sind 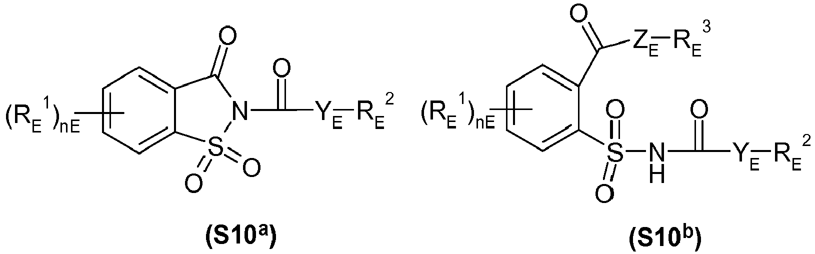 worin
   - R_{E}¹: Halogen, (C₁-C₄)Alkyl, Methoxy, Nitro, Cyano, CF₃, OCF₃
   - Y_{E}, Z_{E}: unabhängig voneinander O oder S,
   - n_{E}: eine ganze Zahl von 0 bis 4,
   - R_{E}²: (C₁-C₁₆)Alkyl, (C₂-C₆)Alkenyl, (C₃-C₆)Cycloalkyl, Aryl; Benzyl, Halogenbenzyl,
   - R_{E}³: Wasserstoff oder (C₁-C₆)Alkyl bedeuten.
S11) Wirkstoffe vom Typ der Oxyimino-Verbindungen (S11), die als Saatbeizmittel bekannt sind, wie z. B.
   "Oxabetrinil" ((Z)-1,3-Dioxolan-2-ylmethoxyimino(phenyl)acetonitril) (S11-1), das als Saatbeiz-Safener für Hirse gegen Schäden von Metolachlor bekannt ist,
   "Fluxofenim" (1-(4-Chlorphenyl)-2,2,2-trifluor-1-ethanon-0-(1,3-dioxolan-2-ylmethyl)-oxim) (S11-2), das als Saatbeiz-Safener für Hirse gegen Schäden von Metolachlor bekannt ist, und
   "Cyometrinil" oder "CGA-43089" ((Z)-Cyanomethoxyimino(phenyl)acetonitril) (S11-3), das als Saatbeiz-Safener für Hirse gegen Schäden von Metolachlor bekannt ist.
S12) Wirkstoffe aus der Klasse der Isothiochromanone (S12), wie z.B. Methyl-[(3-oxo-1H-2-benzothiopyran-4(3H)-yliden)methoxy]acetate (CAS-Reg.Nr. 205121-04-6) (S12-1) und verwandte Verbindungen aus WO-A-1998/13361.
S13) Eine oder mehrere Verbindungen aus Gruppe (S13):
   "Naphthalic anhydrid" (1,8-Naphthalindicarbonsäureanhydrid) (S13-1), das als Saatbeiz-Safener für Mais gegen Schäden von Thiocarbamatherbiziden bekannt ist,
   "Fenclorim" (4,6-Dichlor-2-phenylpyrimidin) (S13-2), das als Safener für Pretilachlor in gesätem Reis bekannt ist,
   "Flurazole" (Benzyl-2-chlor-4-trifluormethyl-1,3-thiazol-5-carboxylat) (S13-3), das als Saatbeiz-Safener für Hirse gegen Schäden von Alachlor und Metolachlor bekannt ist,
   "CL 304415" (CAS-Reg.Nr. 31541-57-8) (4-Carboxy-3,4-dihydro-2H-1-benzopyran-4-essigsäure) (S13-4) der Firma American Cyanamid, das als Safener für Mais gegen Schäden von Imidazolinonen bekannt ist,
   "MG 191" (CAS-Reg.Nr. 96420-72-3) (2-Dichlormethyl-2-methyl-1,3-dioxolan) (S13-5) der Firma Nitrokemia, das als Safener für Mais bekannt ist, "MG-838" (CAS-Reg.Nr. 133993-74-5)
   (2-propenyl 1-oxa-4-azaspiro[4.5]decane-4-carbodithioate) (S13-6) der Firma Nitrokemia
   "Disulfoton" (O,O-Diethyl S-2-ethylthioethyl phosphordithioat) (S13-7),
   "Dietholate" (O,O-Diethyl-O-phenylphosphorotioat) (S13-8),
   "Mephenate" (4-Chlorphenyl-methylcarbamat) (S13-9).
S14) Wirkstoffe, die neben einer herbiziden Wirkung gegen Schadpflanzen auch Safenerwirkung an Kulturpflanzen wie Reis aufweisen, wie z. B.
   "Dimepiperate" oder "MY-93" (S-1-Methyl-1-phenylethyl-piperidin-1-carbothioat), das als Safener für Reis gegen Schäden des Herbizids Molinate bekannt ist,
   "Daimuron" oder "SK 23" (1-(1-Methyl-1-phenylethyl)-3-p-tolyl-harnstoff), das als Safener für Reis gegen Schäden des Herbizids Imazosulfuron bekannt ist (S14-1),
   "Cumyluron" = "JC-940" (3-(2-Chlorphenylmethyl)-1-(1-methyl-1-phenylethyl)harnstoff, siehe JP-A-60087254), das als Safener für Reis gegen Schäden einiger Herbizide bekannt ist,
   "Methoxyphenon" oder "NK 049" (3,3'-Dimethyl-4-methoxy-benzophenon), das als Safener für Reis gegen Schäden einiger Herbizide bekannt ist,
   "CSB" (1-Brom-4-(chlormethylsulfonyl)benzol) von Kumiai, (CAS-Reg.Nr. 54091-06-4), das als Safener gegen Schäden einiger Herbizide in Reis bekannt ist.

Die zitierten Schriften enthalten ausführliche Angaben zu Herstellungsverfahren und Ausgangsmaterialien und nennen bevorzugte Verbindungen. Auf diese Schriften wird ausdrücklich Bezug genommen, sie gelten durch Zitat als Bestandteil dieser Beschreibung.

Beispiele für bevorzugte Kombinationen von herbiziden Wirkstoffen (A) und Safenern (B) sind in der folgenden Tabelle dargestellt:
(I-1) + (S1-1); (I-1) + (S1-2); (I-1) + (S1-3); (I-1) + (S1-4); (I-1) + (S1-5); (I-1) + (S1-6); (I-1) + (S1-7); (I-1) + (S1-8); (I-1) + (S1-9); (I-1) + (S1-10); (I-1) + (S1-11); (I-1) + (S1-12); (I-1) + (S1-13); (I-1) + (S2-1); (I-1) + (S2-2); (I-1) + (S2-3); (I-1) + (S2-4); (I-1) + (S2-5); (I-1) + (S2-6); (I-1) + (S2-7); (I-1) + (S2-8); (I-1) + (S2-9); (I-1) + (S2-10); (I-1) + (S3-1); (I-1) + (S3-2); (I-1) + (S3-3); (I-1) + (S3-4); (I-1) + (S3-5); (I-1) + (S3-6); (I-1) + (S3-7); (I-1) + (S3-8); (I-1) + (S3-9); (I-1) + (S3-10); (I-1) + (S3-11); (I-1) + (S4-1); (I-1) + (S4-2); (I-1) + (S4-3); (I-1) + (S4-4); (I-1) + (S4-5); (I-1) + (S7-1); (I-1) + (S11-1); (I-1) + (S11-2); (I-1) + (S11-3); (I-1) + (S12-1); (I-1) + (S13-1); (I-1) + (S13-2); (I-1) + (S13-3); (I-1) + (S13-4): (I-1) + (S13-5); (I-1) + (S13-6); (I-1) + (S13-7); (I-1) + (S13-8); (I-1) + (S13-9); (I-1) + (S14-1)
(I-2) + (S1-1); (I-2) + (S1-2); (I-2) + (S1-3); (I-2) + (S1-4); (I-2) + (S1-5); (I-2) + (S1-6); (I-2) + (S1-7); (I-2) + (S1-8); (I-2) + (S1-9); (I-2) + (S1-10); (I-2) + (S1-11); (I-2) + (S1-12); (I-2) + (S1-13); (I-2) + (S2-1); (I-2) + (S2-2); (I-2) + (S2-3); (I-2) + (S2-4); (I-2) + (S2-5); (I-2) + (S2-6); (I-2) + (S2-7); (I-2) + (S2-8); (I-2) + (S2-9); (I-2) + (S2-10); (I-2) + (S3-1); (I-2) + (S3-2); (I-2) + (S3-3); (I-2) + (S3-4); (I-2) + (S3-5); (I-2) + (S3-6); (I-2) + (S3-7); (I-2) + (S3-8); (I-2) + (S3-9); (I-2) + (S3-10); (I-2) + (S3-11); (I-2) + (S4-1); (I-2) + (S4-2); (I-2) + (S4-3); (I-2) + (S4-4); (I-2) + (S4-5); (I-2) + (S7-1); (I-2) + (S11-1); (I-2) + (S11-2); (I-2) + (S11-3); (I-2) + (S12-1); (I-2) + (S13-1); (I-2) + (S13-2); (I-2) + (S13-3); (I-2) + (S13-4): (I-2) + (S13-5); (I-2) + (S13-6); (I-2) + (S13-7); (I-2) + (S13-8); (I-2) + (S13-9); (I-2) + (S14-1)
(I-3) + (S1-1); (I-3) + (S1-2); (I-3) + (S1-3); (I-3) + (S1-4); (I-3) + (S1-5); (I-3) + (S1-6); (I-3) + (S1-7); (I-3) + (S1-8); (I-3) + (S1-9); (I-3) + (S1-10); (I-3) + (S1-11); (I-3) + (S1-12); (I-3) + (S1-13); (I-3) + (S2-1); (I-3) + (S2-2); (I-3) + (S2-3); (I-3) + (S2-4); (I-3) + (S2-5); (I-3) + (S2-6); (I-3) + (S2-7); (I-3) + (S2-8); (I-3) + (S2-9); (I-3) + (S2-10); (I-3) + (S3-1); (I-3) + (S3-2); (I-3) + (S3-3); (I-3) + (S3-4); (I-3) + (S3-5); (I-3) + (S3-6); (I-3) + (S3-7); (I-3) + (S3-8); (I-3) + (S3-9); (I-3) + (S3-10); (I-3) + (S3-11); (I-3) + (S4-1); (I-3) + (S4-2); (I-3) + (S4-3); (I-3) + (S4-4); (I-3) + (S4-5); (I-3) + (S7-1); (I-3) + (S11-1); (I-3) + (S11-2); (I-3) + (S11-3); (I-3) + (S12-1); (I-3) + (S13-1); (I-3) + (S13-2); (I-3) + (S13-3); (I-3) + (S13-4): (I-3) + (S13-5); (I-3) + (S13-6); (I-3) + (S13-7); (I-3) + (S13-8); (I-3) + (S13-9); (I-3) + (S14-1)
(I-4) + (S1-1); (I-4) + (S1-2); (I-4) + (S1-3); (I-4) + (S1-4); (I-4) + (S1-5); (I-4) + (S1-6); (I-4) + (S1-7); (I-4) + (S1-8); (I-4) + (S1-9); (I-4) + (S1-10); (I-4) + (S1-11); (I-4) + (S1-12); (I-4) + (S1-13); (I-4) + (S2-1); (I-4) + (S2-2); (I-4) + (S2-3); (I-4) + (S2-4); (I-4) + (S2-5); (I-4) + (S2-6); (I-4) + (S2-7); (I-4) + (S2-8); (I-4) + (S2-9); (I-4) + (S2-10); (I-4) + (S3-1); (I-4) + (S3-2); (I-4) + (S3-3); (I-4) + (S3-4); (I-4) + (S3-5); (I-4) + (S3-6); (I-4) + (S3-7); (I-4) + (S3-8); (I-4) + (S3-9); (I-4) + (S3-10); (I-4) + (S3-11); (I-4) + (S4-1); (I-4) + (S4-2); (I-4) + (S4-3); (I-4) + (S4-4); (I-4) + (S4-5); (I-4) + (S7-1); (I-4) + (S11-1); (I-4) + (S11-2); (I-4) + (S11-3); (I-4) + (S12-1); (I-4) + (S13-1); (I-4) + (S13-2); (I-4) + (S13-3); (I-4) + (S13-4): (I-4) + (S13-5); (I-4) + (S13-6); (I-4) + (S13-7); (I-4) + (S13-8); (I-4) + (S13-9); (I-4) + (S14-1)
(I-5) + (S1-1); (I-5) + (S1-2); (I-5) + (S1-3); (I-5) + (S1-4); (I-5) + (S1-5); (I-5) + (S1-6); (I-5) + (S1-7); (I-5) + (S1-8); (I-5) + (S1-9); (I-5) + (S1-10); (I-5) + (S1-11); (I-5) + (S1-12); (I-5) + (S1-13); (I-5) + (S2-1); (I-5) + (S2-2); (I-5) + (S2-3); (I-5) + (S2-4); (I-5) + (S2-5); (I-5) + (S2-6); (I-5) + (S2-7); (I-5) + (S2-8); (I-5) + (S2-9); (I-5) + (S2-10); (I-5) + (S3-1); (I-5) + (S3-2); (I-5) + (S3-3); (I-5) + (S3-4); (I-5) + (S3-5); (I-5) + (S3-6); (I-5) + (S3-7); (I-5) + (S3-8); (I-5) + (S3-9); (I-5) + (S3-10); (I-5) + (S3-11); (I-5) + (S4-1); (I-5) + (S4-2); (I-5) + (S4-3); (I-5) + (S4-4); (I-5) + (S4-5); (I-5) + (S7-1); (I-5) + (S11-1); (I-5) + (S11-2); (I-5) + (S11-3); (I-5) + (S12-1); (I-5) + (S13-1); (I-5) + (S13-2); (I-5) + (S13-3); (I-5) + (S13-4): (I-5) + (S13-5); (I-5) + (S13-6); (I-5) + (S13-7); (I-5) + (S13-8); (I-5) + (S13-9); (I-5) + (S14-1)
(I-6) + (S1-1); (I-6) + (S1-2); (I-6) + (S1-3); (I-6) + (S1-4); (I-6) + (S1-5); (I-6) + (S1-6); (I-6) + (S1-7); (I-6) + (S1-8); (I-6) + (S1-9); (I-6) + (S1-10); (I-6) + (S1-11); (I-6) + (S1-12); (I-6) + (S1-13); (I-6) + (S2-1); (I-6) + (S2-2); (I-6) + (S2-3); (I-6) + (S2-4); (I-6) + (S2-5); (I-6) + (S2-6); (I-6) + (S2-7); (I-6) + (S2-8); (I-6) + (S2-9); (I-6) + (S2-10); (I-6) + (S3-1); (I-6) + (S3-2); (I-6) + (S3-3); (I-6) + (S3-4); (I-6) + (S3-5); (I-6) + (S3-6); (I-6) + (S3-7); (I-6) + (S3-8); (I-6) + (S3-9); (I-6) + (S3-10); (I-6) + (S3-11); (I-6) + (S4-1); (I-6) + (S4-2); (I-6) + (S4-3); (I-6) + (S4-4); (I-6) + (S4-5); (I-6) + (S7-1); (I-6) + (S11-1); (I-6) + (S11-2); (I-6) + (S11-3); (I-6) + (S12-1); (I-6) + (S13-1); (I-6) + (S13-2); (I-6) + (S13-3); (I-6) + (S13-4): (I-6) + (S13-5); (I-6) + (S13-6); (I-6) + (S13-7); (I-6) + (S13-8); (I-6) + (S13-9); (I-6) + (S14-1)
(I-7) + (S1-1); (I-7) + (S1-2); (I-7) + (S1-3); (I-7) + (S1-4); (I-7) + (S1-5); (I-7) + (S1-6); (I-7) + (S1-7); (I-7) + (S1-8); (I-7) + (S1-9); (I-7) + (S1-10); (I-7) + (S1-11); (I-7) + (S1-12); (I-7) + (S1-13); (I-7) + (S2-1); (I-7) + (S2-2); (I-7) + (S2-3); (I-7) + (S2-4); (I-7) + (S2-5); (I-7) + (S2-6); (I-7) + (S2-7); (I-7) + (S2-8); (I-7) + (S2-9); (I-7) + (S2-10); (I-7) + (S3-1); (I-7) + (S3-2); (I-7) + (S3-3); (I-7) + (S3-4); (I-7) + (S3-5); (I-7) + (S3-6); (I-7) + (S3-7); (I-7) + (S3-8); (I-7) + (S3-9); (I-7) + (S3-10); (I-7) + (S3-11); (I-7) + (S4-1); (I-7) + (S4-2); (I-7) + (S4-3); (I-7) + (S4-4); (I-7) + (S4-5); (I-7) + (S7-1); (I-7) + (S11-1); (I-7) + (S11-2); (I-7) + (S11-3); (I-7) + (S12-1); (I-7) + (S13-1); (I-7) + (S13-2); (I-7) + (S13-3); (I-7) + (S13-4): (I-7) + (S13-5); (I-7) + (S13-6); (I-7) + (S13-7); (I-7) + (S13-8); (I-7) + (S13-9); (I-7) + (S14-1)
(I-8) + (S1-1); (I-8) + (S1-2); (I-8) + (S1-3); (I-8) + (S1-4); (I-8) + (S1-5); (I-8) + (S1-6); (I-8) + (S1-7); (I-8) + (S1-8); (I-8) + (S1-9); (I-8) + (S1-10); (I-8) + (S1-11); (I-8) + (S1-12); (I-8) + (S1-13); (I-8) + (S2-1); (I-8) + (S2-2); (I-8) + (S2-3); (I-8) + (S2-4); (I-8) + (S2-5); (I-8) + (S2-6); (I-8) + (S2-7); (I-8) + (S2-8); (I-8) + (S2-9); (I-8) + (S2-10); (I-8) + (S3-1); (I-8) + (S3-2); (I-8) + (S3-3); (I-8) + (S3-4); (I-8) + (S3-5); (I-8) + (S3-6); (I-8) + (S3-7); (I-8) + (S3-8); (I-8) + (S3-9); (I-8) + (S3-10); (I-8) + (S3-11); (I-8) + (S4-1); (I-8) + (S4-2); (I-8) + (S4-3); (I-8) + (S4-4); (I-8) + (S4-5); (I-8) + (S7-1); (I-8) + (S11-1); (I-8) + (S11-2); (I-8) + (S11-3); (I-8) + (S12-1); (I-8) + (S13-1); (I-8) + (S13-2); (I-8) + (S13-3); (I-8) + (S13-4): (I-8) + (S13-5); (I-8) + (S13-6); (I-8) + (S13-7); (I-8) + (S13-8); (I-8) + (S13-9); (I-8) + (S14-1)
(I-9) + (S1-1); (I-9) + (S1-2); (I-9) + (S1-3); (I-9) + (S1-4); (I-9) + (S1-5); (I-9) + (S1-6); (I-9) + (S1-7); (I-9) + (S1-8); (I-9) + (S1-9); (I-9) + (S1-10); (I-9) + (S1-11); (I-9) + (S1-12); (I-9) + (S1-13); (I-9) + (S2-1); (I-9) + (S2-2); (I-9) + (S2-3); (I-9) + (S2-4); (I-9) + (S2-5); (I-9) + (S2-6); (I-9) + (S2-7); (I-9) + (S2-8); (I-9) + (S2-9); (I-9) + (S2-10); (I-9) + (S3-1); (I-9) + (S3-2); (I-9) + (S3-3); (I-9) + (S3-4); (I-9) + (S3-5); (I-9) + (S3-6); (I-9) + (S3-7); (I-9) + (S3-8); (I-9) + (S3-9); (I-9) + (S3-10); (I-9) + (S3-11); (I-9) + (S4-1); (I-9) + (S4-2); (I-9) + (S4-3); (I-9) + (S4-4); (I-9) + (S4-5); (I-9) + (S7-1); (I-9) + (S11-1); (I-9) + (S11-2); (I-9) + (S11-3); (I-9) + (S12-1); (I-9) + (S13-1); (I-9) + (S13-2); (I-9) + (S13-3); (I-9) + (S13-4): (I-9) + (S13-5); (I-9) + (S13-6); (I-9) + (S13-7); (I-9) + (S13-8); (I-9) + (S13-9); (I-9) + (S14-1)
(I-10) + (S1-1); (I-10) + (S1-2); (I-10) + (S1-3); (I-10) + (S1-4); (I-10) + (S1-5); (I-10) + (S1-6); (I-10) + (S1-7); (I-10) + (S1-8); (I-10) + (S1-9); (I-10) + (S1-10); (I-10) + (S1-11); (I-10) + (S1-12); (I-10) + (S1-13); (I-10) + (S2-1); (I-10) + (S2-2); (I-10) + (S2-3);
(I-10) + (S2-4); (I-10) + (S2-5); (I-10) + (S2-6); (I-10) + (S2-7); (I-10) + (S2-8); (I-10) + (S2-9); (I-10) + (S2-10); (I-10) + (S3-1); (I-10) + (S3-2); (I-10) + (S3-3); (I-10) + (S3-4); (I-10) + (S3-5); (I-10) + (S3-6); (I-10) + (S3-7); (I-10) + (S3-8); (I-10) + (S3-9); (I-10) + (S3-10); (I-10) + (S3-11); (I-10) + (S4-1); (I-10) + (S4-2); (I-10) + (S4-3); (I-10) + (S4-4); (I-10) + (S4-5); (I-10) + (S7-1); (I-10) + (S11-1); (I-10) + (S11-2); (I-10) + (S11-3); (I-10) + (S12-1); (I-10) + (S13-1); (I-10) + (S13-2); (I-10) + (S13-3); (I-10) + (S13-4): (I-10) + (S13-5); (I-10) + (S13-6); (I-10) + (S13-7); (I-10) + (S13-8); (I-10) + (S13-9); (I-10) + (S14-1)
(I-11) + (S1-1); (I-11) + (S1-2); (I-11) + (S1-3); (I-11) + (S1-4); (I-11) + (S1-5); (I-11) + (S1-6); (I-11) + (S1-7); (I-11) + (S1-8); (I-11) + (S1-9); (I-11) + (S1-10); (I-11) + (S1-11); (I-11) + (S1-12); (I-11) + (S1-13); (I-11) + (S2-1); (I-11) + (S2-2); (I-11) + (S2-3); (I-11) + (S2-4); (I-11) + (S2-5); (I-11) + (S2-6); (I-11) + (S2-7); (I-11) + (S2-8); (I-11) + (S2-9); (I-11) + (S2-10); (I-11) + (S3-1); (I-11) + (S3-2); (I-11) + (S3-3); (I-11) + (S3-4); (I-11) + (S3-5); (I-11) + (S3-6); (I-11) + (S3-7); (I-11) + (S3-8); (I-11) + (S3-9); (I-11) + (S3-10); (I-11) + (S3-11); (I-11) + (S4-1); (I-11) + (S4-2); (I-11) + (S4-3); (I-11) + (S4-4); (I-11) + (S4-5); (I-11) + (S7-1); (I-11) + (S11-1); (I-11) + (S11-2); (I-11) + (S11-3); (I-11) + (S12-1); (I-11) + (S13-1); (I-11) + (S13-2); (I-11) + (S13-3); (I-11) + (S13-4): (I-11) + (S13-5); (I-11) + (S13-6); (I-11) + (S13-7); (I-11) + (S13-8); (I-11) + (S13-9); (I-11) + (S14-1)
(I-12) + (S1-1); (I-12) + (S1-2); (I-12) + (S1-3); (I-12) + (S1-4); (I-12) + (S1-5); (I-12) + (S1-6); (I-12) + (S1-7); (I-12) + (S1-8); (I-12) + (S1-9); (I-12) + (S1-10); (I-12) + (S1-11); (I-12) + (S1-12); (I-12) + (S1-13); (I-12) + (S2-1); (I-12) + (S2-2); (I-12) + (S2-3); (I-12) + (S2-4); (I-12) + (S2-5); (I-12) + (S2-6); (I-12) + (S2-7); (I-12) + (S2-8); (I-12) + (S2-9); (I-12) + (S2-10); (I-12) + (S3-1); (I-12) + (S3-2); (I-12) + (S3-3); (I-12) + (S3-4); (I-12) + (S3-5); (I-12) + (S3-6); (I-12) + (S3-7); (I-12) + (S3-8); (I-12) + (S3-9); (I-12) + (S3-10); (I-12) + (S3-11); (I-12) + (S4-1); (I-12) + (S4-2); (I-12) + (S4-3); (I-12) + (S4-4); (I-12) + (S4-5); (I-12) + (S7-1); (I-12) + (S11-1); (I-12) + (S11-2); (I-12) + (S11-3); (I-12) + (S12-1); (I-12) + (S13-1); (I-12) + (S13-2); (I-12) + (S13-3); (I-12) + (S13-4): (I-12) + (S13-5); (I-12) + (S13-6); (I-12) + (S13-7); (I-12) + (S13-8); (I-12) + (S13-9); (I-12) + (S14-1)
(I-13) + (S1-1); (I-13) + (S1-2); (I-13) + (S1-3); (I-13) + (S1-4); (I-13) + (S1-5); (I-13) + (S1-6); (I-13) + (S1-7); (I-13) + (S1-8); (I-13) + (S1-9); (I-13) + (S1-10); (I-13) + (S1-11); (I-13) + (S1-12); (I-13) + (S1-13); (I-13) + (S2-1); (I-13) + (S2-2); (I-13) + (S2-3); (I-13) + (S2-4); (I-13) + (S2-5); (I-13) + (S2-6); (I-13) + (S2-7); (I-13) + (S2-8); (I-13) + (S2-9); (I-13) + (S2-10); (I-13) + (S3-1); (I-13) + (S3-2); (I-13) + (S3-3); (I-13) + (S3-4); (I-13) + (S3-5); (I-13) + (S3-6); (I-13) + (S3-7); (I-13) + (S3-8); (I-13) + (S3-9); (I-13) + (S3-10); (I-13) + (S3-11); (I-13) + (S4-1); (I-13) + (S4-2); (I-13) + (S4-3); (I-13) + (S4-4); (I-13) + (S4-5); (I-13) + (S7-1); (I-13) + (S11-1); (I-13) + (S11-2); (I-13) + (S11-3); (I-13) + (S12-1); (I-13) + (S13-1); (I-13) + (S13-2); (I-13) + (S13-3); (I-13) + (S13-4): (I-13) + (S13-5); (I-13) + (S13-6); (I-13) + (S13-7); (I-13) + (S13-8); (I-13) + (S13-9); (I-13) + (S14-1)
(I-14) + (S1-1); (I-14) + (S1-2); (I-14) + (S1-3); (I-14) + (S1-4); (I-14) + (S1-5); (I-14) + (S1-6); (I-14) + (S1-7); (I-14) + (S1-8); (I-14) + (S1-9); (I-14) + (S1-10); (I-14) + (S1-11); (I-14) + (S1-12); (I-14) + (S1-13); (I-14) + (S2-1); (I-14) + (S2-2); (I-14) + (S2-3); (I-14) + (S2-4); (I-14) + (S2-5); (I-14) + (S2-6); (I-14) + (S2-7); (I-14) + (S2-8); (I-14) + (S2-9); (I-14) + (S2-10); (I-14) + (S3-1); (I-14) + (S3-2); (I-14) + (S3-3); (I-14) + (S3-4); (I-14) + (S3-5); (I-14) + (S3-6); (I-14) + (S3-7); (I-14) + (S3-8); (I-14) + (S3-9); (I-14) + (S3-10); (I-14) + (S3-11); (I-14) + (S4-1); (I-14) + (S4-2); (I-14) + (S4-3); (I-14) + (S4-4); (I-14) + (S4-5); (I-14) + (S7-1); (I-14) + (S11-1); (I-14) + (S11-2); (I-14) + (S11-3); (I-14) + (S12-1); (I-14) + (S13-1); (I-14) + (S13-2); (I-14) + (S13-3); (I-14) + (S13-4): (I-14) + (S13-5); (I-14) + (S13-6); (I-14) + (S13-7); (I-14) + (S13-8); (I-14) + (S13-9); (I-14) + (S14-1)
(I-15) + (S1-1); (I-15) + (S1-2); (I-15) + (S1-3); (I-15) + (S1-4); (I-15) + (S1-5); (I-15) + (S1-6); (I-15) + (S1-7); (I-15) + (S1-8); (I-15) + (S1-9); (I-15) + (S1-10); (I-15) + (S1-11); (I-15) + (S1-12); (I-15) + (S1-13); (I-15) + (S2-1); (I-15) + (S2-2); (I-15) + (S2-3); (I-15) + (S2-4); (I-15) + (S2-5); (I-15) + (S2-6); (I-15) + (S2-7); (I-15) + (S2-8); (I-15) + (S2-9); (I-15) + (S2-10); (I-15) + (S3-1); (I-15) + (S3-2); (I-15) + (S3-3); (I-15) + (S3-4); (I-15) + (S3-5); (I-15) + (S3-6); (I-15) + (S3-7); (I-15) + (S3-8); (I-15) + (S3-9); (I-15) + (S3-10); (I-15) + (S3-11); (I-15) + (S4-1); (I-15) + (S4-2); (I-15) + (S4-3); (I-15) + (S4-4); (I-15) + (S4-5); (I-15) + (S7-1); (I-15) + (S11-1); (I-15) + (S11-2); (I-15) + (S11-3); (I-15) + (S12-1); (I-15) + (S13-1); (I-15) + (S13-2); (I-15) + (S13-3); (I-15) + (S13-4): (I-15) + (S13-5); (I-15) + (S13-6); (I-15) + (S13-7); (I-15) + (S13-8); (I-15) + (S13-9); (I-15) + (S14-1)
(I-16) + (S1-1); (I-16) + (S1-2); (I-16) + (S1-3); (I-16) + (S1-4); (I-16) + (S1-5); (I-16) + (S1-6); (I-16) + (S1-7); (I-16) + (S1-8); (I-16) + (S1-9); (I-16) + (S1-10); (I-16) + (S1-11); (I-16) + (S1-12); (I-16) + (S1-13); (I-16) + (S2-1); (I-16) + (S2-2); (I-16) + (S2-3); (I-16) + (S2-4); (I-16) + (S2-5); (I-16) + (S2-6); (I-16) + (S2-7); (I-16) + (S2-8); (I-16) + (S2-9); (I-16) + (S2-10); (I-16) + (S3-1); (I-16) + (S3-2); (I-16) + (S3-3); (I-16) + (S3-4); (I-16) + (S3-5); (I-16) + (S3-6); (I-16) + (S3-7); (I-16) + (S3-8); (I-16) + (S3-9); (I-16) + (S3-10); (I-16) + (S3-11); (I-16) + (S4-1); (I-16) + (S4-2); (I-16) + (S4-3); (I-16) + (S4-4); (I-16) + (S4-5); (I-16) + (S7-1); (I-16) + (S11-1); (I-16) + (S11-2); (I-16) + (S11-3); (I-16) + (S12-1); (I-16) + (S13-1); (I-16) + (S13-2); (I-16) + (S13-3); (I-16) + (S13-4): (I-16) + (S13-5); (I-16) + (S13-6); (I-16) + (S13-7); (I-16) + (S13-8); (I-16) + (S13-9); (I-16) + (S14-1)
(I-17) + (S1-1); (I-17) + (S1-2); (I-17) + (S1-3); (I-17) + (S1-4); (I-17) + (S1-5); (I-17) + (S1-6); (I-17) + (S1-7); (I-17) + (S1-8); (I-17) + (S1-9); (I-17) + (S1-10); (I-17) + (S1-11); (I-17) + (S1-12); (I-17) + (S1-13); (I-17) + (S2-1); (I-17) + (S2-2); (I-17) + (S2-3); (I-17) + (S2-4); (I-17) + (S2-5); (I-17) + (S2-6); (I-17) + (S2-7); (I-17) + (S2-8); (I-17) + (S2-9); (I-17) + (S2-10); (I-17) + (S3-1); (I-17) + (S3-2); (I-17) + (S3-3); (I-17) + (S3-4); (I-17) + (S3-5); (I-17) + (S3-6); (I-17) + (S3-7); (I-17) + (S3-8); (I-17) + (S3-9); (I-17) + (S3-10); (I-17) + (S3-11); (I-17) + (S4-1); (I-17) + (S4-2); (I-17) + (S4-3); (I-17) + (S4-4); (I-17) + (S4-5); (I-17) + (S7-1); (I-17) + (S11-1); (I-17) + (S11-2); (I-17) + (S11-3); (I-17) + (S12-1); (I-17) + (S13-1); (I-17) + (S13-2); (I-17) + (S13-3); (I-17) + (S13-4): (I-17) + (S13-5); (I-17) + (S13-6); (I-17) + (S13-7); (I-17) + (S13-8); (I-17) + (S13-9); (I-17) + (S14-1)
(I-18) + (S1-1); (I-18) + (S1-2); (I-18) + (S1-3); (I-18) + (S1-4); (I-18) + (S1-5); (I-18) + (S1-6); (I-18) + (S1-7); (I-18) + (S1-8); (I-18) + (S1-9); (I-18) + (S1-10); (I-18) + (S1-11); (I-18) + (S1-12); (I-18) + (S1-13); (I-18) + (S2-1); (I-18) + (S2-2); (I-18) + (S2-3); (I-18) + (S2-4); (I-18) + (S2-5); (I-18) + (S2-6); (I-18) + (S2-7); (I-18) + (S2-8); (I-18) + (S2-9); (I-18) + (S2-10); (I-18) + (S3-1); (I-18) + (S3-2); (I-18) + (S3-3); (I-18) + (S3-4); (I-18) + (S3-5); (I-18) + (S3-6); (I-18) + (S3-7); (I-18) + (S3-8); (I-18) + (S3-9); (I-18) + (S3-10); (I-18) + (S3-11); (I-18) + (S4-1); (I-18) + (S4-2); (I-18) + (S4-3); (I-18) + (S4-4); (I-18) + (S4-5); (I-18) + (S7-1); (I-18) + (S11-1); (I-18) + (S11-2); (I-18) + (S11-3); (I-18) + (S12-1); (I-18) + (S13-1); (I-18) + (S13-2); (I-18) + (S13-3); (I-18) + (S13-4): (I-18) + (S13-5); (I-18) + (S13-6); (I-18) + (S13-7); (I-18) + (S13-8); (I-18) + (S13-9); (I-18) + (S14-1)
(I-19) + (S1-1); (I-19) + (S1-2); (I-19) + (S1-3); (I-19) + (S1-4); (I-19) + (S1-5); (I-19) + (S1-6); (I-19) + (S1-7); (I-19) + (S1-8); (I-19) + (S1-9); (I-19) + (S1-10); (I-19) + (S1-11); (I-19) + (S1-12); (I-19) + (S1-13); (I-19) + (S2-1); (I-19) + (S2-2); (I-19) + (S2-3); (I-19) + (S2-4); (I-19) + (S2-5); (I-19) + (S2-6); (I-19) + (S2-7); (I-19) + (S2-8); (I-19) + (S2-9); (I-19) + (S2-10); (I-19) + (S3-1); (I-19) + (S3-2); (I-19) + (S3-3); (I-19) + (S3-4); (I-19) + (S3-5); (I-19) + (S3-6); (I-19) + (S3-7); (I-19) + (S3-8); (I-19) + (S3-9); (I-19) + (S3-10); (I-19) + (S3-11); (I-19) + (S4-1); (I-19) + (S4-2); (I-19) + (S4-3); (I-19) + (S4-4); (I-19) + (S4-5); (I-19) + (S7-1); (I-19) + (S11-1); (I-19) + (S11-2); (I-19) + (S11-3); (I-19) + (S12-1); (I-19) + (S13-1); (I-19) + (S13-2); (I-19) + (S13-3); (I-19) + (S13-4): (I-19) + (S13-5); (I-19) + (S13-6); (I-19) + (S13-7); (I-19) + (S13-8); (I-19) + (S13-9); (I-19) + (S14-1)
(I-20) + (S1-1); (I-20) + (S1-2); (I-20) + (S1-3); (I-20) + (S1-4); (I-20) + (S1-5); (I-20) + (S1-6); (I-20) + (S1-7); (I-20) + (S1-8); (I-20) + (S1-9); (I-20) + (S1-10); (I-20) + (S1-11); (I-20) + (S1-12); (I-20) + (S1-13); (I-20) + (S2-1); (I-20) + (S2-2); (I-20) + (S2-3); (I-20) + (S2-4); (I-20) + (S2-5); (I-20) + (S2-6); (I-20) + (S2-7); (I-20) + (S2-8); (I-20) + (S2-9); (I-20) + (S2-10); (I-20) + (S3-1); (I-20) + (S3-2); (I-20) + (S3-3); (I-20) + (S3-4); (I-20) + (S3-5); (I-20) + (S3-6); (I-20) + (S3-7); (I-20) + (S3-8); (I-20) + (S3-9); (I-20) + (S3-10); (I-20) + (S3-11); (I-20) + (S4-1); (I-20) + (S4-2); (I-20) + (S4-3); (I-20) + (S4-4); (I-20) + (S4-5); (I-20) + (S7-1); (I-20) + (S11-1); (I-20) + (S11-2); (I-20) + (S11-3); (I-20) + (S12-1); (I-20) + (S13-1); (I-20) + (S13-2); (I-20) + (S13-3); (I-20) + (S13-4): (I-20) + (S13-5); (I-20) + (S13-6); (I-20) + (S13-7); (I-20) + (S13-8); (I-20) + (S13-9); (I-20) + (S14-1)
(I-21) + (S1-1); (I-21) + (S1-2); (I-21) + (S1-3); (I-21) + (S1-4); (I-21) + (S1-5); (I-21) + (S1-6); (I-21) + (S1-7); (I-21) + (S1-8); (I-21) + (S1-9); (I-21) + (S1-10); (I-21) + (S1-11); (I-21) + (S1-12); (I-21) + (S1-13); (I-21) + (S2-1); (I-21) + (S2-2); (I-21) + (S2-3); (I-21) + (S2-4); (I-21) + (S2-5); (I-21) + (S2-6); (I-21) + (S2-7); (I-21) + (S2-8); (I-21) + (S2-9); (I-21) + (S2-10); (I-21) + (S3-1); (I-21) + (S3-2); (I-21) + (S3-3); (I-21) + (S3-4); (I-21) + (S3-5); (I-21) + (S3-6); (I-21) + (S3-7); (I-21) + (S3-8); (I-21) + (S3-9); (I-21) + (S3-10); (I-21) + (S3-11); (I-21) + (S4-1); (I-21) + (S4-2); (I-21) + (S4-3); (I-21) + (S4-4); (I-21) + (S4-5); (I-21) + (S7-1); (I-21) + (S11-1); (I-21) + (S11-2); (I-21) + (S11-3); (I-21) + (S12-1); (I-21) + (S13-1); (I-21) + (S13-2); (I-21) + (S13-3); (I-21) + (S13-4): (I-21) + (S13-5); (I-21) + (S13-6); (I-21) + (S13-7); (I-21) + (S13-8); (I-21) + (S13-9); (I-21) + (S14-1)
(I-22) + (S1-1); (I-22) + (S1-2); (I-22) + (S1-3); (I-22) + (S1-4); (I-22) + (S1-5); (I-22) + (S1-6); (I-22) + (S1-7); (I-22) + (S1-8); (I-22) + (S1-9); (I-22) + (S1-10); (I-22) + (S1-11); (I-22) + (S1-12); (I-22) + (S1-13); (I-22) + (S2-1); (I-22) + (S2-2); (I-22) + (S2-3); (I-22) + (S2-4); (I-22) + (S2-5); (I-22) + (S2-6); (I-22) + (S2-7); (I-22) + (S2-8); (I-22) + (S2-9); (I-22) + (S2-10); (I-22) + (S3-1); (I-22) + (S3-2); (I-22) + (S3-3); (I-22) + (S3-4); (I-22) + (S3-5); (I-22) + (S3-6); (I-22) + (S3-7); (I-22) + (S3-8); (I-22) + (S3-9); (I-22) + (S3-10); (I-22) + (S3-11); (I-22) + (S4-1); (I-22) + (S4-2); (I-22) + (S4-3); (I-22) + (S4-4); (I-22) + (S4-5); (I-22) + (S7-1); (I-22) + (S11-1); (I-22) + (S11-2); (I-22) + (S11-3); (I-22) + (S12-1); (I-22) + (S13-1); (I-22) + (S13-2); (I-22) + (S13-3); (I-22) + (S13-4): (I-22) + (S13-5); (I-22) + (S13-6); (I-22) + (S13-7); (I-22) + (S13-8); (I-22) + (S13-9); (I-22) + (S14-1)
(I-23) + (S1-1); (I-23) + (S1-2); (I-23) + (S1-3); (I-23) + (S1-4); (I-23) + (S1-5); (I-23) + (S1-6); (I-23) + (S1-7); (I-23) + (S1-8); (I-23) + (S1-9); (I-23) + (S1-10); (I-23) + (S1-11); (I-23) + (S1-12); (I-23) + (S1-13); (I-23) + (S2-1); (I-23) + (S2-2); (I-23) + (S2-3); (I-23) + (S2-4); (I-23) + (S2-5); (I-23) + (S2-6); (I-23) + (S2-7); (I-23) + (S2-8); (I-23) + (S2-9); (I-23) + (S2-10); (I-23) + (S3-1); (I-23) + (S3-2); (I-23) + (S3-3); (I-23) + (S3-4); (I-23) + (S3-5); (I-23) + (S3-6); (I-23) + (S3-7); (I-23) + (S3-8); (I-23) + (S3-9); (I-23) + (S3-10); (I-23) + (S3-11); (I-23) + (S4-1); (I-23) + (S4-2); (I-23) + (S4-3); (I-23) + (S4-4); (I-23) + (S4-5); (I-23) + (S7-1); (I-23) + (S11-1); (I-23) + (S11-2); (I-23) + (S11-3); (I-23) + (S12-1); (I-23) + (S13-1); (I-23) + (S13-2); (I-23) + (S13-3); (I-23) + (S13-4): (I-23) + (S13-5); (I-23) + (S13-6); (I-23) + (S13-7); (I-23) + (S13-8); (I-23) + (S13-9); (I-23) + (S14-1)
(I-24) + (S1-1); (I-24) + (S1-2); (I-24) + (S1-3); (I-24) + (S1-4); (I-24) + (S1-5); (I-24) + (S1-6); (I-24) + (S1-7); (I-24) + (S1-8); (I-24) + (S1-9); (I-24) + (S1-10); (I-24) + (S1-11); (I-24) + (S1-12); (I-24) + (S1-13); (I-24) + (S2-1); (I-24) + (S2-2); (I-24) + (S2-3); (I-24) + (S2-4); (I-24) + (S2-5); (I-24) + (S2-6); (I-24) + (S2-7); (I-24) + (S2-8); (I-24) + (S2-9); (I-24) + (S2-10); (I-24) + (S3-1); (I-24) + (S3-2); (I-24) + (S3-3); (I-24) + (S3-4); (I-24) + (S3-5); (I-24) + (S3-6); (I-24) + (S3-7); (I-24) + (S3-8); (I-24) + (S3-9); (I-24) + (S3-10); (I-24) + (S3-11); (I-24) + (S4-1); (I-24) + (S4-2); (I-24) + (S4-3); (I-24) + (S4-4); (I-24) + (S4-5); (I-24) + (S7-1); (I-24) + (S11-1); (I-24) + (S11-2); (I-24) + (S11-3); (I-24) + (S12-1); (I-24) + (S13-1); (I-24) + (S13-2); (I-24) + (S13-3); (I-24) + (S13-4): (I-24) + (S13-5); (I-24) + (S13-6); (I-24) + (S13-7); (I-24) + (S13-8); (I-24) + (S13-9); (I-24) + (S14-1)
(I-25) + (S1-1); (I-25) + (S1-2); (I-25) + (S1-3); (I-25) + (S1-4); (I-25) + (S1-5); (I-25) + (S1-6); (I-25) + (S1-7); (I-25) + (S1-8); (I-25) + (S1-9); (I-25) + (S1-10); (I-25) + (S1-11); (I-25) + (S1-12); (I-25) + (S1-13); (I-25) + (S2-1); (I-25) + (S2-2); (I-25) + (S2-3); (I-25) + (S2-4); (I-25) + (S2-5); (I-25) + (S2-6); (I-25) + (S2-7); (I-25) + (S2-8); (I-25) + (S2-9); (I-25) + (S2-10); (I-25) + (S3-1); (I-25) + (S3-2); (I-25) + (S3-3); (I-25) + (S3-4); (I-25) + (S3-5); (I-25) + (S3-6); (I-25) + (S3-7); (I-25) + (S3-8); (I-25) + (S3-9); (I-25) + (S3-10); (I-25) + (S3-11); (I-25) + (S4-1); (I-25) + (S4-2); (I-25) + (S4-3); (I-25) + (S4-4); (I-25) + (S4-5); (I-25) + (S7-1); (I-25) + (S11-1); (I-25) + (S11-2); (I-25) + (S11-3); (I-25) + (S12-1); (I-25) + (S13-1); (I-25) + (S13-2); (I-25) + (S13-3); (I-25) + (S13-4): (I-25) + (S13-5); (I-25) + (S13-6); (I-25) + (S13-7); (I-25) + (S13-8); (I-25) + (S13-9); (I-25) + (S14-1)
(I-26) + (S1-1); (I-26) + (S1-2); (I-26) + (S1-3); (I-26) + (S1-4); (I-26) + (S1-5); (I-26) + (S1-6); (I-26) + (S1-7); (I-26) + (S1-8); (I-26) + (S1-9); (I-26) + (S1-10); (I-26) + (S1-11); (I-26) + (S1-12); (I-26) + (S1-13); (I-26) + (S2-1); (I-26) + (S2-2); (I-26) + (S2-3); (I-26) + (S2-4); (I-26) + (S2-5); (I-26) + (S2-6); (I-26) + (S2-7); (I-26) + (S2-8); (I-26) + (S2-9); (I-26) + (S2-10); (I-26) + (S3-1); (I-26) + (S3-2); (I-26) + (S3-3); (I-26) + (S3-4); (I-26) + (S3-5); (I-26) + (S3-6); (I-26) + (S3-7); (I-26) + (S3-8); (I-26) + (S3-9); (I-26) + (S3-10); (I-26) + (S3-11); (I-26) + (S4-1); (I-26) + (S4-2); (I-26) + (S4-3); (I-26) + (S4-4); (I-26) + (S4-5); (I-26) + (S7-1); (I-26) + (S11-1); (I-26) + (S11-2); (I-26) + (S11-3); (I-26) + (S12-1); (I-26) + (S13-1); (I-26) + (S13-2); (I-26) + (S13-3); (I-26) + (S13-4): (I-26) + (S13-5); (I-26) + (S13-6); (I-26) + (S13-7); (I-26) + (S13-8); (I-26) + (S13-9); (I-26) + (S14-1)
(I-27) + (S1-1); (I-27) + (S1-2); (I-27) + (S1-3); (I-27) + (S1-4); (I-27) + (S1-5); (I-27) + (S1-6); (I-27) + (S1-7); (I-27) + (S1-8); (I-27) + (S1-9); (I-27) + (S1-10); (I-27) + (S1-11); (I-27) + (S1-12); (I-27) + (S1-13); (I-27) + (S2-1); (I-27) + (S2-2); (I-27) + (S2-3); (I-27) + (S2-4); (I-27) + (S2-5); (I-27) + (S2-6); (I-27) + (S2-7); (I-27) + (S2-8); (I-27) + (S2-9); (I-27) + (S2-10); (I-27) + (S3-1); (I-27) + (S3-2); (I-27) + (S3-3); (I-27) + (S3-4); (I-27) + (S3-5); (I-27) + (S3-6); (I-27) + (S3-7); (I-27) + (S3-8); (I-27) + (S3-9); (I-27) + (S3-10); (I-27) + (S3-11); (I-27) + (S4-1); (I-27) + (S4-2); (I-27) + (S4-3); (I-27) + (S4-4); (I-27) + (S4-5); (I-27) + (S7-1); (I-27) + (S11-1); (I-27) + (S11-2); (I-27) + (S11-3); (I-27) + (S12-1); (I-27) + (S13-1); (I-27) + (S13-2); (I-27) + (S13-3); (I-27) + (S13-4): (I-27) + (S13-5); (I-27) + (S13-6); (I-27) + (S13-7); (I-27) + (S13-8); (I-27) + (S13-9); (I-27) + (S14-1)
(I-28) + (S1-1); (I-28) + (S1-2); (I-28) + (S1-3); (I-28) + (S1-4); (I-28) + (S1-5); (I-28) + (S1-6); (I-28) + (S1-7); (I-28) + (S1-8); (I-28) + (S1-9); (I-28) + (S1-10); (I-28) + (S1-11); (I-28) + (S1-12); (I-28) + (S1-13); (I-28) + (S2-1); (I-28) + (S2-2); (I-28) + (S2-3); (I-28) + (S2-4); (I-28) + (S2-5); (I-28) + (S2-6); (I-28) + (S2-7); (I-28) + (S2-8); (I-28) + (S2-9); (I-28) + (S2-10); (I-28) + (S3-1); (I-28) + (S3-2); (I-28) + (S3-3); (I-28) + (S3-4); (I-28) + (S3-5); (I-28) + (S3-6); (I-28) + (S3-7); (I-28) + (S3-8); (I-28) + (S3-9); (I-28) + (S3-10); (I-28) + (S3-11); (I-28) + (S4-1); (I-28) + (S4-2); (I-28) + (S4-3); (I-28) + (S4-4); (I-28) + (S4-5); (I-28) + (S7-1); (I-28) + (S11-1); (I-28) + (S11-2); (I-28) + (S11-3); (I-28) + (S12-1); (I-28) + (S13-1); (I-28) + (S13-2); (I-28) + (S13-3); (I-28) + (S13-4): (I-28) + (S13-5); (I-28) + (S13-6); (I-28) + (S13-7); (I-28) + (S13-8); (I-28) + (S13-9); (I-28) + (S14-1)
(I-29) + (S1-1); (I-29) + (S1-2); (I-29) + (S1-3); (I-29) + (S1-4); (I-29) + (S1-5); (I-29) + (S1-6); (I-29) + (S1-7); (I-29) + (S1-8); (I-29) + (S1-9); (I-29) + (S1-10); (I-29) + (S1-11); (I-29) + (S1-12); (I-29) + (S1-13); (I-29) + (S2-1); (I-29) + (S2-2); (I-29) + (S2-3); (I-29) + (S2-4); (I-29) + (S2-5); (I-29) + (S2-6); (I-29) + (S2-7); (I-29) + (S2-8); (I-29) + (S2-9); (I-29) + (S2-10); (I-29) + (S3-1); (I-29) + (S3-2); (I-29) + (S3-3); (I-29) + (S3-4); (I-29) + (S3-5); (I-29) + (S3-6); (I-29) + (S3-7); (I-29) + (S3-8); (I-29) + (S3-9); (I-29) + (S3-10); (I-29) + (S3-11); (I-29) + (S4-1); (I-29) + (S4-2); (I-29) + (S4-3); (I-29) + (S4-4); (I-29) + (S4-5); (I-29) + (S7-1); (I-29) + (S11-1); (I-29) + (S11-2); (I-29) + (S11-3); (I-29) + (S12-1); (I-29) + (S13-1); (I-29) + (S13-2); (I-29) + (S13-3); (I-29) + (S13-4): (I-29) + (S13-5); (I-29) + (S13-6); (I-29) + (S13-7); (I-29) + (S13-8); (I-29) + (S13-9); (I-29) + (S14-1)
(I-30) + (S1-1); (I-30) + (S1-2); (I-30) + (S1-3); (I-30) + (S1-4); (I-30) + (S1-5); (I-30) + (S1-6); (I-30) + (S1-7); (I-30) + (S1-8); (I-30) + (S1-9); (I-30) + (S1-10); (I-30) + (S1-11); (I-30) + (S1-12); (I-30) + (S1-13); (I-30) + (S2-1); (I-30) + (S2-2); (I-30) + (S2-3); (I-30) + (S2-4); (I-30) + (S2-5); (I-30) + (S2-6); (I-30) + (S2-7); (I-30) + (S2-8); (I-30) + (S2-9); (I-30) + (S2-10); (I-30) + (S3-1); (I-30) + (S3-2); (I-30) + (S3-3); (I-30) + (S3-4); (I-30) + (S3-5); (I-30) + (S3-6); (I-30) + (S3-7); (I-30) + (S3-8); (I-30) + (S3-9); (I-30) + (S3-10); (I-30) + (S3-11); (I-30) + (S4-1); (I-30) + (S4-2); (I-30) + (S4-3); (I-30) + (S4-4); (I-30) + (S4-5); (I-30) + (S7-1); (I-30) + (S11-1); (I-30) + (S11-2); (I-30) + (S11-3); (I-30) + (S12-1); (I-30) + (S13-1); (I-30) + (S13-2); (I-30) + (S13-3); (I-30) + (S13-4): (I-30) + (S13-5); (I-30) + (S13-6); (I-30) + (S13-7); (I-30) + (S13-8); (I-30) + (S13-9); (I-30) + (S14-1)
(I-31) + (S1-1); (I-31) + (S1-2); (I-31) + (S1-3); (I-31) + (S1-4); (I-31) + (S1-5); (I-31) + (S1-6); (I-31) + (S1-7); (I-31) + (S1-8); (I-31) + (S1-9); (I-31) + (S1-10); (I-31) + (S1-11); (I-31) + (S1-12); (I-31) + (S1-13); (I-31) + (S2-1); (I-31) + (S2-2); (I-31) + (S2-3); (I-31) + (S2-4); (I-31) + (S2-5); (I-31) + (S2-6); (I-31) + (S2-7); (I-31) + (S2-8); (I-31) + (S2-9); (I-31) + (S2-10); (I-31) + (S3-1); (I-31) + (S3-2); (I-31) + (S3-3); (I-31) + (S3-4); (I-31) + (S3-5); (I-31) + (S3-6); (I-31) + (S3-7); (I-31) + (S3-8); (I-31) + (S3-9); (I-31) + (S3-10); (I-31) + (S3-11); (I-31) + (S4-1); (I-31) + (S4-2); (I-31) + (S4-3); (I-31) + (S4-4); (I-31) + (S4-5); (I-31) + (S7-1); (I-31) + (S11-1); (I-31) + (S11-2); (I-31) + (S11-3); (I-31) + (S12-1); (I-31) + (S13-1); (I-31) + (S13-2); (I-31) + (S13-3); (I-31) + (S13-4): (I-31) + (S13-5); (I-31) + (S13-6); (I-31) + (S13-7); (I-31) + (S13-8); (I-31) + (S13-9); (I-31) + (S14-1)
(I-32) + (S1-1); (I-32) + (S1-2); (I-32) + (S1-3); (I-32) + (S1-4); (I-32) + (S1-5); (I-32) + (S1-6); (I-32) + (S1-7); (I-32) + (S1-8); (I-32) + (S1-9); (I-32) + (S1-10); (I-32) + (S1-11); (I-32) + (S1-12); (I-32) + (S1-13); (I-32) + (S2-1); (I-32) + (S2-2); (I-32) + (S2-3); (I-32) + (S2-4); (I-32) + (S2-5); (I-32) + (S2-6); (I-32) + (S2-7); (I-32) + (S2-8); (I-32) + (S2-9); (I-32) + (S2-10); (I-32) + (S3-1); (I-32) + (S3-2); (I-32) + (S3-3); (I-32) + (S3-4); (I-32) + (S3-5); (I-32) + (S3-6); (I-32) + (S3-7); (I-32) + (S3-8); (I-32) + (S3-9); (I-32) + (S3-10); (I-32) + (S3-11); (I-32) + (S4-1); (I-32) + (S4-2); (I-32) + (S4-3); (I-32) + (S4-4); (I-32) + (S4-5); (I-32) + (S7-1); (I-32) + (S11-1); (I-32) + (S11-2); (I-32) + (S11-3); (I-32) + (S12-1); (I-32) + (S13-1); (I-32) + (S13-2); (I-32) + (S13-3); (I-32) + (S13-4): (I-32) + (S13-5); (I-32) + (S13-6); (I-32) + (S13-7); (I-32) + (S13-8); (I-32) + (S13-9); (I-32) + (S14-1)
(I-33) + (S1-1); (I-33) + (S1-2); (I-33) + (S1-3); (I-33) + (S1-4); (I-33) + (S1-5); (I-33) + (S1-6); (I-33) + (S1-7); (I-33) + (S1-8); (I-33) + (S1-9); (I-33) + (S1-10); (I-33) + (S1-11); (I-33) + (S1-12); (I-33) + (S1-13); (I-33) + (S2-1); (I-33) + (S2-2); (I-33) + (S2-3); (I-33) + (S2-4); (I-33) + (S2-5); (I-33) + (S2-6); (I-33) + (S2-7); (I-33) + (S2-8); (I-33) + (S2-9); (I-33) + (S2-10); (I-33) + (S3-1); (I-33) + (S3-2); (I-33) + (S3-3); (I-33) + (S3-4); (I-33) + (S3-5); (I-33) + (S3-6); (I-33) + (S3-7); (I-33) + (S3-8); (I-33) + (S3-9); (I-33) + (S3-10); (I-33) + (S3-11); (I-33) + (S4-1); (I-33) + (S4-2); (I-33) + (S4-3); (I-33) + (S4-4); (I-33) + (S4-5); (I-33) + (S7-1); (I-33) + (S11-1); (I-33) + (S11-2); (I-33) + (S11-3); (I-33) + (S12-1); (I-33) + (S13-1); (I-33) + (S13-2); (I-33) + (S13-3); (I-33) + (S13-4): (I-33) + (S13-5); (I-33) + (S13-6); (I-33) + (S13-7); (I-33) + (S13-8); (I-33) + (S13-9); (I-33) + (S14-1)
(I-34) + (S1-1); (I-34) + (S1-2); (I-34) + (S1-3); (I-34) + (S1-4); (I-34) + (S1-5); (I-34) + (S1-6); (I-34) + (S1-7); (I-34) + (S1-8); (I-34) + (S1-9); (I-34) + (S1-10); (I-34) + (S1-11); (I-34) + (S1-12); (I-34) + (S1-13); (I-34) + (S2-1); (I-34) + (S2-2); (I-34) + (S2-3); (I-34) + (S2-4); (I-34) + (S2-5); (I-34) + (S2-6); (I-34) + (S2-7); (I-34) + (S2-8); (I-34) + (S2-9); (I-34) + (S2-10); (I-34) + (S3-1); (I-34) + (S3-2); (I-34) + (S3-3); (I-34) + (S3-4); (I-34) + (S3-5); (I-34) + (S3-6); (I-34) + (S3-7); (I-34) + (S3-8); (I-34) + (S3-9); (I-34) + (S3-10); (I-34) + (S3-11); (I-34) + (S4-1); (I-34) + (S4-2); (I-34) + (S4-3); (I-34) + (S4-4); (I-34) + (S4-5); (I-34) + (S7-1); (I-34) + (S11-1); (I-34) + (S11-2); (I-34) + (S11-3); (I-34) + (S12-1); (I-34) + (S13-1); (I-34) + (S13-2); (I-34) + (S13-3); (I-34) + (S13-4): (I-34) + (S13-5); (I-34) + (S13-6); (I-34) + (S13-7); (I-34) + (S13-8); (I-34) + (S13-9); (I-34) + (S14-1)
(I-35) + (S1-1); (I-35) + (S1-2); (I-35) + (S1-3); (I-35) + (S1-4); (I-35) + (S1-5); (I-35) + (S1-6); (I-35) + (S1-7); (I-35) + (S1-8); (I-35) + (S1-9); (I-35) + (S1-10); (I-35) + (S1-11); (I-35) + (S1-12); (I-35) + (S1-13); (I-35) + (S2-1); (I-35) + (S2-2); (I-35) + (S2-3); (I-35) + (S2-4); (I-35) + (S2-5); (I-35) + (S2-6); (I-35) + (S2-7); (I-35) + (S2-8); (I-35) + (S2-9); (I-35) + (S2-10); (I-35) + (S3-1); (I-35) + (S3-2); (I-35) + (S3-3); (I-35) + (S3-4); (I-35) + (S3-5); (I-35) + (S3-6); (I-35) + (S3-7); (I-35) + (S3-8); (I-35) + (S3-9); (I-35) + (S3-10); (I-35) + (S3-11); (I-35) + (S4-1); (I-35) + (S4-2); (I-35) + (S4-3); (I-35) + (S4-4); (I-35) + (S4-5); (I-35) + (S7-1); (I-35) + (S11-1); (I-35) + (S11-2); (I-35) + (S11-3); (I-35) + (S12-1); (I-35) + (S13-1); (I-35) + (S13-2); (I-35) + (S13-3); (I-35) + (S13-4): (I-35) + (S13-5); (I-35) + (S13-6); (I-35) + (S13-7); (I-35) + (S13-8); (I-35) + (S13-9); (I-35) + (S14-1)
(I-36) + (S1-1); (I-36) + (S1-2); (I-36) + (S1-3); (I-36) + (S1-4); (I-36) + (S1-5); (I-36) + (S1-6); (I-36) + (S1-7); (I-36) + (S1-8); (I-36) + (S1-9); (I-36) + (S1-10); (I-36) + (S1-11); (I-36) + (S1-12); (I-36) + (S1-13); (I-36) + (S2-1); (I-36) + (S2-2); (I-36) + (S2-3); (I-36) + (S2-4); (I-36) + (S2-5); (I-36) + (S2-6); (I-36) + (S2-7); (I-36) + (S2-8); (I-36) + (S2-9); (I-36) + (S2-10); (I-36) + (S3-1); (I-36) + (S3-2); (I-36) + (S3-3); (I-36) + (S3-4); (I-36) + (S3-5); (I-36) + (S3-6); (I-36) + (S3-7); (I-36) + (S3-8); (I-36) + (S3-9); (I-36) + (S3-10); (I-36) + (S3-11); (I-36) + (S4-1); (I-36) + (S4-2); (I-36) + (S4-3); (I-36) + (S4-4); (I-36) + (S4-5); (I-36) + (S7-1); (I-36) + (S11-1); (I-36) + (S11-2); (I-36) + (S11-3); (I-36) + (S12-1); (I-36) + (S13-1); (I-36) + (S13-2); (I-36) + (S13-3); (I-36) + (S13-4): (I-36) + (S13-5); (I-36) + (S13-6); (I-36) + (S13-7); (I-36) + (S13-8); (I-36) + (S13-9); (I-36) + (S14-1)
(I-37) + (S1-1); (I-37) + (S1-2); (I-37) + (S1-3); (I-37) + (S1-4); (I-37) + (S1-5); (I-37) + (S1-6); (I-37) + (S1-7); (I-37) + (S1-8); (I-37) + (S1-9); (I-37) + (S1-10); (I-37) + (S1-11); (I-37) + (S1-12); (I-37) + (S1-13); (I-37) + (S2-1); (I-37) + (S2-2); (I-37) + (S2-3); (I-37) + (S2-4); (I-37) + (S2-5); (I-37) + (S2-6); (I-37) + (S2-7); (I-37) + (S2-8); (I-37) + (S2-9); (I-37) + (S2-10); (I-37) + (S3-1); (I-37) + (S3-2); (I-37) + (S3-3); (I-37) + (S3-4); (I-37) + (S3-5); (I-37) + (S3-6); (I-37) + (S3-7); (I-37) + (S3-8); (I-37) + (S3-9); (I-37) + (S3-10); (I-37) + (S3-11); (I-37) + (S4-1); (I-37) + (S4-2); (I-37) + (S4-3); (I-37) + (S4-4); (I-37) + (S4-5); (I-37) + (S7-1); (I-37) + (S11-1); (I-37) + (S11-2); (I-37) + (S11-3); (I-37) + (S12-1); (I-37) + (S13-1); (I-37) + (S13-2); (I-37) + (S13-3); (I-37) + (S13-4): (I-37) + (S13-5); (I-37) + (S13-6); (I-37) + (S13-7); (I-37) + (S13-8); (I-37) + (S13-9); (1-37) + (S14-1)
(I-38) + (S1-1); (I-38) + (S1-2); (I-38) + (S1-3); (I-38) + (S1-4); (I-38) + (S1-5); (I-38) + (S1-6); (I-38) + (S1-7); (I-38) + (S1-8); (I-38) + (S1-9); (I-38) + (S1-10); (I-38) + (S1-11); (I-38) + (S1-12); (I-38) + (S1-13); (I-38) + (S2-1); (I-38) + (S2-2); (I-38) + (S2-3); (I-38) + (S2-4); (I-38) + (S2-5); (I-38) + (S2-6); (I-38) + (S2-7); (I-38) + (S2-8); (I-38) + (S2-9); (I-38) + (S2-10); (I-38) + (S3-1); (I-38) + (S3-2); (I-38) + (S3-3); (I-38) + (S3-4); (I-38) + (S3-5); (I-38) + (S3-6); (I-38) + (S3-7); (I-38) + (S3-8); (I-38) + (S3-9); (I-38) + (S3-10); (I-38) + (S3-11); (I-38) + (S4-1); (I-38) + (S4-2); (I-38) + (S4-3); (I-38) + (S4-4); (I-38) + (S4-5); (I-38) + (S7-1); (I-38) + (S11-1); (I-38) + (S11-2); (I-38) + (S11-3); (I-38) + (S12-1); (I-38) + (S13-1); (I-38) + (S13-2); (I-38) + (S13-3); (I-38) + (S13-4): (I-38) + (S13-5); (I-38) + (S13-6); (I-38) + (S13-7); (I-38) + (S13-8); (I-38) + (S13-9); (I-38) + (S14-1)
(I-39) + (S1-1); (I-39) + (S1-2); (I-39) + (S1-3); (I-39) + (S1-4); (I-39) + (S1-5); (I-39) + (S1-6); (I-39) + (S1-7); (I-39) + (S1-8); (I-39) + (S1-9); (I-39) + (S1-10); (I-39) + (S1-11); (I-39) + (S1-12); (I-39) + (S1-13); (I-39) + (S2-1); (I-39) + (S2-2); (I-39) + (S2-3); (I-39) + (S2-4); (I-39) + (S2-5); (I-39) + (S2-6); (I-39) + (S2-7); (I-39) + (S2-8); (I-39) + (S2-9); (I-39) + (S2-10); (I-39) + (S3-1); (I-39) + (S3-2); (I-39) + (S3-3); (I-39) + (S3-4); (I-39) + (S3-5); (I-39) + (S3-6); (I-39) + (S3-7); (I-39) + (S3-8); (I-39) + (S3-9); (I-39) + (S3-10); (I-39) + (S3-11); (I-39) + (S4-1); (I-39) + (S4-2); (I-39) + (S4-3); (I-39) + (S4-4); (I-39) + (S4-5); (I-39) + (S7-1); (I-39) + (S11-1); (I-39) + (S11-2); (I-39) + (S11-3); (I-39) + (S12-1); (I-39) + (S13-1); (I-39) + (S13-2); (I-39) + (S13-3); (I-39) + (S13-4): (I-39) + (S13-5); (I-39) + (S13-6); (I-39) + (S13-7); (I-39) + (S13-8); (I-39) + (S13-9); (I-39) + (S14-1)
(I-40) + (S1-1); (I-40) + (S1-2); (I-40) + (S1-3); (I-40) + (S1-4); (I-40) + (S1-5); (I-40) + (S1-6); (I-40) + (S1-7); (I-40) + (S1-8); (I-40) + (S1-9); (I-40) + (S1-10); (I-40) + (S1-11); (I-40) + (S1-12); (I-40) + (S1-13); (I-40) + (S2-1); (I-40) + (S2-2); (I-40) + (S2-3); (I-40) + (S2-4); (I-40) + (S2-5); (I-40) + (S2-6); (I-40) + (S2-7); (I-40) + (S2-8); (I-40) + (S2-9); (I-40) + (S2-10); (I-40) + (S3-1); (I-40) + (S3-2); (I-40) + (S3-3); (I-40) + (S3-4); (I-40) + (S3-5); (I-40) + (S3-6); (I-40) + (S3-7); (I-40) + (S3-8); (I-40) + (S3-9); (I-40) + (S3-10); (I-40) + (S3-11); (I-40) + (S4-1); (I-40) + (S4-2); (I-40) + (S4-3); (I-40) + (S4-4); (I-40) + (S4-5); (I-40) + (S7-1); (I-40) + (S11-1); (I-40) + (S11-2); (I-40) + (S11-3); (I-40) + (S12-1); (I-40) + (S13-1); (I-40) + (S13-2); (I-40) + (S13-3); (I-40) + (S13-4): (I-40) + (S13-5); (I-40) + (S13-6); (I-40) + (S13-7); (I-40) + (S13-8); (I-40) + (S13-9); (I-40) + (S14-1)
(I-41) + (S1-1); (I-41) + (S1-2); (I-41) + (S1-3); (I-41) + (S1-4); (I-41) + (S1-5); (I-41) + (S1-6); (I-41) + (S1-7); (I-41) + (S1-8); (I-41) + (S1-9); (I-41) + (S1-10); (I-41) + (S1-11); (I-41) + (S1-12); (I-41) + (S1-13); (I-41) + (S2-1); (I-41) + (S2-2); (I-41) + (S2-3); (I-41) + (S2-4); (I-41) + (S2-5); (I-41) + (S2-6); (I-41) + (S2-7); (I-41) + (S2-8); (I-41) + (S2-9); (I-41) + (S2-10); (I-41) + (S3-1); (I-41) + (S3-2); (I-41) + (S3-3); (I-41) + (S3-4); (I-41) + (S3-5); (I-41) + (S3-6); (I-41) + (S3-7); (I-41) + (S3-8); (I-41) + (S3-9); (I-41) + (S3-10); (I-41) + (S3-11); (I-41) + (S4-1); (I-41) + (S4-2); (I-41) + (S4-3); (I-41) + (S4-4); (I-41) + (S4-5); (I-41) + (S7-1); (I-41) + (S11-1); (I-41) + (S11-2); (I-41) + (S11-3); (I-41) + (S12-1); (I-41) + (S13-1); (I-41) + (S13-2); (I-41) + (S13-3); (I-41) + (S13-4): (I-41) + (S13-5); (I-41) + (S13-6); (I-41) + (S13-7); (I-41) + (S13-8); (I-41) + (S13-9); (I-41) + (S14-1)
(I-42) + (S1-1); (I-42) + (S1-2); (I-42) + (S1-3); (I-42) + (S1-4); (I-42) + (S1-5); (I-42) + (S1-6); (I-42) + (S1-7); (I-42) + (S1-8); (I-42) + (S1-9); (I-42) + (S1-10); (I-42) + (S1-11); (I-42) + (S1-12); (I-42) + (S1-13); (I-42) + (S2-1); (I-42) + (S2-2); (I-42) + (S2-3); (I-42) + (S2-4); (I-42) + (S2-5); (I-42) + (S2-6); (I-42) + (S2-7); (I-42) + (S2-8); (I-42) + (S2-9); (I-42) + (S2-10); (I-42) + (S3-1); (I-42) + (S3-2); (I-42) + (S3-3); (I-42) + (S3-4); (I-42) + (S3-5); (I-42) + (S3-6); (I-42) + (S3-7); (I-42) + (S3-8); (I-42) + (S3-9); (I-42) + (S3-10); (I-42) + (S3-11); (I-42) + (S4-1); (I-42) + (S4-2); (I-42) + (S4-3); (I-42) + (S4-4); (I-42) + (S4-5); (I-42) + (S7-1); (I-42) + (S11-1); (I-42) + (S11-2); (I-42) + (S11-3); (I-42) + (S12-1); (I-42) + (S13-1); (I-42) + (S13-2); (I-42) + (S13-3); (I-42) + (S13-4): (I-42) + (S13-5); (I-42) + (S13-6); (I-42) + (S13-7); (I-42) + (S13-8); (I-42) + (S13-9); (I-42) + (S14-1)
(I-43) + (S1-1); (I-43) + (S1-2); (I-43) + (S1-3); (I-43) + (S1-4); (I-43) + (S1-5); (I-43) + (S1-6); (I-43) + (S1-7); (I-43) + (S1-8); (I-43) + (S1-9); (I-43) + (S1-10); (I-43) + (S1-11); (I-43) + (S1-12); (I-43) + (S1-13); (I-43) + (S2-1); (I-43) + (S2-2); (I-43) + (S2-3); (I-43) + (S2-4); (I-43) + (S2-5); (I-43) + (S2-6); (I-43) + (S2-7); (I-43) + (S2-8); (I-43) + (S2-9); (I-43) + (S2-10); (I-43) + (S3-1); (I-43) + (S3-2); (I-43) + (S3-3); (I-43) + (S3-4); (I-43) + (S3-5); (I-43) + (S3-6); (I-43) + (S3-7); (I-43) + (S3-8); (I-43) + (S3-9); (I-43) + (S3-10); (I-43) + (S3-11); (I-43) + (S4-1); (I-43) + (S4-2); (I-43) + (S4-3); (I-43) + (S4-4); (I-43) + (S4-5); (I-43) + (S7-1); (I-43) + (S11-1); (I-43) + (S11-2); (I-43) + (S11-3); (I-43) + (S12-1); (I-43) + (S13-1); (I-43) + (S13-2); (I-43) + (S13-3); (I-43) + (S13-4): (I-43) + (S13-5); (I-43) + (S13-6); (I-43) + (S13-7); (I-43) + (S13-8); (I-43) + (S13-9); (1-43) + (S14-1)
(I-44) + (S1-1); (I-44) + (S1-2); (I-44) + (S1-3); (I-44) + (S1-4); (I-44) + (S1-5); (I-44) + (S1-6); (I-44) + (S1-7); (I-44) + (S1-8); (I-44) + (S1-9); (I-44) + (S1-10); (I-44) + (S1-11); (I-44) + (S1-12); (I-44) + (S1-13); (I-44) + (S2-1); (I-44) + (S2-2); (I-44) + (S2-3); (I-44) + (S2-4); (I-44) + (S2-5); (I-44) + (S2-6); (I-44) + (S2-7); (I-44) + (S2-8); (I-44) + (S2-9); (I-44) + (S2-10); (I-44) + (S3-1); (I-44) + (S3-2); (I-44) + (S3-3); (I-44) + (S3-4); (I-44) + (S3-5); (I-44) + (S3-6); (I-44) + (S3-7); (I-44) + (S3-8); (I-44) + (S3-9); (I-44) + (S3-10); (I-44) + (S3-11); (I-44) + (S4-1); (I-44) + (S4-2); (I-44) + (S4-3); (I-44) + (S4-4); (I-44) + (S4-5); (I-44) + (S7-1); (I-44) + (S11-1); (I-44) + (S11-2); (I-44) + (S11-3); (I-44) + (S12-1); (I-44) + (S13-1); (I-44) + (S13-2); (I-44) + (S13-3); (I-44) + (S13-4): (I-44) + (S13-5); (I-44) + (S13-6); (I-44) + (S13-7); (I-44) + (S13-8); (I-44) + (S13-9); (I-44) + (S14-1)
(I-45) + (S1-1); (I-45) + (S1-2); (I-45) + (S1-3); (I-45) + (S1-4); (I-45) + (S1-5); (I-45) + (S1-6); (I-45) + (S1-7); (I-45) + (S1-8); (I-45) + (S1-9); (I-45) + (S1-10); (I-45) + (S1-11); (I-45) + (S1-12); (I-45) + (S1-13); (I-45) + (S2-1); (I-45) + (S2-2); (I-45) + (S2-3); (I-45) + (S2-4); (I-45) + (S2-5); (I-45) + (S2-6); (I-45) + (S2-7); (I-45) + (S2-8); (I-45) + (S2-9); (I-45) + (S2-10); (I-45) + (S3-1); (I-45) + (S3-2); (I-45) + (S3-3); (I-45) + (S3-4); (I-45) + (S3-5); (I-45) + (S3-6); (I-45) + (S3-7); (I-45) + (S3-8); (I-45) + (S3-9); (I-45) + (S3-10); (I-45) + (S3-11); (I-45) + (S4-1); (I-45) + (S4-2); (I-45) + (S4-3); (I-45) + (S4-4); (I-45) + (S4-5); (I-45) + (S7-1); (I-45) + (S11-1); (I-45) + (S11-2); (I-45) + (S11-3); (I-45) + (S12-1); (I-45) + (S13-1); (I-45) + (S13-2); (I-45) + (S13-3); (I-45) + (S13-4): (I-45) + (S13-5); (I-45) + (S13-6); (I-45) + (S13-7); (I-45) + (S13-8); (I-45) + (S13-9); (I-45) + (S14-1)
(I-46) + (S1-1); (I-46) + (S1-2); (I-46) + (S1-3); (I-46) + (S1-4); (I-46) + (S1-5); (I-46) + (S1-6); (I-46) + (S1-7); (I-46) + (S1-8); (I-46) + (S1-9); (I-46) + (S1-10); (I-46) + (S1-11); (I-46) + (S1-12); (I-46) + (S1-13); (I-46) + (S2-1); (I-46) + (S2-2); (I-46) + (S2-3); (I-46) + (S2-4); (I-46) + (S2-5); (I-46) + (S2-6); (I-46) + (S2-7); (I-46) + (S2-8); (I-46) + (S2-9); (I-46) + (S2-10); (I-46) + (S3-1); (I-46) + (S3-2); (I-46) + (S3-3); (I-46) + (S3-4); (I-46) + (S3-5); (I-46) + (S3-6); (I-46) + (S3-7); (I-46) + (S3-8); (I-46) + (S3-9); (I-46) + (S3-10); (I-46) + (S3-11); (I-46) + (S4-1); (I-46) + (S4-2); (I-46) + (S4-3); (I-46) + (S4-4); (I-46) + (S4-5); (I-46) + (S7-1); (I-46) + (S11-1); (I-46) + (S11-2); (I-46) + (S11-3); (I-46) + (S12-1); (I-46) + (S13-1); (I-46) + (S13-2); (I-46) + (S13-3); (I-46) + (S13-4): (I-46) + (S13-5); (I-46) + (S13-6); (I-46) + (S13-7); (I-46) + (S13-8); (I-46) + (S13-9); (1-46) + (S14-1)
(I-47) + (S1-1); (I-47) + (S1-2); (I-47) + (S1-3); (I-47) + (S1-4); (I-47) + (S1-5); (I-47) + (S1-6); (I-47) + (S1-7); (I-47) + (S1-8); (I-47) + (S1-9); (I-47) + (S1-10); (I-47) + (S1-11); (I-47) + (S1-12); (I-47) + (S1-13); (I-47) + (S2-1); (I-47) + (S2-2); (I-47) + (S2-3); (I-47) + (S2-4); (I-47) + (S2-5); (I-47) + (S2-6); (I-47) + (S2-7); (I-47) + (S2-8); (I-47) + (S2-9); (I-47) + (S2-10); (I-47) + (S3-1); (I-47) + (S3-2); (I-47) + (S3-3); (I-47) + (S3-4); (I-47) + (S3-5); (I-47) + (S3-6); (I-47) + (S3-7); (I-47) + (S3-8); (I-47) + (S3-9); (I-47) + (S3-10); (I-47) + (S3-11); (I-47) + (S4-1); (I-47) + (S4-2); (I-47) + (S4-3); (I-47) + (S4-4); (I-47) + (S4-5); (I-47) + (S7-1); (I-47) + (S11-1); (I-47) + (S11-2); (I-47) + (S11-3); (I-47) + (S12-1); (I-47) + (S13-1); (I-47) + (S13-2); (I-47) + (S13-3); (I-47) + (S13-4): (I-47) + (S13-5); (I-47) + (S13-6); (I-47) + (S13-7); (I-47) + (S13-8); (I-47) + (S13-9); (1-47) + (S14-1)
(I-48) + (S1-1); (I-48) + (S1-2); (I-48) + (S1-3); (I-48) + (S1-4); (I-48) + (S1-5); (I-48) + (S1-6); (I-48) + (S1-7); (I-48) + (S1-8); (I-48) + (S1-9); (I-48) + (S1-10); (I-48) + (S1-11); (I-48) + (S1-12); (I-48) + (S1-13); (I-48) + (S2-1); (I-48) + (S2-2); (I-48) + (S2-3); (I-48) + (S2-4); (I-48) + (S2-5); (I-48) + (S2-6); (I-48) + (S2-7); (I-48) + (S2-8); (I-48) + (S2-9); (I-48) + (S2-10); (I-48) + (S3-1); (I-48) + (S3-2); (I-48) + (S3-3); (I-48) + (S3-4); (I-48) + (S3-5); (I-48) + (S3-6); (I-48) + (S3-7); (I-48) + (S3-8); (I-48) + (S3-9); (I-48) + (S3-10); (I-48) + (S3-11); (I-48) + (S4-1); (I-48) + (S4-2); (I-48) + (S4-3); (I-48) + (S4-4); (I-48) + (S4-5); (I-48) + (S7-1); (I-48) + (S11-1); (I-48) + (S11-2); (I-48) + (S11-3); (I-48) + (S12-1); (I-48) + (S13-1); (I-48) + (S13-2); (I-48) + (S13-3); (I-48) + (S13-4): (I-48) + (S13-5); (I-48) + (S13-6); (I-48) + (S13-7); (I-48) + (S13-8); (I-48) + (S13-9); (I-48) + (S14-1)
(I-49) + (S1-1); (I-49) + (S1-2); (I-49) + (S1-3); (I-49) + (S1-4); (I-49) + (S1-5); (I-49) + (S1-6); (I-49) + (S1-7); (I-49) + (S1-8); (I-49) + (S1-9); (I-49) + (S1-10); (I-49) + (S1-11); (I-49) + (S1-12); (I-49) + (S1-13); (I-49) + (S2-1); (I-49) + (S2-2); (I-49) + (S2-3); (I-49) + (S2-4); (I-49) + (S2-5); (I-49) + (S2-6); (I-49) + (S2-7); (I-49) + (S2-8); (I-49) + (S2-9); (I-49) + (S2-10); (I-49) + (S3-1); (I-49) + (S3-2); (I-49) + (S3-3); (I-49) + (S3-4); (I-49) + (S3-5); (I-49) + (S3-6); (I-49) + (S3-7); (I-49) + (S3-8); (I-49) + (S3-9); (I-49) + (S3-10); (I-49) + (S3-11); (I-49) + (S4-1); (I-49) + (S4-2); (I-49) + (S4-3); (I-49) + (S4-4); (I-49) + (S4-5); (I-49) + (S7-1); (I-49) + (S11-1); (I-49) + (S11-2); (I-49) + (S11-3); (I-49) + (S12-1); (I-49) + (S13-1); (I-49) + (S13-2); (I-49) + (S13-3); (I-49) + (S13-4): (I-49) + (S13-5); (I-49) + (S13-6); (I-49) + (S13-7); (I-49) + (S13-8); (I-49) + (S13-9); (I-49) + (S14-1)
(I-50) + (S1-1); (I-50) + (S1-2); (I-50) + (S1-3); (I-50) + (S1-4); (I-50) + (S1-5); (I-50) + (S1-6); (I-50) + (S1-7); (I-50) + (S1-8); (I-50) + (S1-9); (I-50) + (S1-10); (I-50) + (S1-11); (I-50) + (S1-12); (I-50) + (S1-13); (I-50) + (S2-1); (I-50) + (S2-2); (I-50) + (S2-3); (I-50) + (S2-4); (I-50) + (S2-5); (I-50) + (S2-6); (I-50) + (S2-7); (I-50) + (S2-8); (I-50) + (S2-9); (I-50) + (S2-10); (I-50) + (S3-1); (I-50) + (S3-2); (I-50) + (S3-3); (I-50) + (S3-4); (I-50) + (S3-5); (I-50) + (S3-6); (I-50) + (S3-7); (I-50) + (S3-8); (I-50) + (S3-9); (I-50) + (S3-10); (I-50) + (S3-11); (I-50) + (S4-1); (I-50) + (S4-2); (I-50) + (S4-3); (I-50) + (S4-4); (I-50) + (S4-5); (I-50) + (S7-1); (I-50) + (S11-1); (I-50) + (S11-2); (I-50) + (S11-3); (I-50) + (S12-1); (I-50) + (S13-1); (I-50) + (S13-2); (I-50) + (S13-3); (I-50) + (S13-4): (I-50) + (S13-5); (I-50) + (S13-6); (I-50) + (S13-7); (I-50) + (S13-8); (I-50) + (S13-9); (I-50) + (S14-1)
(I-51) + (S1-1); (I-51) + (S1-2); (I-51) + (S1-3); (I-51) + (S1-4); (I-51) + (S1-5); (I-51) + (S1-6); (I-51) + (S1-7); (I-51) + (S1-8); (I-51) + (S1-9); (I-51) + (S1-10); (I-51) + (S1-11); (I-51) + (S1-12); (I-51) + (S1-13); (I-51) + (S2-1); (I-51) + (S2-2); (I-51) + (S2-3); (I-51) + (S2-4); (I-51) + (S2-5); (I-51) + (S2-6); (I-51) + (S2-7); (I-51) + (S2-8); (I-51) + (S2-9); (I-51) + (S2-10); (I-51) + (S3-1); (I-51) + (S3-2); (I-51) + (S3-3); (I-51) + (S3-4); (I-51) + (S3-5); (I-51) + (S3-6); (I-51) + (S3-7); (I-51) + (S3-8); (I-51) + (S3-9); (I-51) + (S3-10); (I-51) + (S3-11); (I-51) + (S4-1); (I-51) + (S4-2); (I-51) + (S4-3); (I-51) + (S4-4); (I-51) + (S4-5); (I-51) + (S7-1); (I-51) + (S11-1); (I-51) + (S11-2); (I-51) + (S11-3); (I-51) + (S12-1); (I-51) + (S13-1); (I-51) + (S13-2); (I-51) + (S13-3); (I-51) + (S13-4): (I-51) + (S13-5); (I-51) + (S13-6); (I-51) + (S13-7); (I-51) + (S13-8); (I-51) + (S13-9); (I-51) + (S14-1)
(I-52) + (S1-1); (I-52) + (S1-2); (I-52) + (S1-3); (I-52) + (S1-4); (I-52) + (S1-5); (I-52) + (S1-6); (I-52) + (S1-7); (I-52) + (S1-8); (I-52) + (S1-9); (I-52) + (S1-10); (I-52) + (S1-11); (I-52) + (S1-12); (I-52) + (S1-13); (I-52) + (S2-1); (I-52) + (S2-2); (I-52) + (S2-3); (I-52) + (S2-4); (I-52) + (S2-5); (I-52) + (S2-6); (I-52) + (S2-7); (I-52) + (S2-8); (I-52) + (S2-9); (I-52) + (S2-10); (I-52) + (S3-1); (I-52) + (S3-2); (I-52) + (S3-3); (I-52) + (S3-4); (I-52) + (S3-5); (I-52) + (S3-6); (I-52) + (S3-7); (I-52) + (S3-8); (I-52) + (S3-9); (I-52) + (S3-10); (I-52) + (S3-11); (I-52) + (S4-1); (I-52) + (S4-2); (I-52) + (S4-3); (I-52) + (S4-4); (I-52) + (S4-5); (I-52) + (S7-1); (I-52) + (S11-1); (I-52) + (S11-2); (I-52) + (S11-3); (I-52) + (S12-1); (I-52) + (S13-1); (I-52) + (S13-2); (I-52) + (S13-3); (I-52) + (S13-4): (I-52) + (S13-5); (I-52) + (S13-6); (I-52) + (S13-7); (I-52) + (S13-8); (I-52) + (S13-9); (I-52) + (S14-1)
(I-53) + (S1-1); (I-53) + (S1-2); (I-53) + (S1-3); (I-53) + (S1-4); (I-53) + (S1-5); (I-53) + (S1-6); (I-53) + (S1-7); (I-53) + (S1-8); (I-53) + (S1-9); (I-53) + (S1-10); (I-53) + (S1-11); (I-53) + (S1-12); (I-53) + (S1-13); (I-53) + (S2-1); (I-53) + (S2-2); (I-53) + (S2-3); (I-53) + (S2-4); (I-53) + (S2-5); (I-53) + (S2-6); (I-53) + (S2-7); (I-53) + (S2-8); (I-53) + (S2-9); (I-53) + (S2-10); (I-53) + (S3-1); (I-53) + (S3-2); (I-53) + (S3-3); (I-53) + (S3-4); (I-53) + (S3-5); (I-53) + (S3-6); (I-53) + (S3-7); (I-53) + (S3-8); (I-53) + (S3-9); (I-53) + (S3-10); (I-53) + (S3-11); (I-53) + (S4-1); (I-53) + (S4-2); (I-53) + (S4-3); (I-53) + (S4-4); (I-53) + (S4-5); (I-53) + (S7-1); (I-53) + (S11-1); (I-53) + (S11-2); (I-53) + (S11-3); (I-53) + (S12-1); (I-53) + (S13-1); (I-53) + (S13-2); (I-53) + (S13-3); (I-53) + (S13-4): (I-53) + (S13-5); (I-53) + (S13-6); (I-53) + (S13-7); (I-53) + (S13-8); (I-53) + (S13-9); (I-53) + (S14-1)
(I-54) + (S1-1); (I-54) + (S1-2); (I-54) + (S1-3); (I-54) + (S1-4); (I-54) + (S1-5); (I-54) + (S1-6); (I-54) + (S1-7); (I-54) + (S1-8); (I-54) + (S1-9); (I-54) + (S1-10); (I-54) + (S1-11); (I-54) + (S1-12); (I-54) + (S1-13); (I-54) + (S2-1); (I-54) + (S2-2); (I-54) + (S2-3); (I-54) + (S2-4); (I-54) + (S2-5); (I-54) + (S2-6); (I-54) + (S2-7); (I-54) + (S2-8); (I-54) + (S2-9); (I-54) + (S2-10); (I-54) + (S3-1); (I-54) + (S3-2); (I-54) + (S3-3); (I-54) + (S3-4); (I-54) + (S3-5); (I-54) + (S3-6); (I-54) + (S3-7); (I-54) + (S3-8); (I-54) + (S3-9); (I-54) + (S3-10); (I-54) + (S3-11); (I-54) + (S4-1); (I-54) + (S4-2); (I-54) + (S4-3); (I-54) + (S4-4); (I-54) + (S4-5); (I-54) + (S7-1); (I-54) + (S11-1); (I-54) + (S11-2); (I-54) + (S11-3); (I-54) + (S12-1); (I-54) + (S13-1); (I-54) + (S13-2); (I-54) + (S13-3); (I-54) + (S13-4): (I-54) + (S13-5); (I-54) + (S13-6); (I-54) + (S13-7); (I-54) + (S13-8); (I-54) + (S13-9); (I-54) + (S14-1)
(I-55) + (S1-1); (I-55) + (S1-2); (I-55) + (S1-3); (I-55) + (S1-4); (I-55) + (S1-5); (I-55) + (S1-6); (I-55) + (S1-7); (I-55) + (S1-8); (I-55) + (S1-9); (I-55) + (S1-10); (I-55) + (S1-11); (I-55) + (S1-12); (I-55) + (S1-13); (I-55) + (S2-1); (I-55) + (S2-2); (I-55) + (S2-3); (I-55) + (S2-4); (I-55) + (S2-5); (I-55) + (S2-6); (I-55) + (S2-7); (I-55) + (S2-8); (I-55) + (S2-9); (I-55) + (S2-10); (I-55) + (S3-1); (I-55) + (S3-2); (I-55) + (S3-3); (I-55) + (S3-4); (I-55) + (S3-5); (I-55) + (S3-6); (I-55) + (S3-7); (I-55) + (S3-8); (I-55) + (S3-9); (I-55) + (S3-10); (I-55) + (S3-11); (I-55) + (S4-1); (I-55) + (S4-2); (I-55) + (S4-3); (I-55) + (S4-4); (I-55) + (S4-5); (I-55) + (S7-1); (I-55) + (S11-1); (I-55) + (S11-2); (I-55) + (S11-3); (I-55) + (S12-1); (I-55) + (S13-1); (I-55) + (S13-2); (I-55) + (S13-3); (I-55) + (S13-4): (I-55) + (S13-5); (I-55) + (S13-6); (I-55) + (S13-7); (I-55) + (S13-8); (I-55) + (S13-9); (I-55) + (S14-1)
(I-56) + (S1-1); (I-56) + (S1-2); (I-56) + (S1-3); (I-56) + (S1-4); (I-56) + (S1-5); (I-56) + (S1-6); (I-56) + (S1-7); (I-56) + (S1-8); (I-56) + (S1-9); (I-56) + (S1-10); (I-56) + (S1-11); (I-56) + (S1-12); (I-56) + (S1-13); (I-56) + (S2-1); (I-56) + (S2-2); (I-56) + (S2-3); (I-56) + (S2-4); (I-56) + (S2-5); (I-56) + (S2-6); (I-56) + (S2-7); (I-56) + (S2-8); (I-56) + (S2-9); (I-56) + (S2-10); (I-56) + (S3-1); (I-56) + (S3-2); (I-56) + (S3-3); (I-56) + (S3-4); (I-56) + (S3-5); (I-56) + (S3-6); (I-56) + (S3-7); (I-56) + (S3-8); (I-56) + (S3-9); (I-56) + (S3-10); (I-56) + (S3-11); (I-56) + (S4-1); (I-56) + (S4-2); (I-56) + (S4-3); (I-56) + (S4-4); (I-56) + (S4-5); (I-56) + (S7-1); (I-56) + (S11-1); (I-56) + (S11-2); (I-56) + (S11-3); (I-56) + (S12-1); (I-56) + (S13-1); (I-56) + (S13-2); (I-56) + (S13-3); (I-56) + (S13-4): (I-56) + (S13-5); (I-56) + (S13-6); (I-56) + (S13-7); (I-56) + (S13-8); (I-56) + (S13-9); (I-56) + (S14-1)
(I-57) + (S1-1); (I-57) + (S1-2); (I-57) + (S1-3); (I-57) + (S1-4); (I-57) + (S1-5); (I-57) + (S1-6); (I-57) + (S1-7); (I-57) + (S1-8); (I-57) + (S1-9); (I-57) + (S1-10); (I-57) + (S1-11); (I-57) + (S1-12); (I-57) + (S1-13); (I-57) + (S2-1); (I-57) + (S2-2); (I-57) + (S2-3); (I-57) + (S2-4); (I-57) + (S2-5); (I-57) + (S2-6); (I-57) + (S2-7); (I-57) + (S2-8); (I-57) + (S2-9); (I-57) + (S2-10); (I-57) + (S3-1); (I-57) + (S3-2); (I-57) + (S3-3); (I-57) + (S3-4); (I-57) + (S3-5); (I-57) + (S3-6); (I-57) + (S3-7); (I-57) + (S3-8); (I-57) + (S3-9); (I-57) + (S3-10); (I-57) + (S3-11); (I-57) + (S4-1); (I-57) + (S4-2); (I-57) + (S4-3); (I-57) + (S4-4); (I-57) + (S4-5); (I-57) + (S7-1); (I-57) + (S11-1); (I-57) + (S11-2); (I-57) + (S11-3); (I-57) + (S12-1); (I-57) + (S13-1); (I-57) + (S13-2); (I-57) + (S13-3); (I-57) + (S13-4): (I-57) + (S13-5); (I-57) + (S13-6); (I-57) + (S13-7); (I-57) + (S13-8); (I-57) + (S13-9); (I-57) + (S14-1)
(I-58) + (S1-1); (I-58) + (S1-2); (I-58) + (S1-3); (I-58) + (S1-4); (I-58) + (S1-5); (I-58) + (S1-6); (I-58) + (S1-7); (I-58) + (S1-8); (I-58) + (S1-9); (I-58) + (S1-10); (I-58) + (S1-11); (I-58) + (S1-12); (I-58) + (S1-13); (I-58) + (S2-1); (I-58) + (S2-2); (I-58) + (S2-3); (I-58) + (S2-4); (I-58) + (S2-5); (I-58) + (S2-6); (I-58) + (S2-7); (I-58) + (S2-8); (I-58) + (S2-9); (I-58) + (S2-10); (I-58) + (S3-1); (I-58) + (S3-2); (I-58) + (S3-3); (I-58) + (S3-4); (I-58) + (S3-5); (I-58) + (S3-6); (I-58) + (S3-7); (I-58) + (S3-8); (I-58) + (S3-9); (I-58) + (S3-10); (I-58) + (S3-11); (I-58) + (S4-1); (I-58) + (S4-2); (I-58) + (S4-3); (I-58) + (S4-4); (I-58) + (S4-5); (I-58) + (S7-1); (I-58) + (S11-1); (I-58) + (S11-2); (I-58) + (S11-3); (I-58) + (S12-1); (I-58) + (S13-1); (I-58) + (S13-2); (I-58) + (S13-3); (I-58) + (S13-4): (I-58) + (S13-5); (I-58) + (S13-6); (I-58) + (S13-7); (I-58) + (S13-8); (I-58) + (S13-9); (I-58) + (S14-1)
(I-59) + (S1-1); (I-59) + (S1-2); (I-59) + (S1-3); (I-59) + (S1-4); (I-59) + (S1-5); (I-59) + (S1-6); (I-59) + (S1-7); (I-59) + (S1-8); (I-59) + (S1-9); (I-59) + (S1-10); (I-59) + (S1-11); (I-59) + (S1-12); (I-59) + (S1-13); (I-59) + (S2-1); (I-59) + (S2-2); (I-59) + (S2-3); (I-59) + (S2-4); (I-59) + (S2-5); (I-59) + (S2-6); (I-59) + (S2-7); (I-59) + (S2-8); (I-59) + (S2-9); (I-59) + (S2-10); (I-59) + (S3-1); (I-59) + (S3-2); (I-59) + (S3-3); (I-59) + (S3-4); (I-59) + (S3-5); (I-59) + (S3-6); (I-59) + (S3-7); (I-59) + (S3-8); (I-59) + (S3-9); (I-59) + (S3-10); (I-59) + (S3-11); (I-59) + (S4-1); (I-59) + (S4-2); (I-59) + (S4-3); (I-59) + (S4-4); (I-59) + (S4-5); (I-59) + (S7-1); (I-59) + (S11-1); (I-59) + (S11-2); (I-59) + (S11-3); (I-59) + (S12-1); (I-59) + (S13-1); (I-59) + (S13-2); (I-59) + (S13-3); (I-59) + (S13-4): (I-59) + (S13-5); (I-59) + (S13-6); (I-59) + (S13-7); (I-59) + (S13-8); (I-59) + (S13-9); (I-59) + (S14-1)
(I-60) + (S1-1); (I-60) + (S1-2); (I-60) + (S1-3); (I-60) + (S1-4); (I-60) + (S1-5); (I-60) + (S1-6); (I-60) + (S1-7); (I-60) + (S1-8); (I-60) + (S1-9); (I-60) + (S1-10); (I-60) + (S1-11); (I-60) + (S1-12); (I-60) + (S1-13); (I-60) + (S2-1); (I-60) + (S2-2); (I-60) + (S2-3); (I-60) + (S2-4); (I-60) + (S2-5); (I-60) + (S2-6); (I-60) + (S2-7); (I-60) + (S2-8); (I-60) + (S2-9); (I-60) + (S2-10); (I-60) + (S3-1); (I-60) + (S3-2); (I-60) + (S3-3); (I-60) + (S3-4); (I-60) + (S3-5); (I-60) + (S3-6); (I-60) + (S3-7); (I-60) + (S3-8); (I-60) + (S3-9); (I-60) + (S3-10); (I-60) + (S3-11); (I-60) + (S4-1); (I-60) + (S4-2); (I-60) + (S4-3); (I-60) + (S4-4); (I-60) + (S4-5); (I-60) + (S7-1); (I-60) + (S11-1); (I-60) + (S11-2); (I-60) + (S11-3); (I-60) + (S12-1); (I-60) + (S13-1); (I-60) + (S13-2); (I-60) + (S13-3); (I-60) + (S13-4): (I-60) + (S13-5); (I-60) + (S13-6); (I-60) + (S13-7); (I-60) + (S13-8); (I-60) + (S13-9); (I-60) + (S14-1)
(I-61) + (S1-1); (I-61) + (S1-2); (I-61) + (S1-3); (I-61) + (S1-4); (I-61) + (S1-5); (I-61) + (S1-6); (I-61) + (S1-7); (I-61) + (S1-8); (I-61) + (S1-9); (I-61) + (S1-10); (I-61) + (S1-11); (I-61) + (S1-12); (I-61) + (S1-13); (I-61) + (S2-1); (I-61) + (S2-2); (I-61) + (S2-3); (I-61) + (S2-4); (I-61) + (S2-5); (I-61) + (S2-6); (I-61) + (S2-7); (I-61) + (S2-8); (I-61) + (S2-9); (I-61) + (S2-10); (I-61) + (S3-1); (I-61) + (S3-2); (I-61) + (S3-3); (I-61) + (S3-4); (I-61) + (S3-5); (I-61) + (S3-6); (I-61) + (S3-7); (I-61) + (S3-8); (I-61) + (S3-9); (I-61) + (S3-10); (I-61) + (S3-11); (I-61) + (S4-1); (I-61) + (S4-2); (I-61) + (S4-3); (I-61) + (S4-4); (I-61) + (S4-5); (I-61) + (S7-1); (I-61) + (S11-1); (I-61) + (S11-2); (I-61) + (S11-3); (I-61) + (S12-1); (I-61) + (S13-1); (I-61) + (S13-2); (I-61) + (S13-3); (I-61) + (S13-4): (I-61) + (S13-5); (I-61) + (S13-6); (I-61) + (S13-7); (I-61) + (S13-8); (I-61) + (S13-9); (I-61) + (S14-1)
(I-62) + (S1-1); (I-62) + (S1-2); (I-62) + (S1-3); (I-62) + (S1-4); (I-62) + (S1-5); (I-62) + (S1-6); (I-62) + (S1-7); (I-62) + (S1-8); (I-62) + (S1-9); (I-62) + (S1-10); (I-62) + (S1-11); (I-62) + (S1-12); (I-62) + (S1-13); (I-62) + (S2-1); (I-62) + (S2-2); (I-62) + (S2-3); (I-62) + (S2-4); (I-62) + (S2-5); (I-62) + (S2-6); (I-62) + (S2-7); (I-62) + (S2-8); (I-62) + (S2-9); (I-62) + (S2-10); (I-62) + (S3-1); (I-62) + (S3-2); (I-62) + (S3-3); (I-62) + (S3-4); (I-62) + (S3-5); (I-62) + (S3-6); (I-62) + (S3-7); (I-62) + (S3-8); (I-62) + (S3-9); (I-62) + (S3-10); (I-62) + (S3-11); (I-62) + (S4-1); (I-62) + (S4-2); (I-62) + (S4-3); (I-62) + (S4-4); (I-62) + (S4-5); (I-62) + (S7-1); (I-62) + (S11-1); (I-62) + (S11-2); (I-62) + (S11-3); (I-62) + (S12-1); (I-62) + (S13-1); (I-62) + (S13-2); (I-62) + (S13-3); (I-62) + (S13-4): (I-62) + (S13-5); (I-62) + (S13-6); (I-62) + (S13-7); (I-62) + (S13-8); (I-62) + (S13-9); (I-62) + (S14-1)
(I-63) + (S1-1); (I-63) + (S1-2); (I-63) + (S1-3); (I-63) + (S1-4); (I-63) + (S1-5); (I-63) + (S1-6); (I-63) + (S1-7); (I-63) + (S1-8); (I-63) + (S1-9); (I-63) + (S1-10); (I-63) + (S1-11); (I-63) + (S1-12); (I-63) + (S1-13); (I-63) + (S2-1); (I-63) + (S2-2); (I-63) + (S2-3); (I-63) + (S2-4); (I-63) + (S2-5); (I-63) + (S2-6); (I-63) + (S2-7); (I-63) + (S2-8); (I-63) + (S2-9); (I-63) + (S2-10); (I-63) + (S3-1); (I-63) + (S3-2); (I-63) + (S3-3); (I-63) + (S3-4); (I-63) + (S3-5); (I-63) + (S3-6); (I-63) + (S3-7); (I-63) + (S3-8); (I-63) + (S3-9); (I-63) + (S3-10); (I-63) + (S3-11); (I-63) + (S4-1); (I-63) + (S4-2); (I-63) + (S4-3); (I-63) + (S4-4); (I-63) + (S4-5); (I-63) + (S7-1); (I-63) + (S11-1); (I-63) + (S11-2); (I-63) + (S11-3); (I-63) + (S12-1); (I-63) + (S13-1); (I-63) + (S13-2); (I-63) + (S13-3); (I-63) + (S13-4): (I-63) + (S13-5); (I-63) + (S13-6); (I-63) + (S13-7); (I-63) + (S13-8); (I-63) + (S13-9); (I-63) + (S14-1)
(I-64) + (S1-1); (I-64) + (S1-2); (I-64) + (S1-3); (I-64) + (S1-4); (I-64) + (S1-5); (I-64) + (S1-6); (I-64) + (S1-7); (I-64) + (S1-8); (I-64) + (S1-9); (I-64) + (S1-10); (I-64) + (S1-11); (I-64) + (S1-12); (I-64) + (S1-13); (I-64) + (S2-1); (I-64) + (S2-2); (I-64) + (S2-3); (I-64) + (S2-4); (I-64) + (S2-5); (I-64) + (S2-6); (I-64) + (S2-7); (I-64) + (S2-8); (I-64) + (S2-9); (I-64) + (S2-10); (I-64) + (S3-1); (I-64) + (S3-2); (I-64) + (S3-3); (I-64) + (S3-4); (I-64) + (S3-5); (I-64) + (S3-6); (I-64) + (S3-7); (I-64) + (S3-8); (I-64) + (S3-9); (I-64) + (S3-10); (I-64) + (S3-11); (I-64) + (S4-1); (I-64) + (S4-2); (I-64) + (S4-3); (I-64) + (S4-4); (I-64) + (S4-5); (I-64) + (S7-1); (I-64) + (S11-1); (I-64) + (S11-2); (I-64) + (S11-3); (I-64) + (S12-1); (I-64) + (S13-1); (I-64) + (S13-2); (I-64) + (S13-3); (I-64) + (S13-4): (I-64) + (S13-5); (I-64) + (S13-6); (I-64) + (S13-7); (I-64) + (S13-8); (I-64) + (S13-9); (I-64) + (S14-1)
(I-65) + (S1-1); (I-65) + (S1-2); (I-65) + (S1-3); (I-65) + (S1-4); (I-65) + (S1-5); (I-65) + (S1-6); (I-65) + (S1-7); (I-65) + (S1-8); (I-65) + (S1-9); (I-65) + (S1-10); (I-65) + (S1-11); (I-65) + (S1-12); (I-65) + (S1-13); (I-65) + (S2-1); (I-65) + (S2-2); (I-65) + (S2-3); (I-65) + (S2-4); (I-65) + (S2-5); (I-65) + (S2-6); (I-65) + (S2-7); (I-65) + (S2-8); (I-65) + (S2-9); (I-65) + (S2-10); (I-65) + (S3-1); (I-65) + (S3-2); (I-65) + (S3-3); (I-65) + (S3-4); (I-65) + (S3-5); (I-65) + (S3-6); (I-65) + (S3-7); (I-65) + (S3-8); (I-65) + (S3-9); (I-65) + (S3-10); (I-65) + (S3-11); (I-65) + (S4-1); (I-65) + (S4-2); (I-65) + (S4-3); (I-65) + (S4-4); (I-65) + (S4-5); (I-65) + (S7-1); (I-65) + (S11-1); (I-65) + (S11-2); (I-65) + (S11-3); (I-65) + (S12-1); (I-65) + (S13-1); (I-65) + (S13-2); (I-65) + (S13-3); (I-65) + (S13-4): (I-65) + (S13-5); (I-65) + (S13-6); (I-65) + (S13-7); (I-65) + (S13-8); (I-65) + (S13-9); (I-65) + (S14-1)
(I-66) + (S1-1); (I-66) + (S1-2); (I-66) + (S1-3); (I-66) + (S1-4); (I-66) + (S1-5); (I-66) + (S1-6); (I-66) + (S1-7); (I-66) + (S1-8); (I-66) + (S1-9); (I-66) + (S1-10); (I-66) + (S1-11); (I-66) + (S1-12); (I-66) + (S1-13); (I-66) + (S2-1); (I-66) + (S2-2); (I-66) + (S2-3); (I-66) + (S2-4); (I-66) + (S2-5); (I-66) + (S2-6); (I-66) + (S2-7); (I-66) + (S2-8); (I-66) + (S2-9); (I-66) + (S2-10); (I-66) + (S3-1); (I-66) + (S3-2); (I-66) + (S3-3); (I-66) + (S3-4); (I-66) + (S3-5); (I-66) + (S3-6); (I-66) + (S3-7); (I-66) + (S3-8); (I-66) + (S3-9); (I-66) + (S3-10); (I-66) + (S3-11); (I-66) + (S4-1); (I-66) + (S4-2); (I-66) + (S4-3); (I-66) + (S4-4); (I-66) + (S4-5); (I-66) + (S7-1); (I-66) + (S11-1); (I-66) + (S11-2); (I-66) + (S11-3); (I-66) + (S12-1); (I-66) + (S13-1); (I-66) + (S13-2); (I-66) + (S13-3); (I-66) + (S13-4): (I-66) + (S13-5); (I-66) + (S13-6); (I-66) + (S13-7); (I-66) + (S13-8); (I-66) + (S13-9); (I-66) + (S14-1)
(I-67) + (S1-1); (I-67) + (S1-2); (I-67) + (S1-3); (I-67) + (S1-4); (I-67) + (S1-5); (I-67) + (S1-6); (I-67) + (S1-7); (I-67) + (S1-8); (I-67) + (S1-9); (I-67) + (S1-10); (I-67) + (S1-11); (I-67) + (S1-12); (I-67) + (S1-13); (I-67) + (S2-1); (I-67) + (S2-2); (I-67) + (S2-3); (I-67) + (S2-4); (I-67) + (S2-5); (I-67) + (S2-6); (I-67) + (S2-7); (I-67) + (S2-8); (I-67) + (S2-9); (I-67) + (S2-10); (I-67) + (S3-1); (I-67) + (S3-2); (I-67) + (S3-3); (I-67) + (S3-4); (I-67) + (S3-5); (I-67) + (S3-6); (I-67) + (S3-7); (I-67) + (S3-8); (I-67) + (S3-9); (I-67) + (S3-10); (I-67) + (S3-11); (I-67) + (S4-1); (I-67) + (S4-2); (I-67) + (S4-3); (I-67) + (S4-4); (I-67) + (S4-5); (I-67) + (S7-1); (I-67) + (S11-1); (I-67) + (S11-2); (I-67) + (S11-3); (I-67) + (S12-1); (I-67) + (S13-1); (I-67) + (S13-2); (I-67) + (S13-3); (I-67) + (S13-4): (I-67) + (S13-5); (I-67) + (S13-6); (I-67) + (S13-7); (I-67) + (S13-8); (I-67) + (S13-9); (I-67) + (S14-1)
(I-68) + (S1-1); (I-68) + (S1-2); (I-68) + (S1-3); (I-68) + (S1-4); (I-68) + (S1-5); (I-68) + (S1-6); (I-68) + (S1-7); (I-68) + (S1-8); (I-68) + (S1-9); (I-68) + (S1-10); (I-68) + (S1-11); (I-68) + (S1-12); (I-68) + (S1-13); (I-68) + (S2-1); (I-68) + (S2-2); (I-68) + (S2-3); (I-68) + (S2-4); (I-68) + (S2-5); (I-68) + (S2-6); (I-68) + (S2-7); (I-68) + (S2-8); (I-68) + (S2-9); (I-68) + (S2-10); (I-68) + (S3-1); (I-68) + (S3-2); (I-68) + (S3-3); (I-68) + (S3-4); (I-68) + (S3-5); (I-68) + (S3-6); (I-68) + (S3-7); (I-68) + (S3-8); (I-68) + (S3-9); (I-68) + (S3-10); (I-68) + (S3-11); (I-68) + (S4-1); (I-68) + (S4-2); (I-68) + (S4-3); (I-68) + (S4-4); (I-68) + (S4-5); (I-68) + (S7-1); (I-68) + (S11-1); (I-68) + (S11-2); (I-68) + (S11-3); (I-68) + (S12-1); (I-68) + (S13-1); (I-68) + (S13-2); (I-68) + (S13-3); (I-68) + (S13-4): (I-68) + (S13-5); (I-68) + (S13-6); (I-68) + (S13-7); (I-68) + (S13-8); (I-68) + (S13-9); (I-68) + (S14-1)
(I-69) + (S1-1); (I-69) + (S1-2); (I-69) + (S1-3); (I-69) + (S1-4); (I-69) + (S1-5); (I-69) + (S1-6); (I-69) + (S1-7); (I-69) + (S1-8); (I-69) + (S1-9); (I-69) + (S1-10); (I-69) + (S1-11); (I-69) + (S1-12); (I-69) + (S1-13); (I-69) + (S2-1); (I-69) + (S2-2); (I-69) + (S2-3); (I-69) + (S2-4); (I-69) + (S2-5); (I-69) + (S2-6); (I-69) + (S2-7); (I-69) + (S2-8); (I-69) + (S2-9); (I-69) + (S2-10); (I-69) + (S3-1); (I-69) + (S3-2); (I-69) + (S3-3); (I-69) + (S3-4); (I-69) + (S3-5); (I-69) + (S3-6); (I-69) + (S3-7); (I-69) + (S3-8); (I-69) + (S3-9); (I-69) + (S3-10); (I-69) + (S3-11); (I-69) + (S4-1); (I-69) + (S4-2); (I-69) + (S4-3); (I-69) + (S4-4); (I-69) + (S4-5); (I-69) + (S7-1); (I-69) + (S11-1); (I-69) + (S11-2); (I-69) + (S11-3); (I-69) + (S12-1); (I-69) + (S13-1); (I-69) + (S13-2); (I-69) + (S13-3); (I-69) + (S13-4): (I-69) + (S13-5); (I-69) + (S13-6); (I-69) + (S13-7); (I-69) + (S13-8); (I-69) + (S13-9); (I-69) + (S14-1)
(I-70) + (S1-1); (I-70) + (S1-2); (I-70) + (S1-3); (I-70) + (S1-4); (I-70) + (S1-5); (I-70) + (S1-6); (I-70) + (S1-7); (I-70) + (S1-8); (I-70) + (S1-9); (I-70) + (S1-10); (I-70) + (S1-11); (I-70) + (S1-12); (I-70) + (S1-13); (I-70) + (S2-1); (I-70) + (S2-2); (I-70) + (S2-3); (I-70) + (S2-4); (I-70) + (S2-5); (I-70) + (S2-6); (I-70) + (S2-7); (I-70) + (S2-8); (I-70) + (S2-9); (I-70) + (S2-10); (I-70) + (S3-1); (I-70) + (S3-2); (I-70) + (S3-3); (I-70) + (S3-4); (I-70) + (S3-5); (I-70) + (S3-6); (I-70) + (S3-7); (I-70) + (S3-8); (I-70) + (S3-9); (I-70) + (S3-10); (I-70) + (S3-11); (I-70) + (S4-1); (I-70) + (S4-2); (I-70) + (S4-3); (I-70) + (S4-4); (I-70) + (S4-5); (I-70) + (S7-1); (I-70) + (S11-1); (I-70) + (S11-2); (I-70) + (S11-3); (I-70) + (S12-1); (I-70) + (S13-1); (I-70) + (S13-2); (I-70) + (S13-3); (I-70) + (S13-4): (I-70) + (S13-5); (I-70) + (S13-6); (I-70) + (S13-7); (I-70) + (S13-8); (I-70) + (S13-9); (I-70) + (S14-1)
(I-71) + (S1-1); (I-71) + (S1-2); (I-71) + (S1-3); (I-71) + (S1-4); (I-71) + (S1-5); (I-71) + (S1-6); (I-71) + (S1-7); (I-71) + (S1-8); (I-71) + (S1-9); (I-71) + (S1-10); (I-71) + (S1-11); (I-71) + (S1-12); (I-71) + (S1-13); (I-71) + (S2-1); (I-71) + (S2-2); (I-71) + (S2-3); (I-71) + (S2-4); (I-71) + (S2-5); (I-71) + (S2-6); (I-71) + (S2-7); (I-71) + (S2-8); (I-71) + (S2-9); (I-71) + (S2-10); (I-71) + (S3-1); (I-71) + (S3-2); (I-71) + (S3-3); (I-71) + (S3-4); (I-71) + (S3-5); (I-71) + (S3-6); (I-71) + (S3-7); (I-71) + (S3-8); (I-71) + (S3-9); (I-71) + (S3-10); (I-71) + (S3-11); (I-71) + (S4-1); (I-71) + (S4-2); (I-71) + (S4-3); (I-71) + (S4-4); (I-71) + (S4-5); (I-71) + (S7-1); (I-71) + (S11-1); (I-71) + (S11-2); (I-71) + (S11-3); (I-71) + (S12-1); (I-71) + (S13-1); (I-71) + (S13-2); (I-71) + (S13-3); (I-71) + (S13-4): (I-71) + (S13-5); (I-71) + (S13-6); (I-71) + (S13-7); (I-71) + (S13-8); (I-71) + (S13-9); (I-71) + (S14-1)
(I-72) + (S1-1); (I-72) + (S1-2); (I-72) + (S1-3); (I-72) + (S1-4); (I-72) + (S1-5); (I-72) + (S1-6); (I-72) + (S1-7); (I-72) + (S1-8); (I-72) + (S1-9); (I-72) + (S1-10); (I-72) + (S1-11); (I-72) + (S1-12); (I-72) + (S1-13); (I-72) + (S2-1); (I-72) + (S2-2); (I-72) + (S2-3); (I-72) + (S2-4); (I-72) + (S2-5); (I-72) + (S2-6); (I-72) + (S2-7); (I-72) + (S2-8); (I-72) + (S2-9); (I-72) + (S2-10); (I-72) + (S3-1); (I-72) + (S3-2); (I-72) + (S3-3); (I-72) + (S3-4); (I-72) + (S3-5); (I-72) + (S3-6); (I-72) + (S3-7); (I-72) + (S3-8); (I-72) + (S3-9); (I-72) + (S3-10); (I-72) + (S3-11); (I-72) + (S4-1); (I-72) + (S4-2); (I-72) + (S4-3); (I-72) + (S4-4); (I-72) + (S4-5); (I-72) + (S7-1); (I-72) + (S11-1); (I-72) + (S11-2); (I-72) + (S11-3); (I-72) + (S12-1); (I-72) + (S13-1); (I-72) + (S13-2); (I-72) + (S13-3); (I-72) + (S13-4): (I-72) + (S13-5); (I-72) + (S13-6); (I-72) + (S13-7); (I-72) + (S13-8); (I-72) + (S13-9); (I-72) + (S14-1)
(I-73) + (S1-1); (I-73) + (S1-2); (I-73) + (S1-3); (I-73) + (S1-4); (I-73) + (S1-5); (I-73) + (S1-6); (I-73) + (S1-7); (I-73) + (S1-8); (I-73) + (S1-9); (I-73) + (S1-10); (I-73) + (S1-11); (I-73) + (S1-12); (I-73) + (S1-13); (I-73) + (S2-1); (I-73) + (S2-2); (I-73) + (S2-3); (I-73) + (S2-4); (I-73) + (S2-5); (I-73) + (S2-6); (I-73) + (S2-7); (I-73) + (S2-8); (I-73) + (S2-9); (I-73) + (S2-10); (I-73) + (S3-1); (I-73) + (S3-2); (I-73) + (S3-3); (I-73) + (S3-4); (I-73) + (S3-5); (I-73) + (S3-6); (I-73) + (S3-7); (I-73) + (S3-8); (I-73) + (S3-9); (I-73) + (S3-10); (I-73) + (S3-11); (I-73) + (S4-1); (I-73) + (S4-2); (I-73) + (S4-3); (I-73) + (S4-4); (I-73) + (S4-5); (I-73) + (S7-1); (I-73) + (S11-1); (I-73) + (S11-2); (I-73) + (S11-3); (I-73) + (S12-1); (I-73) + (S13-1); (I-73) + (S13-2); (I-73) + (S13-3); (I-73) + (S13-4): (I-73) + (S13-5); (I-73) + (S13-6); (I-73) + (S13-7); (I-73) + (S13-8); (I-73) + (S13-9); (I-73) + (S14-1)
(I-74) + (S1-1); (I-74) + (S1-2); (I-74) + (S1-3); (I-74) + (S1-4); (I-74) + (S1-5); (I-74) + (S1-6); (I-74) + (S1-7); (I-74) + (S1-8); (I-74) + (S1-9); (I-74) + (S1-10); (I-74) + (S1-11); (I-74) + (S1-12); (I-74) + (S1-13); (I-74) + (S2-1); (I-74) + (S2-2); (I-74) + (S2-3); (I-74) + (S2-4); (I-74) + (S2-5); (I-74) + (S2-6); (I-74) + (S2-7); (I-74) + (S2-8); (I-74) + (S2-9); (I-74) + (S2-10); (I-74) + (S3-1); (I-74) + (S3-2); (I-74) + (S3-3); (I-74) + (S3-4); (I-74) + (S3-5); (I-74) + (S3-6); (I-74) + (S3-7); (I-74) + (S3-8); (I-74) + (S3-9); (I-74) + (S3-10); (I-74) + (S3-11); (I-74) + (S4-1); (I-74) + (S4-2); (I-74) + (S4-3); (I-74) + (S4-4); (I-74) + (S4-5); (I-74) + (S7-1); (I-74) + (S11-1); (I-74) + (S11-2); (I-74) + (S11-3); (I-74) + (S12-1); (I-74) + (S13-1); (I-74) + (S13-2); (I-74) + (S13-3); (I-74) + (S13-4): (I-74) + (S13-5); (I-74) + (S13-6); (I-74) + (S13-7); (I-74) + (S13-8); (I-74) + (S13-9); (I-74) + (S14-1)
(I-75) + (S1-1); (I-75) + (S1-2); (I-75) + (S1-3); (I-75) + (S1-4); (I-75) + (S1-5); (I-75) + (S1-6); (I-75) + (S1-7); (I-75) + (S1-8); (I-75) + (S1-9); (I-75) + (S1-10); (I-75) + (S1-11); (I-75) + (S1-12); (I-75) + (S1-13); (I-75) + (S2-1); (I-75) + (S2-2); (I-75) + (S2-3); (I-75) + (S2-4); (I-75) + (S2-5); (I-75) + (S2-6); (I-75) + (S2-7); (I-75) + (S2-8); (I-75) + (S2-9); (I-75) + (S2-10); (I-75) + (S3-1); (I-75) + (S3-2); (I-75) + (S3-3); (I-75) + (S3-4); (I-75) + (S3-5); (I-75) + (S3-6); (I-75) + (S3-7); (I-75) + (S3-8); (I-75) + (S3-9); (I-75) + (S3-10); (I-75) + (S3-11); (I-75) + (S4-1); (I-75) + (S4-2); (I-75) + (S4-3); (I-75) + (S4-4); (I-75) + (S4-5); (I-75) + (S7-1); (I-75) + (S11-1); (I-75) + (S11-2); (I-75) + (S11-3); (I-75) + (S12-1); (I-75) + (S13-1); (I-75) + (S13-2); (I-75) + (S13-3); (I-75) + (S13-4): (I-75) + (S13-5); (I-75) + (S13-6); (I-75) + (S13-7); (I-75) + (S13-8); (I-75) + (S13-9); (I-75) + (S14-1)
(I-76) + (S1-1); (I-76) + (S1-2); (I-76) + (S1-3); (I-76) + (S1-4); (I-76) + (S1-5); (I-76) + (S1-6); (I-76) + (S1-7); (I-76) + (S1-8); (I-76) + (S1-9); (I-76) + (S1-10); (I-76) + (S1-11); (I-76) + (S1-12); (I-76) + (S1-13); (I-76) + (S2-1); (I-76) + (S2-2); (I-76) + (S2-3); (I-76) + (S2-4); (I-76) + (S2-5); (I-76) + (S2-6); (I-76) + (S2-7); (I-76) + (S2-8); (I-76) + (S2-9); (I-76) + (S2-10); (I-76) + (S3-1); (I-76) + (S3-2); (I-76) + (S3-3); (I-76) + (S3-4); (I-76) + (S3-5); (I-76) + (S3-6); (I-76) + (S3-7); (I-76) + (S3-8); (I-76) + (S3-9); (I-76) + (S3-10); (I-76) + (S3-11); (I-76) + (S4-1); (I-76) + (S4-2); (I-76) + (S4-3); (I-76) + (S4-4); (I-76) + (S4-5); (I-76) + (S7-1); (I-76) + (S11-1); (I-76) + (S11-2); (I-76) + (S11-3); (I-76) + (S12-1); (I-76) + (S13-1); (I-76) + (S13-2); (I-76) + (S13-3); (I-76) + (S13-4): (I-76) + (S13-5); (I-76) + (S13-6); (I-76) + (S13-7); (I-76) + (S13-8); (I-76) + (S13-9); (I-76) + (S14-1) (I-77) + (S1-1); (I-77) + (S1-2); (I-77) + (S1-3); (I-77) + (S1-4); (I-77) + (S1-5); (I-77) + (S1-6); (I-77) + (S1-7); (I-77) + (S1-8); (I-77) + (S1-9); (I-77) + (S1-10); (I-77) + (S1-11); (I-77) + (S1-12); (I-77) + (S1-13); (I-77) + (S2-1); (I-77) + (S2-2); (I-77) + (S2-3); (I-77) + (S2-4); (I-77) + (S2-5); (I-77) + (S2-6); (I-77) + (S2-7); (I-77) + (S2-8); (I-77) + (S2-9); (I-77) + (S2-10); (I-77) + (S3-1); (I-77) + (S3-2); (I-77) + (S3-3); (I-77) + (S3-4); (I-77) + (S3-5); (I-77) + (S3-6); (I-77) + (S3-7); (I-77) + (S3-8); (I-77) + (S3-9); (I-77) + (S3-10); (I-77) + (S3-11); (I-77) + (S4-1); (I-77) + (S4-2); (I-77) + (S4-3); (I-77) + (S4-4); (I-77) + (S4-5); (I-77) + (S7-1); (I-77) + (S11-1); (I-77) + (S11-2); (I-77) + (S11-3); (I-77) + (S12-1); (I-77) + (S13-1); (I-77) + (S13-2); (I-77) + (S13-3); (I-77) + (S13-4): (I-77) + (S13-5); (I-77) + (S13-6); (I-77) + (S13-7); (I-77) + (S13-8); (I-77) + (S13-9); (I-77) + (S14-1)
(I-78) + (S1-1); (I-78) + (S1-2); (I-78) + (S1-3); (I-78) + (S1-4); (I-78) + (S1-5); (I-78) + (S1-6); (I-78) + (S1-7); (I-78) + (S1-8); (I-78) + (S1-9); (I-78) + (S1-10); (I-78) + (S1-11); (I-78) + (S1-12); (I-78) + (S1-13); (I-78) + (S2-1); (I-78) + (S2-2); (I-78) + (S2-3); (I-78) + (S2-4); (I-78) + (S2-5); (I-78) + (S2-6); (I-78) + (S2-7); (I-78) + (S2-8); (I-78) + (S2-9); (I-78) + (S2-10); (I-78) + (S3-1); (I-78) + (S3-2); (I-78) + (S3-3); (I-78) + (S3-4); (I-78) + (S3-5); (I-78) + (S3-6); (I-78) + (S3-7); (I-78) + (S3-8); (I-78) + (S3-9); (I-78) + (S3-10); (I-78) + (S3-11); (I-78) + (S4-1); (I-78) + (S4-2); (I-78) + (S4-3); (I-78) + (S4-4); (I-78) + (S4-5); (I-78) + (S7-1); (I-78) + (S11-1); (I-78) + (S11-2); (I-78) + (S11-3); (I-78) + (S12-1); (I-78) + (S13-1); (I-78) + (S13-2); (I-78) + (S13-3); (I-78) + (S13-4): (I-78) + (S13-5); (I-78) + (S13-6); (I-78) + (S13-7); (I-78) + (S13-8); (I-78) + (S13-9); (I-78) + (S14-1)
(I-79) + (S1-1); (I-79) + (S1-2); (I-79) + (S1-3); (I-79) + (S1-4); (I-79) + (S1-5); (I-79) + (S1-6); (I-79) + (S1-7); (I-79) + (S1-8); (I-79) + (S1-9); (I-79) + (S1-10); (I-79) + (S1-11); (I-79) + (S1-12); (I-79) + (S1-13); (I-79) + (S2-1); (I-79) + (S2-2); (I-79) + (S2-3); (I-79) + (S2-4); (I-79) + (S2-5); (I-79) + (S2-6); (I-79) + (S2-7); (I-79) + (S2-8); (I-79) + (S2-9); (I-79) + (S2-10); (I-79) + (S3-1); (I-79) + (S3-2); (I-79) + (S3-3); (I-79) + (S3-4); (I-79) + (S3-5); (I-79) + (S3-6); (I-79) + (S3-7); (I-79) + (S3-8); (I-79) + (S3-9); (I-79) + (S3-10); (I-79) + (S3-11); (I-79) + (S4-1); (I-79) + (S4-2); (I-79) + (S4-3); (I-79) + (S4-4); (I-79) + (S4-5); (I-79) + (S7-1); (I-79) + (S11-1); (I-79) + (S11-2); (I-79) + (S11-3); (I-79) + (S12-1); (I-79) + (S13-1); (I-79) + (S13-2); (I-79) + (S13-3); (I-79) + (S13-4): (I-79) + (S13-5); (I-79) + (S13-6); (I-79) + (S13-7); (I-79) + (S13-8); (I-79) + (S13-9); (I-79) + (S14-1)
(I-80) + (S1-1); (I-80) + (S1-2); (I-80) + (S1-3); (I-80) + (S1-4); (I-80) + (S1-5); (I-80) + (S1-6); (I-80) + (S1-7); (I-80) + (S1-8); (I-80) + (S1-9); (I-80) + (S1-10); (I-80) + (S1-11); (I-80) + (S1-12); (I-80) + (S1-13); (I-80) + (S2-1); (I-80) + (S2-2); (I-80) + (S2-3); (I-80) + (S2-4); (I-80) + (S2-5); (I-80) + (S2-6); (I-80) + (S2-7); (I-80) + (S2-8); (I-80) + (S2-9); (I-80) + (S2-10); (I-80) + (S3-1); (I-80) + (S3-2); (I-80) + (S3-3); (I-80) + (S3-4); (I-80) + (S3-5); (I-80) + (S3-6); (I-80) + (S3-7); (I-80) + (S3-8); (I-80) + (S3-9); (I-80) + (S3-10); (I-80) + (S3-11); (I-80) + (S4-1); (I-80) + (S4-2); (I-80) + (S4-3); (I-80) + (S4-4); (I-80) + (S4-5); (I-80) + (S7-1); (I-80) + (S11-1); (I-80) + (S11-2); (I-80) + (S11-3); (I-80) + (S12-1); (I-80) + (S13-1); (I-80) + (S13-2); (I-80) + (S13-3); (I-80) + (S13-4): (I-80) + (S13-5); (I-80) + (S13-6); (I-80) + (S13-7); (I-80) + (S13-8); (I-80) + (S13-9); (I-80) + (S14-1)
(I-81) + (S1-1); (I-81) + (S1-2); (I-81) + (S1-3); (I-81) + (S1-4); (I-81) + (S1-5); (I-81) + (S1-6); (I-81) + (S1-7); (I-81) + (S1-8); (I-81) + (S1-9); (I-81) + (S1-10); (I-81) + (S1-11); (I-81) + (S1-12); (I-81) + (S1-13); (I-81) + (S2-1); (I-81) + (S2-2); (I-81) + (S2-3); (I-81) + (S2-4); (I-81) + (S2-5); (I-81) + (S2-6); (I-81) + (S2-7); (I-81) + (S2-8); (I-81) + (S2-9); (I-81) + (S2-10); (I-81) + (S3-1); (I-81) + (S3-2); (I-81) + (S3-3); (I-81) + (S3-4); (I-81) + (S3-5); (I-81) + (S3-6); (I-81) + (S3-7); (I-81) + (S3-8); (I-81) + (S3-9); (I-81) + (S3-10); (I-81) + (S3-11); (I-81) + (S4-1); (I-81) + (S4-2); (I-81) + (S4-3); (I-81) + (S4-4); (I-81) + (S4-5); (I-81) + (S7-1); (I-81) + (S11-1); (I-81) + (S11-2); (I-81) + (S11-3); (I-81) + (S12-1); (I-81) + (S13-1); (I-81) + (S13-2); (I-81) + (S13-3); (I-81) + (S13-4): (I-81) + (S13-5); (I-81) + (S13-6); (I-81) + (S13-7); (I-81) + (S13-8); (I-81) + (S13-9); (I-81) + (S14-1)
(I-82) + (S1-1); (I-82) + (S1-2); (I-82) + (S1-3); (I-82) + (S1-4); (I-82) + (S1-5); (I-82) + (S1-6); (I-82) + (S1-7); (I-82) + (S1-8); (I-82) + (S1-9); (I-82) + (S1-10); (I-82) + (S1-11); (I-82) + (S1-12); (I-82) + (S1-13); (I-82) + (S2-1); (I-82) + (S2-2); (I-82) + (S2-3); (I-82) + (S2-4); (I-82) + (S2-5); (I-82) + (S2-6); (I-82) + (S2-7); (I-82) + (S2-8); (I-82) + (S2-9); (I-82) + (S2-10); (I-82) + (S3-1); (I-82) + (S3-2); (I-82) + (S3-3); (I-82) + (S3-4); (I-82) + (S3-5); (I-82) + (S3-6); (I-82) + (S3-7); (I-82) + (S3-8); (I-82) + (S3-9); (I-82) + (S3-10); (I-82) + (S3-11); (I-82) + (S4-1); (I-82) + (S4-2); (I-82) + (S4-3); (I-82) + (S4-4); (I-82) + (S4-5); (I-82) + (S7-1); (I-82) + (S11-1); (I-82) + (S11-2); (I-82) + (S11-3); (I-82) + (S12-1); (I-82) + (S13-1); (I-82) + (S13-2); (I-82) + (S13-3); (I-82) + (S13-4): (I-82) + (S13-5); (I-82) + (S13-6); (I-82) + (S13-7); (I-82) + (S13-8); (I-82) + (S13-9); (I-82) + (S14-1)
(I-83) + (S1-1); (I-83) + (S1-2); (I-83) + (S1-3); (I-83) + (S1-4); (I-83) + (S1-5); (I-83) + (S1-6); (I-83) + (S1-7); (I-83) + (S1-8); (I-83) + (S1-9); (I-83) + (S1-10); (I-83) + (S1-11); (I-83) + (S1-12); (I-83) + (S1-13); (I-83) + (S2-1); (I-83) + (S2-2); (I-83) + (S2-3); (I-83) + (S2-4); (I-83) + (S2-5); (I-83) + (S2-6); (I-83) + (S2-7); (I-83) + (S2-8); (I-83) + (S2-9); (I-83) + (S2-10); (I-83) + (S3-1); (I-83) + (S3-2); (I-83) + (S3-3); (I-83) + (S3-4); (I-83) + (S3-5); (I-83) + (S3-6); (I-83) + (S3-7); (I-83) + (S3-8); (I-83) + (S3-9); (I-83) + (S3-10); (I-83) + (S3-11); (I-83) + (S4-1); (I-83) + (S4-2); (I-83) + (S4-3); (I-83) + (S4-4); (I-83) + (S4-5); (I-83) + (S7-1); (I-83) + (S11-1); (I-83) + (S11-2); (I-83) + (S11-3); (I-83) + (S12-1); (I-83) + (S13-1); (I-83) + (S13-2); (I-83) + (S13-3); (I-83) + (S13-4): (I-83) + (S13-5); (I-83) + (S13-6); (I-83) + (S13-7); (I-83) + (S13-8); (I-83) + (S13-9); (I-83) + (S14-1)
(I-84) + (S1-1); (I-84) + (S1-2); (I-84) + (S1-3); (I-84) + (S1-4); (I-84) + (S1-5); (I-84) + (S1-6); (I-84) + (S1-7); (I-84) + (S1-8); (I-84) + (S1-9); (I-84) + (S1-10); (I-84) + (S1-11); (I-84) + (S1-12); (I-84) + (S1-13); (I-84) + (S2-1); (I-84) + (S2-2); (I-84) + (S2-3); (I-84) + (S2-4); (I-84) + (S2-5); (I-84) + (S2-6); (I-84) + (S2-7); (I-84) + (S2-8); (I-84) + (S2-9); (I-84) + (S2-10); (I-84) + (S3-1); (I-84) + (S3-2); (I-84) + (S3-3); (I-84) + (S3-4); (I-84) + (S3-5); (I-84) + (S3-6); (I-84) + (S3-7); (I-84) + (S3-8); (I-84) + (S3-9); (I-84) + (S3-10); (I-84) + (S3-11); (I-84) + (S4-1); (I-84) + (S4-2); (I-84) + (S4-3); (I-84) + (S4-4); (I-84) + (S4-5); (I-84) + (S7-1); (I-84) + (S11-1); (I-84) + (S11-2); (I-84) + (S11-3); (I-84) + (S12-1); (I-84) + (S13-1); (I-84) + (S13-2); (I-84) + (S13-3); (I-84) + (S13-4): (I-84) + (S13-5); (I-84) + (S13-6); (I-84) + (S13-7); (I-84) + (S13-8); (I-84) + (S13-9); (I-84) + (S14-1)
(I-85) + (S1-1); (I-85) + (S1-2); (I-85) + (S1-3); (I-85) + (S1-4); (I-85) + (S1-5); (I-85) + (S1-6); (I-85) + (S1-7); (I-85) + (S1-8); (I-85) + (S1-9); (I-85) + (S1-10); (I-85) + (S1-11); (I-85) + (S1-12); (I-85) + (S1-13); (I-85) + (S2-1); (I-85) + (S2-2); (I-85) + (S2-3); (I-85) + (S2-4); (I-85) + (S2-5); (I-85) + (S2-6); (I-85) + (S2-7); (I-85) + (S2-8); (I-85) + (S2-9); (I-85) + (S2-10); (I-85) + (S3-1); (I-85) + (S3-2); (I-85) + (S3-3); (I-85) + (S3-4); (I-85) + (S3-5); (I-85) + (S3-6); (I-85) + (S3-7); (I-85) + (S3-8); (I-85) + (S3-9); (I-85) + (S3-10); (I-85) + (S3-11); (I-85) + (S4-1); (I-85) + (S4-2); (I-85) + (S4-3); (I-85) + (S4-4); (I-85) + (S4-5); (I-85) + (S7-1); (I-85) + (S11-1); (I-85) + (S11-2); (I-85) + (S11-3); (I-85) + (S12-1); (I-85) + (S13-1); (I-85) + (S13-2); (I-85) + (S13-3); (I-85) + (S13-4): (I-85) + (S13-5); (I-85) + (S13-6); (I-85) + (S13-7); (I-85) + (S13-8); (I-85) + (S13-9); (I-85) + (S14-1)
(I-86) + (S1-1); (I-86) + (S1-2); (I-86) + (S1-3); (I-86) + (S1-4); (I-86) + (S1-5); (I-86) + (S1-6); (I-86) + (S1-7); (I-86) + (S1-8); (I-86) + (S1-9); (I-86) + (S1-10); (I-86) + (S1-11); (I-86) + (S1-12); (I-86) + (S1-13); (I-86) + (S2-1); (I-86) + (S2-2); (I-86) + (S2-3); (I-86) + (S2-4); (I-86) + (S2-5); (I-86) + (S2-6); (I-86) + (S2-7); (I-86) + (S2-8); (I-86) + (S2-9); (I-86) + (S2-10); (I-86) + (S3-1); (I-86) + (S3-2); (I-86) + (S3-3); (I-86) + (S3-4); (I-86) + (S3-5); (I-86) + (S3-6); (I-86) + (S3-7); (I-86) + (S3-8); (I-86) + (S3-9); (I-86) + (S3-10); (I-86) + (S3-11); (I-86) + (S4-1); (I-86) + (S4-2); (I-86) + (S4-3); (I-86) + (S4-4); (I-86) + (S4-5); (I-86) + (S7-1); (I-86) + (S11-1); (I-86) + (S11-2); (I-86) + (S11-3); (I-86) + (S12-1); (I-86) + (S13-1); (I-86) + (S13-2); (I-86) + (S13-3); (I-86) + (S13-4): (I-86) + (S13-5); (I-86) + (S13-6); (I-86) + (S13-7); (I-86) + (S13-8); (I-86) + (S13-9); (I-86) + (S14-1)
(I-87) + (S1-1); (I-87) + (S1-2); (I-87) + (S1-3); (I-87) + (S1-4); (I-87) + (S1-5); (I-87) + (S1-6); (I-87) + (S1-7); (I-87) + (S1-8); (I-87) + (S1-9); (I-87) + (S1-10); (I-87) + (S1-11); (I-87) + (S1-12); (I-87) + (S1-13); (I-87) + (S2-1); (I-87) + (S2-2); (I-87) + (S2-3); (I-87) + (S2-4); (I-87) + (S2-5); (I-87) + (S2-6); (I-87) + (S2-7); (I-87) + (S2-8); (I-87) + (S2-9); (I-87) + (S2-10); (I-87) + (S3-1); (I-87) + (S3-2); (I-87) + (S3-3); (I-87) + (S3-4); (I-87) + (S3-5); (I-87) + (S3-6); (I-87) + (S3-7); (I-87) + (S3-8); (I-87) + (S3-9); (I-87) + (S3-10); (I-87) + (S3-11); (I-87) + (S4-1); (I-87) + (S4-2); (I-87) + (S4-3); (I-87) + (S4-4); (I-87) + (S4-5); (I-87) + (S7-1); (I-87) + (S11-1); (I-87) + (S11-2); (I-87) + (S11-3); (I-87) + (S12-1); (I-87) + (S13-1); (I-87) + (S13-2); (I-87) + (S13-3); (I-87) + (S13-4): (I-87) + (S13-5); (I-87) + (S13-6); (I-87) + (S13-7); (I-87) + (S13-8); (I-87) + (S13-9); (I-87) + (S14-1)
(I-88) + (S1-1); (I-88) + (S1-2); (I-88) + (S1-3); (I-88) + (S1-4); (I-88) + (S1-5); (I-88) + (S1-6); (I-88) + (S1-7); (I-88) + (S1-8); (I-88) + (S1-9); (I-88) + (S1-10); (I-88) + (S1-11); (I-88) + (S1-12); (I-88) + (S1-13); (I-88) + (S2-1); (I-88) + (S2-2); (I-88) + (S2-3); (I-88) + (S2-4); (I-88) + (S2-5); (I-88) + (S2-6); (I-88) + (S2-7); (I-88) + (S2-8); (I-88) + (S2-9); (I-88) + (S2-10); (I-88) + (S3-1); (I-88) + (S3-2); (I-88) + (S3-3); (I-88) + (S3-4); (I-88) + (S3-5); (I-88) + (S3-6); (I-88) + (S3-7); (I-88) + (S3-8); (I-88) + (S3-9); (I-88) + (S3-10); (I-88) + (S3-11); (I-88) + (S4-1); (I-88) + (S4-2); (I-88) + (S4-3); (I-88) + (S4-4); (I-88) + (S4-5); (I-88) + (S7-1); (I-88) + (S11-1); (I-88) + (S11-2); (I-88) + (S11-3); (I-88) + (S12-1); (I-88) + (S13-1); (I-88) + (S13-2); (I-88) + (S13-3); (I-88) + (S13-4): (I-88) + (S13-5); (I-88) + (S13-6); (I-88) + (S13-7); (I-88) + (S13-8); (I-88) + (S13-9); (I-88) + (S14-1)
(I-89) + (S1-1); (I-89) + (S1-2); (I-89) + (S1-3); (I-89) + (S1-4); (I-89) + (S1-5); (I-89) + (S1-6); (I-89) + (S1-7); (I-89) + (S1-8); (I-89) + (S1-9); (I-89) + (S1-10); (I-89) + (S1-11); (I-89) + (S1-12); (I-89) + (S1-13); (I-89) + (S2-1); (I-89) + (S2-2); (I-89) + (S2-3); (I-89) + (S2-4); (I-89) + (S2-5); (I-89) + (S2-6); (I-89) + (S2-7); (I-89) + (S2-8); (I-89) + (S2-9); (I-89) + (S2-10); (I-89) + (S3-1); (I-89) + (S3-2); (I-89) + (S3-3); (I-89) + (S3-4); (I-89) + (S3-5); (I-89) + (S3-6); (I-89) + (S3-7); (I-89) + (S3-8); (I-89) + (S3-9); (I-89) + (S3-10); (I-89) + (S3-11); (I-89) + (S4-1); (I-89) + (S4-2); (I-89) + (S4-3); (I-89) + (S4-4); (I-89) + (S4-5); (I-89) + (S7-1); (I-89) + (S11-1); (I-89) + (S11-2); (I-89) + (S11-3); (I-89) + (S12-1); (I-89) + (S13-1); (I-89) + (S13-2); (I-89) + (S13-3); (I-89) + (S13-4): (I-89) + (S13-5); (I-89) + (S13-6); (I-89) + (S13-7); (I-89) + (S13-8); (I-89) + (S13-9); (I-89) + (S14-1)
(I-90) + (S1-1); (I-90) + (S1-2); (I-90) + (S1-3); (I-90) + (S1-4); (I-90) + (S1-5); (I-90) + (S1-6); (I-90) + (S1-7); (I-90) + (S1-8); (I-90) + (S1-9); (I-90) + (S1-10); (I-90) + (S1-11); (I-90) + (S1-12); (I-90) + (S1-13); (I-90) + (S2-1); (I-90) + (S2-2); (I-90) + (S2-3); (I-90) + (S2-4); (I-90) + (S2-5); (I-90) + (S2-6); (I-90) + (S2-7); (I-90) + (S2-8); (I-90) + (S2-9); (I-90) + (S2-10); (I-90) + (S3-1); (I-90) + (S3-2); (I-90) + (S3-3); (I-90) + (S3-4); (I-90) + (S3-5); (I-90) + (S3-6); (I-90) + (S3-7); (I-90) + (S3-8); (I-90) + (S3-9); (I-90) + (S3-10); (I-90) + (S3-11); (I-90) + (S4-1); (I-90) + (S4-2); (I-90) + (S4-3); (I-90) + (S4-4); (I-90) + (S4-5); (I-90) + (S7-1); (I-90) + (S11-1); (I-90) + (S11-2); (I-90) + (S11-3); (I-90) + (S12-1); (I-90) + (S13-1); (I-90) + (S13-2); (I-90) + (S13-3); (I-90) + (S13-4): (I-90) + (S13-5); (I-90) + (S13-6); (I-90) + (S13-7); (I-90) + (S13-8); (I-90) + (S13-9); (I-90) + (S14-1)
(I-91) + (S1-1); (I-91) + (S1-2); (I-91) + (S1-3); (I-91) + (S1-4); (I-91) + (S1-5); (I-91) + (S1-6); (I-91) + (S1-7); (I-91) + (S1-8); (I-91) + (S1-9); (I-91) + (S1-10); (I-91) + (S1-11); (I-91) + (S1-12); (I-91) + (S1-13); (I-91) + (S2-1); (I-91) + (S2-2); (I-91) + (S2-3); (I-91) + (S2-4); (I-91) + (S2-5); (I-91) + (S2-6); (I-91) + (S2-7); (I-91) + (S2-8); (I-91) + (S2-9); (I-91) + (S2-10); (I-91) + (S3-1); (I-91) + (S3-2); (I-91) + (S3-3); (I-91) + (S3-4); (I-91) + (S3-5); (I-91) + (S3-6); (I-91) + (S3-7); (I-91) + (S3-8); (I-91) + (S3-9); (I-91) + (S3-10); (I-91) + (S3-11); (I-91) + (S4-1); (I-91) + (S4-2); (I-91) + (S4-3); (I-91) + (S4-4); (I-91) + (S4-5); (I-91) + (S7-1); (I-91) + (S11-1); (I-91) + (S11-2); (I-91) + (S11-3); (I-91) + (S12-1); (I-91) + (S13-1); (I-91) + (S13-2); (I-91) + (S13-3); (I-91) + (S13-4): (I-91) + (S13-5); (I-91) + (S13-6); (I-91) + (S13-7); (I-91) + (S13-8); (I-91) + (S13-9); (I-91) + (S14-1)
(I-92) + (S1-1); (I-92) + (S1-2); (I-92) + (S1-3); (I-92) + (S1-4); (I-92) + (S1-5); (I-92) + (S1-6); (I-92) + (S1-7); (I-92) + (S1-8); (I-92) + (S1-9); (I-92) + (S1-10); (I-92) + (S1-11); (I-92) + (S1-12); (I-92) + (S1-13); (I-92) + (S2-1); (I-92) + (S2-2); (I-92) + (S2-3); (I-92) + (S2-4); (I-92) + (S2-5); (I-92) + (S2-6); (I-92) + (S2-7); (I-92) + (S2-8); (I-92) + (S2-9); (I-92) + (S2-10); (I-92) + (S3-1); (I-92) + (S3-2); (I-92) + (S3-3); (I-92) + (S3-4); (I-92) + (S3-5); (I-92) + (S3-6); (I-92) + (S3-7); (I-92) + (S3-8); (I-92) + (S3-9); (I-92) + (S3-10); (I-92) + (S3-11); (I-92) + (S4-1); (I-92) + (S4-2); (I-92) + (S4-3); (I-92) + (S4-4); (I-92) + (S4-5); (I-92) + (S7-1); (I-92) + (S11-1); (I-92) + (S11-2); (I-92) + (S11-3); (I-92) + (S12-1); (I-92) + (S13-1); (I-92) + (S13-2); (I-92) + (S13-3); (I-92) + (S13-4): (I-92) + (S13-5); (I-92) + (S13-6); (I-92) + (S13-7); (I-92) + (S13-8); (I-92) + (S13-9); (I-92) + (S14-1)
(I-93) + (S1-1); (I-93) + (S1-2); (I-93) + (S1-3); (I-93) + (S1-4); (I-93) + (S1-5); (I-93) + (S1-6); (I-93) + (S1-7); (I-93) + (S1-8); (I-93) + (S1-9); (I-93) + (S1-10); (I-93) + (S1-11); (I-93) + (S1-12); (I-93) + (S1-13); (I-93) + (S2-1); (I-93) + (S2-2); (I-93) + (S2-3); (I-93) + (S2-4); (I-93) + (S2-5); (I-93) + (S2-6); (I-93) + (S2-7); (I-93) + (S2-8); (I-93) + (S2-9); (I-93) + (S2-10); (I-93) + (S3-1); (I-93) + (S3-2); (I-93) + (S3-3); (I-93) + (S3-4); (I-93) + (S3-5); (I-93) + (S3-6); (I-93) + (S3-7); (I-93) + (S3-8); (I-93) + (S3-9); (I-93) + (S3-10); (I-93) + (S3-11); (I-93) + (S4-1); (I-93) + (S4-2); (I-93) + (S4-3); (I-93) + (S4-4); (I-93) + (S4-5); (I-93) + (S7-1); (I-93) + (S11-1); (I-93) + (S11-2); (I-93) + (S11-3); (I-93) + (S12-1); (I-93) + (S13-1); (I-93) + (S13-2); (I-93) + (S13-3); (I-93) + (S13-4): (I-93) + (S13-5); (I-93) + (S13-6); (I-93) + (S13-7); (I-93) + (S13-8); (I-93) + (S13-9); (I-93) + (S14-1)
(I-94) + (S1-1); (I-94) + (S1-2); (I-94) + (S1-3); (I-94) + (S1-4); (I-94) + (S1-5); (I-94) + (S1-6); (I-94) + (S1-7); (I-94) + (S1-8); (I-94) + (S1-9); (I-94) + (S1-10); (I-94) + (S1-11); (I-94) + (S1-12); (I-94) + (S1-13); (I-94) + (S2-1); (I-94) + (S2-2); (I-94) + (S2-3); (I-94) + (S2-4); (I-94) + (S2-5); (I-94) + (S2-6); (I-94) + (S2-7); (I-94) + (S2-8); (I-94) + (S2-9); (I-94) + (S2-10); (I-94) + (S3-1); (I-94) + (S3-2); (I-94) + (S3-3); (I-94) + (S3-4); (I-94) + (S3-5); (I-94) + (S3-6); (I-94) + (S3-7); (I-94) + (S3-8); (I-94) + (S3-9); (I-94) + (S3-10); (I-94) + (S3-11); (I-94) + (S4-1); (I-94) + (S4-2); (I-94) + (S4-3); (I-94) + (S4-4); (I-94) + (S4-5); (I-94) + (S7-1); (I-94) + (S11-1); (I-94) + (S11-2); (I-94) + (S11-3); (I-94) + (S12-1); (I-94) + (S13-1); (I-94) + (S13-2); (I-94) + (S13-3); (I-94) + (S13-4): (I-94) + (S13-5); (I-94) + (S13-6); (I-94) + (S13-7); (I-94) + (S13-8); (I-94) + (S13-9); (I-94) + (S14-1)
(I-95) + (S1-1); (I-95) + (S1-2); (I-95) + (S1-3); (I-95) + (S1-4); (I-95) + (S1-5); (I-95) + (S1-6); (I-95) + (S1-7); (I-95) + (S1-8); (I-95) + (S1-9); (I-95) + (S1-10); (I-95) + (S1-11); (I-95) + (S1-12); (I-95) + (S1-13); (I-95) + (S2-1); (I-95) + (S2-2); (I-95) + (S2-3); (I-95) + (S2-4); (I-95) + (S2-5); (I-95) + (S2-6); (I-95) + (S2-7); (I-95) + (S2-8); (I-95) + (S2-9); (I-95) + (S2-10); (I-95) + (S3-1); (I-95) + (S3-2); (I-95) + (S3-3); (I-95) + (S3-4); (I-95) + (S3-5); (I-95) + (S3-6); (I-95) + (S3-7); (I-95) + (S3-8); (I-95) + (S3-9); (I-95) + (S3-10); (I-95) + (S3-11); (I-95) + (S4-1); (I-95) + (S4-2); (I-95) + (S4-3); (I-95) + (S4-4); (I-95) + (S4-5); (I-95) + (S7-1); (I-95) + (S11-1); (I-95) + (S11-2); (I-95) + (S11-3); (I-95) + (S12-1); (I-95) + (S13-1); (I-95) + (S13-2); (I-95) + (S13-3); (I-95) + (S13-4): (I-95) + (S13-5); (I-95) + (S13-6); (I-95) + (S13-7); (I-95) + (S13-8); (I-95) + (S13-9); (I-95) + (S14-1)
(I-96) + (S1-1); (I-96) + (S1-2); (I-96) + (S1-3); (I-96) + (S1-4); (I-96) + (S1-5); (I-96) + (S1-6); (I-96) + (S1-7); (I-96) + (S1-8); (I-96) + (S1-9); (I-96) + (S1-10); (I-96) + (S1-11); (I-96) + (S1-12); (I-96) + (S1-13); (I-96) + (S2-1); (I-96) + (S2-2); (I-96) + (S2-3); (I-96) + (S2-4); (I-96) + (S2-5); (I-96) + (S2-6); (I-96) + (S2-7); (I-96) + (S2-8); (I-96) + (S2-9); (I-96) + (S2-10); (I-96) + (S3-1); (I-96) + (S3-2); (I-96) + (S3-3); (I-96) + (S3-4); (I-96) + (S3-5); (I-96) + (S3-6); (I-96) + (S3-7); (I-96) + (S3-8); (I-96) + (S3-9); (I-96) + (S3-10); (I-96) + (S3-11); (I-96) + (S4-1); (I-96) + (S4-2); (I-96) + (S4-3); (I-96) + (S4-4); (I-96) + (S4-5); (I-96) + (S7-1); (I-96) + (S11-1); (I-96) + (S11-2); (I-96) + (S11-3); (I-96) + (S12-1); (I-96) + (S13-1); (I-96) + (S13-2); (I-96) + (S13-3); (I-96) + (S13-4): (I-96) + (S13-5); (I-96) + (S13-6); (I-96) + (S13-7); (I-96) + (S13-8); (I-96) + (S13-9); (I-96) + (S14-1)
(I-97) + (S1-1); (I-97) + (S1-2); (I-97) + (S1-3); (I-97) + (S1-4); (I-97) + (S1-5); (I-97) + (S1-6); (I-97) + (S1-7); (I-97) + (S1-8); (I-97) + (S1-9); (I-97) + (S1-10); (I-97) + (S1-11); (I-97) + (S1-12); (I-97) + (S1-13); (I-97) + (S2-1); (I-97) + (S2-2); (I-97) + (S2-3); (I-97) + (S2-4); (I-97) + (S2-5); (I-97) + (S2-6); (I-97) + (S2-7); (I-97) + (S2-8); (I-97) + (S2-9); (I-97) + (S2-10); (I-97) + (S3-1); (I-97) + (S3-2); (I-97) + (S3-3); (I-97) + (S3-4); (I-97) + (S3-5); (I-97) + (S3-6); (I-97) + (S3-7); (I-97) + (S3-8); (I-97) + (S3-9); (I-97) + (S3-10); (I-97) + (S3-11); (I-97) + (S4-1); (I-97) + (S4-2); (I-97) + (S4-3); (I-97) + (S4-4); (I-97) + (S4-5); (I-97) + (S7-1); (I-97) + (S11-1); (I-97) + (S11-2); (I-97) + (S11-3); (I-97) + (S12-1); (I-97) + (S13-1); (I-97) + (S13-2); (I-97) + (S13-3); (I-97) + (S13-4): (I-97) + (S13-5); (I-97) + (S13-6); (I-97) + (S13-7); (I-97) + (S13-8); (I-97) + (S13-9); (I-97) + (S14-1)
(I-98) + (S1-1); (I-98) + (S1-2); (I-98) + (S1-3); (I-98) + (S1-4); (I-98) + (S1-5); (I-98) + (S1-6); (I-98) + (S1-7); (I-98) + (S1-8); (I-98) + (S1-9); (I-98) + (S1-10); (I-98) + (S1-11); (I-98) + (S1-12); (I-98) + (S1-13); (I-98) + (S2-1); (I-98) + (S2-2); (I-98) + (S2-3); (I-98) + (S2-4); (I-98) + (S2-5); (I-98) + (S2-6); (I-98) + (S2-7); (I-98) + (S2-8); (I-98) + (S2-9); (I-98) + (S2-10); (I-98) + (S3-1); (I-98) + (S3-2); (I-98) + (S3-3); (I-98) + (S3-4); (I-98) + (S3-5); (I-98) + (S3-6); (I-98) + (S3-7); (I-98) + (S3-8); (I-98) + (S3-9); (I-98) + (S3-10); (I-98) + (S3-11); (I-98) + (S4-1); (I-98) + (S4-2); (I-98) + (S4-3); (I-98) + (S4-4); (I-98) + (S4-5); (I-98) + (S7-1); (I-98) + (S11-1); (I-98) + (S11-2); (I-98) + (S11-3); (I-98) + (S12-1); (I-98) + (S13-1); (I-98) + (S13-2); (I-98) + (S13-3); (I-98) + (S13-4): (I-98) + (S13-5); (I-98) + (S13-6); (I-98) + (S13-7); (I-98) + (S13-8); (I-98) + (S13-9); (I-98) + (S14-1)
(I-99) + (S1-1); (I-99) + (S1-2); (I-99) + (S1-3); (I-99) + (S1-4); (I-99) + (S1-5); (I-99) + (S1-6); (I-99) + (S1-7); (I-99) + (S1-8); (I-99) + (S1-9); (I-99) + (S1-10); (I-99) + (S1-11); (I-99) + (S1-12); (I-99) + (S1-13); (I-99) + (S2-1); (I-99) + (S2-2); (I-99) + (S2-3); (I-99) + (S2-4); (I-99) + (S2-5); (I-99) + (S2-6); (I-99) + (S2-7); (I-99) + (S2-8); (I-99) + (S2-9); (I-99) + (S2-10); (I-99) + (S3-1); (I-99) + (S3-2); (I-99) + (S3-3); (I-99) + (S3-4); (I-99) + (S3-5); (I-99) + (S3-6); (I-99) + (S3-7); (I-99) + (S3-8); (I-99) + (S3-9); (I-99) + (S3-10); (I-99) + (S3-11); (I-99) + (S4-1); (I-99) + (S4-2); (I-99) + (S4-3); (I-99) + (S4-4); (I-99) + (S4-5); (I-99) + (S7-1); (I-99) + (S11-1); (I-99) + (S11-2); (I-99) + (S11-3); (I-99) + (S12-1); (I-99) + (S13-1); (I-99) + (S13-2); (I-99) + (S13-3); (I-99) + (S13-4): (I-99) + (S13-5); (I-99) + (S13-6); (I-99) + (S13-7); (I-99) + (S13-8); (I-99) + (S13-9); (I-99) + (S14-1)
(I-100) + (S1-1); (I-100) + (S1-2); (I-100) + (S1-3); (I-100) + (S1-4); (I-100) + (S1-5); (I-100) + (S1-6); (I-100) + (S1-7); (I-100) + (S1-8); (I-100) + (S1-9); (I-100) + (S1-10); (I-100) + (S1-11); (I-100) + (S1-12); (I-100) + (S1-13); (I-100) + (S2-1); (I-100) + (S2-2); (I-100) + (S2-3); (I-100) + (S2-4); (I-100) + (S2-5); (I-100) + (S2-6); (I-100) + (S2-7); (I-100) + (S2-8); (I-100) + (S2-9); (I-100) + (S2-10); (I-100) + (S3-1); (I-100) + (S3-2); (I-100) + (S3-3); (I-100) + (S3-4); (I-100) + (S3-5); (I-100) + (S3-6); (I-100) + (S3-7); (I-100) + (S3-8); (I-100) + (S3-9); (I-100) + (S3-10); (I-100) + (S3-11); (I-100) + (S4-1); (I-100) + (S4-2); (I-100) + (S4-3); (I-100) + (S4-4); (I-100) + (S4-5); (I-100) + (S7-1); (I-100) + (S11-1); (I-100) + (S11-2); (I-100) + (S11-3); (I-100) + (S12-1); (I-100) + (S13-1); (I-100) + (S13-2); (I-100) + (S13-3); (I-100) + (S13-4): (I-100) + (S13-5); (I-100) + (S13-6); (I-100) + (S13-7); (I-100) + (S13-8); (I-100) + (S13-9); (I-100) + (S14-1) (I-101) + (S1-1); (I-101) + (S1-2); (I-101) + (S1-3); (I-101) + (S1-4); (I-101) + (S1-5); (I-101) + (S1-6); (I-101) + (S1-7); (I-101) + (S1-8); (I-101) + (S1-9); (I-101) + (S1-10); (I-101) + (S1-11); (I-101) + (S1-12); (I-101) + (S1-13); (I-101) + (S2-1); (I-101) + (S2-2); (I-101) + (S2-3); (I-101) + (S2-4); (I-101) + (S2-5); (I-101) + (S2-6); (I-101) + (S2-7); (I-101) + (S2-8); (I-101) + (S2-9); (I-101) + (S2-10); (I-101) + (S3-1); (I-101) + (S3-2); (I-101) + (S3-3); (I-101) + (S3-4); (I-101) + (S3-5); (I-101) + (S3-6); (I-101) + (S3-7); (I-101) + (S3-8); (I-101) + (S3-9); (I-101) + (S3-10); (I-101) + (S3-11); (I-101) + (S4-1); (I-101) + (S4-2); (I-101) + (S4-3); (I-101) + (S4-4); (I-101) + (S4-5); (I-101) + (S7-1); (I-101) + (S11-1); (I-101) + (S11-2); (I-101) + (S11-3); (I-101) + (S12-1); (I-101) + (S13-1); (I-101) + (S13-2); (I-101) + (S13-3); (I-101) + (S13-4): (I-101) + (S13-5); (I-101) + (S13-6); (I-101) + (S13-7); (I-101) + (S13-8); (I-101) + (S13-9); (I-101) + (S14-1)
(I-102) + (S1-1); (I-102) + (S1-2); (I-102) + (S1-3); (I-102) + (S1-4); (I-102) + (S1-5); (I-102) + (S1-6); (I-102) + (S1-7); (I-102) + (S1-8); (I-102) + (S1-9); (I-102) + (S1-10); (I-102) + (S1-11); (I-102) + (S1-12); (I-102) + (S1-13); (I-102) + (S2-1); (I-102) + (S2-2); (I-102) + (S2-3); (I-102) + (S2-4); (I-102) + (S2-5); (I-102) + (S2-6); (I-102) + (S2-7); (I-102) + (S2-8); (I-102) + (S2-9); (I-102) + (S2-10); (I-102) + (S3-1); (I-102) + (S3-2); (I-102) + (S3-3); (I-102) + (S3-4); (I-102) + (S3-5); (I-102) + (S3-6); (I-102) + (S3-7); (I-102) + (S3-8); (I-102) + (S3-9); (I-102) + (S3-10); (I-102) + (S3-11); (I-102) + (S4-1); (I-102) + (S4-2); (I-102) + (S4-3); (I-102) + (S4-4); (I-102) + (S4-5); (I-102) + (S7-1); (I-102) + (S11-1); (I-102) + (S11-2); (I-102) + (S11-3); (I-102) + (S12-1); (I-102) + (S13-1); (I-102) + (S13-2); (I-102) + (S13-3); (I-102) + (S13-4): (I-102) + (S13-5); (I-102) + (S13-6); (I-102) + (S13-7); (I-102) + (S13-8); (I-102) + (S13-9); (I-102) + (S14-1)
(I-103) + (S1-1); (I-103) + (S1-2); (I-103) + (S1-3); (I-103) + (S1-4); (I-103) + (S1-5); (I-103) + (S1-6); (I-103) + (S1-7); (I-103) + (S1-8); (I-103) + (S1-9); (I-103) + (S1-10); (I-103) + (S1-11); (I-103) + (S1-12); (I-103) + (S1-13); (I-103) + (S2-1); (I-103) + (S2-2); (I-103) + (S2-3); (I-103) + (S2-4); (I-103) + (S2-5); (I-103) + (S2-6); (I-103) + (S2-7); (I-103) + (S2-8); (I-103) + (S2-9); (I-103) + (S2-10); (I-103) + (S3-1); (I-103) + (S3-2); (I-103) + (S3-3); (I-103) + (S3-4); (I-103) + (S3-5); (I-103) + (S3-6); (I-103) + (S3-7); (I-103) + (S3-8); (I-103) + (S3-9); (I-103) + (S3-10); (I-103) + (S3-11); (I-103) + (S4-1); (I-103) + (S4-2); (I-103) + (S4-3); (I-103) + (S4-4); (I-103) + (S4-5); (I-103) + (S7-1); (I-103) + (S11-1); (I-103) + (S11-2); (I-103) + (S11-3); (I-103) + (S12-1); (I-103) + (S13-1); (I-103) + (S13-2); (I-103) + (S13-3); (I-103) + (S13-4): (I-103) + (S13-5); (I-103) + (S13-6); (I-103) + (S13-7); (I-103) + (S13-8); (I-103) + (S13-9); (I-103) + (S14-1)
(I-104) + (S1-1); (I-104) + (S1-2); (I-104) + (S1-3); (I-104) + (S1-4); (I-104) + (S1-5); (I-104) + (S1-6); (I-104) + (S1-7); (I-104) + (S1-8); (I-104) + (S1-9); (I-104) + (S1-10); (I-104) + (S1-11); (I-104) + (S1-12); (I-104) + (S1-13); (I-104) + (S2-1); (I-104) + (S2-2); (I-104) + (S2-3); (I-104) + (S2-4); (I-104) + (S2-5); (I-104) + (S2-6); (I-104) + (S2-7); (I-104) + (S2-8); (I-104) + (S2-9); (I-104) + (S2-10); (I-104) + (S3-1); (I-104) + (S3-2); (I-104) + (S3-3); (I-104) + (S3-4); (I-104) + (S3-5); (I-104) + (S3-6); (I-104) + (S3-7); (I-104) + (S3-8); (I-104) + (S3-9); (I-104) + (S3-10); (I-104) + (S3-11); (I-104) + (S4-1); (I-104) + (S4-2); (I-104) + (S4-3); (I-104) + (S4-4); (I-104) + (S4-5); (I-104) + (S7-1); (I-104) + (S11-1); (I-104) + (S11-2); (I-104) + (S11-3); (I-104) + (S12-1); (I-104) + (S13-1); (I-104) + (S13-2); (I-104) + (S13-3); (I-104) + (S13-4): (I-104) + (S13-5); (I-104) + (S13-6); (I-104) + (S13-7); (I-104) + (S13-8); (I-104) + (S13-9); (I-104) + (S14-1)
(I-105) + (S1-1); (I-105) + (S1-2); (I-105) + (S1-3); (I-105) + (S1-4); (I-105) + (S1-5); (I-105) + (S1-6); (I-105) + (S1-7); (I-105) + (S1-8); (I-105) + (S1-9); (I-105) + (S1-10); (I-105) + (S1-11); (I-105) + (S1-12); (I-105) + (S1-13); (I-105) + (S2-1); (I-105) + (S2-2); (I-105) + (S2-3); (I-105) + (S2-4); (I-105) + (S2-5); (I-105) + (S2-6); (I-105) + (S2-7); (I-105) + (S2-8); (I-105) + (S2-9); (I-105) + (S2-10); (I-105) + (S3-1); (I-105) + (S3-2); (I-105) + (S3-3); (I-105) + (S3-4); (I-105) + (S3-5); (I-105) + (S3-6); (I-105) + (S3-7); (I-105) + (S3-8); (I-105) + (S3-9); (I-105) + (S3-10); (I-105) + (S3-11); (I-105) + (S4-1); (I-105) + (S4-2); (I-105) + (S4-3); (I-105) + (S4-4); (I-105) + (S4-5); (I-105) + (S7-1); (I-105) + (S11-1); (I-105) + (S11-2); (I-105) + (S11-3); (I-105) + (S12-1); (I-105) + (S13-1); (I-105) + (S13-2); (I-105) + (S13-3); (I-105) + (S13-4): (I-105) + (S13-5); (I-105) + (S13-6); (I-105) + (S13-7); (I-105) + (S13-8); (I-105) + (S13-9); (I-105) + (S14-1) (I-106) + (S1-1); (I-106) + (S1-2); (I-106) + (S1-3); (I-106) + (S1-4); (I-106) + (S1-5); (I-106) + (S1-6); (I-106) + (S1-7); (I-106) + (S1-8); (I-106) + (S1-9); (I-106) + (S1-10); (I-106) + (S1-11); (I-106) + (S1-12); (I-106) + (S1-13); (I-106) + (S2-1); (I-106) + (S2-2); (I-106) + (S2-3); (I-106) + (S2-4); (I-106) + (S2-5); (I-106) + (S2-6); (I-106) + (S2-7); (I-106) + (S2-8); (I-106) + (S2-9); (I-106) + (S2-10); (I-106) + (S3-1); (I-106) + (S3-2); (I-106) + (S3-3); (I-106) + (S3-4); (I-106) + (S3-5); (I-106) + (S3-6); (I-106) + (S3-7); (I-106) + (S3-8); (I-106) + (S3-9); (I-106) + (S3-10); (I-106) + (S3-11); (I-106) + (S4-1); (I-106) + (S4-2); (I-106) + (S4-3); (I-106) + (S4-4); (I-106) + (S4-5); (I-106) + (S7-1); (I-106) + (S11-1); (I-106) + (S11-2); (I-106) + (S11-3); (I-106) + (S12-1); (I-106) + (S13-1); (I-106) + (S13-2); (I-106) + (S13-3); (I-106) + (S13-4): (I-106) + (S13-5); (I-106) + (S13-6); (I-106) + (S13-7); (I-106) + (S13-8); (I-106) + (S13-9); (I-106) + (S14-1)
(I-107) + (S1-1); (I-107) + (S1-2); (I-107) + (S1-3); (I-107) + (S1-4); (I-107) + (S1-5); (I-107) + (S1-6); (I-107) + (S1-7); (I-107) + (S1-8); (I-107) + (S1-9); (I-107) + (S1-10); (I-107) + (S1-11); (I-107) + (S1-12); (I-107) + (S1-13); (I-107) + (S2-1); (I-107) + (S2-2); (I-107) + (S2-3); (I-107) + (S2-4); (I-107) + (S2-5); (I-107) + (S2-6); (I-107) + (S2-7); (I-107) + (S2-8); (I-107) + (S2-9); (I-107) + (S2-10); (I-107) + (S3-1); (I-107) + (S3-2); (I-107) + (S3-3); (I-107) + (S3-4); (I-107) + (S3-5); (I-107) + (S3-6); (I-107) + (S3-7); (I-107) + (S3-8); (I-107) + (S3-9); (I-107) + (S3-10); (I-107) + (S3-11); (I-107) + (S4-1); (I-107) + (S4-2); (I-107) + (S4-3); (I-107) + (S4-4); (I-107) + (S4-5); (I-107) + (S7-1); (I-107) + (S11-1); (I-107) + (S11-2); (I-107) + (S11-3); (I-107) + (S12-1); (I-107) + (S13-1); (I-107) + (S13-2); (I-107) + (S13-3); (I-107) + (S13-4): (I-107) + (S13-5); (I-107) + (S13-6); (I-107) + (S13-7); (I-107) + (S13-8); (I-107) + (S13-9); (I-107) + (S14-1)
(I-108) + (S1-1); (I-108) + (S1-2); (I-108) + (S1-3); (I-108) + (S1-4); (I-108) + (S1-5); (I-108) + (S1-6); (I-108) + (S1-7); (I-108) + (S1-8); (I-108) + (S1-9); (I-108) + (S1-10); (I-108) + (S1-11); (I-108) + (S1-12); (I-108) + (S1-13); (I-108) + (S2-1); (I-108) + (S2-2); (I-108) + (S2-3); (I-108) + (S2-4); (I-108) + (S2-5); (I-108) + (S2-6); (I-108) + (S2-7); (I-108) + (S2-8); (I-108) + (S2-9); (I-108) + (S2-10); (I-108) + (S3-1); (I-108) + (S3-2); (I-108) + (S3-3); (I-108) + (S3-4); (I-108) + (S3-5); (I-108) + (S3-6); (I-108) + (S3-7); (I-108) + (S3-8); (I-108) + (S3-9); (I-108) + (S3-10); (I-108) + (S3-11); (I-108) + (S4-1); (I-108) + (S4-2); (I-108) + (S4-3); (I-108) + (S4-4); (I-108) + (S4-5); (I-108) + (S7-1); (I-108) + (S11-1); (I-108) + (S11-2); (I-108) + (S11-3); (I-108) + (S12-1); (I-108) + (S13-1); (I-108) + (S13-2); (I-108) + (S13-3); (I-108) + (S13-4): (I-108) + (S13-5); (I-108) + (S13-6); (I-108) + (S13-7); (I-108) + (S13-8); (I-108) + (S13-9); (I-108) + (S14-1)
(I-109) + (S1-1); (I-109) + (S1-2); (I-109) + (S1-3); (I-109) + (S1-4); (I-109) + (S1-5); (I-109) + (S1-6); (I-109) + (S1-7); (I-109) + (S1-8); (I-109) + (S1-9); (I-109) + (S1-10); (I-109) + (S1-11); (I-109) + (S1-12); (I-109) + (S1-13); (I-109) + (S2-1); (I-109) + (S2-2); (I-109) + (S2-3); (I-109) + (S2-4); (I-109) + (S2-5); (I-109) + (S2-6); (I-109) + (S2-7); (I-109) + (S2-8); (I-109) + (S2-9); (I-109) + (S2-10); (I-109) + (S3-1); (I-109) + (S3-2); (I-109) + (S3-3); (I-109) + (S3-4); (I-109) + (S3-5); (I-109) + (S3-6); (I-109) + (S3-7); (I-109) + (S3-8); (I-109) + (S3-9); (I-109) + (S3-10); (I-109) + (S3-11); (I-109) + (S4-1); (I-109) + (S4-2); (I-109) + (S4-3); (I-109) + (S4-4); (I-109) + (S4-5); (I-109) + (S7-1); (I-109) + (S11-1); (I-109) + (S11-2); (I-109) + (S11-3); (I-109) + (S12-1); (I-109) + (S13-1); (I-109) + (S13-2); (I-109) + (S13-3); (I-109) + (S13-4): (I-109) + (S13-5); (I-109) + (S13-6); (I-109) + (S13-7); (I-109) + (S13-8); (I-109) + (S13-9); (I-109) + (S14-1)
(I-110) + (S1-1); (I-110) + (S1-2); (I-110) + (S1-3); (I-110) + (S1-4); (I-110) + (S1-5); (I-110) + (S1-6); (I-110) + (S1-7); (I-110) + (S1-8); (I-110) + (S1-9); (I-110) + (S1-10); (I-110) + (S1-11); (I-110) + (S1-12); (I-110) + (S1-13); (I-110) + (S2-1); (I-110) + (S2-2); (I-110) + (S2-3); (I-110) + (S2-4); (I-110) + (S2-5); (I-110) + (S2-6); (I-110) + (S2-7); (I-110) + (S2-8); (I-110) + (S2-9); (I-110) + (S2-10); (I-110) + (S3-1); (I-110) + (S3-2); (I-110) + (S3-3); (I-110) + (S3-4); (I-110) + (S3-5); (I-110) + (S3-6); (I-110) + (S3-7); (I-110) + (S3-8); (I-110) + (S3-9); (I-110) + (S3-10); (I-110) + (S3-11); (I-110) + (S4-1); (I-110) + (S4-2); (I-110) + (S4-3); (I-110) + (S4-4); (I-110) + (S4-5); (I-110) + (S7-1); (I-110) + (S11-1); (I-110) + (S11-2); (I-110) + (S11-3); (I-110) + (S12-1); (I-110) + (S13-1); (I-110) + (S13-2); (I-110) + (S13-3); (I-110) + (S13-4): (I-110) + (S13-5); (I-110) + (S13-6); (I-110) + (S13-7); (I-110) + (S13-8); (I-110) + (S13-9); (I-110) + (S14-1) (I-111) + (S1-1); (I-111) + (S1-2); (I-111) + (S1-3); (I-111) + (S1-4); (I-111) + (S1-5); (I-111) + (S1-6); (I-111) + (S1-7); (I-111) + (S1-8); (I-111) + (S1-9); (I-111) + (S1-10); (I-111) + (S1-11); (I-111) + (S1-12); (I-111) + (S1-13); (I-111) + (S2-1); (I-111) + (S2-2); (I-111) + (S2-3); (I-111) + (S2-4); (I-111) + (S2-5); (I-111) + (S2-6); (I-111) + (S2-7); (I-111) + (S2-8); (I-111) + (S2-9); (I-111) + (S2-10); (I-111) + (S3-1); (I-111) + (S3-2); (I-111) + (S3-3); (I-111) + (S3-4); (I-111) + (S3-5); (I-111) + (S3-6); (I-111) + (S3-7); (I-111) + (S3-8); (I-111) + (S3-9); (I-111) + (S3-10); (I-111) + (S3-11); (I-111) + (S4-1); (I-111) + (S4-2); (I-111) + (S4-3); (I-111) + (S4-4); (I-111) + (S4-5); (I-111) + (S7-1); (I-111) + (S11-1); (I-111) + (S11-2); (I-111) + (S11-3); (I-111) + (S12-1); (I-111) + (S13-1); (I-111) + (S13-2); (I-111) + (S13-3); (I-111) + (S13-4): (I-111) + (S13-5); (I-111) + (S13-6); (I-111) + (S13-7); (I-111) + (S13-8); (I-111) + (S13-9); (I-111) + (S14-1)
(I-112) + (S1-1); (I-112) + (S1-2); (I-112) + (S1-3); (I-112) + (S1-4); (I-112) + (S1-5); (I-112) + (S1-6); (I-112) + (S1-7); (I-112) + (S1-8); (I-112) + (S1-9); (I-112) + (S1-10); (I-112) + (S1-11); (I-112) + (S1-12); (I-112) + (S1-13); (I-112) + (S2-1); (I-112) + (S2-2); (I-112) + (S2-3); (I-112) + (S2-4); (I-112) + (S2-5); (I-112) + (S2-6); (I-112) + (S2-7); (I-112) + (S2-8); (I-112) + (S2-9); (I-112) + (S2-10); (I-112) + (S3-1); (I-112) + (S3-2); (I-112) + (S3-3); (I-112) + (S3-4); (I-112) + (S3-5); (I-112) + (S3-6); (I-112) + (S3-7); (I-112) + (S3-8); (I-112) + (S3-9); (I-112) + (S3-10); (I-112) + (S3-11); (I-112) + (S4-1); (I-112) + (S4-2); (I-112) + (S4-3); (I-112) + (S4-4); (I-112) + (S4-5); (I-112) + (S7-1); (I-112) + (S11-1); (I-112) + (S11-2); (I-112) + (S11-3); (I-112) + (S12-1); (I-112) + (S13-1); (I-112) + (S13-2); (I-112) + (S13-3); (I-112) + (S13-4): (I-112) + (S13-5); (I-112) + (S13-6); (I-112) + (S13-7); (I-112) + (S13-8); (I-112) + (S13-9); (I-112) + (S14-1)
(I-113) + (S1-1); (I-113) + (S1-2); (I-113) + (S1-3); (I-113) + (S1-4); (I-113) + (S1-5); (I-113) + (S1-6); (I-113) + (S1-7); (I-113) + (S1-8); (I-113) + (S1-9); (I-113) + (S1-10); (I-113) + (S1-11); (I-113) + (S1-12); (I-113) + (S1-13); (I-113) + (S2-1); (I-113) + (S2-2); (I-113) + (S2-3); (I-113) + (S2-4); (I-113) + (S2-5); (I-113) + (S2-6); (I-113) + (S2-7); (I-113) + (S2-8); (I-113) + (S2-9); (I-113) + (S2-10); (I-113) + (S3-1); (I-113) + (S3-2); (I-113) + (S3-3); (I-113) + (S3-4); (I-113) + (S3-5); (I-113) + (S3-6); (I-113) + (S3-7); (I-113) + (S3-8); (I-113) + (S3-9); (I-113) + (S3-10); (I-113) + (S3-11); (I-113) + (S4-1); (I-113) + (S4-2); (I-113) + (S4-3); (I-113) + (S4-4); (I-113) + (S4-5); (I-113) + (S7-1); (I-113) + (S11-1); (I-113) + (S11-2); (I-113) + (S11-3); (I-113) + (S12-1); (I-113) + (S13-1); (I-113) + (S13-2); (I-113) + (S13-3); (I-113) + (S13-4): (I-113) + (S13-5); (I-113) + (S13-6); (I-113) + (S13-7); (I-113) + (S13-8); (I-113) + (S13-9); (I-113) + (S14-1)
(I-114) + (S1-1); (I-114) + (S1-2); (I-114) + (S1-3); (I-114) + (S1-4); (I-114) + (S1-5); (I-114) + (S1-6); (I-114) + (S1-7); (I-114) + (S1-8); (I-114) + (S1-9); (I-114) + (S1-10); (I-114) + (S1-11); (I-114) + (S1-12); (I-114) + (S1-13); (I-114) + (S2-1); (I-114) + (S2-2); (I-114) + (S2-3); (I-114) + (S2-4); (I-114) + (S2-5); (I-114) + (S2-6); (I-114) + (S2-7); (I-114) + (S2-8); (I-114) + (S2-9); (I-114) + (S2-10); (I-114) + (S3-1); (I-114) + (S3-2); (I-114) + (S3-3); (I-114) + (S3-4); (I-114) + (S3-5); (I-114) + (S3-6); (I-114) + (S3-7); (I-114) + (S3-8); (I-114) + (S3-9); (I-114) + (S3-10); (I-114) + (S3-11); (I-114) + (S4-1); (I-114) + (S4-2); (I-114) + (S4-3); (I-114) + (S4-4); (I-114) + (S4-5); (I-114) + (S7-1); (I-114) + (S11-1); (I-114) + (S11-2); (I-114) + (S11-3); (I-114) + (S12-1); (I-114) + (S13-1); (I-114) + (S13-2); (I-114) + (S13-3); (I-114) + (S13-4): (I-114) + (S13-5); (I-114) + (S13-6); (I-114) + (S13-7); (I-114) + (S13-8); (I-114) + (S13-9); (I-114) + (S14-1)
(I-115) + (S1-1); (I-115) + (S1-2); (I-115) + (S1-3); (I-115) + (S1-4); (I-115) + (S1-5); (I-115) + (S1-6); (I-115) + (S1-7); (I-115) + (S1-8); (I-115) + (S1-9); (I-115) + (S1-10); (I-115) + (S1-11); (I-115) + (S1-12); (I-115) + (S1-13); (I-115) + (S2-1); (I-115) + (S2-2); (I-115) + (S2-3); (I-115) + (S2-4); (I-115) + (S2-5); (I-115) + (S2-6); (I-115) + (S2-7); (I-115) + (S2-8); (I-115) + (S2-9); (I-115) + (S2-10); (I-115) + (S3-1); (I-115) + (S3-2); (I-115) + (S3-3); (I-115) + (S3-4); (I-115) + (S3-5); (I-115) + (S3-6); (I-115) + (S3-7); (I-115) + (S3-8); (I-115) + (S3-9); (I-115) + (S3-10); (I-115) + (S3-11); (I-115) + (S4-1); (I-115) + (S4-2); (I-115) + (S4-3); (I-115) + (S4-4); (I-115) + (S4-5); (I-115) + (S7-1); (I-115) + (S11-1); (I-115) + (S11-2); (I-115) + (S11-3); (I-115) + (S12-1); (I-115) + (S13-1); (I-115) + (S13-2); (I-115) + (S13-3); (I-115) + (S13-4): (I-115) + (S13-5); (I-115) + (S13-6); (I-115) + (S13-7); (I-115) + (S13-8); (I-115) + (S13-9); (I-115) + (S14-1) (I-116) + (S1-1); (I-116) + (S1-2); (I-116) + (S1-3); (I-116) + (S1-4); (I-116) + (S1-5); (I-116) + (S1-6); (I-116) + (S1-7); (I-116) + (S1-8); (I-116) + (S1-9); (I-116) + (S1-10); (I-116) + (S1-11); (I-116) + (S1-12); (I-116) + (S1-13); (I-116) + (S2-1); (I-116) + (S2-2); (I-116) + (S2-3); (I-116) + (S2-4); (I-116) + (S2-5); (I-116) + (S2-6); (I-116) + (S2-7); (I-116) + (S2-8); (I-116) + (S2-9); (I-116) + (S2-10); (I-116) + (S3-1); (I-116) + (S3-2); (I-116) + (S3-3); (I-116) + (S3-4); (I-116) + (S3-5); (I-116) + (S3-6); (I-116) + (S3-7); (I-116) + (S3-8); (I-116) + (S3-9); (I-116) + (S3-10); (I-116) + (S3-11); (I-116) + (S4-1); (I-116) + (S4-2); (I-116) + (S4-3); (I-116) + (S4-4); (I-116) + (S4-5); (I-116) + (S7-1); (I-116) + (S11-1); (I-116) + (S11-2); (I-116) + (S11-3); (I-116) + (S12-1); (I-116) + (S13-1); (I-116) + (S13-2); (I-116) + (S13-3); (I-116) + (S13-4): (I-116) + (S13-5); (I-116) + (S13-6); (I-116) + (S13-7); (I-116) + (S13-8); (I-116) + (S13-9); (I-116) + (S14-1)
(I-117) + (S1-1); (I-117) + (S1-2); (I-117) + (S1-3); (I-117) + (S1-4); (I-117) + (S1-5); (I-117) + (S1-6); (I-117) + (S1-7); (I-117) + (S1-8); (I-117) + (S1-9); (I-117) + (S1-10); (I-117) + (S1-11); (I-117) + (S1-12); (I-117) + (S1-13); (I-117) + (S2-1); (I-117) + (S2-2); (I-117) + (S2-3); (I-117) + (S2-4); (I-117) + (S2-5); (I-117) + (S2-6); (I-117) + (S2-7); (I-117) + (S2-8); (I-117) + (S2-9); (I-117) + (S2-10); (I-117) + (S3-1); (I-117) + (S3-2); (I-117) + (S3-3); (I-117) + (S3-4); (I-117) + (S3-5); (I-117) + (S3-6); (I-117) + (S3-7); (I-117) + (S3-8); (I-117) + (S3-9); (I-117) + (S3-10); (I-117) + (S3-11); (I-117) + (S4-1); (I-117) + (S4-2); (I-117) + (S4-3); (I-117) + (S4-4); (I-117) + (S4-5); (I-117) + (S7-1); (I-117) + (S11-1); (I-117) + (S11-2); (I-117) + (S11-3); (I-117) + (S12-1); (I-117) + (S13-1); (I-117) + (S13-2); (I-117) + (S13-3); (I-117) + (S13-4): (I-117) + (S13-5); (I-117) + (S13-6); (I-117) + (S13-7); (I-117) + (S13-8); (I-117) + (S13-9); (I-117) + (S14-1)
(I-118) + (S1-1); (I-118) + (S1-2); (I-118) + (S1-3); (I-118) + (S1-4); (I-118) + (S1-5); (I-118) + (S1-6); (I-118) + (S1-7); (I-118) + (S1-8); (I-118) + (S1-9); (I-118) + (S1-10); (I-118) + (S1-11); (I-118) + (S1-12); (I-118) + (S1-13); (I-118) + (S2-1); (I-118) + (S2-2); (I-118) + (S2-3); (I-118) + (S2-4); (I-118) + (S2-5); (I-118) + (S2-6); (I-118) + (S2-7); (I-118) + (S2-8); (I-118) + (S2-9); (I-118) + (S2-10); (I-118) + (S3-1); (I-118) + (S3-2); (I-118) + (S3-3); (I-118) + (S3-4); (I-118) + (S3-5); (I-118) + (S3-6); (I-118) + (S3-7); (I-118) + (S3-8); (I-118) + (S3-9); (I-118) + (S3-10); (I-118) + (S3-11); (I-118) + (S4-1); (I-118) + (S4-2); (I-118) + (S4-3); (I-118) + (S4-4); (I-118) + (S4-5); (I-118) + (S7-1); (I-118) + (S11-1); (I-118) + (S11-2); (I-118) + (S11-3); (I-118) + (S12-1); (I-118) + (S13-1); (I-118) + (S13-2); (I-118) + (S13-3); (I-118) + (S13-4): (I-118) + (S13-5); (I-118) + (S13-6); (I-118) + (S13-7); (I-118) + (S13-8); (I-118) + (S13-9); (I-118) + (S14-1)
(I-119) + (S1-1); (I-119) + (S1-2); (I-119) + (S1-3); (I-119) + (S1-4); (I-119) + (S1-5); (I-119) + (S1-6); (I-119) + (S1-7); (I-119) + (S1-8); (I-119) + (S1-9); (I-119) + (S1-10); (I-119) + (S1-11); (I-119) + (S1-12); (I-119) + (S1-13); (I-119) + (S2-1); (I-119) + (S2-2); (I-119) + (S2-3); (I-119) + (S2-4); (I-119) + (S2-5); (I-119) + (S2-6); (I-119) + (S2-7); (I-119) + (S2-8); (I-119) + (S2-9); (I-119) + (S2-10); (I-119) + (S3-1); (I-119) + (S3-2); (I-119) + (S3-3); (I-119) + (S3-4); (I-119) + (S3-5); (I-119) + (S3-6); (I-119) + (S3-7); (I-119) + (S3-8); (I-119) + (S3-9); (I-119) + (S3-10); (I-119) + (S3-11); (I-119) + (S4-1); (I-119) + (S4-2); (I-119) + (S4-3); (I-119) + (S4-4); (I-119) + (S4-5); (I-119) + (S7-1); (I-119) + (S11-1); (I-119) + (S11-2); (I-119) + (S11-3); (I-119) + (S12-1); (I-119) + (S13-1); (I-119) + (S13-2); (I-119) + (S13-3); (I-119) + (S13-4): (I-119) + (S13-5); (I-119) + (S13-6); (I-119) + (S13-7); (I-119) + (S13-8); (I-119) + (S13-9); (I-119) + (S14-1)
(I-120) + (S1-1); (I-120) + (S1-2); (I-120) + (S1-3); (I-120) + (S1-4); (I-120) + (S1-5); (I-120) + (S1-6); (I-120) + (S1-7); (I-120) + (S1-8); (I-120) + (S1-9); (I-120) + (S1-10); (I-120) + (S1-11); (I-120) + (S1-12); (I-120) + (S1-13); (I-120) + (S2-1); (I-120) + (S2-2); (I-120) + (S2-3); (I-120) + (S2-4); (I-120) + (S2-5); (I-120) + (S2-6); (I-120) + (S2-7); (I-120) + (S2-8); (I-120) + (S2-9); (I-120) + (S2-10); (I-120) + (S3-1); (I-120) + (S3-2); (I-120) + (S3-3); (I-120) + (S3-4); (I-120) + (S3-5); (I-120) + (S3-6); (I-120) + (S3-7); (I-120) + (S3-8); (I-120) + (S3-9); (I-120) + (S3-10); (I-120) + (S3-11); (I-120) + (S4-1); (I-120) + (S4-2); (I-120) + (S4-3); (I-120) + (S4-4); (I-120) + (S4-5); (I-120) + (S7-1); (I-120) + (S11-1); (I-120) + (S11-2); (I-120) + (S11-3); (I-120) + (S12-1); (I-120) + (S13-1); (I-120) + (S13-2); (I-120) + (S13-3); (I-120) + (S13-4): (I-120) + (S13-5); (I-120) + (S13-6); (I-120) + (S13-7); (I-120) + (S13-8); (I-120) + (S13-9); (I-120) + (S14-1) (I-121) + (S1-1); (I-121) + (S1-2); (I-121) + (S1-3); (I-121) + (S1-4); (I-121) + (S1-5); (I-121) + (S1-6); (I-121) + (S1-7); (I-121) + (S1-8); (I-121) + (S1-9); (I-121) + (S1-10); (I-121) + (S1-11); (I-121) + (S1-12); (I-121) + (S1-13); (I-121) + (S2-1); (I-121) + (S2-2); (I-121) + (S2-3); (I-121) + (S2-4); (I-121) + (S2-5); (I-121) + (S2-6); (I-121) + (S2-7); (I-121) + (S2-8); (I-121) + (S2-9); (I-121) + (S2-10); (I-121) + (S3-1); (I-121) + (S3-2); (I-121) + (S3-3); (I-121) + (S3-4); (I-121) + (S3-5); (I-121) + (S3-6); (I-121) + (S3-7); (I-121) + (S3-8); (I-121) + (S3-9); (I-121) + (S3-10); (I-121) + (S3-11); (I-121) + (S4-1); (I-121) + (S4-2); (I-121) + (S4-3); (I-121) + (S4-4); (I-121) + (S4-5); (I-121) + (S7-1); (I-121) + (S11-1); (I-121) + (S11-2); (I-121) + (S11-3); (I-121) + (S12-1); (I-121) + (S13-1); (I-121) + (S13-2); (I-121) + (S13-3); (I-121) + (S13-4): (I-121) + (S13-5); (I-121) + (S13-6); (I-121) + (S13-7); (I-121) + (S13-8); (I-121) + (S13-9); (I-121) + (S14-1)
(I-122) + (S1-1); (I-122) + (S1-2); (I-122) + (S1-3); (I-122) + (S1-4); (I-122) + (S1-5); (I-122) + (S1-6); (I-122) + (S1-7); (I-122) + (S1-8); (I-122) + (S1-9); (I-122) + (S1-10); (I-122) + (S1-11); (I-122) + (S1-12); (I-122) + (S1-13); (I-122) + (S2-1); (I-122) + (S2-2); (I-122) + (S2-3); (I-122) + (S2-4); (I-122) + (S2-5); (I-122) + (S2-6); (I-122) + (S2-7); (I-122) + (S2-8); (I-122) + (S2-9); (I-122) + (S2-10); (I-122) + (S3-1); (I-122) + (S3-2); (I-122) + (S3-3); (I-122) + (S3-4); (I-122) + (S3-5); (I-122) + (S3-6); (I-122) + (S3-7); (I-122) + (S3-8); (I-122) + (S3-9); (I-122) + (S3-10); (I-122) + (S3-11); (I-122) + (S4-1); (I-122) + (S4-2); (I-122) + (S4-3); (I-122) + (S4-4); (I-122) + (S4-5); (I-122) + (S7-1); (I-122) + (S11-1); (I-122) + (S11-2); (I-122) + (S11-3); (I-122) + (S12-1); (I-122) + (S13-1); (I-122) + (S13-2); (I-122) + (S13-3); (I-122) + (S13-4): (I-122) + (S13-5); (I-122) + (S13-6); (I-122) + (S13-7); (I-122) + (S13-8); (I-122) + (S13-9); (I-122) + (S14-1)
(I-123) + (S1-1); (I-123) + (S1-2); (I-123) + (S1-3); (I-123) + (S1-4); (I-123) + (S1-5); (I-123) + (S1-6); (I-123) + (S1-7); (I-123) + (S1-8); (I-123) + (S1-9); (I-123) + (S1-10); (I-123) + (S1-11); (I-123) + (S1-12); (I-123) + (S1-13); (I-123) + (S2-1); (I-123) + (S2-2); (I-123) + (S2-3); (I-123) + (S2-4); (I-123) + (S2-5); (I-123) + (S2-6); (I-123) + (S2-7); (I-123) + (S2-8); (I-123) + (S2-9); (I-123) + (S2-10); (I-123) + (S3-1); (I-123) + (S3-2); (I-123) + (S3-3); (I-123) + (S3-4); (I-123) + (S3-5); (I-123) + (S3-6); (I-123) + (S3-7); (I-123) + (S3-8); (I-123) + (S3-9); (I-123) + (S3-10); (I-123) + (S3-11); (I-123) + (S4-1); (I-123) + (S4-2); (I-123) + (S4-3); (I-123) + (S4-4); (I-123) + (S4-5); (I-123) + (S7-1); (I-123) + (S11-1); (I-123) + (S11-2); (I-123) + (S11-3); (I-123) + (S12-1); (I-123) + (S13-1); (I-123) + (S13-2); (I-123) + (S13-3); (I-123) + (S13-4): (I-123) + (S13-5); (I-123) + (S13-6); (I-123) + (S13-7); (I-123) + (S13-8); (I-123) + (S13-9); (I-123) + (S14-1)
(I-124) + (S1-1); (I-124) + (S1-2); (I-124) + (S1-3); (I-124) + (S1-4); (I-124) + (S1-5); (I-124) + (S1-6); (I-124) + (S1-7); (I-124) + (S1-8); (I-124) + (S1-9); (I-124) + (S1-10); (I-124) + (S1-11); (I-124) + (S1-12); (I-124) + (S1-13); (I-124) + (S2-1); (I-124) + (S2-2); (I-124) + (S2-3); (I-124) + (S2-4); (I-124) + (S2-5); (I-124) + (S2-6); (I-124) + (S2-7); (I-124) + (S2-8); (I-124) + (S2-9); (I-124) + (S2-10); (I-124) + (S3-1); (I-124) + (S3-2); (I-124) + (S3-3); (I-124) + (S3-4); (I-124) + (S3-5); (I-124) + (S3-6); (I-124) + (S3-7); (I-124) + (S3-8); (I-124) + (S3-9); (I-124) + (S3-10); (I-124) + (S3-11); (I-124) + (S4-1); (I-124) + (S4-2); (I-124) + (S4-3); (I-124) + (S4-4); (I-124) + (S4-5); (I-124) + (S7-1); (I-124) + (S11-1); (I-124) + (S11-2); (I-124) + (S11-3); (I-124) + (S12-1); (I-124) + (S13-1); (I-124) + (S13-2); (I-124) + (S13-3); (I-124) + (S13-4): (I-124) + (S13-5); (I-124) + (S13-6); (I-124) + (S13-7); (I-124) + (S13-8); (I-124) + (S13-9); (I-124) + (S14-1)
(I-125) + (S1-1); (I-125) + (S1-2); (I-125) + (S1-3); (I-125) + (S1-4); (I-125) + (S1-5); (I-125) + (S1-6); (I-125) + (S1-7); (I-125) + (S1-8); (I-125) + (S1-9); (I-125) + (S1-10); (I-125) + (S1-11); (I-125) + (S1-12); (I-125) + (S1-13); (I-125) + (S2-1); (I-125) + (S2-2); (I-125) + (S2-3); (I-125) + (S2-4); (I-125) + (S2-5); (I-125) + (S2-6); (I-125) + (S2-7); (I-125) + (S2-8); (I-125) + (S2-9); (I-125) + (S2-10); (I-125) + (S3-1); (I-125) + (S3-2); (I-125) + (S3-3); (I-125) + (S3-4); (I-125) + (S3-5); (I-125) + (S3-6); (I-125) + (S3-7); (I-125) + (S3-8); (I-125) + (S3-9); (I-125) + (S3-10); (I-125) + (S3-11); (I-125) + (S4-1); (I-125) + (S4-2); (I-125) + (S4-3); (I-125) + (S4-4); (I-125) + (S4-5); (I-125) + (S7-1); (I-125) + (S11-1); (I-125) + (S11-2); (I-125) + (S11-3); (I-125) + (S12-1); (I-125) + (S13-1); (I-125) + (S13-2); (I-125) + (S13-3); (I-125) + (S13-4): (I-125) + (S13-5); (I-125) + (S13-6); (I-125) + (S13-7); (I-125) + (S13-8); (I-125) + (S13-9); (I-125) + (S14-1)
(I-126) + (S1-1); (I-126) + (S1-2); (I-126) + (S1-3); (I-126) + (S1-4); (I-126) + (S1-5); (I-126) + (S1-6); (I-126) + (S1-7); (I-126) + (S1-8); (I-126) + (S1-9); (I-126) + (S1-10); (I-126) + (S1-11); (I-126) + (S1-12); (I-126) + (S1-13); (I-126) + (S2-1); (I-126) + (S2-2); (I-126) + (S2-3); (I-126) + (S2-4); (I-126) + (S2-5); (I-126) + (S2-6); (I-126) + (S2-7); (I-126) + (S2-8); (I-126) + (S2-9); (I-126) + (S2-10); (I-126) + (S3-1); (I-126) + (S3-2); (I-126) + (S3-3); (I-126) + (S3-4); (I-126) + (S3-5); (I-126) + (S3-6); (I-126) + (S3-7); (I-126) + (S3-8); (I-126) + (S3-9); (I-126) + (S3-10); (I-126) + (S3-11); (I-126) + (S4-1); (I-126) + (S4-2); (I-126) + (S4-3); (I-126) + (S4-4); (I-126) + (S4-5); (I-126) + (S7-1); (I-126) + (S11-1); (I-126) + (S11-2); (I-126) + (S11-3); (I-126) + (S12-1); (I-126) + (S13-1); (I-126) + (S13-2); (I-126) + (S13-3); (I-126) + (S13-4): (I-126) + (S13-5); (I-126) + (S13-6); (I-126) + (S13-7); (I-126) + (S13-8); (I-126) + (S13-9); (I-126) + (S14-1)
(I-127) + (S1-1); (I-127) + (S1-2); (I-127) + (S1-3); (I-127) + (S1-4); (I-127) + (S1-5); (I-127) + (S1-6); (I-127) + (S1-7); (I-127) + (S1-8); (I-127) + (S1-9); (I-127) + (S1-10); (I-127) + (S1-11); (I-127) + (S1-12); (I-127) + (S1-13); (I-127) + (S2-1); (I-127) + (S2-2); (I-127) + (S2-3); (I-127) + (S2-4); (I-127) + (S2-5); (I-127) + (S2-6); (I-127) + (S2-7); (I-127) + (S2-8); (I-127) + (S2-9); (I-127) + (S2-10); (I-127) + (S3-1); (I-127) + (S3-2); (I-127) + (S3-3); (I-127) + (S3-4); (I-127) + (S3-5); (I-127) + (S3-6); (I-127) + (S3-7); (I-127) + (S3-8); (I-127) + (S3-9); (I-127) + (S3-10); (I-127) + (S3-11); (I-127) + (S4-1); (I-127) + (S4-2); (I-127) + (S4-3); (I-127) + (S4-4); (I-127) + (S4-5); (I-127) + (S7-1); (I-127) + (S11-1); (I-127) + (S11-2); (I-127) + (S11-3); (I-127) + (S12-1); (I-127) + (S13-1); (I-127) + (S13-2); (I-127) + (S13-3); (I-127) + (S13-4): (I-127) + (S13-5); (I-127) + (S13-6); (I-127) + (S13-7); (I-127) + (S13-8); (I-127) + (S13-9); (I-127) + (S14-1)
(I-128) + (S1-1); (I-128) + (S1-2); (I-128) + (S1-3); (I-128) + (S1-4); (I-128) + (S1-5); (I-128) + (S1-6); (I-128) + (S1-7); (I-128) + (S1-8); (I-128) + (S1-9); (I-128) + (S1-10); (I-128) + (S1-11); (I-128) + (S1-12); (I-128) + (S1-13); (I-128) + (S2-1); (I-128) + (S2-2); (I-128) + (S2-3); (I-128) + (S2-4); (I-128) + (S2-5); (I-128) + (S2-6); (I-128) + (S2-7); (I-128) + (S2-8); (I-128) + (S2-9); (I-128) + (S2-10); (I-128) + (S3-1); (I-128) + (S3-2); (I-128) + (S3-3); (I-128) + (S3-4); (I-128) + (S3-5); (I-128) + (S3-6); (I-128) + (S3-7); (I-128) + (S3-8); (I-128) + (S3-9); (I-128) + (S3-10); (I-128) + (S3-11); (I-128) + (S4-1); (I-128) + (S4-2); (I-128) + (S4-3); (I-128) + (S4-4); (I-128) + (S4-5); (I-128) + (S7-1); (I-128) + (S11-1); (I-128) + (S11-2); (I-128) + (S11-3); (I-128) + (S12-1); (I-128) + (S13-1); (I-128) + (S13-2); (I-128) + (S13-3); (I-128) + (S13-4): (I-128) + (S13-5); (I-128) + (S13-6); (I-128) + (S13-7); (I-128) + (S13-8); (I-128) + (S13-9); (I-128) + (S14-1)
(I-129) + (S1-1); (I-129) + (S1-2); (I-129) + (S1-3); (I-129) + (S1-4); (I-129) + (S1-5); (I-129) + (S1-6); (I-129) + (S1-7); (I-129) + (S1-8); (I-129) + (S1-9); (I-129) + (S1-10); (I-129) + (S1-11); (I-129) + (S1-12); (I-129) + (S1-13); (I-129) + (S2-1); (I-129) + (S2-2); (I-129) + (S2-3); (I-129) + (S2-4); (I-129) + (S2-5); (I-129) + (S2-6); (I-129) + (S2-7); (I-129) + (S2-8); (I-129) + (S2-9); (I-129) + (S2-10); (I-129) + (S3-1); (I-129) + (S3-2); (I-129) + (S3-3); (I-129) + (S3-4); (I-129) + (S3-5); (I-129) + (S3-6); (I-129) + (S3-7); (I-129) + (S3-8); (I-129) + (S3-9); (I-129) + (S3-10); (I-129) + (S3-11); (I-129) + (S4-1); (I-129) + (S4-2); (I-129) + (S4-3); (I-129) + (S4-4); (I-129) + (S4-5); (I-129) + (S7-1); (I-129) + (S11-1); (I-129) + (S11-2); (I-129) + (S11-3); (I-129) + (S12-1); (I-129) + (S13-1); (I-129) + (S13-2); (I-129) + (S13-3); (I-129) + (S13-4): (I-129) + (S13-5); (I-129) + (S13-6); (I-129) + (S13-7); (I-129) + (S13-8); (I-129) + (S13-9); (I-129) + (S14-1)
(I-130) + (S1-1); (I-130) + (S1-2); (I-130) + (S1-3); (I-130) + (S1-4); (I-130) + (S1-5); (I-130) + (S1-6); (I-130) + (S1-7); (I-130) + (S1-8); (I-130) + (S1-9); (I-130) + (S1-10); (I-130) + (S1-11); (I-130) + (S1-12); (I-130) + (S1-13); (I-130) + (S2-1); (I-130) + (S2-2); (I-130) + (S2-3); (I-130) + (S2-4); (I-130) + (S2-5); (I-130) + (S2-6); (I-130) + (S2-7); (I-130) + (S2-8); (I-130) + (S2-9); (I-130) + (S2-10); (I-130) + (S3-1); (I-130) + (S3-2); (I-130) + (S3-3); (I-130) + (S3-4); (I-130) + (S3-5); (I-130) + (S3-6); (I-130) + (S3-7); (I-130) + (S3-8); (I-130) + (S3-9); (I-130) + (S3-10); (I-130) + (S3-11); (I-130) + (S4-1); (I-130) + (S4-2); (I-130) + (S4-3); (I-130) + (S4-4); (I-130) + (S4-5); (I-130) + (S7-1); (I-130) + (S11-1); (I-130) + (S11-2); (I-130) + (S11-3); (I-130) + (S12-1); (I-130) + (S13-1); (I-130) + (S13-2); (I-130) + (S13-3); (I-130) + (S13-4): (I-130) + (S13-5); (I-130) + (S13-6); (I-130) + (S13-7); (I-130) + (S13-8); (I-130) + (S13-9); (I-130) + (S14-1)
(I-131) + (S1-1); (I-131) + (S1-2); (I-131) + (S1-3); (I-131) + (S1-4); (I-131) + (S1-5); (I-131) + (S1-6); (I-131) + (S1-7); (I-131) + (S1-8); (I-131) + (S1-9); (I-131) + (S1-10); (I-131) + (S1-11); (I-131) + (S1-12); (I-131) + (S1-13); (I-131) + (S2-1); (I-131) + (S2-2); (I-131) + (S2-3); (I-131) + (S2-4); (I-131) + (S2-5); (I-131) + (S2-6); (I-131) + (S2-7); (I-131) + (S2-8); (I-131) + (S2-9); (I-131) + (S2-10); (I-131) + (S3-1); (I-131) + (S3-2); (I-131) + (S3-3); (I-131) + (S3-4); (I-131) + (S3-5); (I-131) + (S3-6); (I-131) + (S3-7); (I-131) + (S3-8); (I-131) + (S3-9); (I-131) + (S3-10); (I-131) + (S3-11); (I-131) + (S4-1); (I-131) + (S4-2); (I-131) + (S4-3); (I-131) + (S4-4); (I-131) + (S4-5); (I-131) + (S7-1); (I-131) + (S11-1); (I-131) + (S11-2); (I-131) + (S11-3); (I-131) + (S12-1); (I-131) + (S13-1); (I-131) + (S13-2); (I-131) + (S13-3); (I-131) + (S13-4): (I-131) + (S13-5); (I-131) + (S13-6); (I-131) + (S13-7); (I-131) + (S13-8); (I-131) + (S13-9); (I-131) + (S14-1)
(I-132) + (S1-1); (I-132) + (S1-2); (I-132) + (S1-3); (I-132) + (S1-4); (I-132) + (S1-5); (I-132) + (S1-6); (I-132) + (S1-7); (I-132) + (S1-8); (I-132) + (S1-9); (I-132) + (S1-10); (I-132) + (S1-11); (I-132) + (S1-12); (I-132) + (S1-13); (I-132) + (S2-1); (I-132) + (S2-2); (I-132) + (S2-3); (I-132) + (S2-4); (I-132) + (S2-5); (I-132) + (S2-6); (I-132) + (S2-7); (I-132) + (S2-8); (I-132) + (S2-9); (I-132) + (S2-10); (I-132) + (S3-1); (I-132) + (S3-2); (I-132) + (S3-3); (I-132) + (S3-4); (I-132) + (S3-5); (I-132) + (S3-6); (I-132) + (S3-7); (I-132) + (S3-8); (I-132) + (S3-9); (I-132) + (S3-10); (I-132) + (S3-11); (I-132) + (S4-1); (I-132) + (S4-2); (I-132) + (S4-3); (I-132) + (S4-4); (I-132) + (S4-5); (I-132) + (S7-1); (I-132) + (S11-1); (I-132) + (S11-2); (I-132) + (S11-3); (I-132) + (S12-1); (I-132) + (S13-1); (I-132) + (S13-2); (I-132) + (S13-3); (I-132) + (S13-4): (I-132) + (S13-5); (I-132) + (S13-6); (I-132) + (S13-7); (I-132) + (S13-8); (I-132) + (S13-9); (I-132) + (S14-1)
(I-133) + (S1-1); (I-133) + (S1-2); (I-133) + (S1-3); (I-133) + (S1-4); (I-133) + (S1-5); (I-133) + (S1-6); (I-133) + (S1-7); (I-133) + (S1-8); (I-133) + (S1-9); (I-133) + (S1-10); (I-133) + (S1-11); (I-133) + (S1-12); (I-133) + (S1-13); (I-133) + (S2-1); (I-133) + (S2-2); (I-133) + (S2-3); (I-133) + (S2-4); (I-133) + (S2-5); (I-133) + (S2-6); (I-133) + (S2-7); (I-133) + (S2-8); (I-133) + (S2-9); (I-133) + (S2-10); (I-133) + (S3-1); (I-133) + (S3-2); (I-133) + (S3-3); (I-133) + (S3-4); (I-133) + (S3-5); (I-133) + (S3-6); (I-133) + (S3-7); (I-133) + (S3-8); (I-133) + (S3-9); (I-133) + (S3-10); (I-133) + (S3-11); (I-133) + (S4-1); (I-133) + (S4-2); (I-133) + (S4-3); (I-133) + (S4-4); (I-133) + (S4-5); (I-133) + (S7-1); (I-133) + (S11-1); (I-133) + (S11-2); (I-133) + (S11-3); (I-133) + (S12-1); (I-133) + (S13-1); (I-133) + (S13-2); (I-133) + (S13-3); (I-133) + (S13-4): (I-133) + (S13-5); (I-133) + (S13-6); (I-133) + (S13-7); (I-133) + (S13-8); (I-133) + (S13-9); (I-133) + (S14-1)
(I-134) + (S1-1); (I-134) + (S1-2); (I-134) + (S1-3); (I-134) + (S1-4); (I-134) + (S1-5); (I-134) + (S1-6); (I-134) + (S1-7); (I-134) + (S1-8); (I-134) + (S1-9); (I-134) + (S1-10); (I-134) + (S1-11); (I-134) + (S1-12); (I-134) + (S1-13); (I-134) + (S2-1); (I-134) + (S2-2); (I-134) + (S2-3); (I-134) + (S2-4); (I-134) + (S2-5); (I-134) + (S2-6); (I-134) + (S2-7); (I-134) + (S2-8); (I-134) + (S2-9); (I-134) + (S2-10); (I-134) + (S3-1); (I-134) + (S3-2); (I-134) + (S3-3); (I-134) + (S3-4); (I-134) + (S3-5); (I-134) + (S3-6); (I-134) + (S3-7); (I-134) + (S3-8); (I-134) + (S3-9); (I-134) + (S3-10); (I-134) + (S3-11); (I-134) + (S4-1); (I-134) + (S4-2); (I-134) + (S4-3); (I-134) + (S4-4); (I-134) + (S4-5); (I-134) + (S7-1); (I-134) + (S11-1); (I-134) + (S11-2); (I-134) + (S11-3); (I-134) + (S12-1); (I-134) + (S13-1); (I-134) + (S13-2); (I-134) + (S13-3); (I-134) + (S13-4): (I-134) + (S13-5); (I-134) + (S13-6); (I-134) + (S13-7); (I-134) + (S13-8); (I-134) + (S13-9); (I-134) + (S14-1)
(I-135) + (S1-1); (I-135) + (S1-2); (I-135) + (S1-3); (I-135) + (S1-4); (I-135) + (S1-5); (I-135) + (S1-6); (I-135) + (S1-7); (I-135) + (S1-8); (I-135) + (S1-9); (I-135) + (S1-10); (I-135) + (S1-11); (I-135) + (S1-12); (I-135) + (S1-13); (I-135) + (S2-1); (I-135) + (S2-2); (I-135) + (S2-3); (I-135) + (S2-4); (I-135) + (S2-5); (I-135) + (S2-6); (I-135) + (S2-7); (I-135) + (S2-8); (I-135) + (S2-9); (I-135) + (S2-10); (I-135) + (S3-1); (I-135) + (S3-2); (I-135) + (S3-3); (I-135) + (S3-4); (I-135) + (S3-5); (I-135) + (S3-6); (I-135) + (S3-7); (I-135) + (S3-8); (I-135) + (S3-9); (I-135) + (S3-10); (I-135) + (S3-11); (I-135) + (S4-1); (I-135) + (S4-2); (I-135) + (S4-3); (I-135) + (S4-4); (I-135) + (S4-5); (I-135) + (S7-1); (I-135) + (S11-1); (I-135) + (S11-2); (I-135) + (S11-3); (I-135) + (S12-1); (I-135) + (S13-1); (I-135) + (S13-2); (I-135) + (S13-3); (I-135) + (S13-4): (I-135) + (S13-5); (I-135) + (S13-6); (I-135) + (S13-7); (I-135) + (S13-8); (I-135) + (S13-9); (I-135) + (S14-1)
(I-136) + (S1-1); (I-136) + (S1-2); (I-136) + (S1-3); (I-136) + (S1-4); (I-136) + (S1-5); (I-136) + (S1-6); (I-136) + (S1-7); (I-136) + (S1-8); (I-136) + (S1-9); (I-136) + (S1-10); (I-136) + (S1-11); (I-136) + (S1-12); (I-136) + (S1-13); (I-136) + (S2-1); (I-136) + (S2-2); (I-136) + (S2-3); (I-136) + (S2-4); (I-136) + (S2-5); (I-136) + (S2-6); (I-136) + (S2-7); (I-136) + (S2-8); (I-136) + (S2-9); (I-136) + (S2-10); (I-136) + (S3-1); (I-136) + (S3-2); (I-136) + (S3-3); (I-136) + (S3-4); (I-136) + (S3-5); (I-136) + (S3-6); (I-136) + (S3-7); (I-136) + (S3-8); (I-136) + (S3-9); (I-136) + (S3-10); (I-136) + (S3-11); (I-136) + (S4-1); (I-136) + (S4-2); (I-136) + (S4-3); (I-136) + (S4-4); (I-136) + (S4-5); (I-136) + (S7-1); (I-136) + (S11-1); (I-136) + (S11-2); (I-136) + (S11-3); (I-136) + (S12-1); (I-136) + (S13-1); (I-136) + (S13-2); (I-136) + (S13-3); (I-136) + (S13-4): (I-136) + (S13-5); (I-136) + (S13-6); (I-136) + (S13-7); (I-136) + (S13-8); (I-136) + (S13-9); (I-136) + (S14-1)
(I-137) + (S1-1); (I-137) + (S1-2); (I-137) + (S1-3); (I-137) + (S1-4); (I-137) + (S1-5); (I-137) + (S1-6); (I-137) + (S1-7); (I-137) + (S1-8); (I-137) + (S1-9); (I-137) + (S1-10); (I-137) + (S1-11); (I-137) + (S1-12); (I-137) + (S1-13); (I-137) + (S2-1); (I-137) + (S2-2); (I-137) + (S2-3); (I-137) + (S2-4); (I-137) + (S2-5); (I-137) + (S2-6); (I-137) + (S2-7); (I-137) + (S2-8); (I-137) + (S2-9); (I-137) + (S2-10); (I-137) + (S3-1); (I-137) + (S3-2); (I-137) + (S3-3); (I-137) + (S3-4); (I-137) + (S3-5); (I-137) + (S3-6); (I-137) + (S3-7); (I-137) + (S3-8); (I-137) + (S3-9); (I-137) + (S3-10); (I-137) + (S3-11); (I-137) + (S4-1); (I-137) + (S4-2); (I-137) + (S4-3); (I-137) + (S4-4); (I-137) + (S4-5); (I-137) + (S7-1); (I-137) + (S11-1); (I-137) + (S11-2); (I-137) + (S11-3); (I-137) + (S12-1); (I-137) + (S13-1); (I-137) + (S13-2); (I-137) + (S13-3); (I-137) + (S13-4): (I-137) + (S13-5); (I-137) + (S13-6); (I-137) + (S13-7); (I-137) + (S13-8); (I-137) + (S13-9); (I-137) + (S14-1)
(I-138) + (S1-1); (I-138) + (S1-2); (I-138) + (S1-3); (I-138) + (S1-4); (I-138) + (S1-5); (I-138) + (S1-6); (I-138) + (S1-7); (I-138) + (S1-8); (I-138) + (S1-9); (I-138) + (S1-10); (I-138) + (S1-11); (I-138) + (S1-12); (I-138) + (S1-13); (I-138) + (S2-1); (I-138) + (S2-2); (I-138) + (S2-3); (I-138) + (S2-4); (I-138) + (S2-5); (I-138) + (S2-6); (I-138) + (S2-7); (I-138) + (S2-8); (I-138) + (S2-9); (I-138) + (S2-10); (I-138) + (S3-1); (I-138) + (S3-2); (I-138) + (S3-3); (I-138) + (S3-4); (I-138) + (S3-5); (I-138) + (S3-6); (I-138) + (S3-7); (I-138) + (S3-8); (I-138) + (S3-9); (I-138) + (S3-10); (I-138) + (S3-11); (I-138) + (S4-1); (I-138) + (S4-2); (I-138) + (S4-3); (I-138) + (S4-4); (I-138) + (S4-5); (I-138) + (S7-1); (I-138) + (S11-1); (I-138) + (S11-2); (I-138) + (S11-3); (I-138) + (S12-1); (I-138) + (S13-1); (I-138) + (S13-2); (I-138) + (S13-3); (I-138) + (S13-4): (I-138) + (S13-5); (I-138) + (S13-6); (I-138) + (S13-7); (I-138) + (S13-8); (I-138) + (S13-9); (I-138) + (S14-1)
(I-139) + (S1-1); (I-139) + (S1-2); (I-139) + (S1-3); (I-139) + (S1-4); (I-139) + (S1-5); (I-139) + (S1-6); (I-139) + (S1-7); (I-139) + (S1-8); (I-139) + (S1-9); (I-139) + (S1-10); (I-139) + (S1-11); (I-139) + (S1-12); (I-139) + (S1-13); (I-139) + (S2-1); (I-139) + (S2-2); (I-139) + (S2-3); (I-139) + (S2-4); (I-139) + (S2-5); (I-139) + (S2-6); (I-139) + (S2-7); (I-139) + (S2-8); (I-139) + (S2-9); (I-139) + (S2-10); (I-139) + (S3-1); (I-139) + (S3-2); (I-139) + (S3-3); (I-139) + (S3-4); (I-139) + (S3-5); (I-139) + (S3-6); (I-139) + (S3-7); (I-139) + (S3-8); (I-139) + (S3-9); (I-139) + (S3-10); (I-139) + (S3-11); (I-139) + (S4-1); (I-139) + (S4-2); (I-139) + (S4-3); (I-139) + (S4-4); (I-139) + (S4-5); (I-139) + (S7-1); (I-139) + (S11-1); (I-139) + (S11-2); (I-139) + (S11-3); (I-139) + (S12-1); (I-139) + (S13-1); (I-139) + (S13-2); (I-139) + (S13-3); (I-139) + (S13-4): (I-139) + (S13-5); (I-139) + (S13-6); (I-139) + (S13-7); (I-139) + (S13-8); (I-139) + (S13-9); (I-139) + (S14-1)
(I-140) + (S1-1); (I-140) + (S1-2); (I-140) + (S1-3); (I-140) + (S1-4); (I-140) + (S1-5); (I-140) + (S1-6); (I-140) + (S1-7); (I-140) + (S1-8); (I-140) + (S1-9); (I-140) + (S1-10); (I-140) + (S1-11); (I-140) + (S1-12); (I-140) + (S1-13); (I-140) + (S2-1); (I-140) + (S2-2); (I-140) + (S2-3); (I-140) + (S2-4); (I-140) + (S2-5); (I-140) + (S2-6); (I-140) + (S2-7); (I-140) + (S2-8); (I-140) + (S2-9); (I-140) + (S2-10); (I-140) + (S3-1); (I-140) + (S3-2); (I-140) + (S3-3); (I-140) + (S3-4); (I-140) + (S3-5); (I-140) + (S3-6); (I-140) + (S3-7); (I-140) + (S3-8); (I-140) + (S3-9); (I-140) + (S3-10); (I-140) + (S3-11); (I-140) + (S4-1); (I-140) + (S4-2); (I-140) + (S4-3); (I-140) + (S4-4); (I-140) + (S4-5); (I-140) + (S7-1); (I-140) + (S11-1); (I-140) + (S11-2); (I-140) + (S11-3); (I-140) + (S12-1); (I-140) + (S13-1); (I-140) + (S13-2); (I-140) + (S13-3); (I-140) + (S13-4): (I-140) + (S13-5); (I-140) + (S13-6); (I-140) + (S13-7); (I-140) + (S13-8); (I-140) + (S13-9); (I-140) + (S14-1)
(I-141) + (S1-1); (I-141) + (S1-2); (I-141) + (S1-3); (I-141) + (S1-4); (I-141) + (S1-5); (I-141) + (S1-6); (I-141) + (S1-7); (I-141) + (S1-8); (I-141) + (S1-9); (I-141) + (S1-10); (I-141) + (S1-11); (I-141) + (S1-12); (I-141) + (S1-13); (I-141) + (S2-1); (I-141) + (S2-2); (I-141) + (S2-3); (I-141) + (S2-4); (I-141) + (S2-5); (I-141) + (S2-6); (I-141) + (S2-7); (I-141) + (S2-8); (I-141) + (S2-9); (I-141) + (S2-10); (I-141) + (S3-1); (I-141) + (S3-2); (I-141) + (S3-3); (I-141) + (S3-4); (I-141) + (S3-5); (I-141) + (S3-6); (I-141) + (S3-7); (I-141) + (S3-8); (I-141) + (S3-9); (I-141) + (S3-10); (I-141) + (S3-11); (I-141) + (S4-1); (I-141) + (S4-2); (I-141) + (S4-3); (I-141) + (S4-4); (I-141) + (S4-5); (I-141) + (S7-1); (I-141) + (S11-1); (I-141) + (S11-2); (I-141) + (S11-3); (I-141) + (S12-1); (I-141) + (S13-1); (I-141) + (S13-2); (I-141) + (S13-3); (I-141) + (S13-4): (I-141) + (S13-5); (I-141) + (S13-6); (I-141) + (S13-7); (I-141) + (S13-8); (I-141) + (S13-9); (I-141) + (S14-1)
(I-142) + (S1-1); (I-142) + (S1-2); (I-142) + (S1-3); (I-142) + (S1-4); (I-142) + (S1-5); (I-142) + (S1-6); (I-142) + (S1-7); (I-142) + (S1-8); (I-142) + (S1-9); (I-142) + (S1-10); (I-142) + (S1-11); (I-142) + (S1-12); (I-142) + (S1-13); (I-142) + (S2-1); (I-142) + (S2-2); (I-142) + (S2-3); (I-142) + (S2-4); (I-142) + (S2-5); (I-142) + (S2-6); (I-142) + (S2-7); (I-142) + (S2-8); (I-142) + (S2-9); (I-142) + (S2-10); (I-142) + (S3-1); (I-142) + (S3-2); (I-142) + (S3-3); (I-142) + (S3-4); (I-142) + (S3-5); (I-142) + (S3-6); (I-142) + (S3-7); (I-142) + (S3-8); (I-142) + (S3-9); (I-142) + (S3-10); (I-142) + (S3-11); (I-142) + (S4-1); (I-142) + (S4-2); (I-142) + (S4-3); (I-142) + (S4-4); (I-142) + (S4-5); (I-142) + (S7-1); (I-142) + (S11-1); (I-142) + (S11-2); (I-142) + (S11-3); (I-142) + (S12-1); (I-142) + (S13-1); (I-142) + (S13-2); (I-142) + (S13-3); (I-142) + (S13-4): (I-142) + (S13-5); (I-142) + (S13-6); (I-142) + (S13-7); (I-142) + (S13-8); (I-142) + (S13-9); (I-142) + (S14-1)
(I-143) + (S1-1); (I-143) + (S1-2); (I-143) + (S1-3); (I-143) + (S1-4); (I-143) + (S1-5); (I-143) + (S1-6); (I-143) + (S1-7); (I-143) + (S1-8); (I-143) + (S1-9); (I-143) + (S1-10); (I-143) + (S1-11); (I-143) + (S1-12); (I-143) + (S1-13); (I-143) + (S2-1); (I-143) + (S2-2); (I-143) + (S2-3); (I-143) + (S2-4); (I-143) + (S2-5); (I-143) + (S2-6); (I-143) + (S2-7); (I-143) + (S2-8); (I-143) + (S2-9); (I-143) + (S2-10); (I-143) + (S3-1); (I-143) + (S3-2); (I-143) + (S3-3); (I-143) + (S3-4); (I-143) + (S3-5); (I-143) + (S3-6); (I-143) + (S3-7); (I-143) + (S3-8); (I-143) + (S3-9); (I-143) + (S3-10); (I-143) + (S3-11); (I-143) + (S4-1); (I-143) + (S4-2); (I-143) + (S4-3); (I-143) + (S4-4); (I-143) + (S4-5); (I-143) + (S7-1); (I-143) + (S11-1); (I-143) + (S11-2); (I-143) + (S11-3); (I-143) + (S12-1); (I-143) + (S13-1); (I-143) + (S13-2); (I-143) + (S13-3); (I-143) + (S13-4): (I-143) + (S13-5); (I-143) + (S13-6); (I-143) + (S13-7); (I-143) + (S13-8); (I-143) + (S13-9); (I-143) + (S14-1)
(I-144) + (S1-1); (I-144) + (S1-2); (I-144) + (S1-3); (I-144) + (S1-4); (I-144) + (S1-5); (I-144) + (S1-6); (I-144) + (S1-7); (I-144) + (S1-8); (I-144) + (S1-9); (I-144) + (S1-10); (I-144) + (S1-11); (I-144) + (S1-12); (I-144) + (S1-13); (I-144) + (S2-1); (I-144) + (S2-2); (I-144) + (S2-3); (I-144) + (S2-4); (I-144) + (S2-5); (I-144) + (S2-6); (I-144) + (S2-7); (I-144) + (S2-8); (I-144) + (S2-9); (I-144) + (S2-10); (I-144) + (S3-1); (I-144) + (S3-2); (I-144) + (S3-3); (I-144) + (S3-4); (I-144) + (S3-5); (I-144) + (S3-6); (I-144) + (S3-7); (I-144) + (S3-8); (I-144) + (S3-9); (I-144) + (S3-10); (I-144) + (S3-11); (I-144) + (S4-1); (I-144) + (S4-2); (I-144) + (S4-3); (I-144) + (S4-4); (I-144) + (S4-5); (I-144) + (S7-1); (I-144) + (S11-1); (I-144) + (S11-2); (I-144) + (S11-3); (I-144) + (S12-1); (I-144) + (S13-1); (I-144) + (S13-2); (I-144) + (S13-3); (I-144) + (S13-4): (I-144) + (S13-5); (I-144) + (S13-6); (I-144) + (S13-7); (I-144) + (S13-8); (I-144) + (S13-9); (I-144) + (S14-1)
(I-145) + (S1-1); (I-145) + (S1-2); (I-145) + (S1-3); (I-145) + (S1-4); (I-145) + (S1-5); (I-145) + (S1-6); (I-145) + (S1-7); (I-145) + (S1-8); (I-145) + (S1-9); (I-145) + (S1-10); (I-145) + (S1-11); (I-145) + (S1-12); (I-145) + (S1-13); (I-145) + (S2-1); (I-145) + (S2-2); (I-145) + (S2-3); (I-145) + (S2-4); (I-145) + (S2-5); (I-145) + (S2-6); (I-145) + (S2-7); (I-145) + (S2-8); (I-145) + (S2-9); (I-145) + (S2-10); (I-145) + (S3-1); (I-145) + (S3-2); (I-145) + (S3-3); (I-145) + (S3-4); (I-145) + (S3-5); (I-145) + (S3-6); (I-145) + (S3-7); (I-145) + (S3-8); (I-145) + (S3-9); (I-145) + (S3-10); (I-145) + (S3-11); (I-145) + (S4-1); (I-145) + (S4-2); (I-145) + (S4-3); (I-145) + (S4-4); (I-145) + (S4-5); (I-145) + (S7-1); (I-145) + (S11-1); (I-145) + (S11-2); (I-145) + (S11-3); (I-145) + (S12-1); (I-145) + (S13-1); (I-145) + (S13-2); (I-145) + (S13-3); (I-145) + (S13-4): (I-145) + (S13-5); (I-145) + (S13-6); (I-145) + (S13-7); (I-145) + (S13-8); (I-145) + (S13-9); (I-145) + (S14-1)
(I-146) + (S1-1); (I-146) + (S1-2); (I-146) + (S1-3); (I-146) + (S1-4); (I-146) + (S1-5); (I-146) + (S1-6); (I-146) + (S1-7); (I-146) + (S1-8); (I-146) + (S1-9); (I-146) + (S1-10); (I-146) + (S1-11); (I-146) + (S1-12); (I-146) + (S1-13); (I-146) + (S2-1); (I-146) + (S2-2); (I-146) + (S2-3); (I-146) + (S2-4); (I-146) + (S2-5); (I-146) + (S2-6); (I-146) + (S2-7); (I-146) + (S2-8); (I-146) + (S2-9); (I-146) + (S2-10); (I-146) + (S3-1); (I-146) + (S3-2); (I-146) + (S3-3); (I-146) + (S3-4); (I-146) + (S3-5); (I-146) + (S3-6); (I-146) + (S3-7); (I-146) + (S3-8); (I-146) + (S3-9); (I-146) + (S3-10); (I-146) + (S3-11); (I-146) + (S4-1); (I-146) + (S4-2); (I-146) + (S4-3); (I-146) + (S4-4); (I-146) + (S4-5); (I-146) + (S7-1); (I-146) + (S11-1); (I-146) + (S11-2); (I-146) + (S11-3); (I-146) + (S12-1); (I-146) + (S13-1); (I-146) + (S13-2); (I-146) + (S13-3); (I-146) + (S13-4): (I-146) + (S13-5); (I-146) + (S13-6); (I-146) + (S13-7); (I-146) + (S13-8); (I-146) + (S13-9); (I-146) + (S14-1)
(I-147) + (S1-1); (I-147) + (S1-2); (I-147) + (S1-3); (I-147) + (S1-4); (I-147) + (S1-5); (I-147) + (S1-6); (I-147) + (S1-7); (I-147) + (S1-8); (I-147) + (S1-9); (I-147) + (S1-10); (I-147) + (S1-11); (I-147) + (S1-12); (I-147) + (S1-13); (I-147) + (S2-1); (I-147) + (S2-2); (I-147) + (S2-3); (I-147) + (S2-4); (I-147) + (S2-5); (I-147) + (S2-6); (I-147) + (S2-7); (I-147) + (S2-8); (I-147) + (S2-9); (I-147) + (S2-10); (I-147) + (S3-1); (I-147) + (S3-2); (I-147) + (S3-3); (I-147) + (S3-4); (I-147) + (S3-5); (I-147) + (S3-6); (I-147) + (S3-7); (I-147) + (S3-8); (I-147) + (S3-9); (I-147) + (S3-10); (I-147) + (S3-11); (I-147) + (S4-1); (I-147) + (S4-2); (I-147) + (S4-3); (I-147) + (S4-4); (I-147) + (S4-5); (I-147) + (S7-1); (I-147) + (S11-1); (I-147) + (S11-2); (I-147) + (S11-3); (I-147) + (S12-1); (I-147) + (S13-1); (I-147) + (S13-2); (I-147) + (S13-3); (I-147) + (S13-4): (I-147) + (S13-5); (I-147) + (S13-6); (I-147) + (S13-7); (I-147) + (S13-8); (I-147) + (S13-9); (I-147) + (S14-1)
(I-148) + (S1-1); (I-148) + (S1-2); (I-148) + (S1-3); (I-148) + (S1-4); (I-148) + (S1-5); (I-148) + (S1-6); (I-148) + (S1-7); (I-148) + (S1-8); (I-148) + (S1-9); (I-148) + (S1-10); (I-148) + (S1-11); (I-148) + (S1-12); (I-148) + (S1-13); (I-148) + (S2-1); (I-148) + (S2-2); (I-148) + (S2-3); (I-148) + (S2-4); (I-148) + (S2-5); (I-148) + (S2-6); (I-148) + (S2-7); (I-148) + (S2-8); (I-148) + (S2-9); (I-148) + (S2-10); (I-148) + (S3-1); (I-148) + (S3-2); (I-148) + (S3-3); (I-148) + (S3-4); (I-148) + (S3-5); (I-148) + (S3-6); (I-148) + (S3-7); (I-148) + (S3-8); (I-148) + (S3-9); (I-148) + (S3-10); (I-148) + (S3-11); (I-148) + (S4-1); (I-148) + (S4-2); (I-148) + (S4-3); (I-148) + (S4-4); (I-148) + (S4-5); (I-148) + (S7-1); (I-148) + (S11-1); (I-148) + (S11-2); (I-148) + (S11-3); (I-148) + (S12-1); (I-148) + (S13-1); (I-148) + (S13-2); (I-148) + (S13-3); (I-148) + (S13-4): (I-148) + (S13-5); (I-148) + (S13-6); (I-148) + (S13-7); (I-148) + (S13-8); (I-148) + (S13-9); (I-148) + (S14-1)
(I-149) + (S1-1); (I-149) + (S1-2); (I-149) + (S1-3); (I-149) + (S1-4); (I-149) + (S1-5); (I-149) + (S1-6); (I-149) + (S1-7); (I-149) + (S1-8); (I-149) + (S1-9); (I-149) + (S1-10); (I-149) + (S1-11); (I-149) + (S1-12); (I-149) + (S1-13); (I-149) + (S2-1); (I-149) + (S2-2); (I-149) + (S2-3); (I-149) + (S2-4); (I-149) + (S2-5); (I-149) + (S2-6); (I-149) + (S2-7); (I-149) + (S2-8); (I-149) + (S2-9); (I-149) + (S2-10); (I-149) + (S3-1); (I-149) + (S3-2); (I-149) + (S3-3); (I-149) + (S3-4); (I-149) + (S3-5); (I-149) + (S3-6); (I-149) + (S3-7); (I-149) + (S3-8); (I-149) + (S3-9); (I-149) + (S3-10); (I-149) + (S3-11); (I-149) + (S4-1); (I-149) + (S4-2); (I-149) + (S4-3); (I-149) + (S4-4); (I-149) + (S4-5); (I-149) + (S7-1); (I-149) + (S11-1); (I-149) + (S11-2); (I-149) + (S11-3); (I-149) + (S12-1); (I-149) + (S13-1); (I-149) + (S13-2); (I-149) + (S13-3); (I-149) + (S13-4): (I-149) + (S13-5); (I-149) + (S13-6); (I-149) + (S13-7); (I-149) + (S13-8); (I-149) + (S13-9); (I-149) + (S14-1)
(I-150) + (S1-1); (I-150) + (S1-2); (I-150) + (S1-3); (I-150) + (S1-4); (I-150) + (S1-5); (I-150) + (S1-6); (I-150) + (S1-7); (I-150) + (S1-8); (I-150) + (S1-9); (I-150) + (S1-10); (I-150) + (S1-11); (I-150) + (S1-12); (I-150) + (S1-13); (I-150) + (S2-1); (I-150) + (S2-2); (I-150) + (S2-3); (I-150) + (S2-4); (I-150) + (S2-5); (I-150) + (S2-6); (I-150) + (S2-7); (I-150) + (S2-8); (I-150) + (S2-9); (I-150) + (S2-10); (I-150) + (S3-1); (I-150) + (S3-2); (I-150) + (S3-3); (I-150) + (S3-4); (I-150) + (S3-5); (I-150) + (S3-6); (I-150) + (S3-7); (I-150) + (S3-8); (I-150) + (S3-9); (I-150) + (S3-10); (I-150) + (S3-11); (I-150) + (S4-1); (I-150) + (S4-2); (I-150) + (S4-3); (I-150) + (S4-4); (I-150) + (S4-5); (I-150) + (S7-1); (I-150) + (S11-1); (I-150) + (S11-2); (I-150) + (S11-3); (I-150) + (S12-1); (I-150) + (S13-1); (I-150) + (S13-2); (I-150) + (S13-3); (I-150) + (S13-4): (I-150) + (S13-5); (I-150) + (S13-6); (I-150) + (S13-7); (I-150) + (S13-8); (I-150) + (S13-9); (I-150) + (S14-1)
(I-151) + (S1-1); (I-151) + (S1-2); (I-151) + (S1-3); (I-151) + (S1-4); (I-151) + (S1-5); (I-151) + (S1-6); (I-151) + (S1-7); (I-151) + (S1-8); (I-151) + (S1-9); (I-151) + (S1-10); (I-151) + (S1-11); (I-151) + (S1-12); (I-151) + (S1-13); (I-151) + (S2-1); (I-151) + (S2-2); (I-151) + (S2-3); (I-151) + (S2-4); (I-151) + (S2-5); (I-151) + (S2-6); (I-151) + (S2-7); (I-151) + (S2-8); (I-151) + (S2-9); (I-151) + (S2-10); (I-151) + (S3-1); (I-151) + (S3-2); (I-151) + (S3-3); (I-151) + (S3-4); (I-151) + (S3-5); (I-151) + (S3-6); (I-151) + (S3-7); (I-151) + (S3-8); (I-151) + (S3-9); (I-151) + (S3-10); (I-151) + (S3-11); (I-151) + (S4-1); (I-151) + (S4-2); (I-151) + (S4-3); (I-151) + (S4-4); (I-151) + (S4-5); (I-151) + (S7-1); (I-151) + (S11-1); (I-151) + (S11-2); (I-151) + (S11-3); (I-151) + (S12-1); (I-151) + (S13-1); (I-151) + (S13-2); (I-151) + (S13-3); (I-151) + (S13-4): (I-151) + (S13-5); (I-151) + (S13-6); (I-151) + (S13-7); (I-151) + (S13-8); (I-151) + (S13-9); (I-151) + (S14-1)
(I-152) + (S1-1); (I-152) + (S1-2); (I-152) + (S1-3); (I-152) + (S1-4); (I-152) + (S1-5); (I-152) + (S1-6); (I-152) + (S1-7); (I-152) + (S1-8); (I-152) + (S1-9); (I-152) + (S1-10); (I-152) + (S1-11); (I-152) + (S1-12); (I-152) + (S1-13); (I-152) + (S2-1); (I-152) + (S2-2); (I-152) + (S2-3); (I-152) + (S2-4); (I-152) + (S2-5); (I-152) + (S2-6); (I-152) + (S2-7); (I-152) + (S2-8); (I-152) + (S2-9); (I-152) + (S2-10); (I-152) + (S3-1); (I-152) + (S3-2); (I-152) + (S3-3); (I-152) + (S3-4); (I-152) + (S3-5); (I-152) + (S3-6); (I-152) + (S3-7); (I-152) + (S3-8); (I-152) + (S3-9); (I-152) + (S3-10); (I-152) + (S3-11); (I-152) + (S4-1); (I-152) + (S4-2); (I-152) + (S4-3); (I-152) + (S4-4); (I-152) + (S4-5); (I-152) + (S7-1); (I-152) + (S11-1); (I-152) + (S11-2); (I-152) + (S11-3); (I-152) + (S12-1); (I-152) + (S13-1); (I-152) + (S13-2); (I-152) + (S13-3); (I-152) + (S13-4): (I-152) + (S13-5); (I-152) + (S13-6); (I-152) + (S13-7); (I-152) + (S13-8); (I-152) + (S13-9); (I-152) + (S14-1)
(I-153) + (S1-1); (I-153) + (S1-2); (I-153) + (S1-3); (I-153) + (S1-4); (I-153) + (S1-5); (I-153) + (S1-6); (I-153) + (S1-7); (I-153) + (S1-8); (I-153) + (S1-9); (I-153) + (S1-10); (I-153) + (S1-11); (I-153) + (S1-12); (I-153) + (S1-13); (I-153) + (S2-1); (I-153) + (S2-2); (I-153) + (S2-3); (I-153) + (S2-4); (I-153) + (S2-5); (I-153) + (S2-6); (I-153) + (S2-7); (I-153) + (S2-8); (I-153) + (S2-9); (I-153) + (S2-10); (I-153) + (S3-1); (I-153) + (S3-2); (I-153) + (S3-3); (I-153) + (S3-4); (I-153) + (S3-5); (I-153) + (S3-6); (I-153) + (S3-7); (I-153) + (S3-8); (I-153) + (S3-9); (I-153) + (S3-10); (I-153) + (S3-11); (I-153) + (S4-1); (I-153) + (S4-2); (I-153) + (S4-3); (I-153) + (S4-4); (I-153) + (S4-5); (I-153) + (S7-1); (I-153) + (S11-1); (I-153) + (S11-2); (I-153) + (S11-3); (I-153) + (S12-1); (I-153) + (S13-1); (I-153) + (S13-2); (I-153) + (S13-3); (I-153) + (S13-4): (I-153) + (S13-5); (I-153) + (S13-6); (I-153) + (S13-7); (I-153) + (S13-8); (I-153) + (S13-9); (I-153) + (S14-1)
(I-154) + (S1-1); (I-154) + (S1-2); (I-154) + (S1-3); (I-154) + (S1-4); (I-154) + (S1-5); (I-154) + (S1-6); (I-154) + (S1-7); (I-154) + (S1-8); (I-154) + (S1-9); (I-154) + (S1-10); (I-154) + (S1-11); (I-154) + (S1-12); (I-154) + (S1-13); (I-154) + (S2-1); (I-154) + (S2-2); (I-154) + (S2-3); (I-154) + (S2-4); (I-154) + (S2-5); (I-154) + (S2-6); (I-154) + (S2-7); (I-154) + (S2-8); (I-154) + (S2-9); (I-154) + (S2-10); (I-154) + (S3-1); (I-154) + (S3-2); (I-154) + (S3-3); (I-154) + (S3-4); (I-154) + (S3-5); (I-154) + (S3-6); (I-154) + (S3-7); (I-154) + (S3-8); (I-154) + (S3-9); (I-154) + (S3-10); (I-154) + (S3-11); (I-154) + (S4-1); (I-154) + (S4-2); (I-154) + (S4-3); (I-154) + (S4-4); (I-154) + (S4-5); (I-154) + (S7-1); (I-154) + (S11-1); (I-154) + (S11-2); (I-154) + (S11-3); (I-154) + (S12-1); (I-154) + (S13-1); (I-154) + (S13-2); (I-154) + (S13-3); (I-154) + (S13-4): (I-154) + (S13-5); (I-154) + (S13-6); (I-154) + (S13-7); (I-154) + (S13-8); (I-154) + (S13-9); (I-154) + (S14-1)
(I-155) + (S1-1); (I-155) + (S1-2); (I-155) + (S1-3); (I-155) + (S1-4); (I-155) + (S1-5); (I-155) + (S1-6); (I-155) + (S1-7); (I-155) + (S1-8); (I-155) + (S1-9); (I-155) + (S1-10); (I-155) + (S1-11); (I-155) + (S1-12); (I-155) + (S1-13); (I-155) + (S2-1); (I-155) + (S2-2); (I-155) + (S2-3); (I-155) + (S2-4); (I-155) + (S2-5); (I-155) + (S2-6); (I-155) + (S2-7); (I-155) + (S2-8); (I-155) + (S2-9); (I-155) + (S2-10); (I-155) + (S3-1); (I-155) + (S3-2); (I-155) + (S3-3); (I-155) + (S3-4); (I-155) + (S3-5); (I-155) + (S3-6); (I-155) + (S3-7); (I-155) + (S3-8); (I-155) + (S3-9); (I-155) + (S3-10); (I-155) + (S3-11); (I-155) + (S4-1); (I-155) + (S4-2); (I-155) + (S4-3); (I-155) + (S4-4); (I-155) + (S4-5); (I-155) + (S7-1); (I-155) + (S11-1); (I-155) + (S11-2); (I-155) + (S11-3); (I-155) + (S12-1); (I-155) + (S13-1); (I-155) + (S13-2); (I-155) + (S13-3); (I-155) + (S13-4): (I-155) + (S13-5); (I-155) + (S13-6); (I-155) + (S13-7); (I-155) + (S13-8); (I-155) + (S13-9); (I-155) + (S14-1)
(I-156) + (S1-1); (I-156) + (S1-2); (I-156) + (S1-3); (I-156) + (S1-4); (I-156) + (S1-5); (I-156) + (S1-6); (I-156) + (S1-7); (I-156) + (S1-8); (I-156) + (S1-9); (I-156) + (S1-10); (I-156) + (S1-11); (I-156) + (S1-12); (I-156) + (S1-13); (I-156) + (S2-1); (I-156) + (S2-2); (I-156) + (S2-3); (I-156) + (S2-4); (I-156) + (S2-5); (I-156) + (S2-6); (I-156) + (S2-7); (I-156) + (S2-8); (I-156) + (S2-9); (I-156) + (S2-10); (I-156) + (S3-1); (I-156) + (S3-2); (I-156) + (S3-3); (I-156) + (S3-4); (I-156) + (S3-5); (I-156) + (S3-6); (I-156) + (S3-7); (I-156) + (S3-8); (I-156) + (S3-9); (I-156) + (S3-10); (I-156) + (S3-11); (I-156) + (S4-1); (I-156) + (S4-2); (I-156) + (S4-3); (I-156) + (S4-4); (I-156) + (S4-5); (I-156) + (S7-1); (I-156) + (S11-1); (I-156) + (S11-2); (I-156) + (S11-3); (I-156) + (S12-1); (I-156) + (S13-1); (I-156) + (S13-2); (I-156) + (S13-3); (I-156) + (S13-4): (I-156) + (S13-5); (I-156) + (S13-6); (I-156) + (S13-7); (I-156) + (S13-8); (I-156) + (S13-9); (I-156) + (S14-1)
(I-157) + (S1-1); (I-157) + (S1-2); (I-157) + (S1-3); (I-157) + (S1-4); (I-157) + (S1-5); (I-157) + (S1-6); (I-157) + (S1-7); (I-157) + (S1-8); (I-157) + (S1-9); (I-157) + (S1-10); (I-157) + (S1-11); (I-157) + (S1-12); (I-157) + (S1-13); (I-157) + (S2-1); (I-157) + (S2-2); (I-157) + (S2-3); (I-157) + (S2-4); (I-157) + (S2-5); (I-157) + (S2-6); (I-157) + (S2-7); (I-157) + (S2-8); (I-157) + (S2-9); (I-157) + (S2-10); (I-157) + (S3-1); (I-157) + (S3-2); (I-157) + (S3-3); (I-157) + (S3-4); (I-157) + (S3-5); (I-157) + (S3-6); (I-157) + (S3-7); (I-157) + (S3-8); (I-157) + (S3-9); (I-157) + (S3-10); (I-157) + (S3-11); (I-157) + (S4-1); (I-157) + (S4-2); (I-157) + (S4-3); (I-157) + (S4-4); (I-157) + (S4-5); (I-157) + (S7-1); (I-157) + (S11-1); (I-157) + (S11-2); (I-157) + (S11-3); (I-157) + (S12-1); (I-157) + (S13-1); (I-157) + (S13-2); (I-157) + (S13-3); (I-157) + (S13-4): (I-157) + (S13-5); (I-157) + (S13-6); (I-157) + (S13-7); (I-157) + (S13-8); (I-157) + (S13-9); (I-157) + (S14-1)
(I-158) + (S1-1); (I-158) + (S1-2); (I-158) + (S1-3); (I-158) + (S1-4); (I-158) + (S1-5); (I-158) + (S1-6); (I-158) + (S1-7); (I-158) + (S1-8); (I-158) + (S1-9); (I-158) + (S1-10); (I-158) + (S1-11); (I-158) + (S1-12); (I-158) + (S1-13); (I-158) + (S2-1); (I-158) + (S2-2); (I-158) + (S2-3); (I-158) + (S2-4); (I-158) + (S2-5); (I-158) + (S2-6); (I-158) + (S2-7); (I-158) + (S2-8); (I-158) + (S2-9); (I-158) + (S2-10); (I-158) + (S3-1); (I-158) + (S3-2); (I-158) + (S3-3); (I-158) + (S3-4); (I-158) + (S3-5); (I-158) + (S3-6); (I-158) + (S3-7); (I-158) + (S3-8); (I-158) + (S3-9); (I-158) + (S3-10); (I-158) + (S3-11); (I-158) + (S4-1); (I-158) + (S4-2); (I-158) + (S4-3); (I-158) + (S4-4); (I-158) + (S4-5); (I-158) + (S7-1); (I-158) + (S11-1); (I-158) + (S11-2); (I-158) + (S11-3); (I-158) + (S12-1); (I-158) + (S13-1); (I-158) + (S13-2); (I-158) + (S13-3); (I-158) + (S13-4): (I-158) + (S13-5); (I-158) + (S13-6); (I-158) + (S13-7); (I-158) + (S13-8); (I-158) + (S13-9); (I-158) + (S14-1)
(I-159) + (S1-1); (I-159) + (S1-2); (I-159) + (S1-3); (I-159) + (S1-4); (I-159) + (S1-5); (I-159) + (S1-6); (I-159) + (S1-7); (I-159) + (S1-8); (I-159) + (S1-9); (I-159) + (S1-10); (I-159) + (S1-11); (I-159) + (S1-12); (I-159) + (S1-13); (I-159) + (S2-1); (I-159) + (S2-2); (I-159) + (S2-3); (I-159) + (S2-4); (I-159) + (S2-5); (I-159) + (S2-6); (I-159) + (S2-7); (I-159) + (S2-8); (I-159) + (S2-9); (I-159) + (S2-10); (I-159) + (S3-1); (I-159) + (S3-2); (I-159) + (S3-3); (I-159) + (S3-4); (I-159) + (S3-5); (I-159) + (S3-6); (I-159) + (S3-7); (I-159) + (S3-8); (I-159) + (S3-9); (I-159) + (S3-10); (I-159) + (S3-11); (I-159) + (S4-1); (I-159) + (S4-2); (I-159) + (S4-3); (I-159) + (S4-4); (I-159) + (S4-5); (I-159) + (S7-1); (I-159) + (S11-1); (I-159) + (S11-2); (I-159) + (S11-3); (I-159) + (S12-1); (I-159) + (S13-1); (I-159) + (S13-2); (I-159) + (S13-3); (I-159) + (S13-4): (I-159) + (S13-5); (I-159) + (S13-6); (I-159) + (S13-7); (I-159) + (S13-8); (I-159) + (S13-9); (I-159) + (S14-1)
(I-160) + (S1-1); (I-160) + (S1-2); (I-160) + (S1-3); (I-160) + (S1-4); (I-160) + (S1-5); (I-160) + (S1-6); (I-160) + (S1-7); (I-160) + (S1-8); (I-160) + (S1-9); (I-160) + (S1-10); (I-160) + (S1-11); (I-160) + (S1-12); (I-160) + (S1-13); (I-160) + (S2-1); (I-160) + (S2-2); (I-160) + (S2-3); (I-160) + (S2-4); (I-160) + (S2-5); (I-160) + (S2-6); (I-160) + (S2-7); (I-160) + (S2-8); (I-160) + (S2-9); (I-160) + (S2-10); (I-160) + (S3-1); (I-160) + (S3-2); (I-160) + (S3-3); (I-160) + (S3-4); (I-160) + (S3-5); (I-160) + (S3-6); (I-160) + (S3-7); (I-160) + (S3-8); (I-160) + (S3-9); (I-160) + (S3-10); (I-160) + (S3-11); (I-160) + (S4-1); (I-160) + (S4-2); (I-160) + (S4-3); (I-160) + (S4-4); (I-160) + (S4-5); (I-160) + (S7-1); (I-160) + (S11-1); (I-160) + (S11-2); (I-160) + (S11-3); (I-160) + (S12-1); (I-160) + (S13-1); (I-160) + (S13-2); (I-160) + (S13-3); (I-160) + (S13-4): (I-160) + (S13-5); (I-160) + (S13-6); (I-160) + (S13-7); (I-160) + (S13-8); (I-160) + (S13-9); (I-160) + (S14-1)
(I-161) + (S1-1); (I-161) + (S1-2); (I-161) + (S1-3); (I-161) + (S1-4); (I-161) + (S1-5); (I-161) + (S1-6); (I-161) + (S1-7); (I-161) + (S1-8); (I-161) + (S1-9); (I-161) + (S1-10); (I-161) + (S1-11); (I-161) + (S1-12); (I-161) + (S1-13); (I-161) + (S2-1); (I-161) + (S2-2); (I-161) + (S2-3); (I-161) + (S2-4); (I-161) + (S2-5); (I-161) + (S2-6); (I-161) + (S2-7); (I-161) + (S2-8); (I-161) + (S2-9); (I-161) + (S2-10); (I-161) + (S3-1); (I-161) + (S3-2); (I-161) + (S3-3); (I-161) + (S3-4); (I-161) + (S3-5); (I-161) + (S3-6); (I-161) + (S3-7); (I-161) + (S3-8); (I-161) + (S3-9); (I-161) + (S3-10); (I-161) + (S3-11); (I-161) + (S4-1); (I-161) + (S4-2); (I-161) + (S4-3); (I-161) + (S4-4); (I-161) + (S4-5); (I-161) + (S7-1); (I-161) + (S11-1); (I-161) + (S11-2); (I-161) + (S11-3); (I-161) + (S12-1); (I-161) + (S13-1); (I-161) + (S13-2); (I-161) + (S13-3); (I-161) + (S13-4): (I-161) + (S13-5); (I-161) + (S13-6); (I-161) + (S13-7); (I-161) + (S13-8); (I-161) + (S13-9); (I-161) + (S14-1)
(I-162) + (S1-1); (I-162) + (S1-2); (I-162) + (S1-3); (I-162) + (S1-4); (I-162) + (S1-5); (I-162) + (S1-6); (I-162) + (S1-7); (I-162) + (S1-8); (I-162) + (S1-9); (I-162) + (S1-10); (I-162) + (S1-11); (I-162) + (S1-12); (I-162) + (S1-13); (I-162) + (S2-1); (I-162) + (S2-2); (I-162) + (S2-3); (I-162) + (S2-4); (I-162) + (S2-5); (I-162) + (S2-6); (I-162) + (S2-7); (I-162) + (S2-8); (I-162) + (S2-9); (I-162) + (S2-10); (I-162) + (S3-1); (I-162) + (S3-2); (I-162) + (S3-3); (I-162) + (S3-4); (I-162) + (S3-5); (I-162) + (S3-6); (I-162) + (S3-7); (I-162) + (S3-8); (I-162) + (S3-9); (I-162) + (S3-10); (I-162) + (S3-11); (I-162) + (S4-1); (I-162) + (S4-2); (I-162) + (S4-3); (I-162) + (S4-4); (I-162) + (S4-5); (I-162) + (S7-1); (I-162) + (S11-1); (I-162) + (S11-2); (I-162) + (S11-3); (I-162) + (S12-1); (I-162) + (S13-1); (I-162) + (S13-2); (I-162) + (S13-3); (I-162) + (S13-4): (I-162) + (S13-5); (I-162) + (S13-6); (I-162) + (S13-7); (I-162) + (S13-8); (I-162) + (S13-9); (I-162) + (S14-1)
(I-163) + (S1-1); (I-163) + (S1-2); (I-163) + (S1-3); (I-163) + (S1-4); (I-163) + (S1-5); (I-163) + (S1-6); (I-163) + (S1-7); (I-163) + (S1-8); (I-163) + (S1-9); (I-163) + (S1-10); (I-163) + (S1-11); (I-163) + (S1-12); (I-163) + (S1-13); (I-163) + (S2-1); (I-163) + (S2-2); (I-163) + (S2-3); (I-163) + (S2-4); (I-163) + (S2-5); (I-163) + (S2-6); (I-163) + (S2-7); (I-163) + (S2-8); (I-163) + (S2-9); (I-163) + (S2-10); (I-163) + (S3-1); (I-163) + (S3-2); (I-163) + (S3-3); (I-163) + (S3-4); (I-163) + (S3-5); (I-163) + (S3-6); (I-163) + (S3-7); (I-163) + (S3-8); (I-163) + (S3-9); (I-163) + (S3-10); (I-163) + (S3-11); (I-163) + (S4-1); (I-163) + (S4-2); (I-163) + (S4-3); (I-163) + (S4-4); (I-163) + (S4-5); (I-163) + (S7-1); (I-163) + (S11-1); (I-163) + (S11-2); (I-163) + (S11-3); (I-163) + (S12-1); (I-163) + (S13-1); (I-163) + (S13-2); (I-163) + (S13-3); (I-163) + (S13-4): (I-163) + (S13-5); (I-163) + (S13-6); (I-163) + (S13-7); (I-163) + (S13-8); (I-163) + (S13-9); (I-163) + (S14-1)
(I-164) + (S1-1); (I-164) + (S1-2); (I-164) + (S1-3); (I-164) + (S1-4); (I-164) + (S1-5); (I-164) + (S1-6); (I-164) + (S1-7); (I-164) + (S1-8); (I-164) + (S1-9); (I-164) + (S1-10); (I-164) + (S1-11); (I-164) + (S1-12); (I-164) + (S1-13); (I-164) + (S2-1); (I-164) + (S2-2); (I-164) + (S2-3); (I-164) + (S2-4); (I-164) + (S2-5); (I-164) + (S2-6); (I-164) + (S2-7); (I-164) + (S2-8); (I-164) + (S2-9); (I-164) + (S2-10); (I-164) + (S3-1); (I-164) + (S3-2); (I-164) + (S3-3); (I-164) + (S3-4); (I-164) + (S3-5); (I-164) + (S3-6); (I-164) + (S3-7); (I-164) + (S3-8); (I-164) + (S3-9); (I-164) + (S3-10); (I-164) + (S3-11); (I-164) + (S4-1); (I-164) + (S4-2); (I-164) + (S4-3); (I-164) + (S4-4); (I-164) + (S4-5); (I-164) + (S7-1); (I-164) + (S11-1); (I-164) + (S11-2); (I-164) + (S11-3); (I-164) + (S12-1); (I-164) + (S13-1); (I-164) + (S13-2); (I-164) + (S13-3); (I-164) + (S13-4): (I-164) + (S13-5); (I-164) + (S13-6); (I-164) + (S13-7); (I-164) + (S13-8); (I-164) + (S13-9); (I-164) + (S14-1)
(I-165) + (S1-1); (I-165) + (S1-2); (I-165) + (S1-3); (I-165) + (S1-4); (I-165) + (S1-5); (I-165) + (S1-6); (I-165) + (S1-7); (I-165) + (S1-8); (I-165) + (S1-9); (I-165) + (S1-10); (I-165) + (S1-11); (I-165) + (S1-12); (I-165) + (S1-13); (I-165) + (S2-1); (I-165) + (S2-2); (I-165) + (S2-3); (I-165) + (S2-4); (I-165) + (S2-5); (I-165) + (S2-6); (I-165) + (S2-7); (I-165) + (S2-8); (I-165) + (S2-9); (I-165) + (S2-10); (I-165) + (S3-1); (I-165) + (S3-2); (I-165) + (S3-3); (I-165) + (S3-4); (I-165) + (S3-5); (I-165) + (S3-6); (I-165) + (S3-7); (I-165) + (S3-8); (I-165) + (S3-9); (I-165) + (S3-10); (I-165) + (S3-11); (I-165) + (S4-1); (I-165) + (S4-2); (I-165) + (S4-3); (I-165) + (S4-4); (I-165) + (S4-5); (I-165) + (S7-1); (I-165) + (S11-1); (I-165) + (S11-2); (I-165) + (S11-3); (I-165) + (S12-1); (I-165) + (S13-1); (I-165) + (S13-2); (I-165) + (S13-3); (I-165) + (S13-4): (I-165) + (S13-5); (I-165) + (S13-6); (I-165) + (S13-7); (I-165) + (S13-8); (I-165) + (S13-9); (I-165) + (S14-1)
(I-166) + (S1-1); (I-166) + (S1-2); (I-166) + (S1-3); (I-166) + (S1-4); (I-166) + (S1-5); (I-166) + (S1-6); (I-166) + (S1-7); (I-166) + (S1-8); (I-166) + (S1-9); (I-166) + (S1-10); (I-166) + (S1-11); (I-166) + (S1-12); (I-166) + (S1-13); (I-166) + (S2-1); (I-166) + (S2-2); (I-166) + (S2-3); (I-166) + (S2-4); (I-166) + (S2-5); (I-166) + (S2-6); (I-166) + (S2-7); (I-166) + (S2-8); (I-166) + (S2-9); (I-166) + (S2-10); (I-166) + (S3-1); (I-166) + (S3-2); (I-166) + (S3-3); (I-166) + (S3-4); (I-166) + (S3-5); (I-166) + (S3-6); (I-166) + (S3-7); (I-166) + (S3-8); (I-166) + (S3-9); (I-166) + (S3-10); (I-166) + (S3-11); (I-166) + (S4-1); (I-166) + (S4-2); (I-166) + (S4-3); (I-166) + (S4-4); (I-166) + (S4-5); (I-166) + (S7-1); (I-166) + (S11-1); (I-166) + (S11-2); (I-166) + (S11-3); (I-166) + (S12-1); (I-166) + (S13-1); (I-166) + (S13-2); (I-166) + (S13-3); (I-166) + (S13-4): (I-166) + (S13-5); (I-166) + (S13-6); (I-166) + (S13-7); (I-166) + (S13-8); (I-166) + (S13-9); (I-166) + (S14-1)
(I-167) + (S1-1); (I-167) + (S1-2); (I-167) + (S1-3); (I-167) + (S1-4); (I-167) + (S1-5); (I-167) + (S1-6); (I-167) + (S1-7); (I-167) + (S1-8); (I-167) + (S1-9); (I-167) + (S1-10); (I-167) + (S1-11); (I-167) + (S1-12); (I-167) + (S1-13); (I-167) + (S2-1); (I-167) + (S2-2); (I-167) + (S2-3); (I-167) + (S2-4); (I-167) + (S2-5); (I-167) + (S2-6); (I-167) + (S2-7); (I-167) + (S2-8); (I-167) + (S2-9); (I-167) + (S2-10); (I-167) + (S3-1); (I-167) + (S3-2); (I-167) + (S3-3); (I-167) + (S3-4); (I-167) + (S3-5); (I-167) + (S3-6); (I-167) + (S3-7); (I-167) + (S3-8); (I-167) + (S3-9); (I-167) + (S3-10); (I-167) + (S3-11); (I-167) + (S4-1); (I-167) + (S4-2); (I-167) + (S4-3); (I-167) + (S4-4); (I-167) + (S4-5); (I-167) + (S7-1); (I-167) + (S11-1); (I-167) + (S11-2); (I-167) + (S11-3); (I-167) + (S12-1); (I-167) + (S13-1); (I-167) + (S13-2); (I-167) + (S13-3); (I-167) + (S13-4): (I-167) + (S13-5); (I-167) + (S13-6); (I-167) + (S13-7); (I-167) + (S13-8); (I-167) + (S13-9); (I-167) + (S14-1)
(I-168) + (S1-1); (I-168) + (S1-2); (I-168) + (S1-3); (I-168) + (S1-4); (I-168) + (S1-5); (I-168) + (S1-6); (I-168) + (S1-7); (I-168) + (S1-8); (I-168) + (S1-9); (I-168) + (S1-10); (I-168) + (S1-11); (I-168) + (S1-12); (I-168) + (S1-13); (I-168) + (S2-1); (I-168) + (S2-2); (I-168) + (S2-3); (I-168) + (S2-4); (I-168) + (S2-5); (I-168) + (S2-6); (I-168) + (S2-7); (I-168) + (S2-8); (I-168) + (S2-9); (I-168) + (S2-10); (I-168) + (S3-1); (I-168) + (S3-2); (I-168) + (S3-3); (I-168) + (S3-4); (I-168) + (S3-5); (I-168) + (S3-6); (I-168) + (S3-7); (I-168) + (S3-8); (I-168) + (S3-9); (I-168) + (S3-10); (I-168) + (S3-11); (I-168) + (S4-1); (I-168) + (S4-2); (I-168) + (S4-3); (I-168) + (S4-4); (I-168) + (S4-5); (I-168) + (S7-1); (I-168) + (S11-1); (I-168) + (S11-2); (I-168) + (S11-3); (I-168) + (S12-1); (I-168) + (S13-1); (I-168) + (S13-2); (I-168) + (S13-3); (I-168) + (S13-4): (I-168) + (S13-5); (I-168) + (S13-6); (I-168) + (S13-7); (I-168) + (S13-8); (I-168) + (S13-9); (I-168) + (S14-1)
(I-169) + (S1-1); (I-169) + (S1-2); (I-169) + (S1-3); (I-169) + (S1-4); (I-169) + (S1-5); (I-169) + (S1-6); (I-169) + (S1-7); (I-169) + (S1-8); (I-169) + (S1-9); (I-169) + (S1-10); (I-169) + (S1-11); (I-169) + (S1-12); (I-169) + (S1-13); (I-169) + (S2-1); (I-169) + (S2-2); (I-169) + (S2-3); (I-169) + (S2-4); (I-169) + (S2-5); (I-169) + (S2-6); (I-169) + (S2-7); (I-169) + (S2-8); (I-169) + (S2-9); (I-169) + (S2-10); (I-169) + (S3-1); (I-169) + (S3-2); (I-169) + (S3-3); (I-169) + (S3-4); (I-169) + (S3-5); (I-169) + (S3-6); (I-169) + (S3-7); (I-169) + (S3-8); (I-169) + (S3-9); (I-169) + (S3-10); (I-169) + (S3-11); (I-169) + (S4-1); (I-169) + (S4-2); (I-169) + (S4-3); (I-169) + (S4-4); (I-169) + (S4-5); (I-169) + (S7-1); (I-169) + (S11-1); (I-169) + (S11-2); (I-169) + (S11-3); (I-169) + (S12-1); (I-169) + (S13-1); (I-169) + (S13-2); (I-169) + (S13-3); (I-169) + (S13-4): (I-169) + (S13-5); (I-169) + (S13-6); (I-169) + (S13-7); (I-169) + (S13-8); (I-169) + (S13-9); (I-169) + (S14-1)
(I-170) + (S1-1); (I-170) + (S1-2); (I-170) + (S1-3); (I-170) + (S1-4); (I-170) + (S1-5); (I-170) + (S1-6); (I-170) + (S1-7); (I-170) + (S1-8); (I-170) + (S1-9); (I-170) + (S1-10); (I-170) + (S1-11); (I-170) + (S1-12); (I-170) + (S1-13); (I-170) + (S2-1); (I-170) + (S2-2); (I-170) + (S2-3); (I-170) + (S2-4); (I-170) + (S2-5); (I-170) + (S2-6); (I-170) + (S2-7); (I-170) + (S2-8); (I-170) + (S2-9); (I-170) + (S2-10); (I-170) + (S3-1); (I-170) + (S3-2); (I-170) + (S3-3); (I-170) + (S3-4); (I-170) + (S3-5); (I-170) + (S3-6); (I-170) + (S3-7); (I-170) + (S3-8); (I-170) + (S3-9); (I-170) + (S3-10); (I-170) + (S3-11); (I-170) + (S4-1); (I-170) + (S4-2); (I-170) + (S4-3); (I-170) + (S4-4); (I-170) + (S4-5); (I-170) + (S7-1); (I-170) + (S11-1); (I-170) + (S11-2); (I-170) + (S11-3); (I-170) + (S12-1); (I-170) + (S13-1); (I-170) + (S13-2); (I-170) + (S13-3); (I-170) + (S13-4): (I-170) + (S13-5); (I-170) + (S13-6); (I-170) + (S13-7); (I-170) + (S13-8); (I-170) + (S13-9); (I-170) + (S14-1)
(I-171) + (S1-1); (I-171) + (S1-2); (I-171) + (S1-3); (I-171) + (S1-4); (I-171) + (S1-5); (I-171) + (S1-6); (I-171) + (S1-7); (I-171) + (S1-8); (I-171) + (S1-9); (I-171) + (S1-10); (I-171) + (S1-11); (I-171) + (S1-12); (I-171) + (S1-13); (I-171) + (S2-1); (I-171) + (S2-2); (I-171) + (S2-3); (I-171) + (S2-4); (I-171) + (S2-5); (I-171) + (S2-6); (I-171) + (S2-7); (I-171) + (S2-8); (I-171) + (S2-9); (I-171) + (S2-10); (I-171) + (S3-1); (I-171) + (S3-2); (I-171) + (S3-3); (I-171) + (S3-4); (I-171) + (S3-5); (I-171) + (S3-6); (I-171) + (S3-7); (I-171) + (S3-8); (I-171) + (S3-9); (I-171) + (S3-10); (I-171) + (S3-11); (I-171) + (S4-1); (I-171) + (S4-2); (I-171) + (S4-3); (I-171) + (S4-4); (I-171) + (S4-5); (I-171) + (S7-1); (I-171) + (S11-1); (I-171) + (S11-2); (I-171) + (S11-3); (I-171) + (S12-1); (I-171) + (S13-1); (I-171) + (S13-2); (I-171) + (S13-3); (I-171) + (S13-4): (I-171) + (S13-5); (I-171) + (S13-6); (I-171) + (S13-7); (I-171) + (S13-8); (I-171) + (S13-9); (I-171) + (S14-1)
(I-172) + (S1-1); (I-172) + (S1-2); (I-172) + (S1-3); (I-172) + (S1-4); (I-172) + (S1-5); (I-172) + (S1-6); (I-172) + (S1-7); (I-172) + (S1-8); (I-172) + (S1-9); (I-172) + (S1-10); (I-172) + (S1-11); (I-172) + (S1-12); (I-172) + (S1-13); (I-172) + (S2-1); (I-172) + (S2-2); (I-172) + (S2-3); (I-172) + (S2-4); (I-172) + (S2-5); (I-172) + (S2-6); (I-172) + (S2-7); (I-172) + (S2-8); (I-172) + (S2-9); (I-172) + (S2-10); (I-172) + (S3-1); (I-172) + (S3-2); (I-172) + (S3-3); (I-172) + (S3-4); (I-172) + (S3-5); (I-172) + (S3-6); (I-172) + (S3-7); (I-172) + (S3-8); (I-172) + (S3-9); (I-172) + (S3-10); (I-172) + (S3-11); (I-172) + (S4-1); (I-172) + (S4-2); (I-172) + (S4-3); (I-172) + (S4-4); (I-172) + (S4-5); (I-172) + (S7-1); (I-172) + (S11-1); (I-172) + (S11-2); (I-172) + (S11-3); (I-172) + (S12-1); (I-172) + (S13-1); (I-172) + (S13-2); (I-172) + (S13-3); (I-172) + (S13-4): (I-172) + (S13-5); (I-172) + (S13-6); (I-172) + (S13-7); (I-172) + (S13-8); (I-172) + (S13-9); (I-172) + (S14-1)
(I-173) + (S1-1); (I-173) + (S1-2); (I-173) + (S1-3); (I-173) + (S1-4); (I-173) + (S1-5); (I-173) + (S1-6); (I-173) + (S1-7); (I-173) + (S1-8); (I-173) + (S1-9); (I-173) + (S1-10); (I-173) + (S1-11); (I-173) + (S1-12); (I-173) + (S1-13); (I-173) + (S2-1); (I-173) + (S2-2); (I-173) + (S2-3); (I-173) + (S2-4); (I-173) + (S2-5); (I-173) + (S2-6); (I-173) + (S2-7); (I-173) + (S2-8); (I-173) + (S2-9); (I-173) + (S2-10); (I-173) + (S3-1); (I-173) + (S3-2); (I-173) + (S3-3); (I-173) + (S3-4); (I-173) + (S3-5); (I-173) + (S3-6); (I-173) + (S3-7); (I-173) + (S3-8); (I-173) + (S3-9); (I-173) + (S3-10); (I-173) + (S3-11); (I-173) + (S4-1); (I-173) + (S4-2); (I-173) + (S4-3); (I-173) + (S4-4); (I-173) + (S4-5); (I-173) + (S7-1); (I-173) + (S11-1); (I-173) + (S11-2); (I-173) + (S11-3); (I-173) + (S12-1); (I-173) + (S13-1); (I-173) + (S13-2); (I-173) + (S13-3); (I-173) + (S13-4): (I-173) + (S13-5); (I-173) + (S13-6); (I-173) + (S13-7); (I-173) + (S13-8); (I-173) + (S13-9); (I-173) + (S14-1)
(I-174) + (S1-1); (I-174) + (S1-2); (I-174) + (S1-3); (I-174) + (S1-4); (I-174) + (S1-5); (I-174) + (S1-6); (I-174) + (S1-7); (I-174) + (S1-8); (I-174) + (S1-9); (I-174) + (S1-10); (I-174) + (S1-11); (I-174) + (S1-12); (I-174) + (S1-13); (I-174) + (S2-1); (I-174) + (S2-2); (I-174) + (S2-3); (I-174) + (S2-4); (I-174) + (S2-5); (I-174) + (S2-6); (I-174) + (S2-7); (I-174) + (S2-8); (I-174) + (S2-9); (I-174) + (S2-10); (I-174) + (S3-1); (I-174) + (S3-2); (I-174) + (S3-3); (I-174) + (S3-4); (I-174) + (S3-5); (I-174) + (S3-6); (I-174) + (S3-7); (I-174) + (S3-8); (I-174) + (S3-9); (I-174) + (S3-10); (I-174) + (S3-11); (I-174) + (S4-1); (I-174) + (S4-2); (I-174) + (S4-3); (I-174) + (S4-4); (I-174) + (S4-5); (I-174) + (S7-1); (I-174) + (S11-1); (I-174) + (S11-2); (I-174) + (S11-3); (I-174) + (S12-1); (I-174) + (S13-1); (I-174) + (S13-2); (I-174) + (S13-3); (I-174) + (S13-4): (I-174) + (S13-5); (I-174) + (S13-6); (I-174) + (S13-7); (I-174) + (S13-8); (I-174) + (S13-9); (I-174) + (S14-1)
(I-175) + (S1-1); (I-175) + (S1-2); (I-175) + (S1-3); (I-175) + (S1-4); (I-175) + (S1-5); (I-175) + (S1-6); (I-175) + (S1-7); (I-175) + (S1-8); (I-175) + (S1-9); (I-175) + (S1-10); (I-175) + (S1-11); (I-175) + (S1-12); (I-175) + (S1-13); (I-175) + (S2-1); (I-175) + (S2-2); (I-175) + (S2-3); (I-175) + (S2-4); (I-175) + (S2-5); (I-175) + (S2-6); (I-175) + (S2-7); (I-175) + (S2-8); (I-175) + (S2-9); (I-175) + (S2-10); (I-175) + (S3-1); (I-175) + (S3-2); (I-175) + (S3-3); (I-175) + (S3-4); (I-175) + (S3-5); (I-175) + (S3-6); (I-175) + (S3-7); (I-175) + (S3-8); (I-175) + (S3-9); (I-175) + (S3-10); (I-175) + (S3-11); (I-175) + (S4-1); (I-175) + (S4-2); (I-175) + (S4-3); (I-175) + (S4-4); (I-175) + (S4-5); (I-175) + (S7-1); (I-175) + (S11-1); (I-175) + (S11-2); (I-175) + (S11-3); (I-175) + (S12-1); (I-175) + (S13-1); (I-175) + (S13-2); (I-175) + (S13-3); (I-175) + (S13-4): (I-175) + (S13-5); (I-175) + (S13-6); (I-175) + (S13-7); (I-175) + (S13-8); (I-175) + (S13-9); (I-175) + (S14-1)
(I-176) + (S1-1); (I-176) + (S1-2); (I-176) + (S1-3); (I-176) + (S1-4); (I-176) + (S1-5); (I-176) + (S1-6); (I-176) + (S1-7); (I-176) + (S1-8); (I-176) + (S1-9); (I-176) + (S1-10); (I-176) + (S1-11); (I-176) + (S1-12); (I-176) + (S1-13); (I-176) + (S2-1); (I-176) + (S2-2); (I-176) + (S2-3); (I-176) + (S2-4); (I-176) + (S2-5); (I-176) + (S2-6); (I-176) + (S2-7); (I-176) + (S2-8); (I-176) + (S2-9); (I-176) + (S2-10); (I-176) + (S3-1); (I-176) + (S3-2); (I-176) + (S3-3); (I-176) + (S3-4); (I-176) + (S3-5); (I-176) + (S3-6); (I-176) + (S3-7); (I-176) + (S3-8); (I-176) + (S3-9); (I-176) + (S3-10); (I-176) + (S3-11); (I-176) + (S4-1); (I-176) + (S4-2); (I-176) + (S4-3); (I-176) + (S4-4); (I-176) + (S4-5); (I-176) + (S7-1); (I-176) + (S11-1); (I-176) + (S11-2); (I-176) + (S11-3); (I-176) + (S12-1); (I-176) + (S13-1); (I-176) + (S13-2); (I-176) + (S13-3); (I-176) + (S13-4): (I-176) + (S13-5); (I-176) + (S13-6); (I-176) + (S13-7); (I-176) + (S13-8); (I-176) + (S13-9); (I-176) + (S14-1)
(I-177) + (S1-1); (I-177) + (S1-2); (I-177) + (S1-3); (I-177) + (S1-4); (I-177) + (S1-5); (I-177) + (S1-6); (I-177) + (S1-7); (I-177) + (S1-8); (I-177) + (S1-9); (I-177) + (S1-10); (I-177) + (S1-11); (I-177) + (S1-12); (I-177) + (S1-13); (I-177) + (S2-1); (I-177) + (S2-2); (I-177) + (S2-3); (I-177) + (S2-4); (I-177) + (S2-5); (I-177) + (S2-6); (I-177) + (S2-7); (I-177) + (S2-8); (I-177) + (S2-9); (I-177) + (S2-10); (I-177) + (S3-1); (I-177) + (S3-2); (I-177) + (S3-3); (I-177) + (S3-4); (I-177) + (S3-5); (I-177) + (S3-6); (I-177) + (S3-7); (I-177) + (S3-8); (I-177) + (S3-9); (I-177) + (S3-10); (I-177) + (S3-11); (I-177) + (S4-1); (I-177) + (S4-2); (I-177) + (S4-3); (I-177) + (S4-4); (I-177) + (S4-5); (I-177) + (S7-1); (I-177) + (S11-1); (I-177) + (S11-2); (I-177) + (S11-3); (I-177) + (S12-1); (I-177) + (S13-1); (I-177) + (S13-2); (I-177) + (S13-3); (I-177) + (S13-4): (I-177) + (S13-5); (I-177) + (S13-6); (I-177) + (S13-7); (I-177) + (S13-8); (I-177) + (S13-9); (I-177) + (S14-1)
(I-178) + (S1-1); (I-178) + (S1-2); (I-178) + (S1-3); (I-178) + (S1-4); (I-178) + (S1-5); (I-178) + (S1-6); (I-178) + (S1-7); (I-178) + (S1-8); (I-178) + (S1-9); (I-178) + (S1-10); (I-178) + (S1-11); (I-178) + (S1-12); (I-178) + (S1-13); (I-178) + (S2-1); (I-178) + (S2-2); (I-178) + (S2-3); (I-178) + (S2-4); (I-178) + (S2-5); (I-178) + (S2-6); (I-178) + (S2-7); (I-178) + (S2-8); (I-178) + (S2-9); (I-178) + (S2-10); (I-178) + (S3-1); (I-178) + (S3-2); (I-178) + (S3-3); (I-178) + (S3-4); (I-178) + (S3-5); (I-178) + (S3-6); (I-178) + (S3-7); (I-178) + (S3-8); (I-178) + (S3-9); (I-178) + (S3-10); (I-178) + (S3-11); (I-178) + (S4-1); (I-178) + (S4-2); (I-178) + (S4-3); (I-178) + (S4-4); (I-178) + (S4-5); (I-178) + (S7-1); (I-178) + (S11-1); (I-178) + (S11-2); (I-178) + (S11-3); (I-178) + (S12-1); (I-178) + (S13-1); (I-178) + (S13-2); (I-178) + (S13-3); (I-178) + (S13-4): (I-178) + (S13-5); (I-178) + (S13-6); (I-178) + (S13-7); (I-178) + (S13-8); (I-178) + (S13-9); (I-178) + (S14-1)
(I-179) + (S1-1); (I-179) + (S1-2); (I-179) + (S1-3); (I-179) + (S1-4); (I-179) + (S1-5); (I-179) + (S1-6); (I-179) + (S1-7); (I-179) + (S1-8); (I-179) + (S1-9); (I-179) + (S1-10); (I-179) + (S1-11); (I-179) + (S1-12); (I-179) + (S1-13); (I-179) + (S2-1); (I-179) + (S2-2); (I-179) + (S2-3); (I-179) + (S2-4); (I-179) + (S2-5); (I-179) + (S2-6); (I-179) + (S2-7); (I-179) + (S2-8); (I-179) + (S2-9); (I-179) + (S2-10); (I-179) + (S3-1); (I-179) + (S3-2); (I-179) + (S3-3); (I-179) + (S3-4); (I-179) + (S3-5); (I-179) + (S3-6); (I-179) + (S3-7); (I-179) + (S3-8); (I-179) + (S3-9); (I-179) + (S3-10); (I-179) + (S3-11); (I-179) + (S4-1); (I-179) + (S4-2); (I-179) + (S4-3); (I-179) + (S4-4); (I-179) + (S4-5); (I-179) + (S7-1); (I-179) + (S11-1); (I-179) + (S11-2); (I-179) + (S11-3); (I-179) + (S12-1); (I-179) + (S13-1); (I-179) + (S13-2); (I-179) + (S13-3); (I-179) + (S13-4): (I-179) + (S13-5); (I-179) + (S13-6); (I-179) + (S13-7); (I-179) + (S13-8); (I-179) + (S13-9); (I-179) + (S14-1)
(I-180) + (S1-1); (I-180) + (S1-2); (I-180) + (S1-3); (I-180) + (S1-4); (I-180) + (S1-5); (I-180) + (S1-6); (I-180) + (S1-7); (I-180) + (S1-8); (I-180) + (S1-9); (I-180) + (S1-10); (I-180) + (S1-11); (I-180) + (S1-12); (I-180) + (S1-13); (I-180) + (S2-1); (I-180) + (S2-2); (I-180) + (S2-3); (I-180) + (S2-4); (I-180) + (S2-5); (I-180) + (S2-6); (I-180) + (S2-7); (I-180) + (S2-8); (I-180) + (S2-9); (I-180) + (S2-10); (I-180) + (S3-1); (I-180) + (S3-2); (I-180) + (S3-3); (I-180) + (S3-4); (I-180) + (S3-5); (I-180) + (S3-6); (I-180) + (S3-7); (I-180) + (S3-8); (I-180) + (S3-9); (I-180) + (S3-10); (I-180) + (S3-11); (I-180) + (S4-1); (I-180) + (S4-2); (I-180) + (S4-3); (I-180) + (S4-4); (I-180) + (S4-5); (I-180) + (S7-1); (I-180) + (S11-1); (I-180) + (S11-2); (I-180) + (S11-3); (I-180) + (S12-1); (I-180) + (S13-1); (I-180) + (S13-2); (I-180) + (S13-3); (I-180) + (S13-4): (I-180) + (S13-5); (I-180) + (S13-6); (I-180) + (S13-7); (I-180) + (S13-8); (I-180) + (S13-9); (I-180) + (S14-1)
(I-181) + (S1-1); (I-181) + (S1-2); (I-181) + (S1-3); (I-181) + (S1-4); (I-181) + (S1-5); (I-181) + (S1-6); (I-181) + (S1-7); (I-181) + (S1-8); (I-181) + (S1-9); (I-181) + (S1-10); (I-181) + (S1-11); (I-181) + (S1-12); (I-181) + (S1-13); (I-181) + (S2-1); (I-181) + (S2-2); (I-181) + (S2-3); (I-181) + (S2-4); (I-181) + (S2-5); (I-181) + (S2-6); (I-181) + (S2-7); (I-181) + (S2-8); (I-181) + (S2-9); (I-181) + (S2-10); (I-181) + (S3-1); (I-181) + (S3-2); (I-181) + (S3-3); (I-181) + (S3-4); (I-181) + (S3-5); (I-181) + (S3-6); (I-181) + (S3-7); (I-181) + (S3-8); (I-181) + (S3-9); (I-181) + (S3-10); (I-181) + (S3-11); (I-181) + (S4-1); (I-181) + (S4-2); (I-181) + (S4-3); (I-181) + (S4-4); (I-181) + (S4-5); (I-181) + (S7-1); (I-181) + (S11-1); (I-181) + (S11-2); (I-181) + (S11-3); (I-181) + (S12-1); (I-181) + (S13-1); (I-181) + (S13-2); (I-181) + (S13-3); (I-181) + (S13-4): (I-181) + (S13-5); (I-181) + (S13-6); (I-181) + (S13-7); (I-181) + (S13-8); (I-181) + (S13-9); (I-181) + (S14-1)
(I-182) + (S1-1); (I-182) + (S1-2); (I-182) + (S1-3); (I-182) + (S1-4); (I-182) + (S1-5); (I-182) + (S1-6); (I-182) + (S1-7); (I-182) + (S1-8); (I-182) + (S1-9); (I-182) + (S1-10); (I-182) + (S1-11); (I-182) + (S1-12); (I-182) + (S1-13); (I-182) + (S2-1); (I-182) + (S2-2); (I-182) + (S2-3); (I-182) + (S2-4); (I-182) + (S2-5); (I-182) + (S2-6); (I-182) + (S2-7); (I-182) + (S2-8); (I-182) + (S2-9); (I-182) + (S2-10); (I-182) + (S3-1); (I-182) + (S3-2); (I-182) + (S3-3); (I-182) + (S3-4); (I-182) + (S3-5); (I-182) + (S3-6); (I-182) + (S3-7); (I-182) + (S3-8); (I-182) + (S3-9); (I-182) + (S3-10); (I-182) + (S3-11); (I-182) + (S4-1); (I-182) + (S4-2); (I-182) + (S4-3); (I-182) + (S4-4); (I-182) + (S4-5); (I-182) + (S7-1); (I-182) + (S11-1); (I-182) + (S11-2); (I-182) + (S11-3); (I-182) + (S12-1); (I-182) + (S13-1); (I-182) + (S13-2); (I-182) + (S13-3); (I-182) + (S13-4): (I-182) + (S13-5); (I-182) + (S13-6); (I-182) + (S13-7); (I-182) + (S13-8); (I-182) + (S13-9); (I-182) + (S14-1)
(I-183) + (S1-1); (I-183) + (S1-2); (I-183) + (S1-3); (I-183) + (S1-4); (I-183) + (S1-5); (I-183) + (S1-6); (I-183) + (S1-7); (I-183) + (S1-8); (I-183) + (S1-9); (I-183) + (S1-10); (I-183) + (S1-11); (I-183) + (S1-12); (I-183) + (S1-13); (I-183) + (S2-1); (I-183) + (S2-2); (I-183) + (S2-3); (I-183) + (S2-4); (I-183) + (S2-5); (I-183) + (S2-6); (I-183) + (S2-7); (I-183) + (S2-8); (I-183) + (S2-9); (I-183) + (S2-10); (I-183) + (S3-1); (I-183) + (S3-2); (I-183) + (S3-3); (I-183) + (S3-4); (I-183) + (S3-5); (I-183) + (S3-6); (I-183) + (S3-7); (I-183) + (S3-8); (I-183) + (S3-9); (I-183) + (S3-10); (I-183) + (S3-11); (I-183) + (S4-1); (I-183) + (S4-2); (I-183) + (S4-3); (I-183) + (S4-4); (I-183) + (S4-5); (I-183) + (S7-1); (I-183) + (S11-1); (I-183) + (S11-2); (I-183) + (S11-3); (I-183) + (S12-1); (I-183) + (S13-1); (I-183) + (S13-2); (I-183) + (S13-3); (I-183) + (S13-4): (I-183) + (S13-5); (I-183) + (S13-6); (I-183) + (S13-7); (I-183) + (S13-8); (I-183) + (S13-9); (I-183) + (S14-1)
(I-184) + (S1-1); (I-184) + (S1-2); (I-184) + (S1-3); (I-184) + (S1-4); (I-184) + (S1-5); (I-184) + (S1-6); (I-184) + (S1-7); (I-184) + (S1-8); (I-184) + (S1-9); (I-184) + (S1-10); (I-184) + (S1-11); (I-184) + (S1-12); (I-184) + (S1-13); (I-184) + (S2-1); (I-184) + (S2-2); (I-184) + (S2-3); (I-184) + (S2-4); (I-184) + (S2-5); (I-184) + (S2-6); (I-184) + (S2-7); (I-184) + (S2-8); (I-184) + (S2-9); (I-184) + (S2-10); (I-184) + (S3-1); (I-184) + (S3-2); (I-184) + (S3-3); (I-184) + (S3-4); (I-184) + (S3-5); (I-184) + (S3-6); (I-184) + (S3-7); (I-184) + (S3-8); (I-184) + (S3-9); (I-184) + (S3-10); (I-184) + (S3-11); (I-184) + (S4-1); (I-184) + (S4-2); (I-184) + (S4-3); (I-184) + (S4-4); (I-184) + (S4-5); (I-184) + (S7-1); (I-184) + (S11-1); (I-184) + (S11-2); (I-184) + (S11-3); (I-184) + (S12-1); (I-184) + (S13-1); (I-184) + (S13-2); (I-184) + (S13-3); (I-184) + (S13-4): (I-184) + (S13-5); (I-184) + (S13-6); (I-184) + (S13-7); (I-184) + (S13-8); (I-184) + (S13-9); (I-184) + (S14-1)
(I-185) + (S1-1); (I-185) + (S1-2); (I-185) + (S1-3); (I-185) + (S1-4); (I-185) + (S1-5); (I-185) + (S1-6); (I-185) + (S1-7); (I-185) + (S1-8); (I-185) + (S1-9); (I-185) + (S1-10); (I-185) + (S1-11); (I-185) + (S1-12); (I-185) + (S1-13); (I-185) + (S2-1); (I-185) + (S2-2); (I-185) + (S2-3); (I-185) + (S2-4); (I-185) + (S2-5); (I-185) + (S2-6); (I-185) + (S2-7); (I-185) + (S2-8); (I-185) + (S2-9); (I-185) + (S2-10); (I-185) + (S3-1); (I-185) + (S3-2); (I-185) + (S3-3); (I-185) + (S3-4); (I-185) + (S3-5); (I-185) + (S3-6); (I-185) + (S3-7); (I-185) + (S3-8); (I-185) + (S3-9); (I-185) + (S3-10); (I-185) + (S3-11); (I-185) + (S4-1); (I-185) + (S4-2); (I-185) + (S4-3); (I-185) + (S4-4); (I-185) + (S4-5); (I-185) + (S7-1); (I-185) + (S11-1); (I-185) + (S11-2); (I-185) + (S11-3); (I-185) + (S12-1); (I-185) + (S13-1); (I-185) + (S13-2); (I-185) + (S13-3); (I-185) + (S13-4): (I-185) + (S13-5); (I-185) + (S13-6); (I-185) + (S13-7); (I-185) + (S13-8); (I-185) + (S13-9); (I-185) + (S14-1)
(I-186) + (S1-1); (I-186) + (S1-2); (I-186) + (S1-3); (I-186) + (S1-4); (I-186) + (S1-5); (I-186) + (S1-6); (I-186) + (S1-7); (I-186) + (S1-8); (I-186) + (S1-9); (I-186) + (S1-10); (I-186) + (S1-11); (I-186) + (S1-12); (I-186) + (S1-13); (I-186) + (S2-1); (I-186) + (S2-2); (I-186) + (S2-3); (I-186) + (S2-4); (I-186) + (S2-5); (I-186) + (S2-6); (I-186) + (S2-7); (I-186) + (S2-8); (I-186) + (S2-9); (I-186) + (S2-10); (I-186) + (S3-1); (I-186) + (S3-2); (I-186) + (S3-3); (I-186) + (S3-4); (I-186) + (S3-5); (I-186) + (S3-6); (I-186) + (S3-7); (I-186) + (S3-8); (I-186) + (S3-9); (I-186) + (S3-10); (I-186) + (S3-11); (I-186) + (S4-1); (I-186) + (S4-2); (I-186) + (S4-3); (I-186) + (S4-4); (I-186) + (S4-5); (I-186) + (S7-1); (I-186) + (S11-1); (I-186) + (S11-2); (I-186) + (S11-3); (I-186) + (S12-1); (I-186) + (S13-1); (I-186) + (S13-2); (I-186) + (S13-3); (I-186) + (S13-4): (I-186) + (S13-5); (I-186) + (S13-6); (I-186) + (S13-7); (I-186) + (S13-8); (I-186) + (S13-9); (I-186) + (S14-1)
(I-187) + (S1-1); (I-187) + (S1-2); (I-187) + (S1-3); (I-187) + (S1-4); (I-187) + (S1-5); (I-187) + (S1-6); (I-187) + (S1-7); (I-187) + (S1-8); (I-187) + (S1-9); (I-187) + (S1-10); (I-187) + (S1-11); (I-187) + (S1-12); (I-187) + (S1-13); (I-187) + (S2-1); (I-187) + (S2-2); (I-187) + (S2-3); (I-187) + (S2-4); (I-187) + (S2-5); (I-187) + (S2-6); (I-187) + (S2-7); (I-187) + (S2-8); (I-187) + (S2-9); (I-187) + (S2-10); (I-187) + (S3-1); (I-187) + (S3-2); (I-187) + (S3-3); (I-187) + (S3-4); (I-187) + (S3-5); (I-187) + (S3-6); (I-187) + (S3-7); (I-187) + (S3-8); (I-187) + (S3-9); (I-187) + (S3-10); (I-187) + (S3-11); (I-187) + (S4-1); (I-187) + (S4-2); (I-187) + (S4-3); (I-187) + (S4-4); (I-187) + (S4-5); (I-187) + (S7-1); (I-187) + (S11-1); (I-187) + (S11-2); (I-187) + (S11-3); (I-187) + (S12-1); (I-187) + (S13-1); (I-187) + (S13-2); (I-187) + (S13-3); (I-187) + (S13-4): (I-187) + (S13-5); (I-187) + (S13-6); (I-187) + (S13-7); (I-187) + (S13-8); (I-187) + (S13-9); (I-187) + (S14-1)
(I-188) + (S1-1); (I-188) + (S1-2); (I-188) + (S1-3); (I-188) + (S1-4); (I-188) + (S1-5); (I-188) + (S1-6); (I-188) + (S1-7); (I-188) + (S1-8); (I-188) + (S1-9); (I-188) + (S1-10); (I-188) + (S1-11); (I-188) + (S1-12); (I-188) + (S1-13); (I-188) + (S2-1); (I-188) + (S2-2); (I-188) + (S2-3); (I-188) + (S2-4); (I-188) + (S2-5); (I-188) + (S2-6); (I-188) + (S2-7); (I-188) + (S2-8); (I-188) + (S2-9); (I-188) + (S2-10); (I-188) + (S3-1); (I-188) + (S3-2); (I-188) + (S3-3); (I-188) + (S3-4); (I-188) + (S3-5); (I-188) + (S3-6); (I-188) + (S3-7); (I-188) + (S3-8); (I-188) + (S3-9); (I-188) + (S3-10); (I-188) + (S3-11); (I-188) + (S4-1); (I-188) + (S4-2); (I-188) + (S4-3); (I-188) + (S4-4); (I-188) + (S4-5); (I-188) + (S7-1); (I-188) + (S11-1); (I-188) + (S11-2); (I-188) + (S11-3); (I-188) + (S12-1); (I-188) + (S13-1); (I-188) + (S13-2); (I-188) + (S13-3); (I-188) + (S13-4): (I-188) + (S13-5); (I-188) + (S13-6); (I-188) + (S13-7); (I-188) + (S13-8); (I-188) + (S13-9); (I-188) + (S14-1)
(I-189) + (S1-1); (I-189) + (S1-2); (I-189) + (S1-3); (I-189) + (S1-4); (I-189) + (S1-5); (I-189) + (S1-6); (I-189) + (S1-7); (I-189) + (S1-8); (I-189) + (S1-9); (I-189) + (S1-10); (I-189) + (S1-11); (I-189) + (S1-12); (I-189) + (S1-13); (I-189) + (S2-1); (I-189) + (S2-2); (I-189) + (S2-3); (I-189) + (S2-4); (I-189) + (S2-5); (I-189) + (S2-6); (I-189) + (S2-7); (I-189) + (S2-8); (I-189) + (S2-9); (I-189) + (S2-10); (I-189) + (S3-1); (I-189) + (S3-2); (I-189) + (S3-3); (I-189) + (S3-4); (I-189) + (S3-5); (I-189) + (S3-6); (I-189) + (S3-7); (I-189) + (S3-8); (I-189) + (S3-9); (I-189) + (S3-10); (I-189) + (S3-11); (I-189) + (S4-1); (I-189) + (S4-2); (I-189) + (S4-3); (I-189) + (S4-4); (I-189) + (S4-5); (I-189) + (S7-1); (I-189) + (S11-1); (I-189) + (S11-2); (I-189) + (S11-3); (I-189) + (S12-1); (I-189) + (S13-1); (I-189) + (S13-2); (I-189) + (S13-3); (I-189) + (S13-4): (I-189) + (S13-5); (I-189) + (S13-6); (I-189) + (S13-7); (I-189) + (S13-8); (I-189) + (S13-9); (I-189) + (S14-1)
(I-190) + (S1-1); (I-190) + (S1-2); (I-190) + (S1-3); (I-190) + (S1-4); (I-190) + (S1-5); (I-190) + (S1-6); (I-190) + (S1-7); (I-190) + (S1-8); (I-190) + (S1-9); (I-190) + (S1-10); (I-190) + (S1-11); (I-190) + (S1-12); (I-190) + (S1-13); (I-190) + (S2-1); (I-190) + (S2-2); (I-190) + (S2-3); (I-190) + (S2-4); (I-190) + (S2-5); (I-190) + (S2-6); (I-190) + (S2-7); (I-190) + (S2-8); (I-190) + (S2-9); (I-190) + (S2-10); (I-190) + (S3-1); (I-190) + (S3-2); (I-190) + (S3-3); (I-190) + (S3-4); (I-190) + (S3-5); (I-190) + (S3-6); (I-190) + (S3-7); (I-190) + (S3-8); (I-190) + (S3-9); (I-190) + (S3-10); (I-190) + (S3-11); (I-190) + (S4-1); (I-190) + (S4-2); (I-190) + (S4-3); (I-190) + (S4-4); (I-190) + (S4-5); (I-190) + (S7-1); (I-190) + (S11-1); (I-190) + (S11-2); (I-190) + (S11-3); (I-190) + (S12-1); (I-190) + (S13-1); (I-190) + (S13-2); (I-190) + (S13-3); (I-190) + (S13-4): (I-190) + (S13-5); (I-190) + (S13-6); (I-190) + (S13-7); (I-190) + (S13-8); (I-190) + (S13-9); (I-190) + (S14-1)
(I-191) + (S1-1); (I-191) + (S1-2); (I-191) + (S1-3); (I-191) + (S1-4); (I-191) + (S1-5); (I-191) + (S1-6); (I-191) + (S1-7); (I-191) + (S1-8); (I-191) + (S1-9); (I-191) + (S1-10); (I-191) + (S1-11); (I-191) + (S1-12); (I-191) + (S1-13); (I-191) + (S2-1); (I-191) + (S2-2); (I-191) + (S2-3); (I-191) + (S2-4); (I-191) + (S2-5); (I-191) + (S2-6); (I-191) + (S2-7); (I-191) + (S2-8); (I-191) + (S2-9); (I-191) + (S2-10); (I-191) + (S3-1); (I-191) + (S3-2); (I-191) + (S3-3); (I-191) + (S3-4); (I-191) + (S3-5); (I-191) + (S3-6); (I-191) + (S3-7); (I-191) + (S3-8); (I-191) + (S3-9); (I-191) + (S3-10); (I-191) + (S3-11); (I-191) + (S4-1); (I-191) + (S4-2); (I-191) + (S4-3); (I-191) + (S4-4); (I-191) + (S4-5); (I-191) + (S7-1); (I-191) + (S11-1); (I-191) + (S11-2); (I-191) + (S11-3); (I-191) + (S12-1); (I-191) + (S13-1); (I-191) + (S13-2); (I-191) + (S13-3); (I-191) + (S13-4): (I-191) + (S13-5); (I-191) + (S13-6); (I-191) + (S13-7); (I-191) + (S13-8); (I-191) + (S13-9); (I-191) + (S14-1)
(I-192) + (S1-1); (I-192) + (S1-2); (I-192) + (S1-3); (I-192) + (S1-4); (I-192) + (S1-5); (I-192) + (S1-6); (I-192) + (S1-7); (I-192) + (S1-8); (I-192) + (S1-9); (I-192) + (S1-10); (I-192) + (S1-11); (I-192) + (S1-12); (I-192) + (S1-13); (I-192) + (S2-1); (I-192) + (S2-2); (I-192) + (S2-3); (I-192) + (S2-4); (I-192) + (S2-5); (I-192) + (S2-6); (I-192) + (S2-7); (I-192) + (S2-8); (I-192) + (S2-9); (I-192) + (S2-10); (I-192) + (S3-1); (I-192) + (S3-2); (I-192) + (S3-3); (I-192) + (S3-4); (I-192) + (S3-5); (I-192) + (S3-6); (I-192) + (S3-7); (I-192) + (S3-8); (I-192) + (S3-9); (I-192) + (S3-10); (I-192) + (S3-11); (I-192) + (S4-1); (I-192) + (S4-2); (I-192) + (S4-3); (I-192) + (S4-4); (I-192) + (S4-5); (I-192) + (S7-1); (I-192) + (S11-1); (I-192) + (S11-2); (I-192) + (S11-3); (I-192) + (S12-1); (I-192) + (S13-1); (I-192) + (S13-2); (I-192) + (S13-3); (I-192) + (S13-4): (I-192) + (S13-5); (I-192) + (S13-6); (I-192) + (S13-7); (I-192) + (S13-8); (I-192) + (S13-9); (I-192) + (S14-1)
(I-193) + (S1-1); (I-193) + (S1-2); (I-193) + (S1-3); (I-193) + (S1-4); (I-193) + (S1-5); (I-193) + (S1-6); (I-193) + (S1-7); (I-193) + (S1-8); (I-193) + (S1-9); (I-193) + (S1-10); (I-193) + (S1-11); (I-193) + (S1-12); (I-193) + (S1-13); (I-193) + (S2-1); (I-193) + (S2-2); (I-193) + (S2-3); (I-193) + (S2-4); (I-193) + (S2-5); (I-193) + (S2-6); (I-193) + (S2-7); (I-193) + (S2-8); (I-193) + (S2-9); (I-193) + (S2-10); (I-193) + (S3-1); (I-193) + (S3-2); (I-193) + (S3-3); (I-193) + (S3-4); (I-193) + (S3-5); (I-193) + (S3-6); (I-193) + (S3-7); (I-193) + (S3-8); (I-193) + (S3-9); (I-193) + (S3-10); (I-193) + (S3-11); (I-193) + (S4-1); (I-193) + (S4-2); (I-193) + (S4-3); (I-193) + (S4-4); (I-193) + (S4-5); (I-193) + (S7-1); (I-193) + (S11-1); (I-193) + (S11-2); (I-193) + (S11-3); (I-193) + (S12-1); (I-193) + (S13-1); (I-193) + (S13-2); (I-193) + (S13-3); (I-193) + (S13-4): (I-193) + (S13-5); (I-193) + (S13-6); (I-193) + (S13-7); (I-193) + (S13-8); (I-193) + (S13-9); (I-193) + (S14-1)
(I-194) + (S1-1); (I-194) + (S1-2); (I-194) + (S1-3); (I-194) + (S1-4); (I-194) + (S1-5); (I-194) + (S1-6); (I-194) + (S1-7); (I-194) + (S1-8); (I-194) + (S1-9); (I-194) + (S1-10); (I-194) + (S1-11); (I-194) + (S1-12); (I-194) + (S1-13); (I-194) + (S2-1); (I-194) + (S2-2); (I-194) + (S2-3); (I-194) + (S2-4); (I-194) + (S2-5); (I-194) + (S2-6); (I-194) + (S2-7); (I-194) + (S2-8); (I-194) + (S2-9); (I-194) + (S2-10); (I-194) + (S3-1); (I-194) + (S3-2); (I-194) + (S3-3); (I-194) + (S3-4); (I-194) + (S3-5); (I-194) + (S3-6); (I-194) + (S3-7); (I-194) + (S3-8); (I-194) + (S3-9); (I-194) + (S3-10); (I-194) + (S3-11); (I-194) + (S4-1); (I-194) + (S4-2); (I-194) + (S4-3); (I-194) + (S4-4); (I-194) + (S4-5); (I-194) + (S7-1); (I-194) + (S11-1); (I-194) + (S11-2); (I-194) + (S11-3); (I-194) + (S12-1); (I-194) + (S13-1); (I-194) + (S13-2); (I-194) + (S13-3); (I-194) + (S13-4): (I-194) + (S13-5); (I-194) + (S13-6); (I-194) + (S13-7); (I-194) + (S13-8); (I-194) + (S13-9); (I-194) + (S14-1)
(I-195) + (S1-1); (I-195) + (S1-2); (I-195) + (S1-3); (I-195) + (S1-4); (I-195) + (S1-5); (I-195) + (S1-6); (I-195) + (S1-7); (I-195) + (S1-8); (I-195) + (S1-9); (I-195) + (S1-10); (I-195) + (S1-11); (I-195) + (S1-12); (I-195) + (S1-13); (I-195) + (S2-1); (I-195) + (S2-2); (I-195) + (S2-3); (I-195) + (S2-4); (I-195) + (S2-5); (I-195) + (S2-6); (I-195) + (S2-7); (I-195) + (S2-8); (I-195) + (S2-9); (I-195) + (S2-10); (I-195) + (S3-1); (I-195) + (S3-2); (I-195) + (S3-3); (I-195) + (S3-4); (I-195) + (S3-5); (I-195) + (S3-6); (I-195) + (S3-7); (I-195) + (S3-8); (I-195) + (S3-9); (I-195) + (S3-10); (I-195) + (S3-11); (I-195) + (S4-1); (I-195) + (S4-2); (I-195) + (S4-3); (I-195) + (S4-4); (I-195) + (S4-5); (I-195) + (S7-1); (I-195) + (S11-1); (I-195) + (S11-2); (I-195) + (S11-3); (I-195) + (S12-1); (I-195) + (S13-1); (I-195) + (S13-2); (I-195) + (S13-3); (I-195) + (S13-4): (I-195) + (S13-5); (I-195) + (S13-6); (I-195) + (S13-7); (I-195) + (S13-8); (I-195) + (S13-9); (I-195) + (S14-1)
(I-196) + (S1-1); (I-196) + (S1-2); (I-196) + (S1-3); (I-196) + (S1-4); (I-196) + (S1-5); (I-196) + (S1-6); (I-196) + (S1-7); (I-196) + (S1-8); (I-196) + (S1-9); (I-196) + (S1-10); (I-196) + (S1-11); (I-196) + (S1-12); (I-196) + (S1-13); (I-196) + (S2-1); (I-196) + (S2-2); (I-196) + (S2-3); (I-196) + (S2-4); (I-196) + (S2-5); (I-196) + (S2-6); (I-196) + (S2-7); (I-196) + (S2-8); (I-196) + (S2-9); (I-196) + (S2-10); (I-196) + (S3-1); (I-196) + (S3-2); (I-196) + (S3-3); (I-196) + (S3-4); (I-196) + (S3-5); (I-196) + (S3-6); (I-196) + (S3-7); (I-196) + (S3-8); (I-196) + (S3-9); (I-196) + (S3-10); (I-196) + (S3-11); (I-196) + (S4-1); (I-196) + (S4-2); (I-196) + (S4-3); (I-196) + (S4-4); (I-196) + (S4-5); (I-196) + (S7-1); (I-196) + (S11-1); (I-196) + (S11-2); (I-196) + (S11-3); (I-196) + (S12-1); (I-196) + (S13-1); (I-196) + (S13-2); (I-196) + (S13-3); (I-196) + (S13-4): (I-196) + (S13-5); (I-196) + (S13-6); (I-196) + (S13-7); (I-196) + (S13-8); (I-196) + (S13-9); (I-196) + (S14-1)
(I-197) + (S1-1); (I-197) + (S1-2); (I-197) + (S1-3); (I-197) + (S1-4); (I-197) + (S1-5); (I-197) + (S1-6); (I-197) + (S1-7); (I-197) + (S1-8); (I-197) + (S1-9); (I-197) + (S1-10); (I-197) + (S1-11); (I-197) + (S1-12); (I-197) + (S1-13); (I-197) + (S2-1); (I-197) + (S2-2); (I-197) + (S2-3); (I-197) + (S2-4); (I-197) + (S2-5); (I-197) + (S2-6); (I-197) + (S2-7); (I-197) + (S2-8); (I-197) + (S2-9); (I-197) + (S2-10); (I-197) + (S3-1); (I-197) + (S3-2); (I-197) + (S3-3); (I-197) + (S3-4); (I-197) + (S3-5); (I-197) + (S3-6); (I-197) + (S3-7); (I-197) + (S3-8); (I-197) + (S3-9); (I-197) + (S3-10); (I-197) + (S3-11); (I-197) + (S4-1); (I-197) + (S4-2); (I-197) + (S4-3); (I-197) + (S4-4); (I-197) + (S4-5); (I-197) + (S7-1); (I-197) + (S11-1); (I-197) + (S11-2); (I-197) + (S11-3); (I-197) + (S12-1); (I-197) + (S13-1); (I-197) + (S13-2); (I-197) + (S13-3); (I-197) + (S13-4): (I-197) + (S13-5); (I-197) + (S13-6); (I-197) + (S13-7); (I-197) + (S13-8); (I-197) + (S13-9); (I-197) + (S14-1)
(I-198) + (S1-1); (I-198) + (S1-2); (I-198) + (S1-3); (I-198) + (S1-4); (I-198) + (S1-5); (I-198) + (S1-6); (I-198) + (S1-7); (I-198) + (S1-8); (I-198) + (S1-9); (I-198) + (S1-10); (I-198) + (S1-11); (I-198) + (S1-12); (I-198) + (S1-13); (I-198) + (S2-1); (I-198) + (S2-2); (I-198) + (S2-3); (I-198) + (S2-4); (I-198) + (S2-5); (I-198) + (S2-6); (I-198) + (S2-7); (I-198) + (S2-8); (I-198) + (S2-9); (I-198) + (S2-10); (I-198) + (S3-1); (I-198) + (S3-2); (I-198) + (S3-3); (I-198) + (S3-4); (I-198) + (S3-5); (I-198) + (S3-6); (I-198) + (S3-7); (I-198) + (S3-8); (I-198) + (S3-9); (I-198) + (S3-10); (I-198) + (S3-11); (I-198) + (S4-1); (I-198) + (S4-2); (I-198) + (S4-3); (I-198) + (S4-4); (I-198) + (S4-5); (I-198) + (S7-1); (I-198) + (S11-1); (I-198) + (S11-2); (I-198) + (S11-3); (I-198) + (S12-1); (I-198) + (S13-1); (I-198) + (S13-2); (I-198) + (S13-3); (I-198) + (S13-4): (I-198) + (S13-5); (I-198) + (S13-6); (I-198) + (S13-7); (I-198) + (S13-8); (I-198) + (S13-9); (I-198) + (S14-1)
(I-199) + (S1-1); (I-199) + (S1-2); (I-199) + (S1-3); (I-199) + (S1-4); (I-199) + (S1-5); (I-199) + (S1-6); (I-199) + (S1-7); (I-199) + (S1-8); (I-199) + (S1-9); (I-199) + (S1-10); (I-199) + (S1-11); (I-199) + (S1-12); (I-199) + (S1-13); (I-199) + (S2-1); (I-199) + (S2-2); (I-199) + (S2-3); (I-199) + (S2-4); (I-199) + (S2-5); (I-199) + (S2-6); (I-199) + (S2-7); (I-199) + (S2-8); (I-199) + (S2-9); (I-199) + (S2-10); (I-199) + (S3-1); (I-199) + (S3-2); (I-199) + (S3-3); (I-199) + (S3-4); (I-199) + (S3-5); (I-199) + (S3-6); (I-199) + (S3-7); (I-199) + (S3-8); (I-199) + (S3-9); (I-199) + (S3-10); (I-199) + (S3-11); (I-199) + (S4-1); (I-199) + (S4-2); (I-199) + (S4-3); (I-199) + (S4-4); (I-199) + (S4-5); (I-199) + (S7-1); (I-199) + (S11-1); (I-199) + (S11-2); (I-199) + (S11-3); (I-199) + (S12-1); (I-199) + (S13-1); (I-199) + (S13-2); (I-199) + (S13-3); (I-199) + (S13-4): (I-199) + (S13-5); (I-199) + (S13-6); (I-199) + (S13-7); (I-199) + (S13-8); (I-199) + (S13-9); (I-199) + (S14-1)
(I-200) + (S1-1); (I-200) + (S1-2); (I-200) + (S1-3); (I-200) + (S1-4); (I-200) + (S1-5); (I-200) + (S1-6); (I-200) + (S1-7); (I-200) + (S1-8); (I-200) + (S1-9); (I-200) + (S1-10); (I-200) + (S1-11); (I-200) + (S1-12); (I-200) + (S1-13); (I-200) + (S2-1); (I-200) + (S2-2); (I-200) + (S2-3); (I-200) + (S2-4); (I-200) + (S2-5); (I-200) + (S2-6); (I-200) + (S2-7); (I-200) + (S2-8); (I-200) + (S2-9); (I-200) + (S2-10); (I-200) + (S3-1); (I-200) + (S3-2); (I-200) + (S3-3); (I-200) + (S3-4); (I-200) + (S3-5); (I-200) + (S3-6); (I-200) + (S3-7); (I-200) + (S3-8); (I-200) + (S3-9); (I-200) + (S3-10); (I-200) + (S3-11); (I-200) + (S4-1); (I-200) + (S4-2); (I-200) + (S4-3); (I-200) + (S4-4); (I-200) + (S4-5); (I-200) + (S7-1); (I-200) + (S11-1); (I-200) + (S11-2); (I-200) + (S11-3); (I-200) + (S12-1); (I-200) + (S13-1); (I-200) + (S13-2); (I-200) + (S13-3); (I-200) + (S13-4): (I-200) + (S13-5); (I-200) + (S13-6); (I-200) + (S13-7); (I-200) + (S13-8); (I-200) + (S13-9); (I-200) + (S14-1)
(I-201) + (S1-1); (I-201) + (S1-2); (I-201) + (S1-3); (I-201) + (S1-4); (I-201) + (S1-5); (I-201) + (S1-6); (I-201) + (S1-7); (I-201) + (S1-8); (I-201) + (S1-9); (I-201) + (S1-10); (I-201) + (S1-11); (I-201) + (S1-12); (I-201) + (S1-13); (I-201) + (S2-1); (I-201) + (S2-2); (I-201) + (S2-3); (I-201) + (S2-4); (I-201) + (S2-5); (I-201) + (S2-6); (I-201) + (S2-7); (I-201) + (S2-8); (I-201) + (S2-9); (I-201) + (S2-10); (I-201) + (S3-1); (I-201) + (S3-2); (I-201) + (S3-3); (I-201) + (S3-4); (I-201) + (S3-5); (I-201) + (S3-6); (I-201) + (S3-7); (I-201) + (S3-8); (I-201) + (S3-9); (I-201) + (S3-10); (I-201) + (S3-11); (I-201) + (S4-1); (I-201) + (S4-2); (I-201) + (S4-3); (I-201) + (S4-4); (I-201) + (S4-5); (I-201) + (S7-1); (I-201) + (S11-1); (I-201) + (S11-2); (I-201) + (S11-3); (I-201) + (S12-1); (I-201) + (S13-1); (I-201) + (S13-2); (I-201) + (S13-3); (I-201) + (S13-4): (I-201) + (S13-5); (I-201) + (S13-6); (I-201) + (S13-7); (I-201) + (S13-8); (I-201) + (S13-9); (I-201) + (S14-1)
(I-202) + (S1-1); (I-202) + (S1-2); (I-202) + (S1-3); (I-202) + (S1-4); (I-202) + (S1-5); (I-202) + (S1-6); (I-202) + (S1-7); (I-202) + (S1-8); (I-202) + (S1-9); (I-202) + (S1-10); (I-202) + (S1-11); (I-202) + (S1-12); (I-202) + (S1-13); (I-202) + (S2-1); (I-202) + (S2-2); (I-202) + (S2-3); (I-202) + (S2-4); (I-202) + (S2-5); (I-202) + (S2-6); (I-202) + (S2-7); (I-202) + (S2-8); (I-202) + (S2-9); (I-202) + (S2-10); (I-202) + (S3-1); (I-202) + (S3-2); (I-202) + (S3-3); (I-202) + (S3-4); (I-202) + (S3-5); (I-202) + (S3-6); (I-202) + (S3-7); (I-202) + (S3-8); (I-202) + (S3-9); (I-202) + (S3-10); (I-202) + (S3-11); (I-202) + (S4-1); (I-202) + (S4-2); (I-202) + (S4-3); (I-202) + (S4-4); (I-202) + (S4-5); (I-202) + (S7-1); (I-202) + (S11-1); (I-202) + (S11-2); (I-202) + (S11-3); (I-202) + (S12-1); (I-202) + (S13-1); (I-202) + (S13-2); (I-202) + (S13-3); (I-202) + (S13-4): (I-202) + (S13-5); (I-202) + (S13-6); (I-202) + (S13-7); (I-202) + (S13-8); (I-202) + (S13-9); (I-202) + (S14-1)
(I-203) + (S1-1); (I-203) + (S1-2); (I-203) + (S1-3); (I-203) + (S1-4); (I-203) + (S1-5); (I-203) + (S1-6); (I-203) + (S1-7); (I-203) + (S1-8); (I-203) + (S1-9); (I-203) + (S1-10); (I-203) + (S1-11); (I-203) + (S1-12); (I-203) + (S1-13); (I-203) + (S2-1); (I-203) + (S2-2); (I-203) + (S2-3); (I-203) + (S2-4); (I-203) + (S2-5); (I-203) + (S2-6); (I-203) + (S2-7); (I-203) + (S2-8); (I-203) + (S2-9); (I-203) + (S2-10); (I-203) + (S3-1); (I-203) + (S3-2); (I-203) + (S3-3); (I-203) + (S3-4); (I-203) + (S3-5); (I-203) + (S3-6); (I-203) + (S3-7); (I-203) + (S3-8); (I-203) + (S3-9); (I-203) + (S3-10); (I-203) + (S3-11); (I-203) + (S4-1); (I-203) + (S4-2); (I-203) + (S4-3); (I-203) + (S4-4); (I-203) + (S4-5); (I-203) + (S7-1); (I-203) + (S11-1); (I-203) + (S11-2); (I-203) + (S11-3); (I-203) + (S12-1); (I-203) + (S13-1); (I-203) + (S13-2); (I-203) + (S13-3); (I-203) + (S13-4): (I-203) + (S13-5); (I-203) + (S13-6); (I-203) + (S13-7); (I-203) + (S13-8); (I-203) + (S13-9); (I-203) + (S14-1)
(I-204) + (S1-1); (I-204) + (S1-2); (I-204) + (S1-3); (I-204) + (S1-4); (I-204) + (S1-5); (I-204) + (S1-6); (I-204) + (S1-7); (I-204) + (S1-8); (I-204) + (S1-9); (I-204) + (S1-10); (I-204) + (S1-11); (I-204) + (S1-12); (I-204) + (S1-13); (I-204) + (S2-1); (I-204) + (S2-2); (I-204) + (S2-3); (I-204) + (S2-4); (I-204) + (S2-5); (I-204) + (S2-6); (I-204) + (S2-7); (I-204) + (S2-8); (I-204) + (S2-9); (I-204) + (S2-10); (I-204) + (S3-1); (I-204) + (S3-2); (I-204) + (S3-3); (I-204) + (S3-4); (I-204) + (S3-5); (I-204) + (S3-6); (I-204) + (S3-7); (I-204) + (S3-8); (I-204) + (S3-9); (I-204) + (S3-10); (I-204) + (S3-11); (I-204) + (S4-1); (I-204) + (S4-2); (I-204) + (S4-3); (I-204) + (S4-4); (I-204) + (S4-5); (I-204) + (S7-1); (I-204) + (S11-1); (I-204) + (S11-2); (I-204) + (S11-3); (I-204) + (S12-1); (I-204) + (S13-1); (I-204) + (S13-2); (I-204) + (S13-3); (I-204) + (S13-4): (I-204) + (S13-5); (I-204) + (S13-6); (I-204) + (S13-7); (I-204) + (S13-8); (I-204) + (S13-9); (I-204) + (S14-1)
(I-205) + (S1-1); (I-205) + (S1-2); (I-205) + (S1-3); (I-205) + (S1-4); (I-205) + (S1-5); (I-205) + (S1-6); (I-205) + (S1-7); (I-205) + (S1-8); (I-205) + (S1-9); (I-205) + (S1-10); (I-205) + (S1-11); (I-205) + (S1-12); (I-205) + (S1-13); (I-205) + (S2-1); (I-205) + (S2-2); (I-205) + (S2-3); (I-205) + (S2-4); (I-205) + (S2-5); (I-205) + (S2-6); (I-205) + (S2-7); (I-205) + (S2-8); (I-205) + (S2-9); (I-205) + (S2-10); (I-205) + (S3-1); (I-205) + (S3-2); (I-205) + (S3-3); (I-205) + (S3-4); (I-205) + (S3-5); (I-205) + (S3-6); (I-205) + (S3-7); (I-205) + (S3-8); (I-205) + (S3-9); (I-205) + (S3-10); (I-205) + (S3-11); (I-205) + (S4-1); (I-205) + (S4-2); (I-205) + (S4-3); (I-205) + (S4-4); (I-205) + (S4-5); (I-205) + (S7-1); (I-205) + (S11-1); (I-205) + (S11-2); (I-205) + (S11-3); (I-205) + (S12-1); (I-205) + (S13-1); (I-205) + (S13-2); (I-205) + (S13-3); (I-205) + (S13-4): (I-205) + (S13-5); (I-205) + (S13-6); (I-205) + (S13-7); (I-205) + (S13-8); (I-205) + (S13-9); (I-205) + (S14-1)
(I-206) + (S1-1); (I-206) + (S1-2); (I-206) + (S1-3); (I-206) + (S1-4); (I-206) + (S1-5); (I-206) + (S1-6); (I-206) + (S1-7); (I-206) + (S1-8); (I-206) + (S1-9); (I-206) + (S1-10); (I-206) + (S1-11); (I-206) + (S1-12); (I-206) + (S1-13); (I-206) + (S2-1); (I-206) + (S2-2); (I-206) + (S2-3); (I-206) + (S2-4); (I-206) + (S2-5); (I-206) + (S2-6); (I-206) + (S2-7); (I-206) + (S2-8); (I-206) + (S2-9); (I-206) + (S2-10); (I-206) + (S3-1); (I-206) + (S3-2); (I-206) + (S3-3); (I-206) + (S3-4); (I-206) + (S3-5); (I-206) + (S3-6); (I-206) + (S3-7); (I-206) + (S3-8); (I-206) + (S3-9); (I-206) + (S3-10); (I-206) + (S3-11); (I-206) + (S4-1); (I-206) + (S4-2); (I-206) + (S4-3); (I-206) + (S4-4); (I-206) + (S4-5); (I-206) + (S7-1); (I-206) + (S11-1); (I-206) + (S11-2); (I-206) + (S11-3); (I-206) + (S12-1); (I-206) + (S13-1); (I-206) + (S13-2); (I-206) + (S13-3); (I-206) + (S13-4): (I-206) + (S13-5); (I-206) + (S13-6); (I-206) + (S13-7); (I-206) + (S13-8); (I-206) + (S13-9); (I-206) + (S14-1)
(I-207) + (S1-1); (I-207) + (S1-2); (I-207) + (S1-3); (I-207) + (S1-4); (I-207) + (S1-5); (I-207) + (S1-6); (I-207) + (S1-7); (I-207) + (S1-8); (I-207) + (S1-9); (I-207) + (S1-10); (I-207) + (S1-11); (I-207) + (S1-12); (I-207) + (S1-13); (I-207) + (S2-1); (I-207) + (S2-2); (I-207) + (S2-3); (I-207) + (S2-4); (I-207) + (S2-5); (I-207) + (S2-6); (I-207) + (S2-7); (I-207) + (S2-8); (I-207) + (S2-9); (I-207) + (S2-10); (I-207) + (S3-1); (I-207) + (S3-2); (I-207) + (S3-3); (I-207) + (S3-4); (I-207) + (S3-5); (I-207) + (S3-6); (I-207) + (S3-7); (I-207) + (S3-8); (I-207) + (S3-9); (I-207) + (S3-10); (I-207) + (S3-11); (I-207) + (S4-1); (I-207) + (S4-2); (I-207) + (S4-3); (I-207) + (S4-4); (I-207) + (S4-5); (I-207) + (S7-1); (I-207) + (S11-1); (I-207) + (S11-2); (I-207) + (S11-3); (I-207) + (S12-1); (I-207) + (S13-1); (I-207) + (S13-2); (I-207) + (S13-3); (I-207) + (S13-4): (I-207) + (S13-5); (I-207) + (S13-6); (I-207) + (S13-7); (I-207) + (S13-8); (I-207) + (S13-9); (I-207) + (S14-1)
(I-208) + (S1-1); (I-208) + (S1-2); (I-208) + (S1-3); (I-208) + (S1-4); (I-208) + (S1-5); (I-208) + (S1-6); (I-208) + (S1-7); (I-208) + (S1-8); (I-208) + (S1-9); (I-208) + (S1-10); (I-208) + (S1-11); (I-208) + (S1-12); (I-208) + (S1-13); (I-208) + (S2-1); (I-208) + (S2-2); (I-208) + (S2-3); (I-208) + (S2-4); (I-208) + (S2-5); (I-208) + (S2-6); (I-208) + (S2-7); (I-208) + (S2-8); (I-208) + (S2-9); (I-208) + (S2-10); (I-208) + (S3-1); (I-208) + (S3-2); (I-208) + (S3-3); (I-208) + (S3-4); (I-208) + (S3-5); (I-208) + (S3-6); (I-208) + (S3-7); (I-208) + (S3-8); (I-208) + (S3-9); (I-208) + (S3-10); (I-208) + (S3-11); (I-208) + (S4-1); (I-208) + (S4-2); (I-208) + (S4-3); (I-208) + (S4-4); (I-208) + (S4-5); (I-208) + (S7-1); (I-208) + (S11-1); (I-208) + (S11-2); (I-208) + (S11-3); (I-208) + (S12-1); (I-208) + (S13-1); (I-208) + (S13-2); (I-208) + (S13-3); (I-208) + (S13-4): (I-208) + (S13-5); (I-208) + (S13-6); (I-208) + (S13-7); (I-208) + (S13-8); (I-208) + (S13-9); (I-208) + (S14-1)
(I-209) + (S1-1); (I-209) + (S1-2); (I-209) + (S1-3); (I-209) + (S1-4); (I-209) + (S1-5); (I-209) + (S1-6); (I-209) + (S1-7); (I-209) + (S1-8); (I-209) + (S1-9); (I-209) + (S1-10); (I-209) + (S1-11); (I-209) + (S1-12); (I-209) + (S1-13); (I-209) + (S2-1); (I-209) + (S2-2); (I-209) + (S2-3); (I-209) + (S2-4); (I-209) + (S2-5); (I-209) + (S2-6); (I-209) + (S2-7); (I-209) + (S2-8); (I-209) + (S2-9); (I-209) + (S2-10); (I-209) + (S3-1); (I-209) + (S3-2); (I-209) + (S3-3); (I-209) + (S3-4); (I-209) + (S3-5); (I-209) + (S3-6); (I-209) + (S3-7); (I-209) + (S3-8); (I-209) + (S3-9); (I-209) + (S3-10); (I-209) + (S3-11); (I-209) + (S4-1); (I-209) + (S4-2); (I-209) + (S4-3); (I-209) + (S4-4); (I-209) + (S4-5); (I-209) + (S7-1); (I-209) + (S11-1); (I-209) + (S11-2); (I-209) + (S11-3); (I-209) + (S12-1); (I-209) + (S13-1); (I-209) + (S13-2); (I-209) + (S13-3); (I-209) + (S13-4): (I-209) + (S13-5); (I-209) + (S13-6); (I-209) + (S13-7); (I-209) + (S13-8); (I-209) + (S13-9); (I-209) + (S14-1)
(I-210) + (S1-1); (I-210) + (S1-2); (I-210) + (S1-3); (I-210) + (S1-4); (I-210) + (S1-5); (I-210) + (S1-6); (I-210) + (S1-7); (I-210) + (S1-8); (I-210) + (S1-9); (I-210) + (S1-10); (I-210) + (S1-11); (I-210) + (S1-12); (I-210) + (S1-13); (I-210) + (S2-1); (I-210) + (S2-2); (I-210) + (S2-3); (I-210) + (S2-4); (I-210) + (S2-5); (I-210) + (S2-6); (I-210) + (S2-7); (I-210) + (S2-8); (I-210) + (S2-9); (I-210) + (S2-10); (I-210) + (S3-1); (I-210) + (S3-2); (I-210) + (S3-3); (I-210) + (S3-4); (I-210) + (S3-5); (I-210) + (S3-6); (I-210) + (S3-7); (I-210) + (S3-8); (I-210) + (S3-9); (I-210) + (S3-10); (I-210) + (S3-11); (I-210) + (S4-1); (I-210) + (S4-2); (I-210) + (S4-3); (I-210) + (S4-4); (I-210) + (S4-5); (I-210) + (S7-1); (I-210) + (S11-1); (I-210) + (S11-2); (I-210) + (S11-3); (I-210) + (S12-1); (I-210) + (S13-1); (I-210) + (S13-2); (I-210) + (S13-3); (I-210) + (S13-4): (I-210) + (S13-5); (I-210) + (S13-6); (I-210) + (S13-7); (I-210) + (S13-8); (I-210) + (S13-9); (I-210) + (S14-1)
(I-211) + (S1-1); (I-211) + (S1-2); (I-211) + (S1-3); (I-211) + (S1-4); (I-211) + (S1-5); (I-211) + (S1-6); (I-211) + (S1-7); (I-211) + (S1-8); (I-211) + (S1-9); (I-211) + (S1-10); (I-211) + (S1-11); (I-211) + (S1-12); (I-211) + (S1-13); (I-211) + (S2-1); (I-211) + (S2-2); (I-211) + (S2-3); (I-211) + (S2-4); (I-211) + (S2-5); (I-211) + (S2-6); (I-211) + (S2-7); (I-211) + (S2-8); (I-211) + (S2-9); (I-211) + (S2-10); (I-211) + (S3-1); (I-211) + (S3-2); (I-211) + (S3-3); (I-211) + (S3-4); (I-211) + (S3-5); (I-211) + (S3-6); (I-211) + (S3-7); (I-211) + (S3-8); (I-211) + (S3-9); (I-211) + (S3-10); (I-211) + (S3-11); (I-211) + (S4-1); (I-211) + (S4-2); (I-211) + (S4-3); (I-211) + (S4-4); (I-211) + (S4-5); (I-211) + (S7-1); (I-211) + (S11-1); (I-211) + (S11-2); (I-211) + (S11-3); (I-211) + (S12-1); (I-211) + (S13-1); (I-211) + (S13-2); (I-211) + (S13-3); (I-211) + (S13-4): (I-211) + (S13-5); (I-211) + (S13-6); (I-211) + (S13-7); (I-211) + (S13-8); (I-211) + (S13-9); (I-211) + (S14-1)
(I-212) + (S1-1); (I-212) + (S1-2); (I-212) + (S1-3); (I-212) + (S1-4); (I-212) + (S1-5); (I-212) + (S1-6); (I-212) + (S1-7); (I-212) + (S1-8); (I-212) + (S1-9); (I-212) + (S1-10); (I-212) + (S1-11); (I-212) + (S1-12); (I-212) + (S1-13); (I-212) + (S2-1); (I-212) + (S2-2); (I-212) + (S2-3); (I-212) + (S2-4); (I-212) + (S2-5); (I-212) + (S2-6); (I-212) + (S2-7); (I-212) + (S2-8); (I-212) + (S2-9); (I-212) + (S2-10); (I-212) + (S3-1); (I-212) + (S3-2); (I-212) + (S3-3); (I-212) + (S3-4); (I-212) + (S3-5); (I-212) + (S3-6); (I-212) + (S3-7); (I-212) + (S3-8); (I-212) + (S3-9); (I-212) + (S3-10); (I-212) + (S3-11); (I-212) + (S4-1); (I-212) + (S4-2); (I-212) + (S4-3); (I-212) + (S4-4); (I-212) + (S4-5); (I-212) + (S7-1); (I-212) + (S11-1); (I-212) + (S11-2); (I-212) + (S11-3); (I-212) + (S12-1); (I-212) + (S13-1); (I-212) + (S13-2); (I-212) + (S13-3); (I-212) + (S13-4): (I-212) + (S13-5); (I-212) + (S13-6); (I-212) + (S13-7); (I-212) + (S13-8); (I-212) + (S13-9); (I-212) + (S14-1)
(I-213) + (S1-1); (I-213) + (S1-2); (I-213) + (S1-3); (I-213) + (S1-4); (I-213) + (S1-5); (I-213) + (S1-6); (I-213) + (S1-7); (I-213) + (S1-8); (I-213) + (S1-9); (I-213) + (S1-10); (I-213) + (S1-11); (I-213) + (S1-12); (I-213) + (S1-13); (I-213) + (S2-1); (I-213) + (S2-2); (I-213) + (S2-3); (I-213) + (S2-4); (I-213) + (S2-5); (I-213) + (S2-6); (I-213) + (S2-7); (I-213) + (S2-8); (I-213) + (S2-9); (I-213) + (S2-10); (I-213) + (S3-1); (I-213) + (S3-2); (I-213) + (S3-3); (I-213) + (S3-4); (I-213) + (S3-5); (I-213) + (S3-6); (I-213) + (S3-7); (I-213) + (S3-8); (I-213) + (S3-9); (I-213) + (S3-10); (I-213) + (S3-11); (I-213) + (S4-1); (I-213) + (S4-2); (I-213) + (S4-3); (I-213) + (S4-4); (I-213) + (S4-5); (I-213) + (S7-1); (I-213) + (S11-1); (I-213) + (S11-2); (I-213) + (S11-3); (I-213) + (S12-1); (I-213) + (S13-1); (I-213) + (S13-2); (I-213) + (S13-3); (I-213) + (S13-4): (I-213) + (S13-5); (I-213) + (S13-6); (I-213) + (S13-7); (I-213) + (S13-8); (I-213) + (S13-9); (I-213) + (S14-1)
(I-214) + (S1-1); (I-214) + (S1-2); (I-214) + (S1-3); (I-214) + (S1-4); (I-214) + (S1-5); (I-214) + (S1-6); (I-214) + (S1-7); (I-214) + (S1-8); (I-214) + (S1-9); (I-214) + (S1-10); (I-214) + (S1-11); (I-214) + (S1-12); (I-214) + (S1-13); (I-214) + (S2-1); (I-214) + (S2-2); (I-214) + (S2-3); (I-214) + (S2-4); (I-214) + (S2-5); (I-214) + (S2-6); (I-214) + (S2-7); (I-214) + (S2-8); (I-214) + (S2-9); (I-214) + (S2-10); (I-214) + (S3-1); (I-214) + (S3-2); (I-214) + (S3-3); (I-214) + (S3-4); (I-214) + (S3-5); (I-214) + (S3-6); (I-214) + (S3-7); (I-214) + (S3-8); (I-214) + (S3-9); (I-214) + (S3-10); (I-214) + (S3-11); (I-214) + (S4-1); (I-214) + (S4-2); (I-214) + (S4-3); (I-214) + (S4-4); (I-214) + (S4-5); (I-214) + (S7-1); (I-214) + (S11-1); (I-214) + (S11-2); (I-214) + (S11-3); (I-214) + (S12-1); (I-214) + (S13-1); (I-214) + (S13-2); (I-214) + (S13-3); (I-214) + (S13-4): (I-214) + (S13-5); (I-214) + (S13-6); (I-214) + (S13-7); (I-214) + (S13-8); (I-214) + (S13-9); (I-214) + (S14-1)
(I-215) + (S1-1); (I-215) + (S1-2); (I-215) + (S1-3); (I-215) + (S1-4); (I-215) + (S1-5); (I-215) + (S1-6); (I-215) + (S1-7); (I-215) + (S1-8); (I-215) + (S1-9); (I-215) + (S1-10); (I-215) + (S1-11); (I-215) + (S1-12); (I-215) + (S1-13); (I-215) + (S2-1); (I-215) + (S2-2); (I-215) + (S2-3); (I-215) + (S2-4); (I-215) + (S2-5); (I-215) + (S2-6); (I-215) + (S2-7); (I-215) + (S2-8); (I-215) + (S2-9); (I-215) + (S2-10); (I-215) + (S3-1); (I-215) + (S3-2); (I-215) + (S3-3); (I-215) + (S3-4); (I-215) + (S3-5); (I-215) + (S3-6); (I-215) + (S3-7); (I-215) + (S3-8); (I-215) + (S3-9); (I-215) + (S3-10); (I-215) + (S3-11); (I-215) + (S4-1); (I-215) + (S4-2); (I-215) + (S4-3); (I-215) + (S4-4); (I-215) + (S4-5); (I-215) + (S7-1); (I-215) + (S11-1); (I-215) + (S11-2); (I-215) + (S11-3); (I-215) + (S12-1); (I-215) + (S13-1); (I-215) + (S13-2); (I-215) + (S13-3); (I-215) + (S13-4): (I-215) + (S13-5); (I-215) + (S13-6); (I-215) + (S13-7); (I-215) + (S13-8); (I-215) + (S13-9); (I-215) + (S14-1)
(I-216) + (S1-1); (I-216) + (S1-2); (I-216) + (S1-3); (I-216) + (S1-4); (I-216) + (S1-5); (I-216) + (S1-6); (I-216) + (S1-7); (I-216) + (S1-8); (I-216) + (S1-9); (I-216) + (S1-10); (I-216) + (S1-11); (I-216) + (S1-12); (I-216) + (S1-13); (I-216) + (S2-1); (I-216) + (S2-2); (I-216) + (S2-3); (I-216) + (S2-4); (I-216) + (S2-5); (I-216) + (S2-6); (I-216) + (S2-7); (I-216) + (S2-8); (I-216) + (S2-9); (I-216) + (S2-10); (I-216) + (S3-1); (I-216) + (S3-2); (I-216) + (S3-3); (I-216) + (S3-4); (I-216) + (S3-5); (I-216) + (S3-6); (I-216) + (S3-7); (I-216) + (S3-8); (I-216) + (S3-9); (I-216) + (S3-10); (I-216) + (S3-11); (I-216) + (S4-1); (I-216) + (S4-2); (I-216) + (S4-3); (I-216) + (S4-4); (I-216) + (S4-5); (I-216) + (S7-1); (I-216) + (S11-1); (I-216) + (S11-2); (I-216) + (S11-3); (I-216) + (S12-1); (I-216) + (S13-1); (I-216) + (S13-2); (I-216) + (S13-3); (I-216) + (S13-4): (I-216) + (S13-5); (I-216) + (S13-6); (I-216) + (S13-7); (I-216) + (S13-8); (I-216) + (S13-9); (I-216) + (S14-1)
(I-217) + (S1-1); (I-217) + (S1-2); (I-217) + (S1-3); (I-217) + (S1-4); (I-217) + (S1-5); (I-217) + (S1-6); (I-217) + (S1-7); (I-217) + (S1-8); (I-217) + (S1-9); (I-217) + (S1-10); (I-217) + (S1-11); (I-217) + (S1-12); (I-217) + (S1-13); (I-217) + (S2-1); (I-217) + (S2-2); (I-217) + (S2-3); (I-217) + (S2-4); (I-217) + (S2-5); (I-217) + (S2-6); (I-217) + (S2-7); (I-217) + (S2-8); (I-217) + (S2-9); (I-217) + (S2-10); (I-217) + (S3-1); (I-217) + (S3-2); (I-217) + (S3-3); (I-217) + (S3-4); (I-217) + (S3-5); (I-217) + (S3-6); (I-217) + (S3-7); (I-217) + (S3-8); (I-217) + (S3-9); (I-217) + (S3-10); (I-217) + (S3-11); (I-217) + (S4-1); (I-217) + (S4-2); (I-217) + (S4-3); (I-217) + (S4-4); (I-217) + (S4-5); (I-217) + (S7-1); (I-217) + (S11-1); (I-217) + (S11-2); (I-217) + (S11-3); (I-217) + (S12-1); (I-217) + (S13-1); (I-217) + (S13-2); (I-217) + (S13-3); (I-217) + (S13-4): (I-217) + (S13-5); (I-217) + (S13-6); (I-217) + (S13-7); (I-217) + (S13-8); (I-217) + (S13-9); (I-217) + (S14-1)
(I-218) + (S1-1); (I-218) + (S1-2); (I-218) + (S1-3); (I-218) + (S1-4); (I-218) + (S1-5); (I-218) + (S1-6); (I-218) + (S1-7); (I-218) + (S1-8); (I-218) + (S1-9); (I-218) + (S1-10); (I-218) + (S1-11); (I-218) + (S1-12); (I-218) + (S1-13); (I-218) + (S2-1); (I-218) + (S2-2); (I-218) + (S2-3); (I-218) + (S2-4); (I-218) + (S2-5); (I-218) + (S2-6); (I-218) + (S2-7); (I-218) + (S2-8); (I-218) + (S2-9); (I-218) + (S2-10); (I-218) + (S3-1); (I-218) + (S3-2); (I-218) + (S3-3); (I-218) + (S3-4); (I-218) + (S3-5); (I-218) + (S3-6); (I-218) + (S3-7); (I-218) + (S3-8); (I-218) + (S3-9); (I-218) + (S3-10); (I-218) + (S3-11); (I-218) + (S4-1); (I-218) + (S4-2); (I-218) + (S4-3); (I-218) + (S4-4); (I-218) + (S4-5); (I-218) + (S7-1); (I-218) + (S11-1); (I-218) + (S11-2); (I-218) + (S11-3); (I-218) + (S12-1); (I-218) + (S13-1); (I-218) + (S13-2); (I-218) + (S13-3); (I-218) + (S13-4): (I-218) + (S13-5); (I-218) + (S13-6); (I-218) + (S13-7); (I-218) + (S13-8); (I-218) + (S13-9); (I-218) + (S14-1)
(I-219) + (S1-1); (I-219) + (S1-2); (I-219) + (S1-3); (I-219) + (S1-4); (I-219) + (S1-5); (I-219) + (S1-6); (I-219) + (S1-7); (I-219) + (S1-8); (I-219) + (S1-9); (I-219) + (S1-10); (I-219) + (S1-11); (I-219) + (S1-12); (I-219) + (S1-13); (I-219) + (S2-1); (I-219) + (S2-2); (I-219) + (S2-3); (I-219) + (S2-4); (I-219) + (S2-5); (I-219) + (S2-6); (I-219) + (S2-7); (I-219) + (S2-8); (I-219) + (S2-9); (I-219) + (S2-10); (I-219) + (S3-1); (I-219) + (S3-2); (I-219) + (S3-3); (I-219) + (S3-4); (I-219) + (S3-5); (I-219) + (S3-6); (I-219) + (S3-7); (I-219) + (S3-8); (I-219) + (S3-9); (I-219) + (S3-10); (I-219) + (S3-11); (I-219) + (S4-1); (I-219) + (S4-2); (I-219) + (S4-3); (I-219) + (S4-4); (I-219) + (S4-5); (I-219) + (S7-1); (I-219) + (S11-1); (I-219) + (S11-2); (I-219) + (S11-3); (I-219) + (S12-1); (I-219) + (S13-1); (I-219) + (S13-2); (I-219) + (S13-3); (I-219) + (S13-4): (I-219) + (S13-5); (I-219) + (S13-6); (I-219) + (S13-7); (I-219) + (S13-8); (I-219) + (S13-9); (I-219) + (S14-1)
(I-220) + (S1-1); (I-220) + (S1-2); (I-220) + (S1-3); (I-220) + (S1-4); (I-220) + (S1-5); (I-220) + (S1-6); (I-220) + (S1-7); (I-220) + (S1-8); (I-220) + (S1-9); (I-220) + (S1-10); (I-220) + (S1-11); (I-220) + (S1-12); (I-220) + (S1-13); (I-220) + (S2-1); (I-220) + (S2-2); (I-220) + (S2-3); (I-220) + (S2-4); (I-220) + (S2-5); (I-220) + (S2-6); (I-220) + (S2-7); (I-220) + (S2-8); (I-220) + (S2-9); (I-220) + (S2-10); (I-220) + (S3-1); (I-220) + (S3-2); (I-220) + (S3-3); (I-220) + (S3-4); (I-220) + (S3-5); (I-220) + (S3-6); (I-220) + (S3-7); (I-220) + (S3-8); (I-220) + (S3-9); (I-220) + (S3-10); (I-220) + (S3-11); (I-220) + (S4-1); (I-220) + (S4-2); (I-220) + (S4-3); (I-220) + (S4-4); (I-220) + (S4-5); (I-220) + (S7-1); (I-220) + (S11-1); (I-220) + (S11-2); (I-220) + (S11-3); (I-220) + (S12-1); (I-220) + (S13-1); (I-220) + (S13-2); (I-220) + (S13-3); (I-220) + (S13-4): (I-220) + (S13-5); (I-220) + (S13-6); (I-220) + (S13-7); (I-220) + (S13-8); (I-220) + (S13-9); (I-220) + (S14-1)
(I-221) + (S1-1); (I-221) + (S1-2); (I-221) + (S1-3); (I-221) + (S1-4); (I-221) + (S1-5); (I-221) + (S1-6); (I-221) + (S1-7); (I-221) + (S1-8); (I-221) + (S1-9); (I-221) + (S1-10); (I-221) + (S1-11); (I-221) + (S1-12); (I-221) + (S1-13); (I-221) + (S2-1); (I-221) + (S2-2); (I-221) + (S2-3); (I-221) + (S2-4); (I-221) + (S2-5); (I-221) + (S2-6); (I-221) + (S2-7); (I-221) + (S2-8); (I-221) + (S2-9); (I-221) + (S2-10); (I-221) + (S3-1); (I-221) + (S3-2); (I-221) + (S3-3); (I-221) + (S3-4); (I-221) + (S3-5); (I-221) + (S3-6); (I-221) + (S3-7); (I-221) + (S3-8); (I-221) + (S3-9); (I-221) + (S3-10); (I-221) + (S3-11); (I-221) + (S4-1); (I-221) + (S4-2); (I-221) + (S4-3); (I-221) + (S4-4); (I-221) + (S4-5); (I-221) + (S7-1); (I-221) + (S11-1); (I-221) + (S11-2); (I-221) + (S11-3); (I-221) + (S12-1); (I-221) + (S13-1); (I-221) + (S13-2); (I-221) + (S13-3); (I-221) + (S13-4): (I-221) + (S13-5); (I-221) + (S13-6); (I-221) + (S13-7); (I-221) + (S13-8); (I-221) + (S13-9); (I-221) + (S14-1)
(I-222) + (S1-1); (I-222) + (S1-2); (I-222) + (S1-3); (I-222) + (S1-4); (I-222) + (S1-5); (I-222) + (S1-6); (I-222) + (S1-7); (I-222) + (S1-8); (I-222) + (S1-9); (I-222) + (S1-10); (I-222) + (S1-11); (I-222) + (S1-12); (I-222) + (S1-13); (I-222) + (S2-1); (I-222) + (S2-2); (I-222) + (S2-3); (I-222) + (S2-4); (I-222) + (S2-5); (I-222) + (S2-6); (I-222) + (S2-7); (I-222) + (S2-8); (I-222) + (S2-9); (I-222) + (S2-10); (I-222) + (S3-1); (I-222) + (S3-2); (I-222) + (S3-3); (I-222) + (S3-4); (I-222) + (S3-5); (I-222) + (S3-6); (I-222) + (S3-7); (I-222) + (S3-8); (I-222) + (S3-9); (I-222) + (S3-10); (I-222) + (S3-11); (I-222) + (S4-1); (I-222) + (S4-2); (I-222) + (S4-3); (I-222) + (S4-4); (I-222) + (S4-5); (I-222) + (S7-1); (I-222) + (S11-1); (I-222) + (S11-2); (I-222) + (S11-3); (I-222) + (S12-1); (I-222) + (S13-1); (I-222) + (S13-2); (I-222) + (S13-3); (I-222) + (S13-4): (I-222) + (S13-5); (I-222) + (S13-6); (I-222) + (S13-7); (I-222) + (S13-8); (I-222) + (S13-9); (I-222) + (S14-1)
(I-223) + (S1-1); (I-223) + (S1-2); (I-223) + (S1-3); (I-223) + (S1-4); (I-223) + (S1-5); (I-223) + (S1-6); (I-223) + (S1-7); (I-223) + (S1-8); (I-223) + (S1-9); (I-223) + (S1-10); (I-223) + (S1-11); (I-223) + (S1-12); (I-223) + (S1-13); (I-223) + (S2-1); (I-223) + (S2-2); (I-223) + (S2-3); (I-223) + (S2-4); (I-223) + (S2-5); (I-223) + (S2-6); (I-223) + (S2-7); (I-223) + (S2-8); (I-223) + (S2-9); (I-223) + (S2-10); (I-223) + (S3-1); (I-223) + (S3-2); (I-223) + (S3-3); (I-223) + (S3-4); (I-223) + (S3-5); (I-223) + (S3-6); (I-223) + (S3-7); (I-223) + (S3-8); (I-223) + (S3-9); (I-223) + (S3-10); (I-223) + (S3-11); (I-223) + (S4-1); (I-223) + (S4-2); (I-223) + (S4-3); (I-223) + (S4-4); (I-223) + (S4-5); (I-223) + (S7-1); (I-223) + (S11-1); (I-223) + (S11-2); (I-223) + (S11-3); (I-223) + (S12-1); (I-223) + (S13-1); (I-223) + (S13-2); (I-223) + (S13-3); (I-223) + (S13-4): (I-223) + (S13-5); (I-223) + (S13-6); (I-223) + (S13-7); (I-223) + (S13-8); (I-223) + (S13-9); (I-223) + (S14-1)
(I-224) + (S1-1); (I-224) + (S1-2); (I-224) + (S1-3); (I-224) + (S1-4); (I-224) + (S1-5); (I-224) + (S1-6); (I-224) + (S1-7); (I-224) + (S1-8); (I-224) + (S1-9); (I-224) + (S1-10); (I-224) + (S1-11); (I-224) + (S1-12); (I-224) + (S1-13); (I-224) + (S2-1); (I-224) + (S2-2); (I-224) + (S2-3); (I-224) + (S2-4); (I-224) + (S2-5); (I-224) + (S2-6); (I-224) + (S2-7); (I-224) + (S2-8); (I-224) + (S2-9); (I-224) + (S2-10); (I-224) + (S3-1); (I-224) + (S3-2); (I-224) + (S3-3); (I-224) + (S3-4); (I-224) + (S3-5); (I-224) + (S3-6); (I-224) + (S3-7); (I-224) + (S3-8); (I-224) + (S3-9); (I-224) + (S3-10); (I-224) + (S3-11); (I-224) + (S4-1); (I-224) + (S4-2); (I-224) + (S4-3); (I-224) + (S4-4); (I-224) + (S4-5); (I-224) + (S7-1); (I-224) + (S11-1); (I-224) + (S11-2); (I-224) + (S11-3); (I-224) + (S12-1); (I-224) + (S13-1); (I-224) + (S13-2); (I-224) + (S13-3); (I-224) + (S13-4): (I-224) + (S13-5); (I-224) + (S13-6); (I-224) + (S13-7); (I-224) + (S13-8); (I-224) + (S13-9); (I-224) + (S14-1)
(I-225) + (S1-1); (I-225) + (S1-2); (I-225) + (S1-3); (I-225) + (S1-4); (I-225) + (S1-5); (I-225) + (S1-6); (I-225) + (S1-7); (I-225) + (S1-8); (I-225) + (S1-9); (I-225) + (S1-10); (I-225) + (S1-11); (I-225) + (S1-12); (I-225) + (S1-13); (I-225) + (S2-1); (I-225) + (S2-2); (I-225) + (S2-3); (I-225) + (S2-4); (I-225) + (S2-5); (I-225) + (S2-6); (I-225) + (S2-7); (I-225) + (S2-8); (I-225) + (S2-9); (I-225) + (S2-10); (I-225) + (S3-1); (I-225) + (S3-2); (I-225) + (S3-3); (I-225) + (S3-4); (I-225) + (S3-5); (I-225) + (S3-6); (I-225) + (S3-7); (I-225) + (S3-8); (I-225) + (S3-9); (I-225) + (S3-10); (I-225) + (S3-11); (I-225) + (S4-1); (I-225) + (S4-2); (I-225) + (S4-3); (I-225) + (S4-4); (I-225) + (S4-5); (I-225) + (S7-1); (I-225) + (S11-1); (I-225) + (S11-2); (I-225) + (S11-3); (I-225) + (S12-1); (I-225) + (S13-1); (I-225) + (S13-2); (I-225) + (S13-3); (I-225) + (S13-4): (I-225) + (S13-5); (I-225) + (S13-6); (I-225) + (S13-7); (I-225) + (S13-8); (I-225) + (S13-9); (I-225) + (S14-1)
(I-226) + (S1-1); (I-226) + (S1-2); (I-226) + (S1-3); (I-226) + (S1-4); (I-226) + (S1-5); (I-226) + (S1-6); (I-226) + (S1-7); (I-226) + (S1-8); (I-226) + (S1-9); (I-226) + (S1-10); (I-226) + (S1-11); (I-226) + (S1-12); (I-226) + (S1-13); (I-226) + (S2-1); (I-226) + (S2-2); (I-226) + (S2-3); (I-226) + (S2-4); (I-226) + (S2-5); (I-226) + (S2-6); (I-226) + (S2-7); (I-226) + (S2-8); (I-226) + (S2-9); (I-226) + (S2-10); (I-226) + (S3-1); (I-226) + (S3-2); (I-226) + (S3-3); (I-226) + (S3-4); (I-226) + (S3-5); (I-226) + (S3-6); (I-226) + (S3-7); (I-226) + (S3-8); (I-226) + (S3-9); (I-226) + (S3-10); (I-226) + (S3-11); (I-226) + (S4-1); (I-226) + (S4-2); (I-226) + (S4-3); (I-226) + (S4-4); (I-226) + (S4-5); (I-226) + (S7-1); (I-226) + (S11-1); (I-226) + (S11-2); (I-226) + (S11-3); (I-226) + (S12-1); (I-226) + (S13-1); (I-226) + (S13-2); (I-226) + (S13-3); (I-226) + (S13-4): (I-226) + (S13-5); (I-226) + (S13-6); (I-226) + (S13-7); (I-226) + (S13-8); (I-226) + (S13-9); (I-226) + (S14-1)
(I-227) + (S1-1); (I-227) + (S1-2); (I-227) + (S1-3); (I-227) + (S1-4); (I-227) + (S1-5); (I-227) + (S1-6); (I-227) + (S1-7); (I-227) + (S1-8); (I-227) + (S1-9); (I-227) + (S1-10); (I-227) + (S1-11); (I-227) + (S1-12); (I-227) + (S1 -13); (I-227) + (S2-1); (I-227) + (S2-2); (I-227) + (S2-3); (I-227) + (S2-4); (I-227) + (S2-5); (I-227) + (S2-6); (I-227) + (S2-7); (I-227) + (S2-8); (I-227) + (S2-9); (I-227) + (S2-10); (I-227) + (S3-1); (I-227) + (S3-2); (I-227) + (S3-3); (I-227) + (S3-4); (I-227) + (S3-5); (I-227) + (S3-6); (I-227) + (S3-7); (I-227) + (S3-8); (I-227) + (S3-9); (I-227) + (S3-10); (I-227) + (S3-11); (I-227) + (S4-1); (I-227) + (S4-2); (I-227) + (S4-3); (I-227) + (S4-4); (I-227) + (S4-5); (I-227) + (S7-1); (I-227) + (S11-1); (I-227) + (S11-2); (I-227) + (S11-3); (I-227) + (S12-1); (I-227) + (S13-1); (I-227) + (S13-2); (I-227) + (S13-3); (I-227) + (S13-4): (I-227) + (S13-5); (I-227) + (S13-6); (I-227) + (S13-7); (I-227) + (S13-8); (I-227) + (S13-9); (I-227) + (S14-1)
(I-228) + (S1-1); (I-228) + (S1-2); (I-228) + (S1-3); (I-228) + (S1-4); (I-228) + (S1-5); (I-228) + (S1-6); (I-228) + (S1-7); (I-228) + (S1-8); (I-228) + (S1-9); (I-228) + (S1-10); (I-228) + (S1-11); (I-228) + (S1-12); (I-228) + (S1-13); (I-228) + (S2-1); (I-228) + (S2-2); (I-228) + (S2-3); (I-228) + (S2-4); (I-228) + (S2-5); (I-228) + (S2-6); (I-228) + (S2-7); (I-228) + (S2-8); (I-228) + (S2-9); (I-228) + (S2-10); (I-228) + (S3-1); (I-228) + (S3-2); (I-228) + (S3-3); (I-228) + (S3-4); (I-228) + (S3-5); (I-228) + (S3-6); (I-228) + (S3-7); (I-228) + (S3-8); (I-228) + (S3-9); (I-228) + (S3-10); (I-228) + (S3-11); (I-228) + (S4-1); (I-228) + (S4-2); (I-228) + (S4-3); (I-228) + (S4-4); (I-228) + (S4-5); (I-228) + (S7-1); (I-228) + (S11-1); (I-228) + (S11-2); (I-228) + (S11-3); (I-228) + (S12-1); (I-228) + (S13-1); (I-228) + (S13-2); (I-228) + (S13-3); (I-228) + (S13-4): (I-228) + (S13-5); (I-228) + (S13-6); (I-228) + (S13-7); (I-228) + (S13-8); (I-228) + (S13-9); (I-228) + (S14-1)
(I-229) + (S1-1); (I-229) + (S1-2); (I-229) + (S1-3); (I-229) + (S1-4); (I-229) + (S1-5); (I-229) + (S1-6); (I-229) + (S1-7); (I-229) + (S1-8); (I-229) + (S1-9); (I-229) + (S1-10); (I-229) + (S1-11); (I-229) + (S1-12); (I-229) + (S1-13); (I-229) + (S2-1); (I-229) + (S2-2); (I-229) + (S2-3); (I-229) + (S2-4); (I-229) + (S2-5); (I-229) + (S2-6); (I-229) + (S2-7); (I-229) + (S2-8); (I-229) + (S2-9); (I-229) + (S2-10); (I-229) + (S3-1); (I-229) + (S3-2); (I-229) + (S3-3); (I-229) + (S3-4); (I-229) + (S3-5); (I-229) + (S3-6); (I-229) + (S3-7); (I-229) + (S3-8); (I-229) + (S3-9); (I-229) + (S3-10); (I-229) + (S3-11); (I-229) + (S4-1); (I-229) + (S4-2); (I-229) + (S4-3); (I-229) + (S4-4); (I-229) + (S4-5); (I-229) + (S7-1); (I-229) + (S11-1); (I-229) + (S11-2); (I-229) + (S11-3); (I-229) + (S12-1); (I-229) + (S13-1); (I-229) + (S13-2); (I-229) + (S13-3); (I-229) + (S13-4): (I-229) + (S13-5); (I-229) + (S13-6); (I-229) + (S13-7); (I-229) + (S13-8); (I-229) + (S13-9); (I-229) + (S14-1)
(I-230) + (S1-1); (I-230) + (S1-2); (I-230) + (S1-3); (I-230) + (S1-4); (I-230) + (S1-5); (I-230) + (S1-6); (I-230) + (S1-7); (I-230) + (S1-8); (I-230) + (S1-9); (I-230) + (S1-10); (I-230) + (S1-11); (I-230) + (S1-12); (I-230) + (S1-13); (I-230) + (S2-1); (I-230) + (S2-2); (I-230) + (S2-3); (I-230) + (S2-4); (I-230) + (S2-5); (I-230) + (S2-6); (I-230) + (S2-7); (I-230) + (S2-8); (I-230) + (S2-9); (I-230) + (S2-10); (I-230) + (S3-1); (I-230) + (S3-2); (I-230) + (S3-3); (I-230) + (S3-4); (I-230) + (S3-5); (I-230) + (S3-6); (I-230) + (S3-7); (I-230) + (S3-8); (I-230) + (S3-9); (I-230) + (S3-10); (I-230) + (S3-11); (I-230) + (S4-1); (I-230) + (S4-2); (I-230) + (S4-3); (I-230) + (S4-4); (I-230) + (S4-5); (I-230) + (S7-1); (I-230) + (S11-1); (I-230) + (S11-2); (I-230) + (S11-3); (I-230) + (S12-1); (I-230) + (S13-1); (I-230) + (S13-2); (I-230) + (S13-3); (I-230) + (S13-4): (I-230) + (S13-5); (I-230) + (S13-6); (I-230) + (S13-7); (I-230) + (S13-8); (I-230) + (S13-9); (I-230) + (S14-1)
(I-231) + (S1-1); (I-231) + (S1-2); (I-231) + (S1-3); (I-231) + (S1-4); (I-231) + (S1-5); (I-231) + (S1-6); (I-231) + (S1-7); (I-231) + (S1-8); (I-231) + (S1-9); (I-231) + (S1-10); (I-231) + (S1-11); (I-231) + (S1-12); (I-231) + (S1-13); (I-231) + (S2-1); (I-231) + (S2-2); (I-231) + (S2-3); (I-231) + (S2-4); (I-231) + (S2-5); (I-231) + (S2-6); (I-231) + (S2-7); (I-231) + (S2-8); (I-231) + (S2-9); (I-231) + (S2-10); (I-231) + (S3-1); (I-231) + (S3-2); (I-231) + (S3-3); (I-231) + (S3-4); (I-231) + (S3-5); (I-231) + (S3-6); (I-231) + (S3-7); (I-231) + (S3-8); (I-231) + (S3-9); (I-231) + (S3-10); (I-231) + (S3-11); (I-231) + (S4-1); (I-231) + (S4-2); (I-231) + (S4-3); (I-231) + (S4-4); (I-231) + (S4-5); (I-231) + (S7-1); (I-231) + (S11-1); (I-231) + (S11-2); (I-231) + (S11-3); (I-231) + (S12-1); (I-231) + (S13-1); (I-231) + (S13-2); (I-231) + (S13-3); (I-231) + (S13-4): (I-231) + (S13-5); (I-231) + (S13-6); (I-231) + (S13-7); (I-231) + (S13-8); (I-231) + (S13-9); (I-231) + (S14-1)
(I-232) + (S1-1); (I-232) + (S1-2); (I-232) + (S1-3); (I-232) + (S1-4); (I-232) + (S1-5); (I-232) + (S1-6); (I-232) + (S1-7); (I-232) + (S1-8); (I-232) + (S1-9); (I-232) + (S1-10); (I-232) + (S1-11); (I-232) + (S1-12); (I-232) + (S1-13); (I-232) + (S2-1); (I-232) + (S2-2); (I-232) + (S2-3); (I-232) + (S2-4); (I-232) + (S2-5); (I-232) + (S2-6); (I-232) + (S2-7); (I-232) + (S2-8); (I-232) + (S2-9); (I-232) + (S2-10); (I-232) + (S3-1); (I-232) + (S3-2); (I-232) + (S3-3); (I-232) + (S3-4); (I-232) + (S3-5); (I-232) + (S3-6); (I-232) + (S3-7); (I-232) + (S3-8); (I-232) + (S3-9); (I-232) + (S3-10); (I-232) + (S3-11); (I-232) + (S4-1); (I-232) + (S4-2); (I-232) + (S4-3); (I-232) + (S4-4); (I-232) + (S4-5); (I-232) + (S7-1); (I-232) + (S11-1); (I-232) + (S11-2); (I-232) + (S11-3); (I-232) + (S12-1); (I-232) + (S13-1); (I-232) + (S13-2); (I-232) + (S13-3); (I-232) + (S13-4): (I-232) + (S13-5); (I-232) + (S13-6); (I-232) + (S13-7); (I-232) + (S13-8); (I-232) + (S13-9); (I-232) + (S14-1)
(I-233) + (S1-1); (I-233) + (S1-2); (I-233) + (S1-3); (I-233) + (S1-4); (I-233) + (S1-5); (I-233) + (S1-6); (I-233) + (S1-7); (I-233) + (S1-8); (I-233) + (S1-9); (I-233) + (S1-10); (I-233) + (S1-11); (I-233) + (S1-12); (I-233) + (S1-13); (I-233) + (S2-1); (I-233) + (S2-2); (I-233) + (S2-3); (I-233) + (S2-4); (I-233) + (S2-5); (I-233) + (S2-6); (I-233) + (S2-7); (I-233) + (S2-8); (I-233) + (S2-9); (I-233) + (S2-10); (I-233) + (S3-1); (I-233) + (S3-2); (I-233) + (S3-3); (I-233) + (S3-4); (I-233) + (S3-5); (I-233) + (S3-6); (I-233) + (S3-7); (I-233) + (S3-8); (I-233) + (S3-9); (I-233) + (S3-10); (I-233) + (S3-11); (I-233) + (S4-1); (I-233) + (S4-2); (I-233) + (S4-3); (I-233) + (S4-4); (I-233) + (S4-5); (I-233) + (S7-1); (I-233) + (S11-1); (I-233) + (S11-2); (I-233) + (S11-3); (I-233) + (S12-1); (I-233) + (S13-1); (I-233) + (S13-2); (I-233) + (S13-3); (I-233) + (S13-4): (I-233) + (S13-5); (I-233) + (S13-6); (I-233) + (S13-7); (I-233) + (S13-8); (I-233) + (S13-9); (I-233) + (S14-1)
(I-234) + (S1-1); (I-234) + (S1-2); (I-234) + (S1-3); (I-234) + (S1-4); (I-234) + (S1-5); (I-234) + (S1-6); (I-234) + (S1-7); (I-234) + (S1-8); (I-234) + (S1-9); (I-234) + (S1-10); (I-234) + (S1-11); (I-234) + (S1-12); (I-234) + (S1-13); (I-234) + (S2-1); (I-234) + (S2-2); (I-234) + (S2-3); (I-234) + (S2-4); (I-234) + (S2-5); (I-234) + (S2-6); (I-234) + (S2-7); (I-234) + (S2-8); (I-234) + (S2-9); (I-234) + (S2-10); (I-234) + (S3-1); (I-234) + (S3-2); (I-234) + (S3-3); (I-234) + (S3-4); (I-234) + (S3-5); (I-234) + (S3-6); (I-234) + (S3-7); (I-234) + (S3-8); (I-234) + (S3-9); (I-234) + (S3-10); (I-234) + (S3-11); (I-234) + (S4-1); (I-234) + (S4-2); (I-234) + (S4-3); (I-234) + (S4-4); (I-234) + (S4-5); (I-234) + (S7-1); (I-234) + (S11-1); (I-234) + (S11-2); (I-234) + (S11-3); (I-234) + (S12-1); (I-234) + (S13-1); (I-234) + (S13-2); (I-234) + (S13-3); (I-234) + (S13-4): (I-234) + (S13-5); (I-234) + (S13-6); (I-234) + (S13-7); (I-234) + (S13-8); (I-234) + (S13-9); (I-234) + (S14-1)
(I-235) + (S1-1); (I-235) + (S1-2); (I-235) + (S1-3); (I-235) + (S1-4); (I-235) + (S1-5); (I-235) + (S1-6); (I-235) + (S1-7); (I-235) + (S1-8); (I-235) + (S1-9); (I-235) + (S1-10); (I-235) + (S1-11); (I-235) + (S1-12); (I-235) + (S1-13); (I-235) + (S2-1); (I-235) + (S2-2); (I-235) + (S2-3); (I-235) + (S2-4); (I-235) + (S2-5); (I-235) + (S2-6); (I-235) + (S2-7); (I-235) + (S2-8); (I-235) + (S2-9); (I-235) + (S2-10); (I-235) + (S3-1); (I-235) + (S3-2); (I-235) + (S3-3); (I-235) + (S3-4); (I-235) + (S3-5); (I-235) + (S3-6); (I-235) + (S3-7); (I-235) + (S3-8); (I-235) + (S3-9); (I-235) + (S3-10); (I-235) + (S3-11); (I-235) + (S4-1); (I-235) + (S4-2); (I-235) + (S4-3); (I-235) + (S4-4); (I-235) + (S4-5); (I-235) + (S7-1); (I-235) + (S11-1); (I-235) + (S11-2); (I-235) + (S11-3); (I-235) + (S12-1); (I-235) + (S13-1); (I-235) + (S13-2); (I-235) + (S13-3); (I-235) + (S13-4): (I-235) + (S13-5); (I-235) + (S13-6); (I-235) + (S13-7); (I-235) + (S13-8); (I-235) + (S13-9); (I-235) + (S14-1)
(I-236) + (S1-1); (I-236) + (S1-2); (I-236) + (S1-3); (I-236) + (S1-4); (I-236) + (S1-5); (I-236) + (S1-6); (I-236) + (S1-7); (I-236) + (S1-8); (I-236) + (S1-9); (I-236) + (S1-10); (I-236) + (S1-11); (I-236) + (S1-12); (I-236) + (S1-13); (I-236) + (S2-1); (I-236) + (S2-2); (I-236) + (S2-3); (I-236) + (S2-4); (I-236) + (S2-5); (I-236) + (S2-6); (I-236) + (S2-7); (I-236) + (S2-8); (I-236) + (S2-9); (I-236) + (S2-10); (I-236) + (S3-1); (I-236) + (S3-2); (I-236) + (S3-3); (I-236) + (S3-4); (I-236) + (S3-5); (I-236) + (S3-6); (I-236) + (S3-7); (I-236) + (S3-8); (I-236) + (S3-9); (I-236) + (S3-10); (I-236) + (S3-11); (I-236) + (S4-1); (I-236) + (S4-2); (I-236) + (S4-3); (I-236) + (S4-4); (I-236) + (S4-5); (I-236) + (S7-1); (I-236) + (S11-1); (I-236) + (S11-2); (I-236) + (S11-3); (I-236) + (S12-1); (I-236) + (S13-1); (I-236) + (S13-2); (I-236) + (S13-3); (I-236) + (S13-4): (I-236) + (S13-5); (I-236) + (S13-6); (I-236) + (S13-7); (I-236) + (S13-8); (I-236) + (S13-9); (I-236) + (S14-1)
(I-237) + (S1-1); (I-237) + (S1-2); (I-237) + (S1-3); (I-237) + (S1-4); (I-237) + (S1-5); (I-237) + (S1-6); (I-237) + (S1-7); (I-237) + (S1-8); (I-237) + (S1-9); (I-237) + (S1-10); (I-237) + (S1-11); (I-237) + (S1-12); (I-237) + (S1-13); (I-237) + (S2-1); (I-237) + (S2-2); (I-237) + (S2-3); (I-237) + (S2-4); (I-237) + (S2-5); (I-237) + (S2-6); (I-237) + (S2-7); (I-237) + (S2-8); (I-237) + (S2-9); (I-237) + (S2-10); (I-237) + (S3-1); (I-237) + (S3-2); (I-237) + (S3-3); (I-237) + (S3-4); (I-237) + (S3-5); (I-237) + (S3-6); (I-237) + (S3-7); (I-237) + (S3-8); (I-237) + (S3-9); (I-237) + (S3-10); (I-237) + (S3-11); (I-237) + (S4-1); (I-237) + (S4-2); (I-237) + (S4-3); (I-237) + (S4-4); (I-237) + (S4-5); (I-237) + (S7-1); (I-237) + (S11-1); (I-237) + (S11-2); (I-237) + (S11-3); (I-237) + (S12-1); (I-237) + (S13-1); (I-237) + (S13-2); (I-237) + (S13-3); (I-237) + (S13-4): (I-237) + (S13-5); (I-237) + (S13-6); (I-237) + (S13-7); (I-237) + (S13-8); (I-237) + (S13-9); (I-237) + (S14-1)
(I-238) + (S1-1); (I-238) + (S1-2); (I-238) + (S1-3); (I-238) + (S1-4); (I-238) + (S1-5); (I-238) + (S1-6); (I-238) + (S1-7); (I-238) + (S1-8); (I-238) + (S1-9); (I-238) + (S1-10); (I-238) + (S1-11); (I-238) + (S1-12); (I-238) + (S1-13); (I-238) + (S2-1); (I-238) + (S2-2); (I-238) + (S2-3); (I-238) + (S2-4); (I-238) + (S2-5); (I-238) + (S2-6); (I-238) + (S2-7); (I-238) + (S2-8); (I-238) + (S2-9); (I-238) + (S2-10); (I-238) + (S3-1); (I-238) + (S3-2); (I-238) + (S3-3); (I-238) + (S3-4); (I-238) + (S3-5); (I-238) + (S3-6); (I-238) + (S3-7); (I-238) + (S3-8); (I-238) + (S3-9); (I-238) + (S3-10); (I-238) + (S3-11); (I-238) + (S4-1); (I-238) + (S4-2); (I-238) + (S4-3); (I-238) + (S4-4); (I-238) + (S4-5); (I-238) + (S7-1); (I-238) + (S11-1); (I-238) + (S11-2); (I-238) + (S11-3); (I-238) + (S12-1); (I-238) + (S13-1); (I-238) + (S13-2); (I-238) + (S13-3); (I-238) + (S13-4): (I-238) + (S13-5); (I-238) + (S13-6); (I-238) + (S13-7); (I-238) + (S13-8); (I-238) + (S13-9); (I-238) + (S14-1)
(I-239) + (S1-1); (I-239) + (S1-2); (I-239) + (S1-3); (I-239) + (S1-4); (I-239) + (S1-5); (I-239) + (S1-6); (I-239) + (S1-7); (I-239) + (S1-8); (I-239) + (S1-9); (I-239) + (S1-10); (I-239) + (S1-11); (I-239) + (S1-12); (I-239) + (S1-13); (I-239) + (S2-1); (I-239) + (S2-2); (I-239) + (S2-3); (I-239) + (S2-4); (I-239) + (S2-5); (I-239) + (S2-6); (I-239) + (S2-7); (I-239) + (S2-8); (I-239) + (S2-9); (I-239) + (S2-10); (I-239) + (S3-1); (I-239) + (S3-2); (I-239) + (S3-3); (I-239) + (S3-4); (I-239) + (S3-5); (I-239) + (S3-6); (I-239) + (S3-7); (I-239) + (S3-8); (I-239) + (S3-9); (I-239) + (S3-10); (I-239) + (S3-11); (I-239) + (S4-1); (I-239) + (S4-2); (I-239) + (S4-3); (I-239) + (S4-4); (I-239) + (S4-5); (I-239) + (S7-1); (I-239) + (S11-1); (I-239) + (S11-2); (I-239) + (S11-3); (I-239) + (S12-1); (I-239) + (S13-1); (I-239) + (S13-2); (I-239) + (S13-3); (I-239) + (S13-4): (I-239) + (S13-5); (I-239) + (S13-6); (I-239) + (S13-7); (I-239) + (S13-8); (I-239) + (S13-9); (I-239) + (S14-1)
(I-240) + (S1-1); (I-240) + (S1-2); (I-240) + (S1-3); (I-240) + (S1-4); (I-240) + (S1-5); (I-240) + (S1-6); (I-240) + (S1-7); (I-240) + (S1-8); (I-240) + (S1-9); (I-240) + (S1-10); (I-240) + (S1-11); (I-240) + (S1-12); (I-240) + (S1-13); (I-240) + (S2-1); (I-240) + (S2-2); (I-240) + (S2-3); (I-240) + (S2-4); (I-240) + (S2-5); (I-240) + (S2-6); (I-240) + (S2-7); (I-240) + (S2-8); (I-240) + (S2-9); (I-240) + (S2-10); (I-240) + (S3-1); (I-240) + (S3-2); (I-240) + (S3-3); (I-240) + (S3-4); (I-240) + (S3-5); (I-240) + (S3-6); (I-240) + (S3-7); (I-240) + (S3-8); (I-240) + (S3-9); (I-240) + (S3-10); (I-240) + (S3-11); (I-240) + (S4-1); (I-240) + (S4-2); (I-240) + (S4-3); (I-240) + (S4-4); (I-240) + (S4-5); (I-240) + (S7-1); (I-240) + (S11-1); (I-240) + (S11-2); (I-240) + (S11-3); (I-240) + (S12-1); (I-240) + (S13-1); (I-240) + (S13-2); (I-240) + (S13-3); (I-240) + (S13-4): (I-240) + (S13-5); (I-240) + (S13-6); (I-240) + (S13-7); (I-240) + (S13-8); (I-240) + (S13-9); (I-240) + (S14-1)
(I-241) + (S1-1); (I-241) + (S1-2); (I-241) + (S1-3); (I-241) + (S1-4); (I-241) + (S1-5); (I-241) + (S1-6); (I-241) + (S1-7); (I-241) + (S1-8); (I-241) + (S1-9); (I-241) + (S1-10); (I-241) + (S1-11); (I-241) + (S1-12); (I-241) + (S1-13); (I-241) + (S2-1); (I-241) + (S2-2); (I-241) + (S2-3); (I-241) + (S2-4); (I-241) + (S2-5); (I-241) + (S2-6); (I-241) + (S2-7); (I-241) + (S2-8); (I-241) + (S2-9); (I-241) + (S2-10); (I-241) + (S3-1); (I-241) + (S3-2); (I-241) + (S3-3); (I-241) + (S3-4); (I-241) + (S3-5); (I-241) + (S3-6); (I-241) + (S3-7); (I-241) + (S3-8); (I-241) + (S3-9); (I-241) + (S3-10); (I-241) + (S3-11); (I-241) + (S4-1); (I-241) + (S4-2); (I-241) + (S4-3); (I-241) + (S4-4); (I-241) + (S4-5); (I-241) + (S7-1); (I-241) + (S11-1); (I-241) + (S11-2); (I-241) + (S11-3); (I-241) + (S12-1); (I-241) + (S13-1); (I-241) + (S13-2); (I-241) + (S13-3); (I-241) + (S13-4): (I-241) + (S13-5); (I-241) + (S13-6); (I-241) + (S13-7); (I-241) + (S13-8); (I-241) + (S13-9); (I-241) + (S14-1)
(I-242) + (S1-1); (I-242) + (S1-2); (I-242) + (S1-3); (I-242) + (S1-4); (I-242) + (S1-5); (I-242) + (S1-6); (I-242) + (S1-7); (I-242) + (S1-8); (I-242) + (S1-9); (I-242) + (S1-10); (I-242) + (S1-11); (I-242) + (S1-12); (I-242) + (S1-13); (I-242) + (S2-1); (I-242) + (S2-2); (I-242) + (S2-3); (I-242) + (S2-4); (I-242) + (S2-5); (I-242) + (S2-6); (I-242) + (S2-7); (I-242) + (S2-8); (I-242) + (S2-9); (I-242) + (S2-10); (I-242) + (S3-1); (I-242) + (S3-2); (I-242) + (S3-3); (I-242) + (S3-4); (I-242) + (S3-5); (I-242) + (S3-6); (I-242) + (S3-7); (I-242) + (S3-8); (I-242) + (S3-9); (I-242) + (S3-10); (I-242) + (S3-11); (I-242) + (S4-1); (I-242) + (S4-2); (I-242) + (S4-3); (I-242) + (S4-4); (I-242) + (S4-5); (I-242) + (S7-1); (I-242) + (S11-1); (I-242) + (S11-2); (I-242) + (S11-3); (I-242) + (S12-1); (I-242) + (S13-1); (I-242) + (S13-2); (I-242) + (S13-3); (I-242) + (S13-4): (I-242) + (S13-5); (I-242) + (S13-6); (I-242) + (S13-7); (I-242) + (S13-8); (I-242) + (S13-9); (I-242) + (S14-1)
(I-243) + (S1-1); (I-243) + (S1-2); (I-243) + (S1-3); (I-243) + (S1-4); (I-243) + (S1-5); (I-243) + (S1-6); (I-243) + (S1-7); (I-243) + (S1-8); (I-243) + (S1-9); (I-243) + (S1-10); (I-243) + (S1-11); (I-243) + (S1-12); (I-243) + (S1-13); (I-243) + (S2-1); (I-243) + (S2-2); (I-243) + (S2-3); (I-243) + (S2-4); (I-243) + (S2-5); (I-243) + (S2-6); (I-243) + (S2-7); (I-243) + (S2-8); (I-243) + (S2-9); (I-243) + (S2-10); (I-243) + (S3-1); (I-243) + (S3-2); (I-243) + (S3-3); (I-243) + (S3-4); (I-243) + (S3-5); (I-243) + (S3-6); (I-243) + (S3-7); (I-243) + (S3-8); (I-243) + (S3-9); (I-243) + (S3-10); (I-243) + (S3-11); (I-243) + (S4-1); (I-243) + (S4-2); (I-243) + (S4-3); (I-243) + (S4-4); (I-243) + (S4-5); (I-243) + (S7-1); (I-243) + (S11-1); (I-243) + (S11-2); (I-243) + (S11-3); (I-243) + (S12-1); (I-243) + (S13-1); (I-243) + (S13-2); (I-243) + (S13-3); (I-243) + (S13-4): (I-243) + (S13-5); (I-243) + (S13-6); (I-243) + (S13-7); (I-243) + (S13-8); (I-243) + (S13-9); (I-243) + (S14-1)
(I-244) + (S1-1); (I-244) + (S1-2); (I-244) + (S1-3); (I-244) + (S1-4); (I-244) + (S1-5); (I-244) + (S1-6); (I-244) + (S1-7); (I-244) + (S1-8); (I-244) + (S1-9); (I-244) + (S1-10); (I-244) + (S1-11); (I-244) + (S1-12); (I-244) + (S1-13); (I-244) + (S2-1); (I-244) + (S2-2); (I-244) + (S2-3); (I-244) + (S2-4); (I-244) + (S2-5); (I-244) + (S2-6); (I-244) + (S2-7); (I-244) + (S2-8); (I-244) + (S2-9); (I-244) + (S2-10); (I-244) + (S3-1); (I-244) + (S3-2); (I-244) + (S3-3); (I-244) + (S3-4); (I-244) + (S3-5); (I-244) + (S3-6); (I-244) + (S3-7); (I-244) + (S3-8); (I-244) + (S3-9); (I-244) + (S3-10); (I-244) + (S3-11); (I-244) + (S4-1); (I-244) + (S4-2); (I-244) + (S4-3); (I-244) + (S4-4); (I-244) + (S4-5); (I-244) + (S7-1); (I-244) + (S11-1); (I-244) + (S11-2); (I-244) + (S11-3); (I-244) + (S12-1); (I-244) + (S13-1); (I-244) + (S13-2); (I-244) + (S13-3); (I-244) + (S13-4): (I-244) + (S13-5); (I-244) + (S13-6); (I-244) + (S13-7); (I-244) + (S13-8); (I-244) + (S13-9); (I-244) + (S14-1)
(I-245) + (S1-1); (I-245) + (S1-2); (I-245) + (S1-3); (I-245) + (S1-4); (I-245) + (S1-5); (I-245) + (S1-6); (I-245) + (S1-7); (I-245) + (S1-8); (I-245) + (S1-9); (I-245) + (S1-10); (I-245) + (S1-11); (I-245) + (S1-12); (I-245) + (S1-13); (I-245) + (S2-1); (I-245) + (S2-2); (I-245) + (S2-3); (I-245) + (S2-4); (I-245) + (S2-5); (I-245) + (S2-6); (I-245) + (S2-7); (I-245) + (S2-8); (I-245) + (S2-9); (I-245) + (S2-10); (I-245) + (S3-1); (I-245) + (S3-2); (I-245) + (S3-3); (I-245) + (S3-4); (I-245) + (S3-5); (I-245) + (S3-6); (I-245) + (S3-7); (I-245) + (S3-8); (I-245) + (S3-9); (I-245) + (S3-10); (I-245) + (S3-11); (I-245) + (S4-1); (I-245) + (S4-2); (I-245) + (S4-3); (I-245) + (S4-4); (I-245) + (S4-5); (I-245) + (S7-1); (I-245) + (S11-1); (I-245) + (S11-2); (I-245) + (S11-3); (I-245) + (S12-1); (I-245) + (S13-1); (I-245) + (S13-2); (I-245) + (S13-3); (I-245) + (S13-4): (I-245) + (S13-5); (I-245) + (S13-6); (I-245) + (S13-7); (I-245) + (S13-8); (I-245) + (S13-9); (I-245) + (S14-1)
(I-246) + (S1-1); (I-246) + (S1-2); (I-246) + (S1-3); (I-246) + (S1-4); (I-246) + (S1-5); (I-246) + (S1-6); (I-246) + (S1-7); (I-246) + (S1-8); (I-246) + (S1-9); (I-246) + (S1-10); (I-246) + (S1-11); (I-246) + (S1-12); (I-246) + (S1-13); (I-246) + (S2-1); (I-246) + (S2-2); (I-246) + (S2-3); (I-246) + (S2-4); (I-246) + (S2-5); (I-246) + (S2-6); (I-246) + (S2-7); (I-246) + (S2-8); (I-246) + (S2-9); (I-246) + (S2-10); (I-246) + (S3-1); (I-246) + (S3-2); (I-246) + (S3-3); (I-246) + (S3-4); (I-246) + (S3-5); (I-246) + (S3-6); (I-246) + (S3-7); (I-246) + (S3-8); (I-246) + (S3-9); (I-246) + (S3-10); (I-246) + (S3-11); (I-246) + (S4-1); (I-246) + (S4-2); (I-246) + (S4-3); (I-246) + (S4-4); (I-246) + (S4-5); (I-246) + (S7-1); (I-246) + (S11-1); (I-246) + (S11-2); (I-246) + (S11-3); (I-246) + (S12-1); (I-246) + (S13-1); (I-246) + (S13-2); (I-246) + (S13-3); (I-246) + (S13-4): (I-246) + (S13-5); (I-246) + (S13-6); (I-246) + (S13-7); (I-246) + (S13-8); (I-246) + (S13-9); (I-246) + (S14-1)
(I-247) + (S1-1); (I-247) + (S1-2); (I-247) + (S1-3); (I-247) + (S1-4); (I-247) + (S1-5); (I-247) + (S1-6); (I-247) + (S1-7); (I-247) + (S1-8); (I-247) + (S1-9); (I-247) + (S1-10); (I-247) + (S1-11); (I-247) + (S1-12); (I-247) + (S1-13); (I-247) + (S2-1); (I-247) + (S2-2); (I-247) + (S2-3); (I-247) + (S2-4); (I-247) + (S2-5); (I-247) + (S2-6); (I-247) + (S2-7); (I-247) + (S2-8); (I-247) + (S2-9); (I-247) + (S2-10); (I-247) + (S3-1); (I-247) + (S3-2); (I-247) + (S3-3); (I-247) + (S3-4); (I-247) + (S3-5); (I-247) + (S3-6); (I-247) + (S3-7); (I-247) + (S3-8); (I-247) + (S3-9); (I-247) + (S3-10); (I-247) + (S3-11); (I-247) + (S4-1); (I-247) + (S4-2); (I-247) + (S4-3); (I-247) + (S4-4); (I-247) + (S4-5); (I-247) + (S7-1); (I-247) + (S11-1); (I-247) + (S11-2); (I-247) + (S11-3); (I-247) + (S12-1); (I-247) + (S13-1); (I-247) + (S13-2); (I-247) + (S13-3); (I-247) + (S13-4): (I-247) + (S13-5); (I-247) + (S13-6); (I-247) + (S13-7); (I-247) + (S13-8); (I-247) + (S13-9); (I-247) + (S14-1)
(I-248) + (S1-1); (I-248) + (S1-2); (I-248) + (S1-3); (I-248) + (S1-4); (I-248) + (S1-5); (I-248) + (S1-6); (I-248) + (S1-7); (I-248) + (S1-8); (I-248) + (S1-9); (I-248) + (S1-10); (I-248) + (S1-11); (I-248) + (S1-12); (I-248) + (S1-13); (I-248) + (S2-1); (I-248) + (S2-2); (I-248) + (S2-3); (I-248) + (S2-4); (I-248) + (S2-5); (I-248) + (S2-6); (I-248) + (S2-7); (I-248) + (S2-8); (I-248) + (S2-9); (I-248) + (S2-10); (I-248) + (S3-1); (I-248) + (S3-2); (I-248) + (S3-3); (I-248) + (S3-4); (I-248) + (S3-5); (I-248) + (S3-6); (I-248) + (S3-7); (I-248) + (S3-8); (I-248) + (S3-9); (I-248) + (S3-10); (I-248) + (S3-11); (I-248) + (S4-1); (I-248) + (S4-2); (I-248) + (S4-3); (I-248) + (S4-4); (I-248) + (S4-5); (I-248) + (S7-1); (I-248) + (S11-1); (I-248) + (S11-2); (I-248) + (S11-3); (I-248) + (S12-1); (I-248) + (S13-1); (I-248) + (S13-2); (I-248) + (S13-3); (I-248) + (S13-4): (I-248) + (S13-5); (I-248) + (S13-6); (I-248) + (S13-7); (I-248) + (S13-8); (I-248) + (S13-9); (I-248) + (S14-1)
(I-249) + (S1-1); (I-249) + (S1-2); (I-249) + (S1-3); (I-249) + (S1-4); (I-249) + (S1-5); (I-249) + (S1-6); (I-249) + (S1-7); (I-249) + (S1-8); (I-249) + (S1-9); (I-249) + (S1-10); (I-249) + (S1-11); (I-249) + (S1-12); (I-249) + (S1-13); (I-249) + (S2-1); (I-249) + (S2-2); (I-249) + (S2-3); (I-249) + (S2-4); (I-249) + (S2-5); (I-249) + (S2-6); (I-249) + (S2-7); (I-249) + (S2-8); (I-249) + (S2-9); (I-249) + (S2-10); (I-249) + (S3-1); (I-249) + (S3-2); (I-249) + (S3-3); (I-249) + (S3-4); (I-249) + (S3-5); (I-249) + (S3-6); (I-249) + (S3-7); (I-249) + (S3-8); (I-249) + (S3-9); (I-249) + (S3-10); (I-249) + (S3-11); (I-249) + (S4-1); (I-249) + (S4-2); (I-249) + (S4-3); (I-249) + (S4-4); (I-249) + (S4-5); (I-249) + (S7-1); (I-249) + (S11-1); (I-249) + (S11-2); (I-249) + (S11-3); (I-249) + (S12-1); (I-249) + (S13-1); (I-249) + (S13-2); (I-249) + (S13-3); (I-249) + (S13-4): (I-249) + (S13-5); (I-249) + (S13-6); (I-249) + (S13-7); (I-249) + (S13-8); (I-249) + (S13-9); (I-249) + (S14-1)
(I-250) + (S1-1); (I-250) + (S1-2); (I-250) + (S1-3); (I-250) + (S1-4); (I-250) + (S1-5); (I-250) + (S1-6); (I-250) + (S1-7); (I-250) + (S1-8); (I-250) + (S1-9); (I-250) + (S1-10); (I-250) + (S1-11); (I-250) + (S1-12); (I-250) + (S1-13); (I-250) + (S2-1); (I-250) + (S2-2); (I-250) + (S2-3); (I-250) + (S2-4); (I-250) + (S2-5); (I-250) + (S2-6); (I-250) + (S2-7); (I-250) + (S2-8); (I-250) + (S2-9); (I-250) + (S2-10); (I-250) + (S3-1); (I-250) + (S3-2); (I-250) + (S3-3); (I-250) + (S3-4); (I-250) + (S3-5); (I-250) + (S3-6); (I-250) + (S3-7); (I-250) + (S3-8); (I-250) + (S3-9); (I-250) + (S3-10); (I-250) + (S3-11); (I-250) + (S4-1); (I-250) + (S4-2); (I-250) + (S4-3); (I-250) + (S4-4); (I-250) + (S4-5); (I-250) + (S7-1); (I-250) + (S11-1); (I-250) + (S11-2); (I-250) + (S11-3); (I-250) + (S12-1); (I-250) + (S13-1); (I-250) + (S13-2); (I-250) + (S13-3); (I-250) + (S13-4): (I-250) + (S13-5); (I-250) + (S13-6); (I-250) + (S13-7); (I-250) + (S13-8); (I-250) + (S13-9); (I-250) + (S14-1)
(I-251) + (S1-1); (I-251) + (S1-2); (I-251) + (S1-3); (I-251) + (S1-4); (I-251) + (S1-5); (I-251) + (S1-6); (I-251) + (S1-7); (I-251) + (S1-8); (I-251) + (S1-9); (I-251) + (S1-10); (I-251) + (S1-11); (I-251) + (S1-12); (I-251) + (S1-13); (I-251) + (S2-1); (I-251) + (S2-2); (I-251) + (S2-3); (I-251) + (S2-4); (I-251) + (S2-5); (I-251) + (S2-6); (I-251) + (S2-7); (I-251) + (S2-8); (I-251) + (S2-9); (I-251) + (S2-10); (I-251) + (S3-1); (I-251) + (S3-2); (I-251) + (S3-3); (I-251) + (S3-4); (I-251) + (S3-5); (I-251) + (S3-6); (I-251) + (S3-7); (I-251) + (S3-8); (I-251) + (S3-9); (I-251) + (S3-10); (I-251) + (S3-11); (I-251) + (S4-1); (I-251) + (S4-2); (I-251) + (S4-3); (I-251) + (S4-4); (I-251) + (S4-5); (I-251) + (S7-1); (I-251) + (S11-1); (I-251) + (S11-2); (I-251) + (S11-3); (I-251) + (S12-1); (I-251) + (S13-1); (I-251) + (S13-2); (I-251) + (S13-3); (I-251) + (S13-4): (I-251) + (S13-5); (I-251) + (S13-6); (I-251) + (S13-7); (I-251) + (S13-8); (I-251) + (S13-9); (I-251) + (S14-1)
(I-252) + (S1-1); (I-252) + (S1-2); (I-252) + (S1-3); (I-252) + (S1-4); (I-252) + (S1-5); (I-252) + (S1-6); (I-252) + (S1-7); (I-252) + (S1-8); (I-252) + (S1-9); (I-252) + (S1-10); (I-252) + (S1-11); (I-252) + (S1-12); (I-252) + (S1-13); (I-252) + (S2-1); (I-252) + (S2-2); (I-252) + (S2-3); (I-252) + (S2-4); (I-252) + (S2-5); (I-252) + (S2-6); (I-252) + (S2-7); (I-252) + (S2-8); (I-252) + (S2-9); (I-252) + (S2-10); (I-252) + (S3-1); (I-252) + (S3-2); (I-252) + (S3-3); (I-252) + (S3-4); (I-252) + (S3-5); (I-252) + (S3-6); (I-252) + (S3-7); (I-252) + (S3-8); (I-252) + (S3-9); (I-252) + (S3-10); (I-252) + (S3-11); (I-252) + (S4-1); (I-252) + (S4-2); (I-252) + (S4-3); (I-252) + (S4-4); (I-252) + (S4-5); (I-252) + (S7-1); (I-252) + (S11-1); (I-252) + (S11-2); (I-252) + (S11-3); (I-252) + (S12-1); (I-252) + (S13-1); (I-252) + (S13-2); (I-252) + (S13-3); (I-252) + (S13-4): (I-252) + (S13-5); (I-252) + (S13-6); (I-252) + (S13-7); (I-252) + (S13-8); (I-252) + (S13-9); (I-252) + (S14-1)
(I-253) + (S1-1); (I-253) + (S1-2); (I-253) + (S1-3); (I-253) + (S1-4); (I-253) + (S1-5); (I-253) + (S1-6); (I-253) + (S1-7); (I-253) + (S1-8); (I-253) + (S1-9); (I-253) + (S1-10); (I-253) + (S1-11); (I-253) + (S1-12); (I-253) + (S1-13); (I-253) + (S2-1); (I-253) + (S2-2); (I-253) + (S2-3); (I-253) + (S2-4); (I-253) + (S2-5); (I-253) + (S2-6); (I-253) + (S2-7); (I-253) + (S2-8); (I-253) + (S2-9); (I-253) + (S2-10); (I-253) + (S3-1); (I-253) + (S3-2); (I-253) + (S3-3); (I-253) + (S3-4); (I-253) + (S3-5); (I-253) + (S3-6); (I-253) + (S3-7); (I-253) + (S3-8); (I-253) + (S3-9); (I-253) + (S3-10); (I-253) + (S3-11); (I-253) + (S4-1); (I-253) + (S4-2); (I-253) + (S4-3); (I-253) + (S4-4); (I-253) + (S4-5); (I-253) + (S7-1); (I-253) + (S11-1); (I-253) + (S11-2); (I-253) + (S11-3); (I-253) + (S12-1); (I-253) + (S13-1); (I-253) + (S13-2); (I-253) + (S13-3); (I-253) + (S13-4): (I-253) + (S13-5); (I-253) + (S13-6); (I-253) + (S13-7); (I-253) + (S13-8); (I-253) + (S13-9); (I-253) + (S14-1)
(I-254) + (S1-1); (I-254) + (S1-2); (I-254) + (S1-3); (I-254) + (S1-4); (I-254) + (S1-5); (I-254) + (S1-6); (I-254) + (S1-7); (I-254) + (S1-8); (I-254) + (S1-9); (I-254) + (S1-10); (I-254) + (S1-11); (I-254) + (S1-12); (I-254) + (S1-13); (I-254) + (S2-1); (I-254) + (S2-2); (I-254) + (S2-3); (I-254) + (S2-4); (I-254) + (S2-5); (I-254) + (S2-6); (I-254) + (S2-7); (I-254) + (S2-8); (I-254) + (S2-9); (I-254) + (S2-10); (I-254) + (S3-1); (I-254) + (S3-2); (I-254) + (S3-3); (I-254) + (S3-4); (I-254) + (S3-5); (I-254) + (S3-6); (I-254) + (S3-7); (I-254) + (S3-8); (I-254) + (S3-9); (I-254) + (S3-10); (I-254) + (S3-11); (I-254) + (S4-1); (I-254) + (S4-2); (I-254) + (S4-3); (I-254) + (S4-4); (I-254) + (S4-5); (I-254) + (S7-1); (I-254) + (S11-1); (I-254) + (S11-2); (I-254) + (S11-3); (I-254) + (S12-1); (I-254) + (S13-1); (I-254) + (S13-2); (I-254) + (S13-3); (I-254) + (S13-4): (I-254) + (S13-5); (I-254) + (S13-6); (I-254) + (S13-7); (I-254) + (S13-8); (I-254) + (S13-9); (I-254) + (S14-1)
(I-255) + (S1-1); (I-255) + (S1-2); (I-255) + (S1-3); (I-255) + (S1-4); (I-255) + (S1-5); (I-255) + (S1-6); (I-255) + (S1-7); (I-255) + (S1-8); (I-255) + (S1-9); (I-255) + (S1-10); (I-255) + (S1-11); (I-255) + (S1-12); (I-255) + (S1-13); (I-255) + (S2-1); (I-255) + (S2-2); (I-255) + (S2-3); (I-255) + (S2-4); (I-255) + (S2-5); (I-255) + (S2-6); (I-255) + (S2-7); (I-255) + (S2-8); (I-255) + (S2-9); (I-255) + (S2-10); (I-255) + (S3-1); (I-255) + (S3-2); (I-255) + (S3-3); (I-255) + (S3-4); (I-255) + (S3-5); (I-255) + (S3-6); (I-255) + (S3-7); (I-255) + (S3-8); (I-255) + (S3-9); (I-255) + (S3-10); (I-255) + (S3-11); (I-255) + (S4-1); (I-255) + (S4-2); (I-255) + (S4-3); (I-255) + (S4-4); (I-255) + (S4-5); (I-255) + (S7-1); (I-255) + (S11-1); (I-255) + (S11-2); (I-255) + (S11-3); (I-255) + (S12-1); (I-255) + (S13-1); (I-255) + (S13-2); (I-255) + (S13-3); (I-255) + (S13-4): (I-255) + (S13-5); (I-255) + (S13-6); (I-255) + (S13-7); (I-255) + (S13-8); (I-255) + (S13-9); (I-255) + (S14-1)
(I-256) + (S1-1); (I-256) + (S1-2); (I-256) + (S1-3); (I-256) + (S1-4); (I-256) + (S1-5); (I-256) + (S1-6); (I-256) + (S1-7); (I-256) + (S1-8); (I-256) + (S1-9); (I-256) + (S1-10); (I-256) + (S1-11); (I-256) + (S1-12); (I-256) + (S1-13); (I-256) + (S2-1); (I-256) + (S2-2); (I-256) + (S2-3); (I-256) + (S2-4); (I-256) + (S2-5); (I-256) + (S2-6); (I-256) + (S2-7); (I-256) + (S2-8); (I-256) + (S2-9); (I-256) + (S2-10); (I-256) + (S3-1); (I-256) + (S3-2); (I-256) + (S3-3); (I-256) + (S3-4); (I-256) + (S3-5); (I-256) + (S3-6); (I-256) + (S3-7); (I-256) + (S3-8); (I-256) + (S3-9); (I-256) + (S3-10); (I-256) + (S3-11); (I-256) + (S4-1); (I-256) + (S4-2); (I-256) + (S4-3); (I-256) + (S4-4); (I-256) + (S4-5); (I-256) + (S7-1); (I-256) + (S11-1); (I-256) + (S11-2); (I-256) + (S11-3); (I-256) + (S12-1); (I-256) + (S13-1); (I-256) + (S13-2); (I-256) + (S13-3); (I-256) + (S13-4): (I-256) + (S13-5); (I-256) + (S13-6); (I-256) + (S13-7); (I-256) + (S13-8); (I-256) + (S13-9); (I-256) + (S14-1)
(I-257) + (S1-1); (I-257) + (S1-2); (I-257) + (S1-3); (I-257) + (S1-4); (I-257) + (S1-5); (I-257) + (S1-6); (I-257) + (S1-7); (I-257) + (S1-8); (I-257) + (S1-9); (I-257) + (S1-10); (I-257) + (S1-11); (I-257) + (S1-12); (I-257) + (S1-13); (I-257) + (S2-1); (I-257) + (S2-2); (I-257) + (S2-3); (I-257) + (S2-4); (I-257) + (S2-5); (I-257) + (S2-6); (I-257) + (S2-7); (I-257) + (S2-8); (I-257) + (S2-9); (I-257) + (S2-10); (I-257) + (S3-1); (I-257) + (S3-2); (I-257) + (S3-3); (I-257) + (S3-4); (I-257) + (S3-5); (I-257) + (S3-6); (I-257) + (S3-7); (I-257) + (S3-8); (I-257) + (S3-9); (I-257) + (S3-10); (I-257) + (S3-11); (I-257) + (S4-1); (I-257) + (S4-2); (I-257) + (S4-3); (I-257) + (S4-4); (I-257) + (S4-5); (I-257) + (S7-1); (I-257) + (S11-1); (I-257) + (S11-2); (I-257) + (S11-3); (I-257) + (S12-1); (I-257) + (S13-1); (I-257) + (S13-2); (I-257) + (S13-3); (I-257) + (S13-4): (I-257) + (S13-5); (I-257) + (S13-6); (I-257) + (S13-7); (I-257) + (S13-8); (I-257) + (S13-9); (I-257) + (S14-1)
(I-258) + (S1-1); (I-258) + (S1-2); (I-258) + (S1-3); (I-258) + (S1-4); (I-258) + (S1-5); (I-258) + (S1-6); (I-258) + (S1-7); (I-258) + (S1-8); (I-258) + (S1-9); (I-258) + (S1-10); (I-258) + (S1-11); (I-258) + (S1-12); (I-258) + (S1-13); (I-258) + (S2-1); (I-258) + (S2-2); (I-258) + (S2-3); (I-258) + (S2-4); (I-258) + (S2-5); (I-258) + (S2-6); (I-258) + (S2-7); (I-258) + (S2-8); (I-258) + (S2-9); (I-258) + (S2-10); (I-258) + (S3-1); (I-258) + (S3-2); (I-258) + (S3-3); (I-258) + (S3-4); (I-258) + (S3-5); (I-258) + (S3-6); (I-258) + (S3-7); (I-258) + (S3-8); (I-258) + (S3-9); (I-258) + (S3-10); (I-258) + (S3-11); (I-258) + (S4-1); (I-258) + (S4-2); (I-258) + (S4-3); (I-258) + (S4-4); (I-258) + (S4-5); (I-258) + (S7-1); (I-258) + (S11-1); (I-258) + (S11-2); (I-258) + (S11-3); (I-258) + (S12-1); (1-258) + (S13-1); (I-258) + (S13-2); (I-258) + (S13-3); (I-258) + (S13-4): (I-258) + (S13-5); (I-258) + (S13-6); (I-258) + (S13-7); (I-258) + (S13-8); (I-258) + (S13-9); (I-258) + (S14-1)
(I-259) + (S1-1); (I-259) + (S1-2); (I-259) + (S1-3); (I-259) + (S1-4); (I-259) + (S1-5); (I-259) + (S1-6); (I-259) + (S1-7); (I-259) + (S1-8); (I-259) + (S1-9); (I-259) + (S1-10); (I-259) + (S1-11); (I-259) + (S1-12); (I-259) + (S1-13); (I-259) + (S2-1); (I-259) + (S2-2); (I-259) + (S2-3); (I-259) + (S2-4); (I-259) + (S2-5); (I-259) + (S2-6); (I-259) + (S2-7); (I-259) + (S2-8); (I-259) + (S2-9); (I-259) + (S2-10); (I-259) + (S3-1); (I-259) + (S3-2); (I-259) + (S3-3); (I-259) + (S3-4); (I-259) + (S3-5); (I-259) + (S3-6); (I-259) + (S3-7); (I-259) + (S3-8); (I-259) + (S3-9); (I-259) + (S3-10); (I-259) + (S3-11); (I-259) + (S4-1); (I-259) + (S4-2); (I-259) + (S4-3); (I-259) + (S4-4); (I-259) + (S4-5); (I-259) + (S7-1); (I-259) + (S11-1); (I-259) + (S11-2); (I-259) + (S11-3); (I-259) + (S12-1); (I-259) + (S13-1); (I-259) + (S13-2); (I-259) + (S13-3); (I-259) + (S13-4): (I-259) + (S13-5); (I-259) + (S13-6); (I-259) + (S13-7); (I-259) + (S13-8); (I-259) + (S13-9); (I-259) + (S14-1)
(I-260) + (S1-1); (I-260) + (S1-2); (I-260) + (S1-3); (I-260) + (S1-4); (I-260) + (S1-5); (I-260) + (S1-6); (I-260) + (S1-7); (I-260) + (S1-8); (I-260) + (S1-9); (I-260) + (S1-10); (I-260) + (S1-11); (I-260) + (S1-12); (I-260) + (S1-13); (I-260) + (S2-1); (I-260) + (S2-2); (I-260) + (S2-3); (I-260) + (S2-4); (I-260) + (S2-5); (I-260) + (S2-6); (I-260) + (S2-7); (I-260) + (S2-8); (I-260) + (S2-9); (I-260) + (S2-10); (I-260) + (S3-1); (I-260) + (S3-2); (I-260) + (S3-3); (I-260) + (S3-4); (I-260) + (S3-5); (I-260) + (S3-6); (I-260) + (S3-7); (I-260) + (S3-8); (I-260) + (S3-9); (I-260) + (S3-10); (I-260) + (S3-11); (I-260) + (S4-1); (I-260) + (S4-2); (I-260) + (S4-3); (I-260) + (S4-4); (I-260) + (S4-5); (I-260) + (S7-1); (I-260) + (S11-1); (I-260) + (S11-2); (I-260) + (S11-3); (I-260) + (S12-1); (I-260) + (S13-1); (I-260) + (S13-2); (I-260) + (S13-3); (I-260) + (S13-4): (I-260) + (S13-5); (I-260) + (S13-6); (I-260) + (S13-7); (I-260) + (S13-8); (I-260) + (S13-9); (I-260) + (S14-1)
(I-261) + (S1-1); (I-261) + (S1-2); (I-261) + (S1-3); (I-261) + (S1-4); (I-261) + (S1-5); (I-261) + (S1-6); (I-261) + (S1-7); (I-261) + (S1-8); (I-261) + (S1-9); (I-261) + (S1-10); (I-261) + (S1-11); (I-261) + (S1-12); (I-261) + (S1-13); (I-261) + (S2-1); (I-261) + (S2-2); (I-261) + (S2-3); (I-261) + (S2-4); (I-261) + (S2-5); (I-261) + (S2-6); (I-261) + (S2-7); (I-261) + (S2-8); (I-261) + (S2-9); (I-261) + (S2-10); (I-261) + (S3-1); (I-261) + (S3-2); (I-261) + (S3-3); (I-261) + (S3-4); (I-261) + (S3-5); (I-261) + (S3-6); (I-261) + (S3-7); (I-261) + (S3-8); (I-261) + (S3-9); (I-261) + (S3-10); (I-261) + (S3-11); (I-261) + (S4-1); (I-261) + (S4-2); (I-261) + (S4-3); (I-261) + (S4-4); (I-261) + (S4-5); (I-261) + (S7-1); (I-261) + (S11-1); (I-261) + (S11-2); (I-261) + (S11-3); (I-261) + (S12-1); (I-261) + (S13-1); (I-261) + (S13-2); (I-261) + (S13-3); (I-261) + (S13-4): (I-261) + (S13-5); (I-261) + (S13-6); (I-261) + (S13-7); (I-261) + (S13-8); (I-261) + (S13-9); (I-261) + (S14-1)
(I-262) + (S1-1); (I-262) + (S1-2); (I-262) + (S1-3); (I-262) + (S1-4); (I-262) + (S1-5); (I-262) + (S1-6); (I-262) + (S1-7); (I-262) + (S1-8); (I-262) + (S1-9); (I-262) + (S1-10); (I-262) + (S1-11); (I-262) + (S1-12); (I-262) + (S1-13); (I-262) + (S2-1); (I-262) + (S2-2); (I-262) + (S2-3); (I-262) + (S2-4); (I-262) + (S2-5); (I-262) + (S2-6); (I-262) + (S2-7); (I-262) + (S2-8); (I-262) + (S2-9); (I-262) + (S2-10); (I-262) + (S3-1); (I-262) + (S3-2); (I-262) + (S3-3); (I-262) + (S3-4); (I-262) + (S3-5); (I-262) + (S3-6); (I-262) + (S3-7); (I-262) + (S3-8); (I-262) + (S3-9); (I-262) + (S3-10); (I-262) + (S3-11); (I-262) + (S4-1); (I-262) + (S4-2); (I-262) + (S4-3); (I-262) + (S4-4); (I-262) + (S4-5); (I-262) + (S7-1); (I-262) + (S11-1); (I-262) + (S11-2); (I-262) + (S11-3); (I-262) + (S12-1); (I-262) + (S13-1); (I-262) + (S13-2); (I-262) + (S13-3); (I-262) + (S13-4): (I-262) + (S13-5); (I-262) + (S13-6); (I-262) + (S13-7); (I-262) + (S13-8); (I-262) + (S13-9); (I-262) + (S14-1)
(I-263) + (S1-1); (I-263) + (S1-2); (I-263) + (S1-3); (I-263) + (S1-4); (I-263) + (S1-5);
(I-263) + (S1-6); (I-263) + (S1-7); (I-263) + (S1-8); (I-263) + (S1-9); (I-263) + (S1-10); (I-263) + (S1-11); (I-263) + (S1-12); (I-263) + (S1-13); (I-263) + (S2-1); (I-263) + (S2-2); (I-263) + (S2-3); (I-263) + (S2-4); (I-263) + (S2-5); (I-263) + (S2-6); (I-263) + (S2-7); (I-263) + (S2-8); (I-263) + (S2-9); (I-263) + (S2-10); (I-263) + (S3-1); (I-263) + (S3-2); (I-263) + (S3-3); (I-263) + (S3-4); (I-263) + (S3-5); (I-263) + (S3-6); (I-263) + (S3-7); (I-263) + (S3-8); (I-263) + (S3-9); (I-263) + (S3-10); (I-263) + (S3-11); (I-263) + (S4-1); (I-263) + (S4-2); (I-263) + (S4-3); (I-263) + (S4-4); (I-263) + (S4-5); (I-263) + (S7-1); (I-263) + (S11-1); (I-263) + (S11-2); (I-263) + (S11-3); (I-263) + (S12-1); (I-263) + (S13-1); (I-263) + (S13-2); (I-263) + (S13-3); (I-263) + (S13-4): (I-263) + (S13-5); (I-263) + (S13-6); (I-263) + (S13-7); (I-263) + (S13-8); (I-263) + (S13-9); (I-263) + (S14-1)
(I-264) + (S1-1); (I-264) + (S1-2); (I-264) + (S1-3); (I-264) + (S1-4); (I-264) + (S1-5); (I-264) + (S1-6); (I-264) + (S1-7); (I-264) + (S1-8); (I-264) + (S1-9); (I-264) + (S1-10); (I-264) + (S1-11); (I-264) + (S1-12); (I-264) + (S1-13); (I-264) + (S2-1); (I-264) + (S2-2); (I-264) + (S2-3); (I-264) + (S2-4); (I-264) + (S2-5); (I-264) + (S2-6); (I-264) + (S2-7); (I-264) + (S2-8); (I-264) + (S2-9); (I-264) + (S2-10); (I-264) + (S3-1); (I-264) + (S3-2); (I-264) + (S3-3); (I-264) + (S3-4); (I-264) + (S3-5); (I-264) + (S3-6); (I-264) + (S3-7); (I-264) + (S3-8); (I-264) + (S3-9); (I-264) + (S3-10); (I-264) + (S3-11); (I-264) + (S4-1); (I-264) + (S4-2); (I-264) + (S4-3); (I-264) + (S4-4); (I-264) + (S4-5); (I-264) + (S7-1); (I-264) + (S11-1); (I-264) + (S11-2); (I-264) + (S11-3); (I-264) + (S12-1); (I-264) + (S13-1); (I-264) + (S13-2); (I-264) + (S13-3); (I-264) + (S13-4): (I-264) + (S13-5); (I-264) + (S13-6); (I-264) + (S13-7); (I-264) + (S13-8); (I-264) + (S13-9); (I-264) + (S14-1)
(I-265) + (S1-1); (I-265) + (S1-2); (I-265) + (S1-3); (I-265) + (S1-4); (I-265) + (S1-5); (I-265) + (S1-6); (I-265) + (S1-7); (I-265) + (S1-8); (I-265) + (S1-9); (I-265) + (S1-10); (I-265) + (S1-11); (I-265) + (S1-12); (I-265) + (S1-13); (I-265) + (S2-1); (I-265) + (S2-2); (I-265) + (S2-3); (I-265) + (S2-4); (I-265) + (S2-5); (I-265) + (S2-6); (I-265) + (S2-7); (I-265) + (S2-8); (I-265) + (S2-9); (I-265) + (S2-10); (I-265) + (S3-1); (I-265) + (S3-2); (I-265) + (S3-3); (I-265) + (S3-4); (I-265) + (S3-5); (I-265) + (S3-6); (I-265) + (S3-7); (I-265) + (S3-8); (I-265) + (S3-9); (I-265) + (S3-10); (I-265) + (S3-11); (I-265) + (S4-1); (I-265) + (S4-2); (I-265) + (S4-3); (I-265) + (S4-4); (I-265) + (S4-5); (I-265) + (S7-1); (I-265) + (S11-1); (I-265) + (S11-2); (I-265) + (S11-3); (I-265) + (S12-1); (I-265) + (S13-1); (I-265) + (S13-2); (I-265) + (S13-3); (I-265) + (S13-4): (I-265) + (S13-5); (I-265) + (S13-6); (I-265) + (S13-7); (I-265) + (S13-8); (I-265) + (S13-9); (I-265) + (S14-1)
(I-266) + (S1-1); (I-266) + (S1-2); (I-266) + (S1-3); (I-266) + (S1-4); (I-266) + (S1-5); (I-266) + (S1-6); (I-266) + (S1-7); (I-266) + (S1-8); (I-266) + (S1-9); (I-266) + (S1-10); (I-266) + (S1-11); (I-266) + (S1-12); (I-266) + (S1-13); (I-266) + (S2-1); (I-266) + (S2-2); (I-266) + (S2-3); (I-266) + (S2-4); (I-266) + (S2-5); (I-266) + (S2-6); (I-266) + (S2-7); (I-266) + (S2-8); (I-266) + (S2-9); (I-266) + (S2-10); (I-266) + (S3-1); (I-266) + (S3-2); (I-266) + (S3-3); (I-266) + (S3-4); (I-266) + (S3-5); (I-266) + (S3-6); (I-266) + (S3-7); (I-266) + (S3-8); (I-266) + (S3-9); (I-266) + (S3-10); (I-266) + (S3-11); (I-266) + (S4-1); (I-266) + (S4-2); (I-266) + (S4-3); (I-266) + (S4-4); (I-266) + (S4-5); (I-266) + (S7-1); (I-266) + (S11-1); (I-266) + (S11-2); (I-266) + (S11-3); (I-266) + (S12-1); (I-266) + (S13-1); (I-266) + (S13-2); (I-266) + (S13-3); (I-266) + (S13-4): (I-266) + (S13-5); (I-266) + (S13-6); (I-266) + (S13-7); (I-266) + (S13-8); (I-266) + (S13-9); (I-266) + (S14-1)
(I-267) + (S1-1); (I-267) + (S1-2); (I-267) + (S1-3); (I-267) + (S1-4); (I-267) + (S1-5); (I-267) + (S1-6); (I-267) + (S1-7); (I-267) + (S1-8); (I-267) + (S1-9); (I-267) + (S1-10); (I-267) + (S1-11); (I-267) + (S1-12); (I-267) + (S1-13); (I-267) + (S2-1); (I-267) + (S2-2); (I-267) + (S2-3); (I-267) + (S2-4); (I-267) + (S2-5); (I-267) + (S2-6); (I-267) + (S2-7); (I-267) + (S2-8); (I-267) + (S2-9); (I-267) + (S2-10); (I-267) + (S3-1); (I-267) + (S3-2); (I-267) + (S3-3); (I-267) + (S3-4); (I-267) + (S3-5); (I-267) + (S3-6); (I-267) + (S3-7); (I-267) + (S3-8); (I-267) + (S3-9); (I-267) + (S3-10); (I-267) + (S3-11); (I-267) + (S4-1); (I-267) + (S4-2); (I-267) + (S4-3); (I-267) + (S4-4); (I-267) + (S4-5); (I-267) + (S7-1); (I-267) + (S11-1); (I-267) + (S11-2); (I-267) + (S11-3); (I-267) + (S12-1); (I-267) + (S13-1); (I-267) + (S13-2); (I-267) + (S13-3); (I-267) + (S13-4): (I-267) + (S13-5); (I-267) + (S13-6); (I-267) + (S13-7); (I-267) + (S13-8); (I-267) + (S13-9); (I-267) + (S14-1)
(I-268) + (S1-1); (I-268) + (S1-2); (I-268) + (S1-3); (I-268) + (S1-4); (I-268) + (S1-5); (I-268) + (S1-6); (I-268) + (S1-7); (I-268) + (S1-8); (I-268) + (S1-9); (I-268) + (S1-10); (I-268) + (S1-11); (I-268) + (S1-12); (I-268) + (S1-13); (I-268) + (S2-1); (I-268) + (S2-2); (I-268) + (S2-3); (I-268) + (S2-4); (I-268) + (S2-5); (I-268) + (S2-6); (I-268) + (S2-7); (I-268) + (S2-8); (I-268) + (S2-9); (I-268) + (S2-10); (I-268) + (S3-1); (I-268) + (S3-2); (I-268) + (S3-3); (I-268) + (S3-4); (I-268) + (S3-5); (I-268) + (S3-6); (I-268) + (S3-7); (I-268) + (S3-8); (I-268) + (S3-9); (I-268) + (S3-10); (I-268) + (S3-11); (I-268) + (S4-1); (I-268) + (S4-2); (I-268) + (S4-3); (I-268) + (S4-4); (I-268) + (S4-5); (I-268) + (S7-1); (I-268) + (S11-1); (I-268) + (S11-2); (I-268) + (S11-3); (I-268) + (S12-1); (I-268) + (S13-1); (I-268) + (S13-2); (I-268) + (S13-3); (I-268) + (S13-4): (I-268) + (S13-5); (I-268) + (S13-6); (I-268) + (S13-7); (I-268) + (S13-8); (I-268) + (S13-9); (I-268) + (S14-1)
(I-269) + (S1-1); (I-269) + (S1-2); (I-269) + (S1-3); (I-269) + (S1-4); (I-269) + (S1-5); (I-269) + (S1-6); (I-269) + (S1-7); (I-269) + (S1-8); (I-269) + (S1-9); (I-269) + (S1-10); (I-269) + (S1-11); (I-269) + (S1-12); (I-269) + (S1-13); (I-269) + (S2-1); (I-269) + (S2-2); (I-269) + (S2-3); (I-269) + (S2-4); (I-269) + (S2-5); (I-269) + (S2-6); (I-269) + (S2-7); (I-269) + (S2-8); (I-269) + (S2-9); (I-269) + (S2-10); (I-269) + (S3-1); (I-269) + (S3-2); (I-269) + (S3-3); (I-269) + (S3-4); (I-269) + (S3-5); (I-269) + (S3-6); (I-269) + (S3-7); (I-269) + (S3-8); (I-269) + (S3-9); (I-269) + (S3-10); (I-269) + (S3-11); (I-269) + (S4-1); (I-269) + (S4-2); (I-269) + (S4-3); (I-269) + (S4-4); (I-269) + (S4-5); (I-269) + (S7-1); (I-269) + (S11-1); (I-269) + (S11-2); (I-269) + (S11-3); (I-269) + (S12-1); (I-269) + (S13-1); (I-269) + (S13-2); (I-269) + (S13-3); (I-269) + (S13-4): (I-269) + (S13-5); (I-269) + (S13-6); (I-269) + (S13-7); (I-269) + (S13-8); (I-269) + (S13-9); (I-269) + (S14-1)
(I-270) + (S1-1); (I-270) + (S1-2); (I-270) + (S1-3); (I-270) + (S1-4); (I-270) + (S1-5); (I-270) + (S1-6); (I-270) + (S1-7); (I-270) + (S1-8); (I-270) + (S1-9); (I-270) + (S1-10); (I-270) + (S1-11); (I-270) + (S1-12); (I-270) + (S1-13); (I-270) + (S2-1); (I-270) + (S2-2); (I-270) + (S2-3); (I-270) + (S2-4); (I-270) + (S2-5); (I-270) + (S2-6); (I-270) + (S2-7); (I-270) + (S2-8); (I-270) + (S2-9); (I-270) + (S2-10); (I-270) + (S3-1); (I-270) + (S3-2); (I-270) + (S3-3); (I-270) + (S3-4); (I-270) + (S3-5); (I-270) + (S3-6); (I-270) + (S3-7); (I-270) + (S3-8); (I-270) + (S3-9); (I-270) + (S3-10); (I-270) + (S3-11); (I-270) + (S4-1); (I-270) + (S4-2); (I-270) + (S4-3); (I-270) + (S4-4); (I-270) + (S4-5); (I-270) + (S7-1); (I-270) + (S11-1); (I-270) + (S11-2); (I-270) + (S11-3); (I-270) + (S12-1); (I-270) + (S13-1); (I-270) + (S13-2); (I-270) + (S13-3); (I-270) + (S13-4): (I-270) + (S13-5); (I-270) + (S13-6); (I-270) + (S13-7); (I-270) + (S13-8); (I-270) + (S13-9); (I-270) + (S14-1)
(I-271) + (S1-1); (I-271) + (S1-2); (I-271) + (S1-3); (I-271) + (S1-4); (I-271) + (S1-5); (I-271) + (S1-6); (I-271) + (S1-7); (I-271) + (S1-8); (I-271) + (S1-9); (I-271) + (S1-10); (I-271) + (S1-11); (I-271) + (S1-12); (I-271) + (S1-13); (I-271) + (S2-1); (I-271) + (S2-2); (I-271) + (S2-3); (I-271) + (S2-4); (I-271) + (S2-5); (I-271) + (S2-6); (I-271) + (S2-7); (I-271) + (S2-8); (I-271) + (S2-9); (I-271) + (S2-10); (I-271) + (S3-1); (I-271) + (S3-2); (I-271) + (S3-3); (I-271) + (S3-4); (I-271) + (S3-5); (I-271) + (S3-6); (I-271) + (S3-7); (I-271) + (S3-8); (I-271) + (S3-9); (I-271) + (S3-10); (I-271) + (S3-11); (I-271) + (S4-1); (I-271) + (S4-2); (I-271) + (S4-3); (I-271) + (S4-4); (I-271) + (S4-5); (I-271) + (S7-1); (I-271) + (S11-1); (I-271) + (S11-2); (I-271) + (S11-3); (I-271) + (S12-1); (I-271) + (S13-1); (I-271) + (S13-2); (I-271) + (S13-3); (I-271) + (S13-4): (I-271) + (S13-5); (I-271) + (S13-6); (I-271) + (S13-7); (I-271) + (S13-8); (I-271) + (S13-9); (I-271) + (S14-1)
(I-272) + (S1-1); (I-272) + (S1-2); (I-272) + (S1-3); (I-272) + (S1-4); (I-272) + (S1-5); (I-272) + (S1-6); (I-272) + (S1-7); (I-272) + (S1-8); (I-272) + (S1-9); (I-272) + (S1-10); (I-272) + (S1-11); (I-272) + (S1-12); (I-272) + (S1-13); (I-272) + (S2-1); (I-272) + (S2-2); (I-272) + (S2-3); (I-272) + (S2-4); (I-272) + (S2-5); (I-272) + (S2-6); (I-272) + (S2-7); (I-272) + (S2-8); (I-272) + (S2-9); (I-272) + (S2-10); (I-272) + (S3-1); (I-272) + (S3-2); (I-272) + (S3-3); (I-272) + (S3-4); (I-272) + (S3-5); (I-272) + (S3-6); (I-272) + (S3-7); (I-272) + (S3-8); (I-272) + (S3-9); (I-272) + (S3-10); (I-272) + (S3-11); (I-272) + (S4-1); (I-272) + (S4-2); (I-272) + (S4-3); (I-272) + (S4-4); (I-272) + (S4-5); (I-272) + (S7-1); (I-272) + (S11-1); (I-272) + (S11-2); (I-272) + (S11-3); (I-272) + (S12-1); (I-272) + (S13-1); (I-272) + (S13-2); (I-272) + (S13-3); (I-272) + (S13-4): (I-272) + (S13-5); (I-272) + (S13-6); (I-272) + (S13-7); (I-272) + (S13-8); (I-272) + (S13-9); (I-272) + (S14-1)
(I-273) + (S1-1); (I-273) + (S1-2); (I-273) + (S1-3); (I-273) + (S1-4); (I-273) + (S1-5); (I-273) + (S1-6); (I-273) + (S1-7); (I-273) + (S1-8); (I-273) + (S1-9); (I-273) + (S1-10); (I-273) + (S1-11); (I-273) + (S1-12); (I-273) + (S1-13); (I-273) + (S2-1); (I-273) + (S2-2); (I-273) + (S2-3); (I-273) + (S2-4); (I-273) + (S2-5); (I-273) + (S2-6); (I-273) + (S2-7); (I-273) + (S2-8); (I-273) + (S2-9); (I-273) + (S2-10); (I-273) + (S3-1); (I-273) + (S3-2); (I-273) + (S3-3); (I-273) + (S3-4); (I-273) + (S3-5); (I-273) + (S3-6); (I-273) + (S3-7); (I-273) + (S3-8); (I-273) + (S3-9); (I-273) + (S3-10); (I-273) + (S3-11); (I-273) + (S4-1); (I-273) + (S4-2); (I-273) + (S4-3); (I-273) + (S4-4); (I-273) + (S4-5); (I-273) + (S7-1); (I-273) + (S11-1); (I-273) + (S11-2); (I-273) + (S11-3); (I-273) + (S12-1); (I-273) + (S13-1); (I-273) + (S13-2); (I-273) + (S13-3); (I-273) + (S13-4): (I-273) + (S13-5); (I-273) + (S13-6); (I-273) + (S13-7); (I-273) + (S13-8); (I-273) + (S13-9); (I-273) + (S14-1)
(I-274) + (S1-1); (I-274) + (S1-2); (I-274) + (S1-3); (I-274) + (S1-4); (I-274) + (S1-5); (I-274) + (S1-6); (I-274) + (S1-7); (I-274) + (S1-8); (I-274) + (S1-9); (I-274) + (S1-10); (I-274) + (S1-11); (I-274) + (S1-12); (I-274) + (S1-13); (I-274) + (S2-1); (I-274) + (S2-2); (I-274) + (S2-3); (I-274) + (S2-4); (I-274) + (S2-5); (I-274) + (S2-6); (I-274) + (S2-7); (I-274) + (S2-8); (I-274) + (S2-9); (I-274) + (S2-10); (I-274) + (S3-1); (I-274) + (S3-2); (I-274) + (S3-3); (I-274) + (S3-4); (I-274) + (S3-5); (I-274) + (S3-6); (I-274) + (S3-7); (I-274) + (S3-8); (I-274) + (S3-9); (I-274) + (S3-10); (I-274) + (S3-11); (I-274) + (S4-1); (I-274) + (S4-2); (I-274) + (S4-3); (I-274) + (S4-4); (I-274) + (S4-5); (I-274) + (S7-1); (I-274) + (S11-1); (I-274) + (S11-2); (I-274) + (S11-3); (I-274) + (S12-1); (I-274) + (S13-1); (I-274) + (S13-2); (I-274) + (S13-3); (I-274) + (S13-4): (I-274) + (S13-5); (I-274) + (S13-6); (I-274) + (S13-7); (I-274) + (S13-8); (I-274) + (S13-9); (I-274) + (S14-1)
(I-275) + (S1-1); (I-275) + (S1-2); (I-275) + (S1-3); (I-275) + (S1-4); (I-275) + (S1-5); (I-275) + (S1-6); (I-275) + (S1-7); (I-275) + (S1-8); (I-275) + (S1-9); (I-275) + (S1-10); (I-275) + (S1-11); (I-275) + (S1-12); (I-275) + (S1-13); (I-275) + (S2-1); (I-275) + (S2-2); (I-275) + (S2-3); (I-275) + (S2-4); (I-275) + (S2-5); (I-275) + (S2-6); (I-275) + (S2-7); (I-275) + (S2-8); (I-275) + (S2-9); (I-275) + (S2-10); (I-275) + (S3-1); (I-275) + (S3-2); (I-275) + (S3-3); (I-275) + (S3-4); (I-275) + (S3-5); (I-275) + (S3-6); (I-275) + (S3-7); (I-275) + (S3-8); (I-275) + (S3-9); (I-275) + (S3-10); (I-275) + (S3-11); (I-275) + (S4-1); (I-275) + (S4-2); (I-275) + (S4-3); (I-275) + (S4-4); (I-275) + (S4-5); (I-275) + (S7-1); (I-275) + (S11-1); (I-275) + (S11-2); (I-275) + (S11-3); (I-275) + (S12-1); (I-275) + (S13-1); (I-275) + (S13-2); (I-275) + (S13-3); (I-275) + (S13-4): (I-275) + (S13-5); (I-275) + (S13-6); (I-275) + (S13-7); (I-275) + (S13-8); (I-275) + (S13-9); (I-275) + (S14-1)
(I-276) + (S1-1); (I-276) + (S1-2); (I-276) + (S1-3); (I-276) + (S1-4); (I-276) + (S1-5); (I-276) + (S1-6); (I-276) + (S1-7); (I-276) + (S1-8); (I-276) + (S1-9); (I-276) + (S1-10); (I-276) + (S1-11); (I-276) + (S1-12); (I-276) + (S1-13); (I-276) + (S2-1); (I-276) + (S2-2); (I-276) + (S2-3); (I-276) + (S2-4); (I-276) + (S2-5); (I-276) + (S2-6); (I-276) + (S2-7); (I-276) + (S2-8); (I-276) + (S2-9); (I-276) + (S2-10); (I-276) + (S3-1); (I-276) + (S3-2); (I-276) + (S3-3); (I-276) + (S3-4); (I-276) + (S3-5); (I-276) + (S3-6); (I-276) + (S3-7); (I-276) + (S3-8); (I-276) + (S3-9); (I-276) + (S3-10); (I-276) + (S3-11); (I-276) + (S4-1); (I-276) + (S4-2); (I-276) + (S4-3); (I-276) + (S4-4); (I-276) + (S4-5); (I-276) + (S7-1); (I-276) + (S11-1); (I-276) + (S11-2); (I-276) + (S11-3); (I-276) + (S12-1); (I-276) + (S13-1); (I-276) + (S13-2); (I-276) + (S13-3); (I-276) + (S13-4): (I-276) + (S13-5); (I-276) + (S13-6); (I-276) + (S13-7); (I-276) + (S13-8); (I-276) + (S13-9); (I-276) + (S14-1)
(I-277) + (S1-1); (I-277) + (S1-2); (I-277) + (S1-3); (I-277) + (S1-4); (I-277) + (S1-5); (I-277) + (S1-6); (I-277) + (S1-7); (I-277) + (S1-8); (I-277) + (S1-9); (I-277) + (S1-10); (I-277) + (S1-11); (I-277) + (S1-12); (I-277) + (S1-13); (I-277) + (S2-1); (I-277) + (S2-2); (I-277) + (S2-3); (I-277) + (S2-4); (I-277) + (S2-5); (I-277) + (S2-6); (I-277) + (S2-7); (I-277) + (S2-8); (I-277) + (S2-9); (I-277) + (S2-10); (I-277) + (S3-1); (I-277) + (S3-2); (I-277) + (S3-3); (I-277) + (S3-4); (I-277) + (S3-5); (I-277) + (S3-6); (I-277) + (S3-7); (I-277) + (S3-8); (I-277) + (S3-9); (I-277) + (S3-10); (I-277) + (S3-11); (I-277) + (S4-1); (I-277) + (S4-2); (I-277) + (S4-3); (I-277) + (S4-4); (I-277) + (S4-5); (I-277) + (S7-1); (I-277) + (S11-1); (I-277) + (S11-2); (I-277) + (S11-3); (I-277) + (S12-1); (I-277) + (S13-1); (I-277) + (S13-2); (I-277) + (S13-3); (I-277) + (S13-4): (I-277) + (S13-5); (I-277) + (S13-6); (I-277) + (S13-7); (I-277) + (S13-8); (I-277) + (S13-9); (I-277) + (S14-1)
(I-278) + (S1-1); (I-278) + (S1-2); (I-278) + (S1-3); (I-278) + (S1-4); (I-278) + (S1-5); (I-278) + (S1-6); (I-278) + (S1-7); (I-278) + (S1-8); (I-278) + (S1-9); (I-278) + (S1-10); (I-278) + (S1-11); (I-278) + (S1-12); (I-278) + (S1-13); (I-278) + (S2-1); (I-278) + (S2-2); (I-278) + (S2-3); (I-278) + (S2-4); (I-278) + (S2-5); (I-278) + (S2-6); (I-278) + (S2-7); (I-278) + (S2-8); (I-278) + (S2-9); (I-278) + (S2-10); (I-278) + (S3-1); (I-278) + (S3-2); (I-278) + (S3-3); (I-278) + (S3-4); (I-278) + (S3-5); (I-278) + (S3-6); (I-278) + (S3-7); (I-278) + (S3-8); (I-278) + (S3-9); (I-278) + (S3-10); (I-278) + (S3-11); (I-278) + (S4-1); (I-278) + (S4-2); (I-278) + (S4-3); (I-278) + (S4-4); (I-278) + (S4-5); (I-278) + (S7-1); (I-278) + (S11-1); (I-278) + (S11-2); (I-278) + (S11-3); (I-278) + (S12-1); (I-278) + (S13-1); (I-278) + (S13-2); (I-278) + (S13-3); (I-278) + (S13-4): (I-278) + (S13-5); (I-278) + (S13-6); (I-278) + (S13-7); (I-278) + (S13-8); (I-278) + (S13-9); (I-278) + (S14-1)
(I-279) + (S1-1); (I-279) + (S1-2); (I-279) + (S1-3); (I-279) + (S1-4); (I-279) + (S1-5); (I-279) + (S1-6); (I-279) + (S1-7); (I-279) + (S1-8); (I-279) + (S1-9); (I-279) + (S1-10); (I-279) + (S1-11); (I-279) + (S1-12); (I-279) + (S1-13); (I-279) + (S2-1); (I-279) + (S2-2); (I-279) + (S2-3); (I-279) + (S2-4); (I-279) + (S2-5); (I-279) + (S2-6); (I-279) + (S2-7); (I-279) + (S2-8); (I-279) + (S2-9); (I-279) + (S2-10); (I-279) + (S3-1); (I-279) + (S3-2); (I-279) + (S3-3); (I-279) + (S3-4); (I-279) + (S3-5); (I-279) + (S3-6); (I-279) + (S3-7); (I-279) + (S3-8); (I-279) + (S3-9); (I-279) + (S3-10); (I-279) + (S3-11); (I-279) + (S4-1); (I-279) + (S4-2); (I-279) + (S4-3); (I-279) + (S4-4); (I-279) + (S4-5); (I-279) + (S7-1); (I-279) + (S11-1); (I-279) + (S11-2); (I-279) + (S11-3); (I-279) + (S12-1); (I-279) + (S13-1); (I-279) + (S13-2); (I-279) + (S13-3); (I-279) + (S13-4): (I-279) + (S13-5); (I-279) + (S13-6); (I-279) + (S13-7); (I-279) + (S13-8); (I-279) + (S13-9); (I-279) + (S14-1)
(I-280) + (S1-1); (I-280) + (S1-2); (I-280) + (S1-3); (I-280) + (S1-4); (I-280) + (S1-5); (I-280) + (S1-6); (I-280) + (S1-7); (I-280) + (S1-8); (I-280) + (S1-9); (I-280) + (S1-10); (I-280) + (S1-11); (I-280) + (S1-12); (I-280) + (S1-13); (I-280) + (S2-1); (I-280) + (S2-2); (I-280) + (S2-3); (I-280) + (S2-4); (I-280) + (S2-5); (I-280) + (S2-6); (I-280) + (S2-7); (I-280) + (S2-8); (I-280) + (S2-9); (I-280) + (S2-10); (I-280) + (S3-1); (I-280) + (S3-2); (I-280) + (S3-3); (I-280) + (S3-4); (I-280) + (S3-5); (I-280) + (S3-6); (I-280) + (S3-7); (I-280) + (S3-8); (I-280) + (S3-9); (I-280) + (S3-10); (I-280) + (S3-11); (I-280) + (S4-1); (I-280) + (S4-2); (I-280) + (S4-3); (I-280) + (S4-4); (I-280) + (S4-5); (I-280) + (S7-1); (I-280) + (S11-1); (I-280) + (S11-2); (I-280) + (S11-3); (I-280) + (S12-1); (I-280) + (S13-1); (I-280) + (S13-2); (I-280) + (S13-3); (I-280) + (S13-4): (I-280) + (S13-5); (I-280) + (S13-6); (I-280) + (S13-7); (I-280) + (S13-8); (I-280) + (S13-9); (I-280) + (S14-1)
(I-281) + (S1-1); (I-281) + (S1-2); (I-281) + (S1-3); (I-281) + (S1-4); (I-281) + (S1-5); (I-281) + (S1-6); (I-281) + (S1-7); (I-281) + (S1-8); (I-281) + (S1-9); (I-281) + (S1-10); (I-281) + (S1-11); (I-281) + (S1-12); (I-281) + (S1-13); (I-281) + (S2-1); (I-281) + (S2-2); (I-281) + (S2-3); (I-281) + (S2-4); (I-281) + (S2-5); (I-281) + (S2-6); (I-281) + (S2-7); (I-281) + (S2-8); (I-281) + (S2-9); (I-281) + (S2-10); (I-281) + (S3-1); (I-281) + (S3-2); (I-281) + (S3-3); (I-281) + (S3-4); (I-281) + (S3-5); (I-281) + (S3-6); (I-281) + (S3-7); (I-281) + (S3-8); (I-281) + (S3-9); (I-281) + (S3-10); (I-281) + (S3-11); (I-281) + (S4-1); (I-281) + (S4-2); (I-281) + (S4-3); (I-281) + (S4-4); (I-281) + (S4-5); (I-281) + (S7-1); (I-281) + (S11-1); (I-281) + (S11-2); (I-281) + (S11-3); (I-281) + (S12-1); (I-281) + (S13-1); (I-281) + (S13-2); (I-281) + (S13-3); (I-281) + (S13-4): (I-281) + (S13-5); (I-281) + (S13-6); (I-281) + (S13-7); (I-281) + (S13-8); (I-281) + (S13-9); (I-281) + (S14-1)
(I-282) + (S1-1); (I-282) + (S1-2); (I-282) + (S1-3); (I-282) + (S1-4); (I-282) + (S1-5); (I-282) + (S1-6); (I-282) + (S1-7); (I-282) + (S1-8); (I-282) + (S1-9); (I-282) + (S1-10); (I-282) + (S1-11); (I-282) + (S1-12); (I-282) + (S1-13); (I-282) + (S2-1); (I-282) + (S2-2); (I-282) + (S2-3); (I-282) + (S2-4); (I-282) + (S2-5); (I-282) + (S2-6); (I-282) + (S2-7); (I-282) + (S2-8); (I-282) + (S2-9); (I-282) + (S2-10); (I-282) + (S3-1); (I-282) + (S3-2); (I-282) + (S3-3); (I-282) + (S3-4); (I-282) + (S3-5); (I-282) + (S3-6); (I-282) + (S3-7); (I-282) + (S3-8); (I-282) + (S3-9); (I-282) + (S3-10); (I-282) + (S3-11); (I-282) + (S4-1); (I-282) + (S4-2); (I-282) + (S4-3); (I-282) + (S4-4); (I-282) + (S4-5); (I-282) + (S7-1); (I-282) + (S11-1); (I-282) + (S11-2); (I-282) + (S11-3); (I-282) + (S12-1); (I-282) + (S13-1); (I-282) + (S13-2); (I-282) + (S13-3); (I-282) + (S13-4): (I-282) + (S13-5); (I-282) + (S13-6); (I-282) + (S13-7); (I-282) + (S13-8); (I-282) + (S13-9); (I-282) + (S14-1)
(I-283) + (S1-1); (I-283) + (S1-2); (I-283) + (S1-3); (I-283) + (S1-4); (I-283) + (S1-5); (I-283) + (S1-6); (I-283) + (S1-7); (I-283) + (S1-8); (I-283) + (S1-9); (I-283) + (S1-10); (I-283) + (S1-11); (I-283) + (S1-12); (I-283) + (S1-13); (I-283) + (S2-1); (I-283) + (S2-2); (I-283) + (S2-3); (I-283) + (S2-4); (I-283) + (S2-5); (I-283) + (S2-6); (I-283) + (S2-7); (I-283) + (S2-8); (I-283) + (S2-9); (I-283) + (S2-10); (I-283) + (S3-1); (I-283) + (S3-2); (I-283) + (S3-3); (I-283) + (S3-4); (I-283) + (S3-5); (I-283) + (S3-6); (I-283) + (S3-7); (I-283) + (S3-8); (I-283) + (S3-9); (I-283) + (S3-10); (I-283) + (S3-11); (I-283) + (S4-1); (I-283) + (S4-2); (I-283) + (S4-3); (I-283) + (S4-4); (I-283) + (S4-5); (I-283) + (S7-1); (I-283) + (S11-1); (I-283) + (S11-2); (I-283) + (S11-3); (I-283) + (S12-1); (I-283) + (S13-1); (I-283) + (S13-2); (I-283) + (S13-3); (I-283) + (S13-4): (I-283) + (S13-5); (I-283) + (S13-6); (I-283) + (S13-7); (I-283) + (S13-8); (I-283) + (S13-9); (I-283) + (S14-1)
(I-284) + (S1-1); (I-284) + (S1-2); (I-284) + (S1-3); (I-284) + (S1-4); (I-284) + (S1-5); (I-284) + (S1-6); (I-284) + (S1-7); (I-284) + (S1-8); (I-284) + (S1-9); (I-284) + (S1-10); (I-284) + (S1-11); (I-284) + (S1-12); (I-284) + (S1-13); (I-284) + (S2-1); (I-284) + (S2-2); (I-284) + (S2-3); (I-284) + (S2-4); (I-284) + (S2-5); (I-284) + (S2-6); (I-284) + (S2-7); (I-284) + (S2-8); (I-284) + (S2-9); (I-284) + (S2-10); (I-284) + (S3-1); (I-284) + (S3-2); (I-284) + (S3-3); (I-284) + (S3-4); (I-284) + (S3-5); (I-284) + (S3-6); (I-284) + (S3-7); (I-284) + (S3-8); (I-284) + (S3-9); (I-284) + (S3-10); (I-284) + (S3-11); (I-284) + (S4-1); (I-284) + (S4-2); (I-284) + (S4-3); (I-284) + (S4-4); (I-284) + (S4-5); (I-284) + (S7-1); (I-284) + (S11-1); (I-284) + (S11-2); (I-284) + (S11-3); (I-284) + (S12-1); (I-284) + (S13-1); (I-284) + (S13-2); (I-284) + (S13-3); (I-284) + (S13-4): (I-284) + (S13-5); (I-284) + (S13-6); (I-284) + (S13-7); (I-284) + (S13-8); (I-284) + (S13-9); (I-284) + (S14-1)
(I-285) + (S1-1); (I-285) + (S1-2); (I-285) + (S1-3); (I-285) + (S1-4); (I-285) + (S1-5); (I-285) + (S1-6); (I-285) + (S1-7); (I-285) + (S1-8); (I-285) + (S1-9); (I-285) + (S1-10); (I-285) + (S1-11); (I-285) + (S1-12); (I-285) + (S1-13); (I-285) + (S2-1); (I-285) + (S2-2); (I-285) + (S2-3); (I-285) + (S2-4); (I-285) + (S2-5); (I-285) + (S2-6); (I-285) + (S2-7); (I-285) + (S2-8); (I-285) + (S2-9); (I-285) + (S2-10); (I-285) + (S3-1); (I-285) + (S3-2); (I-285) + (S3-3); (I-285) + (S3-4); (I-285) + (S3-5); (I-285) + (S3-6); (I-285) + (S3-7); (I-285) + (S3-8); (I-285) + (S3-9); (I-285) + (S3-10); (I-285) + (S3-11); (I-285) + (S4-1); (I-285) + (S4-2); (I-285) + (S4-3); (I-285) + (S4-4); (I-285) + (S4-5); (I-285) + (S7-1); (I-285) + (S11-1); (I-285) + (S11-2); (I-285) + (S11-3); (I-285) + (S12-1); (I-285) + (S13-1); (I-285) + (S13-2); (I-285) + (S13-3); (I-285) + (S13-4): (I-285) + (S13-5); (I-285) + (S13-6); (I-285) + (S13-7); (I-285) + (S13-8); (I-285) + (S13-9); (I-285) + (S14-1)
(I-286) + (S1-1); (I-286) + (S1-2); (I-286) + (S1-3); (I-286) + (S1-4); (I-286) + (S1-5); (I-286) + (S1-6); (I-286) + (S1-7); (I-286) + (S1-8); (I-286) + (S1-9); (I-286) + (S1-10); (I-286) + (S1-11); (I-286) + (S1-12); (I-286) + (S1-13); (I-286) + (S2-1); (I-286) + (S2-2); (I-286) + (S2-3); (I-286) + (S2-4); (I-286) + (S2-5); (I-286) + (S2-6); (I-286) + (S2-7); (I-286) + (S2-8); (I-286) + (S2-9); (I-286) + (S2-10); (I-286) + (S3-1); (I-286) + (S3-2); (I-286) + (S3-3); (I-286) + (S3-4); (I-286) + (S3-5); (I-286) + (S3-6); (I-286) + (S3-7); (I-286) + (S3-8); (I-286) + (S3-9); (I-286) + (S3-10); (I-286) + (S3-11); (I-286) + (S4-1); (I-286) + (S4-2); (I-286) + (S4-3); (I-286) + (S4-4); (I-286) + (S4-5); (I-286) + (S7-1); (I-286) + (S11-1); (I-286) + (S11-2); (I-286) + (S11-3); (I-286) + (S12-1); (I-286) + (S13-1); (I-286) + (S13-2); (I-286) + (S13-3); (I-286) + (S13-4): (I-286) + (S13-5); (I-286) + (S13-6); (I-286) + (S13-7); (I-286) + (S13-8); (I-286) + (S13-9); (I-286) + (S14-1)
(I-287) + (S1-1); (I-287) + (S1-2); (I-287) + (S1-3); (I-287) + (S1-4); (I-287) + (S1-5); (I-287) + (S1-6); (I-287) + (S1-7); (I-287) + (S1-8); (I-287) + (S1-9); (I-287) + (S1-10); (I-287) + (S1-11); (I-287) + (S1-12); (I-287) + (S1 -13); (I-287) + (S2-1); (I-287) + (S2-2); (I-287) + (S2-3); (I-287) + (S2-4); (I-287) + (S2-5); (I-287) + (S2-6); (I-287) + (S2-7); (I-287) + (S2-8); (I-287) + (S2-9); (I-287) + (S2-10); (I-287) + (S3-1); (I-287) + (S3-2); (I-287) + (S3-3); (I-287) + (S3-4); (I-287) + (S3-5); (I-287) + (S3-6); (I-287) + (S3-7); (I-287) + (S3-8); (I-287) + (S3-9); (I-287) + (S3-10); (I-287) + (S3-11); (I-287) + (S4-1); (I-287) + (S4-2); (I-287) + (S4-3); (I-287) + (S4-4); (I-287) + (S4-5); (I-287) + (S7-1); (I-287) + (S11-1); (I-287) + (S11-2); (I-287) + (S11-3); (I-287) + (S12-1); (I-287) + (S13-1); (I-287) + (S13-2); (I-287) + (S13-3); (I-287) + (S13-4): (I-287) + (S13-5); (I-287) + (S13-6); (I-287) + (S13-7); (I-287) + (S13-8); (I-287) + (S13-9); (I-287) + (S14-1)
(I-288) + (S1-1); (I-288) + (S1-2); (I-288) + (S1-3); (I-288) + (S1-4); (I-288) + (S1-5); (I-288) + (S1-6); (I-288) + (S1-7); (I-288) + (S1-8); (I-288) + (S1-9); (I-288) + (S1-10); (I-288) + (S1-11); (I-288) + (S1-12); (I-288) + (S1-13); (I-288) + (S2-1); (I-288) + (S2-2); (I-288) + (S2-3); (I-288) + (S2-4); (I-288) + (S2-5); (I-288) + (S2-6); (I-288) + (S2-7); (I-288) + (S2-8); (I-288) + (S2-9); (I-288) + (S2-10); (I-288) + (S3-1); (I-288) + (S3-2); (I-288) + (S3-3); (I-288) + (S3-4); (I-288) + (S3-5); (I-288) + (S3-6); (I-288) + (S3-7); (I-288) + (S3-8); (I-288) + (S3-9); (I-288) + (S3-10); (I-288) + (S3-11); (I-288) + (S4-1); (I-288) + (S4-2); (I-288) + (S4-3); (I-288) + (S4-4); (I-288) + (S4-5); (I-288) + (S7-1); (I-288) + (S11-1); (I-288) + (S11-2); (I-288) + (S11-3); (I-288) + (S12-1); (I-288) + (S13-1); (I-288) + (S13-2); (I-288) + (S13-3); (I-288) + (S13-4): (I-288) + (S13-5); (I-288) + (S13-6); (I-288) + (S13-7); (I-288) + (S13-8); (I-288) + (S13-9); (I-288) + (S14-1)
(I-289) + (S1-1); (I-289) + (S1-2); (I-289) + (S1-3); (I-289) + (S1-4); (I-289) + (S1-5); (I-289) + (S1-6); (I-289) + (S1-7); (I-289) + (S1-8); (I-289) + (S1-9); (I-289) + (S1-10); (I-289) + (S1-11); (I-289) + (S1-12); (I-289) + (S1-13); (I-289) + (S2-1); (I-289) + (S2-2); (I-289) + (S2-3); (I-289) + (S2-4); (I-289) + (S2-5); (I-289) + (S2-6); (I-289) + (S2-7); (I-289) + (S2-8); (I-289) + (S2-9); (I-289) + (S2-10); (I-289) + (S3-1); (I-289) + (S3-2); (I-289) + (S3-3); (I-289) + (S3-4); (I-289) + (S3-5); (I-289) + (S3-6); (I-289) + (S3-7); (I-289) + (S3-8); (I-289) + (S3-9); (I-289) + (S3-10); (I-289) + (S3-11); (I-289) + (S4-1); (I-289) + (S4-2); (I-289) + (S4-3); (I-289) + (S4-4); (I-289) + (S4-5); (I-289) + (S7-1); (I-289) + (S11-1); (I-289) + (S11-2); (I-289) + (S11-3); (I-289) + (S12-1); (I-289) + (S13-1); (I-289) + (S13-2); (I-289) + (S13-3); (I-289) + (S13-4): (I-289) + (S13-5); (I-289) + (S13-6); (I-289) + (S13-7); (I-289) + (S13-8); (I-289) + (S13-9); (I-289) + (S14-1)
(I-290) + (S1-1); (I-290) + (S1-2); (I-290) + (S1-3); (I-290) + (S1-4); (I-290) + (S1-5); (I-290) + (S1-6); (I-290) + (S1-7); (I-290) + (S1-8); (I-290) + (S1-9); (I-290) + (S1-10); (I-290) + (S1-11); (I-290) + (S1-12); (I-290) + (S1-13); (I-290) + (S2-1); (I-290) + (S2-2); (I-290) + (S2-3); (I-290) + (S2-4); (I-290) + (S2-5); (I-290) + (S2-6); (I-290) + (S2-7); (I-290) + (S2-8); (I-290) + (S2-9); (I-290) + (S2-10); (I-290) + (S3-1); (I-290) + (S3-2); (I-290) + (S3-3); (I-290) + (S3-4); (I-290) + (S3-5); (I-290) + (S3-6); (I-290) + (S3-7); (I-290) + (S3-8); (I-290) + (S3-9); (I-290) + (S3-10); (I-290) + (S3-11); (I-290) + (S4-1); (I-290) + (S4-2); (I-290) + (S4-3); (I-290) + (S4-4); (I-290) + (S4-5); (I-290) + (S7-1); (I-290) + (S11-1); (I-290) + (S11-2); (I-290) + (S11-3); (I-290) + (S12-1); (I-290) + (S13-1); (I-290) + (S13-2); (I-290) + (S13-3); (I-290) + (S13-4): (I-290) + (S13-5); (I-290) + (S13-6); (I-290) + (S13-7); (I-290) + (S13-8); (I-290) + (S13-9); (I-290) + (S14-1)
(I-291) + (S1-1); (I-291) + (S1-2); (I-291) + (S1-3); (I-291) + (S1-4); (I-291) + (S1-5); (I-291) + (S1-6); (I-291) + (S1-7); (I-291) + (S1-8); (I-291) + (S1-9); (I-291) + (S1-10); (I-291) + (S1-11); (I-291) + (S1-12); (I-291) + (S1-13); (I-291) + (S2-1); (I-291) + (S2-2); (I-291) + (S2-3); (I-291) + (S2-4); (I-291) + (S2-5); (I-291) + (S2-6); (I-291) + (S2-7); (I-291) + (S2-8); (I-291) + (S2-9); (I-291) + (S2-10); (I-291) + (S3-1); (I-291) + (S3-2); (I-291) + (S3-3); (I-291) + (S3-4); (I-291) + (S3-5); (I-291) + (S3-6); (I-291) + (S3-7); (I-291) + (S3-8); (I-291) + (S3-9); (I-291) + (S3-10); (I-291) + (S3-11); (I-291) + (S4-1); (I-291) + (S4-2); (I-291) + (S4-3); (I-291) + (S4-4); (I-291) + (S4-5); (I-291) + (S7-1); (I-291) + (S11-1); (I-291) + (S11-2); (I-291) + (S11-3); (I-291) + (S12-1); (I-291) + (S13-1); (I-291) + (S13-2); (I-291) + (S13-3); (I-291) + (S13-4): (I-291) + (S13-5); (I-291) + (S13-6); (I-291) + (S13-7); (I-291) + (S13-8); (I-291) + (S13-9); (I-291) + (S14-1)
(I-292) + (S1-1); (I-292) + (S1-2); (I-292) + (S1-3); (I-292) + (S1-4); (I-292) + (S1-5); (I-292) + (S1-6); (I-292) + (S1-7); (I-292) + (S1-8); (I-292) + (S1-9); (I-292) + (S1-10); (I-292) + (S1-11); (I-292) + (S1-12); (I-292) + (S1-13); (I-292) + (S2-1); (I-292) + (S2-2); (I-292) + (S2-3); (I-292) + (S2-4); (I-292) + (S2-5); (I-292) + (S2-6); (I-292) + (S2-7); (I-292) + (S2-8); (I-292) + (S2-9); (I-292) + (S2-10); (I-292) + (S3-1); (I-292) + (S3-2); (I-292) + (S3-3); (I-292) + (S3-4); (I-292) + (S3-5); (I-292) + (S3-6); (I-292) + (S3-7); (I-292) + (S3-8); (I-292) + (S3-9); (I-292) + (S3-10); (I-292) + (S3-11); (I-292) + (S4-1); (I-292) + (S4-2); (I-292) + (S4-3); (I-292) + (S4-4); (I-292) + (S4-5); (I-292) + (S7-1); (I-292) + (S11-1); (I-292) + (S11-2); (I-292) + (S11-3); (I-292) + (S12-1); (I-292) + (S13-1); (I-292) + (S13-2); (I-292) + (S13-3); (I-292) + (S13-4): (I-292) + (S13-5); (I-292) + (S13-6); (I-292) + (S13-7); (I-292) + (S13-8); (I-292) + (S13-9); (I-292) + (S14-1)
(I-293) + (S1-1); (I-293) + (S1-2); (I-293) + (S1-3); (I-293) + (S1-4); (I-293) + (S1-5); (I-293) + (S1-6); (I-293) + (S1-7); (I-293) + (S1-8); (I-293) + (S1-9); (I-293) + (S1-10); (I-293) + (S1-11); (I-293) + (S1-12); (I-293) + (S1-13); (I-293) + (S2-1); (I-293) + (S2-2); (I-293) + (S2-3); (I-293) + (S2-4); (I-293) + (S2-5); (I-293) + (S2-6); (I-293) + (S2-7); (I-293) + (S2-8); (I-293) + (S2-9); (I-293) + (S2-10); (I-293) + (S3-1); (I-293) + (S3-2); (I-293) + (S3-3); (I-293) + (S3-4); (I-293) + (S3-5); (I-293) + (S3-6); (I-293) + (S3-7); (I-293) + (S3-8); (I-293) + (S3-9); (I-293) + (S3-10); (I-293) + (S3-11); (I-293) + (S4-1); (I-293) + (S4-2); (I-293) + (S4-3); (I-293) + (S4-4); (I-293) + (S4-5); (I-293) + (S7-1); (I-293) + (S11-1); (I-293) + (S11-2); (I-293) + (S11-3); (I-293) + (S12-1); (I-293) + (S13-1); (I-293) + (S13-2); (I-293) + (S13-3); (I-293) + (S13-4): (I-293) + (S13-5); (I-293) + (S13-6); (I-293) + (S13-7); (I-293) + (S13-8); (I-293) + (S13-9); (I-293) + (S14-1)
(I-294) + (S1-1); (I-294) + (S1-2); (I-294) + (S1-3); (I-294) + (S1-4); (I-294) + (S1-5); (I-294) + (S1-6); (I-294) + (S1-7); (I-294) + (S1-8); (I-294) + (S1-9); (I-294) + (S1-10); (I-294) + (S1-11); (I-294) + (S1-12); (I-294) + (S1-13); (I-294) + (S2-1); (I-294) + (S2-2); (I-294) + (S2-3); (I-294) + (S2-4); (I-294) + (S2-5); (I-294) + (S2-6); (I-294) + (S2-7); (I-294) + (S2-8); (I-294) + (S2-9); (I-294) + (S2-10); (I-294) + (S3-1); (I-294) + (S3-2); (I-294) + (S3-3); (I-294) + (S3-4); (I-294) + (S3-5); (I-294) + (S3-6); (I-294) + (S3-7); (I-294) + (S3-8); (I-294) + (S3-9); (I-294) + (S3-10); (I-294) + (S3-11); (I-294) + (S4-1); (I-294) + (S4-2); (I-294) + (S4-3); (I-294) + (S4-4); (I-294) + (S4-5); (I-294) + (S7-1); (I-294) + (S11-1); (I-294) + (S11-2); (I-294) + (S11-3); (I-294) + (S12-1); (I-294) + (S13-1); (I-294) + (S13-2); (I-294) + (S13-3); (I-294) + (S13-4): (I-294) + (S13-5); (I-294) + (S13-6); (I-294) + (S13-7); (I-294) + (S13-8); (I-294) + (S13-9); (I-294) + (S14-1)
(I-295) + (S1-1); (I-295) + (S1-2); (I-295) + (S1-3); (I-295) + (S1-4); (I-295) + (S1-5); (I-295) + (S1-6); (I-295) + (S1-7); (I-295) + (S1-8); (I-295) + (S1-9); (I-295) + (S1-10); (I-295) + (S1-11); (I-295) + (S1-12); (I-295) + (S1-13); (I-295) + (S2-1); (I-295) + (S2-2); (I-295) + (S2-3); (I-295) + (S2-4); (I-295) + (S2-5); (I-295) + (S2-6); (I-295) + (S2-7); (I-295) + (S2-8); (I-295) + (S2-9); (I-295) + (S2-10); (I-295) + (S3-1); (I-295) + (S3-2); (I-295) + (S3-3); (I-295) + (S3-4); (I-295) + (S3-5); (I-295) + (S3-6); (I-295) + (S3-7); (I-295) + (S3-8); (I-295) + (S3-9); (I-295) + (S3-10); (I-295) + (S3-11); (I-295) + (S4-1); (I-295) + (S4-2); (I-295) + (S4-3); (I-295) + (S4-4); (I-295) + (S4-5); (I-295) + (S7-1); (I-295) + (S11-1); (I-295) + (S11-2); (I-295) + (S11-3); (I-295) + (S12-1); (I-295) + (S13-1); (I-295) + (S13-2); (I-295) + (S13-3); (I-295) + (S13-4): (I-295) + (S13-5); (I-295) + (S13-6); (I-295) + (S13-7); (I-295) + (S13-8); (I-295) + (S13-9); (I-295) + (S14-1)
(I-296) + (S1-1); (I-296) + (S1-2); (I-296) + (S1-3); (I-296) + (S1-4); (I-296) + (S1-5); (I-296) + (S1-6); (I-296) + (S1-7); (I-296) + (S1-8); (I-296) + (S1-9); (I-296) + (S1-10); (I-296) + (S1-11); (I-296) + (S1-12); (I-296) + (S1-13); (I-296) + (S2-1); (I-296) + (S2-2); (I-296) + (S2-3); (I-296) + (S2-4); (I-296) + (S2-5); (I-296) + (S2-6); (I-296) + (S2-7); (I-296) + (S2-8); (I-296) + (S2-9); (I-296) + (S2-10); (I-296) + (S3-1); (I-296) + (S3-2); (I-296) + (S3-3); (I-296) + (S3-4); (I-296) + (S3-5); (I-296) + (S3-6); (I-296) + (S3-7); (I-296) + (S3-8); (I-296) + (S3-9); (I-296) + (S3-10); (I-296) + (S3-11); (I-296) + (S4-1); (I-296) + (S4-2); (I-296) + (S4-3); (I-296) + (S4-4); (I-296) + (S4-5); (I-296) + (S7-1); (I-296) + (S11-1); (I-296) + (S11-2); (I-296) + (S11-3); (I-296) + (S12-1); (I-296) + (S13-1); (I-296) + (S13-2); (I-296) + (S13-3); (I-296) + (S13-4): (I-296) + (S13-5); (I-296) + (S13-6); (I-296) + (S13-7); (I-296) + (S13-8); (I-296) + (S13-9); (I-296) + (S14-1)
(I-297) + (S1-1); (I-297) + (S1-2); (I-297) + (S1-3); (I-297) + (S1-4); (I-297) + (S1-5); (I-297) + (S1-6); (I-297) + (S1-7); (I-297) + (S1-8); (I-297) + (S1-9); (I-297) + (S1-10); (I-297) + (S1-11); (I-297) + (S1-12); (I-297) + (S1 -13); (I-297) + (S2-1); (I-297) + (S2-2); (I-297) + (S2-3); (I-297) + (S2-4); (I-297) + (S2-5); (I-297) + (S2-6); (I-297) + (S2-7); (I-297) + (S2-8); (I-297) + (S2-9); (I-297) + (S2-10); (I-297) + (S3-1); (I-297) + (S3-2); (I-297) + (S3-3); (I-297) + (S3-4); (I-297) + (S3-5); (I-297) + (S3-6); (I-297) + (S3-7); (I-297) + (S3-8); (I-297) + (S3-9); (I-297) + (S3-10); (I-297) + (S3-11); (I-297) + (S4-1); (I-297) + (S4-2); (I-297) + (S4-3); (I-297) + (S4-4); (I-297) + (S4-5); (I-297) + (S7-1); (I-297) + (S11-1); (I-297) + (S11-2); (I-297) + (S11-3); (I-297) + (S12-1); (I-297) + (S13-1); (I-297) + (S13-2); (I-297) + (S13-3); (I-297) + (S13-4): (I-297) + (S13-5); (I-297) + (S13-6); (I-297) + (S13-7); (I-297) + (S13-8); (I-297) + (S13-9); (I-297) + (S14-1)
(I-298) + (S1-1); (I-298) + (S1-2); (I-298) + (S1-3); (I-298) + (S1-4); (I-298) + (S1-5); (I-298) + (S1-6); (I-298) + (S1-7); (I-298) + (S1-8); (I-298) + (S1-9); (I-298) + (S1-10); (I-298) + (S1-11); (I-298) + (S1-12); (I-298) + (S1-13); (I-298) + (S2-1); (I-298) + (S2-2); (I-298) + (S2-3); (I-298) + (S2-4); (I-298) + (S2-5); (I-298) + (S2-6); (I-298) + (S2-7); (I-298) + (S2-8); (I-298) + (S2-9); (I-298) + (S2-10); (I-298) + (S3-1); (I-298) + (S3-2); (I-298) + (S3-3); (I-298) + (S3-4); (I-298) + (S3-5); (I-298) + (S3-6); (I-298) + (S3-7); (I-298) + (S3-8); (I-298) + (S3-9); (I-298) + (S3-10); (I-298) + (S3-11); (I-298) + (S4-1); (I-298) + (S4-2); (I-298) + (S4-3); (I-298) + (S4-4); (I-298) + (S4-5); (I-298) + (S7-1); (I-298) + (S11-1); (I-298) + (S11-2); (I-298) + (S11-3); (I-298) + (S12-1); (I-298) + (S13-1); (I-298) + (S13-2); (I-298) + (S13-3); (I-298) + (S13-4): (I-298) + (S13-5); (I-298) + (S13-6); (I-298) + (S13-7); (I-298) + (S13-8); (I-298) + (S13-9); (I-298) + (S14-1)
(I-299) + (S1-1); (I-299) + (S1-2); (I-299) + (S1-3); (I-299) + (S1-4); (I-299) + (S1-5); (I-299) + (S1-6); (I-299) + (S1-7); (I-299) + (S1-8); (I-299) + (S1-9); (I-299) + (S1-10); (I-299) + (S1-11); (I-299) + (S1-12); (I-299) + (S1-13); (I-299) + (S2-1); (I-299) + (S2-2); (I-299) + (S2-3); (I-299) + (S2-4); (I-299) + (S2-5); (I-299) + (S2-6); (I-299) + (S2-7); (I-299) + (S2-8); (I-299) + (S2-9); (I-299) + (S2-10); (I-299) + (S3-1); (I-299) + (S3-2); (I-299) + (S3-3); (I-299) + (S3-4); (I-299) + (S3-5); (I-299) + (S3-6); (I-299) + (S3-7); (I-299) + (S3-8); (I-299) + (S3-9); (I-299) + (S3-10); (I-299) + (S3-11); (I-299) + (S4-1); (I-299) + (S4-2); (I-299) + (S4-3); (I-299) + (S4-4); (I-299) + (S4-5); (I-299) + (S7-1); (I-299) + (S11-1); (I-299) + (S11-2); (I-299) + (S11-3); (I-299) + (S12-1); (I-299) + (S13-1); (I-299) + (S13-2); (I-299) + (S13-3); (I-299) + (S13-4): (I-299) + (S13-5); (I-299) + (S13-6); (I-299) + (S13-7); (I-299) + (S13-8); (I-299) + (S13-9); (I-299) + (S14-1)
(I-300) + (S1-1); (I-300) + (S1-2); (I-300) + (S1-3); (I-300) + (S1-4); (I-300) + (S1-5); (I-300) + (S1-6); (I-300) + (S1-7); (I-300) + (S1-8); (I-300) + (S1-9); (I-300) + (S1-10); (I-300) + (S1-11); (I-300) + (S1-12); (I-300) + (S1-13); (I-300) + (S2-1); (I-300) + (S2-2); (I-300) + (S2-3); (I-300) + (S2-4); (I-300) + (S2-5); (I-300) + (S2-6); (I-300) + (S2-7); (I-300) + (S2-8); (I-300) + (S2-9); (I-300) + (S2-10); (I-300) + (S3-1); (I-300) + (S3-2); (I-300) + (S3-3); (I-300) + (S3-4); (I-300) + (S3-5); (I-300) + (S3-6); (I-300) + (S3-7); (I-300) + (S3-8); (I-300) + (S3-9); (I-300) + (S3-10); (I-300) + (S3-11); (I-300) + (S4-1); (I-300) + (S4-2); (I-300) + (S4-3); (I-300) + (S4-4); (I-300) + (S4-5); (I-300) + (S7-1); (I-300) + (S11-1); (I-300) + (S11-2); (I-300) + (S11-3); (I-300) + (S12-1); (I-300) + (S13-1); (I-300) + (S13-2); (I-300) + (S13-3); (I-300) + (S13-4): (I-300) + (S13-5); (I-300) + (S13-6); (I-300) + (S13-7); (I-300) + (S13-8); (I-300) + (S13-9); (I-300) + (S14-1)
(I-301) + (S1-1); (I-301) + (S1-2); (I-301) + (S1-3); (I-301) + (S1-4); (I-301) + (S1-5); (I-301) + (S1-6); (I-301) + (S1-7); (I-301) + (S1-8); (I-301) + (S1-9); (I-301) + (S1-10); (I-301) + (S1-11); (I-301) + (S1-12); (I-301) + (S1-13); (I-301) + (S2-1); (I-301) + (S2-2); (I-301) + (S2-3); (I-301) + (S2-4); (I-301) + (S2-5); (I-301) + (S2-6); (I-301) + (S2-7); (I-301) + (S2-8); (I-301) + (S2-9); (I-301) + (S2-10); (I-301) + (S3-1); (I-301) + (S3-2); (I-301) + (S3-3); (I-301) + (S3-4); (I-301) + (S3-5); (I-301) + (S3-6); (I-301) + (S3-7); (I-301) + (S3-8); (I-301) + (S3-9); (I-301) + (S3-10); (I-301) + (S3-11); (I-301) + (S4-1); (I-301) + (S4-2); (I-301) + (S4-3); (I-301) + (S4-4); (I-301) + (S4-5); (I-301) + (S7-1); (I-301) + (S11-1); (I-301) + (S11-2); (I-301) + (S11-3); (I-301) + (S12-1); (I-301) + (S13-1); (I-301) + (S13-2); (I-301) + (S13-3); (I-301) + (S13-4): (I-301) + (S13-5); (I-301) + (S13-6); (I-301) + (S13-7); (I-301) + (S13-8); (I-301) + (S13-9); (I-301) + (S14-1)
(I-302) + (S1-1); (I-302) + (S1-2); (I-302) + (S1-3); (I-302) + (S1-4); (I-302) + (S1-5); (I-302) + (S1-6); (I-302) + (S1-7); (I-302) + (S1-8); (I-302) + (S1-9); (I-302) + (S1-10); (I-302) + (S1-11); (I-302) + (S1-12); (I-302) + (S1-13); (I-302) + (S2-1); (I-302) + (S2-2); (I-302) + (S2-3); (I-302) + (S2-4); (I-302) + (S2-5); (I-302) + (S2-6); (I-302) + (S2-7); (I-302) + (S2-8); (I-302) + (S2-9); (I-302) + (S2-10); (I-302) + (S3-1); (I-302) + (S3-2); (I-302) + (S3-3); (I-302) + (S3-4); (I-302) + (S3-5); (I-302) + (S3-6); (I-302) + (S3-7); (I-302) + (S3-8); (I-302) + (S3-9); (I-302) + (S3-10); (I-302) + (S3-11); (I-302) + (S4-1); (I-302) + (S4-2); (I-302) + (S4-3); (I-302) + (S4-4); (I-302) + (S4-5); (I-302) + (S7-1); (I-302) + (S11-1); (I-302) + (S11-2); (I-302) + (S11-3); (I-302) + (S12-1); (I-302) + (S13-1); (I-302) + (S13-2); (I-302) + (S13-3); (I-302) + (S13-4): (I-302) + (S13-5); (I-302) + (S13-6); (I-302) + (S13-7); (I-302) + (S13-8); (I-302) + (S13-9); (I-302) + (S14-1)
(I-303) + (S1-1); (I-303) + (S1-2); (I-303) + (S1-3); (I-303) + (S1-4); (I-303) + (S1-5); (I-303) + (S1-6); (I-303) + (S1-7); (I-303) + (S1-8); (I-303) + (S1-9); (I-303) + (S1-10); (I-303) + (S1-11); (I-303) + (S1-12); (I-303) + (S1-13); (I-303) + (S2-1); (I-303) + (S2-2); (I-303) + (S2-3); (I-303) + (S2-4); (I-303) + (S2-5); (I-303) + (S2-6); (I-303) + (S2-7); (I-303) + (S2-8); (I-303) + (S2-9); (I-303) + (S2-10); (I-303) + (S3-1); (I-303) + (S3-2); (I-303) + (S3-3); (I-303) + (S3-4); (I-303) + (S3-5); (I-303) + (S3-6); (I-303) + (S3-7); (I-303) + (S3-8); (I-303) + (S3-9); (I-303) + (S3-10); (I-303) + (S3-11); (I-303) + (S4-1); (I-303) + (S4-2); (I-303) + (S4-3); (I-303) + (S4-4); (I-303) + (S4-5); (I-303) + (S7-1); (I-303) + (S11-1); (I-303) + (S11-2); (I-303) + (S11-3); (I-303) + (S12-1); (I-303) + (S13-1); (I-303) + (S13-2); (I-303) + (S13-3); (I-303) + (S13-4): (I-303) + (S13-5); (I-303) + (S13-6); (I-303) + (S13-7); (I-303) + (S13-8); (I-303) + (S13-9); (I-303) + (S14-1)
(I-304) + (S1-1); (I-304) + (S1-2); (I-304) + (S1-3); (I-304) + (S1-4); (I-304) + (S1-5); (I-304) + (S1-6); (I-304) + (S1-7); (I-304) + (S1-8); (I-304) + (S1-9); (I-304) + (S1-10); (I-304) + (S1-11); (I-304) + (S1-12); (I-304) + (S1-13); (I-304) + (S2-1); (I-304) + (S2-2); (I-304) + (S2-3); (I-304) + (S2-4); (I-304) + (S2-5); (I-304) + (S2-6); (I-304) + (S2-7); (I-304) + (S2-8); (I-304) + (S2-9); (I-304) + (S2-10); (I-304) + (S3-1); (I-304) + (S3-2); (I-304) + (S3-3); (I-304) + (S3-4); (I-304) + (S3-5); (I-304) + (S3-6); (I-304) + (S3-7); (I-304) + (S3-8); (I-304) + (S3-9); (I-304) + (S3-10); (I-304) + (S3-11); (I-304) + (S4-1); (I-304) + (S4-2); (I-304) + (S4-3); (I-304) + (S4-4); (I-304) + (S4-5); (I-304) + (S7-1); (I-304) + (S11-1); (I-304) + (S11-2); (I-304) + (S11-3); (I-304) + (S12-1); (I-304) + (S13-1); (I-304) + (S13-2); (I-304) + (S13-3); (I-304) + (S13-4): (I-304) + (S13-5); (I-304) + (S13-6); (I-304) + (S13-7); (I-304) + (S13-8); (I-304) + (S13-9); (I-304) + (S14-1)
(I-305) + (S1-1); (I-305) + (S1-2); (I-305) + (S1-3); (I-305) + (S1-4); (I-305) + (S1-5); (I-305) + (S1-6); (I-305) + (S1-7); (I-305) + (S1-8); (I-305) + (S1-9); (I-305) + (S1-10); (I-305) + (S1-11); (I-305) + (S1-12); (I-305) + (S1-13); (I-305) + (S2-1); (I-305) + (S2-2); (I-305) + (S2-3); (I-305) + (S2-4); (I-305) + (S2-5); (I-305) + (S2-6); (I-305) + (S2-7); (I-305) + (S2-8); (I-305) + (S2-9); (I-305) + (S2-10); (I-305) + (S3-1); (I-305) + (S3-2); (I-305) + (S3-3); (I-305) + (S3-4); (I-305) + (S3-5); (I-305) + (S3-6); (I-305) + (S3-7); (I-305) + (S3-8); (I-305) + (S3-9); (I-305) + (S3-10); (I-305) + (S3-11); (I-305) + (S4-1); (I-305) + (S4-2); (I-305) + (S4-3); (I-305) + (S4-4); (I-305) + (S4-5); (I-305) + (S7-1); (I-305) + (S11-1); (I-305) + (S11-2); (I-305) + (S11-3); (I-305) + (S12-1); (I-305) + (S13-1); (I-305) + (S13-2); (I-305) + (S13-3); (I-305) + (S13-4): (I-305) + (S13-5); (I-305) + (S13-6); (I-305) + (S13-7); (I-305) + (S13-8); (I-305) + (S13-9); (I-305) + (S14-1)
(I-306) + (S1-1); (I-306) + (S1-2); (I-306) + (S1-3); (I-306) + (S1-4); (I-306) + (S1-5); (I-306) + (S1-6); (I-306) + (S1-7); (I-306) + (S1-8); (I-306) + (S1-9); (I-306) + (S1-10); (I-306) + (S1-11); (I-306) + (S1-12); (I-306) + (S1-13); (I-306) + (S2-1); (I-306) + (S2-2); (I-306) + (S2-3); (I-306) + (S2-4); (I-306) + (S2-5); (I-306) + (S2-6); (I-306) + (S2-7); (I-306) + (S2-8); (I-306) + (S2-9); (I-306) + (S2-10); (I-306) + (S3-1); (I-306) + (S3-2); (I-306) + (S3-3); (I-306) + (S3-4); (I-306) + (S3-5); (I-306) + (S3-6); (I-306) + (S3-7); (I-306) + (S3-8); (I-306) + (S3-9); (I-306) + (S3-10); (I-306) + (S3-11); (I-306) + (S4-1); (I-306) + (S4-2); (I-306) + (S4-3); (I-306) + (S4-4); (I-306) + (S4-5); (I-306) + (S7-1); (I-306) + (S11-1); (I-306) + (S11-2); (I-306) + (S11-3); (I-306) + (S12-1); (I-306) + (S13-1); (I-306) + (S13-2); (I-306) + (S13-3); (I-306) + (S13-4): (I-306) + (S13-5); (I-306) + (S13-6); (I-306) + (S13-7); (I-306) + (S13-8); (I-306) + (S13-9); (I-306) + (S14-1)
(I-307) + (S1-1); (I-307) + (S1-2); (I-307) + (S1-3); (I-307) + (S1-4); (I-307) + (S1-5); (I-307) + (S1-6); (I-307) + (S1-7); (I-307) + (S1-8); (I-307) + (S1-9); (I-307) + (S1-10); (I-307) + (S1-11); (I-307) + (S1-12); (I-307) + (S1-13); (I-307) + (S2-1); (I-307) + (S2-2); (I-307) + (S2-3); (I-307) + (S2-4); (I-307) + (S2-5); (I-307) + (S2-6); (I-307) + (S2-7); (I-307) + (S2-8); (I-307) + (S2-9); (I-307) + (S2-10); (I-307) + (S3-1); (I-307) + (S3-2); (I-307) + (S3-3); (I-307) + (S3-4); (I-307) + (S3-5); (I-307) + (S3-6); (I-307) + (S3-7); (I-307) + (S3-8); (I-307) + (S3-9); (I-307) + (S3-10); (I-307) + (S3-11); (I-307) + (S4-1); (I-307) + (S4-2); (I-307) + (S4-3); (I-307) + (S4-4); (I-307) + (S4-5); (I-307) + (S7-1); (I-307) + (S11-1); (I-307) + (S11-2); (I-307) + (S11-3); (I-307) + (S12-1); (I-307) + (S13-1); (I-307) + (S13-2); (I-307) + (S13-3); (I-307) + (S13-4): (I-307) + (S13-5); (I-307) + (S13-6); (I-307) + (S13-7); (I-307) + (S13-8); (I-307) + (S13-9); (I-307) + (S14-1)
(I-308) + (S1-1); (I-308) + (S1-2); (I-308) + (S1-3); (I-308) + (S1-4); (I-308) + (S1-5); (I-308) + (S1-6); (I-308) + (S1-7); (I-308) + (S1-8); (I-308) + (S1-9); (I-308) + (S1-10); (I-308) + (S1-11); (I-308) + (S1-12); (I-308) + (S1-13); (I-308) + (S2-1); (I-308) + (S2-2); (I-308) + (S2-3); (I-308) + (S2-4); (I-308) + (S2-5); (I-308) + (S2-6); (I-308) + (S2-7); (I-308) + (S2-8); (I-308) + (S2-9); (I-308) + (S2-10); (I-308) + (S3-1); (I-308) + (S3-2); (I-308) + (S3-3); (I-308) + (S3-4); (I-308) + (S3-5); (I-308) + (S3-6); (I-308) + (S3-7); (I-308) + (S3-8); (I-308) + (S3-9); (I-308) + (S3-10); (I-308) + (S3-11); (I-308) + (S4-1); (I-308) + (S4-2); (I-308) + (S4-3); (I-308) + (S4-4); (I-308) + (S4-5); (I-308) + (S7-1); (I-308) + (S11-1); (I-308) + (S11-2); (I-308) + (S11-3); (I-308) + (S12-1); (I-308) + (S13-1); (I-308) + (S13-2); (I-308) + (S13-3); (I-308) + (S13-4): (I-308) + (S13-5); (I-308) + (S13-6); (I-308) + (S13-7); (I-308) + (S13-8); (I-308) + (S13-9); (I-308) + (S14-1)
(I-309) + (S1-1); (I-309) + (S1-2); (I-309) + (S1-3); (I-309) + (S1-4); (I-309) + (S1-5); (I-309) + (S1-6); (I-309) + (S1-7); (I-309) + (S1-8); (I-309) + (S1-9); (I-309) + (S1-10); (I-309) + (S1-11); (I-309) + (S1-12); (I-309) + (S1-13); (I-309) + (S2-1); (I-309) + (S2-2); (I-309) + (S2-3); (I-309) + (S2-4); (I-309) + (S2-5); (I-309) + (S2-6); (I-309) + (S2-7); (I-309) + (S2-8); (I-309) + (S2-9); (I-309) + (S2-10); (I-309) + (S3-1); (I-309) + (S3-2); (I-309) + (S3-3); (I-309) + (S3-4); (I-309) + (S3-5); (I-309) + (S3-6); (I-309) + (S3-7); (I-309) + (S3-8); (I-309) + (S3-9); (I-309) + (S3-10); (I-309) + (S3-11); (I-309) + (S4-1); (I-309) + (S4-2); (I-309) + (S4-3); (I-309) + (S4-4); (I-309) + (S4-5); (I-309) + (S7-1); (I-309) + (S11-1); (I-309) + (S11-2); (I-309) + (S11-3); (I-309) + (S12-1); (I-309) + (S13-1); (I-309) + (S13-2); (I-309) + (S13-3); (I-309) + (S13-4): (I-309) + (S13-5); (I-309) + (S13-6); (I-309) + (S13-7); (I-309) + (S13-8); (I-309) + (S13-9); (I-309) + (S14-1)
(I-310) + (S1-1); (I-310) + (S1-2); (I-310) + (S1-3); (I-310) + (S1-4); (I-310) + (S1-5); (I-310) + (S1-6); (I-310) + (S1-7); (I-310) + (S1-8); (I-310) + (S1-9); (I-310) + (S1-10); (I-310) + (S1-11); (I-310) + (S1-12); (I-310) + (S1-13); (I-310) + (S2-1); (I-310) + (S2-2); (I-310) + (S2-3); (I-310) + (S2-4); (I-310) + (S2-5); (I-310) + (S2-6); (I-310) + (S2-7); (I-310) + (S2-8); (I-310) + (S2-9); (I-310) + (S2-10); (I-310) + (S3-1); (I-310) + (S3-2); (I-310) + (S3-3); (I-310) + (S3-4); (I-310) + (S3-5); (I-310) + (S3-6); (I-310) + (S3-7); (I-310) + (S3-8); (I-310) + (S3-9); (I-310) + (S3-10); (I-310) + (S3-11); (I-310) + (S4-1); (I-310) + (S4-2); (I-310) + (S4-3); (I-310) + (S4-4); (I-310) + (S4-5); (I-310) + (S7-1); (I-310) + (S11-1); (I-310) + (S11-2); (I-310) + (S11-3); (I-310) + (S12-1); (I-310) + (S13-1); (I-310) + (S13-2); (I-310) + (S13-3); (I-310) + (S13-4): (I-310) + (S13-5); (I-310) + (S13-6); (I-310) + (S13-7); (I-310) + (S13-8); (I-310) + (S13-9); (I-310) + (S14-1)
(I-311) + (S1-1); (I-311) + (S1-2); (I-311) + (S1-3); (I-311) + (S1-4); (I-311) + (S1-5); (I-311) + (S1-6); (I-311) + (S1-7); (I-311) + (S1-8); (I-311) + (S1-9); (I-311) + (S1-10); (I-311) + (S1-11); (I-311) + (S1-12); (I-311) + (S1-13); (I-311) + (S2-1); (I-311) + (S2-2); (I-311) + (S2-3); (I-311) + (S2-4); (I-311) + (S2-5); (I-311) + (S2-6); (I-311) + (S2-7); (I-311) + (S2-8); (I-311) + (S2-9); (I-311) + (S2-10); (I-311) + (S3-1); (I-311) + (S3-2); (I-311) + (S3-3); (I-311) + (S3-4); (I-311) + (S3-5); (I-311) + (S3-6); (I-311) + (S3-7); (I-311) + (S3-8); (I-311) + (S3-9); (I-311) + (S3-10); (I-311) + (S3-11); (I-311) + (S4-1); (I-311) + (S4-2); (I-311) + (S4-3); (I-311) + (S4-4); (I-311) + (S4-5); (I-311) + (S7-1); (I-311) + (S11-1); (I-311) + (S11-2); (I-311) + (S11-3); (I-311) + (S12-1); (I-311) + (S13-1); (I-311) + (S13-2); (I-311) + (S13-3); (I-311) + (S13-4): (I-311) + (S13-5); (I-311) + (S13-6); (I-311) + (S13-7); (I-311) + (S13-8); (I-311) + (S13-9); (I-311) + (S14-1)
(I-312) + (S1-1); (I-312) + (S1-2); (I-312) + (S1-3); (I-312) + (S1-4); (I-312) + (S1-5); (I-312) + (S1-6); (I-312) + (S1-7); (I-312) + (S1-8); (I-312) + (S1-9); (I-312) + (S1-10); (I-312) + (S1-11); (I-312) + (S1-12); (I-312) + (S1-13); (I-312) + (S2-1); (I-312) + (S2-2); (I-312) + (S2-3); (I-312) + (S2-4); (I-312) + (S2-5); (I-312) + (S2-6); (I-312) + (S2-7); (I-312) + (S2-8); (I-312) + (S2-9); (I-312) + (S2-10); (I-312) + (S3-1); (I-312) + (S3-2); (I-312) + (S3-3); (I-312) + (S3-4); (I-312) + (S3-5); (I-312) + (S3-6); (I-312) + (S3-7); (I-312) + (S3-8); (I-312) + (S3-9); (I-312) + (S3-10); (I-312) + (S3-11); (I-312) + (S4-1); (I-312) + (S4-2); (I-312) + (S4-3); (I-312) + (S4-4); (I-312) + (S4-5); (I-312) + (S7-1); (I-312) + (S11-1); (I-312) + (S11-2); (I-312) + (S11-3); (I-312) + (S12-1); (I-312) + (S13-1); (I-312) + (S13-2); (I-312) + (S13-3); (I-312) + (S13-4): (I-312) + (S13-5); (I-312) + (S13-6); (I-312) + (S13-7); (I-312) + (S13-8); (I-312) + (S13-9); (I-312) + (S14-1)
(I-313) + (S1-1); (I-313) + (S1-2); (I-313) + (S1-3); (I-313) + (S1-4); (I-313) + (S1-5); (I-313) + (S1-6); (I-313) + (S1-7); (I-313) + (S1-8); (I-313) + (S1-9); (I-313) + (S1-10); (I-313) + (S1-11); (I-313) + (S1-12); (I-313) + (S1-13); (I-313) + (S2-1); (I-313) + (S2-2); (I-313) + (S2-3); (I-313) + (S2-4); (I-313) + (S2-5); (I-313) + (S2-6); (I-313) + (S2-7); (I-313) + (S2-8); (I-313) + (S2-9); (I-313) + (S2-10); (I-313) + (S3-1); (I-313) + (S3-2); (I-313) + (S3-3); (I-313) + (S3-4); (I-313) + (S3-5); (I-313) + (S3-6); (I-313) + (S3-7); (I-313) + (S3-8); (I-313) + (S3-9); (I-313) + (S3-10); (I-313) + (S3-11); (I-313) + (S4-1); (I-313) + (S4-2); (I-313) + (S4-3); (I-313) + (S4-4); (I-313) + (S4-5); (I-313) + (S7-1); (I-313) + (S11-1); (I-313) + (S11-2); (I-313) + (S11-3); (I-313) + (S12-1); (I-313) + (S13-1); (I-313) + (S13-2); (I-313) + (S13-3); (I-313) + (S13-4): (I-313) + (S13-5); (I-313) + (S13-6); (I-313) + (S13-7); (I-313) + (S13-8); (I-313) + (S13-9); (I-313) + (S14-1)
(I-314) + (S1-1); (I-314) + (S1-2); (I-314) + (S1-3); (I-314) + (S1-4); (I-314) + (S1-5); (I-314) + (S1-6); (I-314) + (S1-7); (I-314) + (S1-8); (I-314) + (S1-9); (I-314) + (S1-10); (I-314) + (S1-11); (I-314) + (S1-12); (I-314) + (S1-13); (I-314) + (S2-1); (I-314) + (S2-2); (I-314) + (S2-3); (I-314) + (S2-4); (I-314) + (S2-5); (I-314) + (S2-6); (I-314) + (S2-7); (I-314) + (S2-8); (I-314) + (S2-9); (I-314) + (S2-10); (I-314) + (S3-1); (I-314) + (S3-2); (I-314) + (S3-3); (I-314) + (S3-4); (I-314) + (S3-5); (I-314) + (S3-6); (I-314) + (S3-7); (I-314) + (S3-8); (I-314) + (S3-9); (I-314) + (S3-10); (I-314) + (S3-11); (I-314) + (S4-1); (I-314) + (S4-2); (I-314) + (S4-3); (I-314) + (S4-4); (I-314) + (S4-5); (I-314) + (S7-1); (I-314) + (S11-1); (I-314) + (S11-2); (I-314) + (S11-3); (I-314) + (S12-1); (I-314) + (S13-1); (I-314) + (S13-2); (I-314) + (S13-3); (I-314) + (S13-4): (I-314) + (S13-5); (I-314) + (S13-6); (I-314) + (S13-7); (I-314) + (S13-8); (I-314) + (S13-9); (I-314) + (S14-1)
(I-315) + (S1-1); (I-315) + (S1-2); (I-315) + (S1-3); (I-315) + (S1-4); (I-315) + (S1-5); (I-315) + (S1-6); (I-315) + (S1-7); (I-315) + (S1-8); (I-315) + (S1-9); (I-315) + (S1-10); (I-315) + (S1-11); (I-315) + (S1-12); (I-315) + (S1-13); (I-315) + (S2-1); (I-315) + (S2-2); (I-315) + (S2-3); (I-315) + (S2-4); (I-315) + (S2-5); (I-315) + (S2-6); (I-315) + (S2-7); (I-315) + (S2-8); (I-315) + (S2-9); (I-315) + (S2-10); (I-315) + (S3-1); (I-315) + (S3-2); (I-315) + (S3-3); (I-315) + (S3-4); (I-315) + (S3-5); (I-315) + (S3-6); (I-315) + (S3-7); (I-315) + (S3-8); (I-315) + (S3-9); (I-315) + (S3-10); (I-315) + (S3-11); (I-315) + (S4-1); (I-315) + (S4-2); (I-315) + (S4-3); (I-315) + (S4-4); (I-315) + (S4-5); (I-315) + (S7-1); (I-315) + (S11-1); (I-315) + (S11-2); (I-315) + (S11-3); (I-315) + (S12-1); (I-315) + (S13-1); (I-315) + (S13-2); (I-315) + (S13-3); (I-315) + (S13-4): (I-315) + (S13-5); (I-315) + (S13-6); (I-315) + (S13-7); (I-315) + (S13-8); (I-315) + (S13-9); (I-315) + (S14-1)
(I-316) + (S1-1); (I-316) + (S1-2); (I-316) + (S1-3); (I-316) + (S1-4); (I-316) + (S1-5); (I-316) + (S1-6); (I-316) + (S1-7); (I-316) + (S1-8); (I-316) + (S1-9); (I-316) + (S1-10); (I-316) + (S1-11); (I-316) + (S1-12); (I-316) + (S1-13); (I-316) + (S2-1); (I-316) + (S2-2); (I-316) + (S2-3); (I-316) + (S2-4); (I-316) + (S2-5); (I-316) + (S2-6); (I-316) + (S2-7); (I-316) + (S2-8); (I-316) + (S2-9); (I-316) + (S2-10); (I-316) + (S3-1); (I-316) + (S3-2); (I-316) + (S3-3); (I-316) + (S3-4); (I-316) + (S3-5); (I-316) + (S3-6); (I-316) + (S3-7); (I-316) + (S3-8); (I-316) + (S3-9); (I-316) + (S3-10); (I-316) + (S3-11); (I-316) + (S4-1); (I-316) + (S4-2); (I-316) + (S4-3); (I-316) + (S4-4); (I-316) + (S4-5); (I-316) + (S7-1); (I-316) + (S11-1); (I-316) + (S11-2); (I-316) + (S11-3); (I-316) + (S12-1); (I-316) + (S13-1); (I-316) + (S13-2); (I-316) + (S13-3); (I-316) + (S13-4): (I-316) + (S13-5); (I-316) + (S13-6); (I-316) + (S13-7); (I-316) + (S13-8); (I-316) + (S13-9); (I-316) + (S14-1)
(I-317) + (S1-1); (I-317) + (S1-2); (I-317) + (S1-3); (I-317) + (S1-4); (I-317) + (S1-5); (I-317) + (S1-6); (I-317) + (S1-7); (I-317) + (S1-8); (I-317) + (S1-9); (I-317) + (S1-10); (I-317) + (S1-11); (I-317) + (S1-12); (I-317) + (S1-13); (I-317) + (S2-1); (I-317) + (S2-2); (I-317) + (S2-3); (I-317) + (S2-4); (I-317) + (S2-5); (I-317) + (S2-6); (I-317) + (S2-7); (I-317) + (S2-8); (I-317) + (S2-9); (I-317) + (S2-10); (I-317) + (S3-1); (I-317) + (S3-2); (I-317) + (S3-3); (I-317) + (S3-4); (I-317) + (S3-5); (I-317) + (S3-6); (I-317) + (S3-7); (I-317) + (S3-8); (I-317) + (S3-9); (I-317) + (S3-10); (I-317) + (S3-11); (I-317) + (S4-1); (I-317) + (S4-2); (I-317) + (S4-3); (I-317) + (S4-4); (I-317) + (S4-5); (I-317) + (S7-1); (I-317) + (S11-1); (I-317) + (S11-2); (I-317) + (S11-3); (I-317) + (S12-1); (I-317) + (S13-1); (I-317) + (S13-2); (I-317) + (S13-3); (I-317) + (S13-4): (I-317) + (S13-5); (I-317) + (S13-6); (I-317) + (S13-7); (I-317) + (S13-8); (I-317) + (S13-9); (I-317) + (S14-1)
(I-318) + (S1-1); (I-318) + (S1-2); (I-318) + (S1-3); (I-318) + (S1-4); (I-318) + (S1-5); (I-318) + (S1-6); (I-318) + (S1-7); (I-318) + (S1-8); (I-318) + (S1-9); (I-318) + (S1-10); (I-318) + (S1-11); (I-318) + (S1-12); (I-318) + (S1-13); (I-318) + (S2-1); (I-318) + (S2-2); (I-318) + (S2-3); (I-318) + (S2-4); (I-318) + (S2-5); (I-318) + (S2-6); (I-318) + (S2-7); (I-318) + (S2-8); (I-318) + (S2-9); (I-318) + (S2-10); (I-318) + (S3-1); (I-318) + (S3-2); (I-318) + (S3-3); (I-318) + (S3-4); (I-318) + (S3-5); (I-318) + (S3-6); (I-318) + (S3-7); (I-318) + (S3-8); (I-318) + (S3-9); (I-318) + (S3-10); (I-318) + (S3-11); (I-318) + (S4-1); (I-318) + (S4-2); (I-318) + (S4-3); (I-318) + (S4-4); (I-318) + (S4-5); (I-318) + (S7-1); (I-318) + (S11-1); (I-318) + (S11-2); (I-318) + (S11-3); (I-318) + (S12-1); (I-318) + (S13-1); (I-318) + (S13-2); (I-318) + (S13-3); (I-318) + (S13-4): (I-318) + (S13-5); (I-318) + (S13-6); (I-318) + (S13-7); (I-318) + (S13-8); (I-318) + (S13-9); (I-318) + (S14-1)
(I-319) + (S1-1); (I-319) + (S1-2); (I-319) + (S1-3); (I-319) + (S1-4); (I-319) + (S1-5); (I-319) + (S1-6); (I-319) + (S1-7); (I-319) + (S1-8); (I-319) + (S1-9); (I-319) + (S1-10); (I-319) + (S1-11); (I-319) + (S1-12); (I-319) + (S1-13); (I-319) + (S2-1); (I-319) + (S2-2); (I-319) + (S2-3); (I-319) + (S2-4); (I-319) + (S2-5); (I-319) + (S2-6); (I-319) + (S2-7); (I-319) + (S2-8); (I-319) + (S2-9); (I-319) + (S2-10); (I-319) + (S3-1); (I-319) + (S3-2); (I-319) + (S3-3); (I-319) + (S3-4); (I-319) + (S3-5); (I-319) + (S3-6); (I-319) + (S3-7); (I-319) + (S3-8); (I-319) + (S3-9); (I-319) + (S3-10); (I-319) + (S3-11); (I-319) + (S4-1); (I-319) + (S4-2); (I-319) + (S4-3); (I-319) + (S4-4); (I-319) + (S4-5); (I-319) + (S7-1); (I-319) + (S11-1); (I-319) + (S11-2); (I-319) + (S11-3); (I-319) + (S12-1); (I-319) + (S13-1); (I-319) + (S13-2); (I-319) + (S13-3); (I-319) + (S13-4): (I-319) + (S13-5); (I-319) + (S13-6); (I-319) + (S13-7); (I-319) + (S13-8); (I-319) + (S13-9); (I-319) + (S14-1)
(I-320) + (S1-1); (I-320) + (S1-2); (I-320) + (S1-3); (I-320) + (S1-4); (I-320) + (S1-5); (I-320) + (S1-6); (I-320) + (S1-7); (I-320) + (S1-8); (I-320) + (S1-9); (I-320) + (S1-10); (I-320) + (S1-11); (I-320) + (S1-12); (I-320) + (S1-13); (I-320) + (S2-1); (I-320) + (S2-2); (I-320) + (S2-3); (I-320) + (S2-4); (I-320) + (S2-5); (I-320) + (S2-6); (I-320) + (S2-7); (I-320) + (S2-8); (I-320) + (S2-9); (I-320) + (S2-10); (I-320) + (S3-1); (I-320) + (S3-2); (I-320) + (S3-3); (I-320) + (S3-4); (I-320) + (S3-5); (I-320) + (S3-6); (I-320) + (S3-7); (I-320) + (S3-8); (I-320) + (S3-9); (I-320) + (S3-10); (I-320) + (S3-11); (I-320) + (S4-1); (I-320) + (S4-2); (I-320) + (S4-3); (I-320) + (S4-4); (I-320) + (S4-5); (I-320) + (S7-1); (I-320) + (S11-1); (I-320) + (S11-2); (I-320) + (S11-3); (I-320) + (S12-1); (I-320) + (S13-1); (I-320) + (S13-2); (I-320) + (S13-3); (I-320) + (S13-4): (I-320) + (S13-5); (I-320) + (S13-6); (I-320) + (S13-7); (I-320) + (S13-8); (I-320) + (S13-9); (I-320) + (S14-1)
(I-321) + (S1-1); (I-321) + (S1-2); (I-321) + (S1-3); (I-321) + (S1-4); (I-321) + (S1-5); (I-321) + (S1-6); (I-321) + (S1-7); (I-321) + (S1-8); (I-321) + (S1-9); (I-321) + (S1-10); (I-321) + (S1-11); (I-321) + (S1-12); (I-321) + (S1-13); (I-321) + (S2-1); (I-321) + (S2-2); (I-321) + (S2-3); (I-321) + (S2-4); (I-321) + (S2-5); (I-321) + (S2-6); (I-321) + (S2-7); (I-321) + (S2-8); (I-321) + (S2-9); (I-321) + (S2-10); (I-321) + (S3-1); (I-321) + (S3-2); (I-321) + (S3-3); (I-321) + (S3-4); (I-321) + (S3-5); (I-321) + (S3-6); (I-321) + (S3-7); (I-321) + (S3-8); (I-321) + (S3-9); (I-321) + (S3-10); (I-321) + (S3-11); (I-321) + (S4-1); (I-321) + (S4-2); (I-321) + (S4-3); (I-321) + (S4-4); (I-321) + (S4-5); (I-321) + (S7-1); (I-321) + (S11-1); (I-321) + (S11-2); (I-321) + (S11-3); (I-321) + (S12-1); (I-321) + (S13-1); (I-321) + (S13-2); (I-321) + (S13-3); (I-321) + (S13-4): (I-321) + (S13-5); (I-321) + (S13-6); (I-321) + (S13-7); (I-321) + (S13-8); (I-321) + (S13-9); (I-321) + (S14-1)
(I-322) + (S1-1); (I-322) + (S1-2); (I-322) + (S1-3); (I-322) + (S1-4); (I-322) + (S1-5); (I-322) + (S1-6); (I-322) + (S1-7); (I-322) + (S1-8); (I-322) + (S1-9); (I-322) + (S1-10); (I-322) + (S1-11); (I-322) + (S1-12); (I-322) + (S1-13); (I-322) + (S2-1); (I-322) + (S2-2); (I-322) + (S2-3); (I-322) + (S2-4); (I-322) + (S2-5); (I-322) + (S2-6); (I-322) + (S2-7); (I-322) + (S2-8); (I-322) + (S2-9); (I-322) + (S2-10); (I-322) + (S3-1); (I-322) + (S3-2); (I-322) + (S3-3); (I-322) + (S3-4); (I-322) + (S3-5); (I-322) + (S3-6); (I-322) + (S3-7); (I-322) + (S3-8); (I-322) + (S3-9); (I-322) + (S3-10); (I-322) + (S3-11); (I-322) + (S4-1); (I-322) + (S4-2); (I-322) + (S4-3); (I-322) + (S4-4); (I-322) + (S4-5); (I-322) + (S7-1); (I-322) + (S11-1); (I-322) + (S11-2); (I-322) + (S11-3); (I-322) + (S12-1); (I-322) + (S13-1); (I-322) + (S13-2); (I-322) + (S13-3); (I-322) + (S13-4): (I-322) + (S13-5); (I-322) + (S13-6); (I-322) + (S13-7); (I-322) + (S13-8); (I-322) + (S13-9); (I-322) + (S14-1)
(I-323) + (S1-1); (I-323) + (S1-2); (I-323) + (S1-3); (I-323) + (S1-4); (I-323) + (S1-5); (I-323) + (S1-6); (I-323) + (S1-7); (I-323) + (S1-8); (I-323) + (S1-9); (I-323) + (S1-10); (I-323) + (S1-11); (I-323) + (S1-12); (I-323) + (S1-13); (I-323) + (S2-1); (I-323) + (S2-2); (I-323) + (S2-3); (I-323) + (S2-4); (I-323) + (S2-5); (I-323) + (S2-6); (I-323) + (S2-7); (I-323) + (S2-8); (I-323) + (S2-9); (I-323) + (S2-10); (I-323) + (S3-1); (I-323) + (S3-2); (I-323) + (S3-3); (I-323) + (S3-4); (I-323) + (S3-5); (I-323) + (S3-6); (I-323) + (S3-7); (I-323) + (S3-8); (I-323) + (S3-9); (I-323) + (S3-10); (I-323) + (S3-11); (I-323) + (S4-1); (I-323) + (S4-2); (I-323) + (S4-3); (I-323) + (S4-4); (I-323) + (S4-5); (I-323) + (S7-1); (I-323) + (S11-1); (I-323) + (S11-2); (I-323) + (S11-3); (I-323) + (S12-1); (I-323) + (S13-1); (I-323) + (S13-2); (I-323) + (S13-3); (I-323) + (S13-4): (I-323) + (S13-5); (I-323) + (S13-6); (I-323) + (S13-7); (I-323) + (S13-8); (I-323) + (S13-9); (I-323) + (S14-1)
(I-324) + (S1-1); (I-324) + (S1-2); (I-324) + (S1-3); (I-324) + (S1-4); (I-324) + (S1-5); (I-324) + (S1-6); (I-324) + (S1-7); (I-324) + (S1-8); (I-324) + (S1-9); (I-324) + (S1-10); (I-324) + (S1-11); (I-324) + (S1-12); (I-324) + (S1-13); (I-324) + (S2-1); (I-324) + (S2-2); (I-324) + (S2-3); (I-324) + (S2-4); (I-324) + (S2-5); (I-324) + (S2-6); (I-324) + (S2-7); (I-324) + (S2-8); (I-324) + (S2-9); (I-324) + (S2-10); (I-324) + (S3-1); (I-324) + (S3-2); (I-324) + (S3-3); (I-324) + (S3-4); (I-324) + (S3-5); (I-324) + (S3-6); (I-324) + (S3-7); (I-324) + (S3-8); (I-324) + (S3-9); (I-324) + (S3-10); (I-324) + (S3-11); (I-324) + (S4-1); (I-324) + (S4-2); (I-324) + (S4-3); (I-324) + (S4-4); (I-324) + (S4-5); (I-324) + (S7-1); (I-324) + (S11-1); (I-324) + (S11-2); (I-324) + (S11-3); (I-324) + (S12-1); (I-324) + (S13-1); (I-324) + (S13-2); (I-324) + (S13-3); (I-324) + (S13-4): (I-324) + (S13-5); (I-324) + (S13-6); (I-324) + (S13-7); (I-324) + (S13-8); (I-324) + (S13-9); (I-324) + (S14-1)
(I-325) + (S1-1); (I-325) + (S1-2); (I-325) + (S1-3); (I-325) + (S1-4); (I-325) + (S1-5); (I-325) + (S1-6); (I-325) + (S1-7); (I-325) + (S1-8); (I-325) + (S1-9); (I-325) + (S1-10); (I-325) + (S1-11); (I-325) + (S1-12); (I-325) + (S1-13); (I-325) + (S2-1); (I-325) + (S2-2); (I-325) + (S2-3); (I-325) + (S2-4); (I-325) + (S2-5); (I-325) + (S2-6); (I-325) + (S2-7); (I-325) + (S2-8); (I-325) + (S2-9); (I-325) + (S2-10); (I-325) + (S3-1); (I-325) + (S3-2); (I-325) + (S3-3); (I-325) + (S3-4); (I-325) + (S3-5); (I-325) + (S3-6); (I-325) + (S3-7); (I-325) + (S3-8); (I-325) + (S3-9); (I-325) + (S3-10); (I-325) + (S3-11); (I-325) + (S4-1); (I-325) + (S4-2); (I-325) + (S4-3); (I-325) + (S4-4); (I-325) + (S4-5); (I-325) + (S7-1); (I-325) + (S11-1); (I-325) + (S11-2); (I-325) + (S11-3); (I-325) + (S12-1); (I-325) + (S13-1); (I-325) + (S13-2); (I-325) + (S13-3); (I-325) + (S13-4): (I-325) + (S13-5); (I-325) + (S13-6); (I-325) + (S13-7); (I-325) + (S13-8); (I-325) + (S13-9); (I-325) + (S14-1)
(I-326) + (S1-1); (I-326) + (S1-2); (I-326) + (S1-3); (I-326) + (S1-4); (I-326) + (S1-5); (I-326) + (S1-6); (I-326) + (S1-7); (I-326) + (S1-8); (I-326) + (S1-9); (I-326) + (S1-10); (I-326) + (S1-11); (I-326) + (S1-12); (I-326) + (S1-13); (I-326) + (S2-1); (I-326) + (S2-2); (I-326) + (S2-3); (I-326) + (S2-4); (I-326) + (S2-5); (I-326) + (S2-6); (I-326) + (S2-7); (I-326) + (S2-8); (I-326) + (S2-9); (I-326) + (S2-10); (I-326) + (S3-1); (I-326) + (S3-2); (I-326) + (S3-3); (I-326) + (S3-4); (I-326) + (S3-5); (I-326) + (S3-6); (I-326) + (S3-7); (I-326) + (S3-8); (I-326) + (S3-9); (I-326) + (S3-10); (I-326) + (S3-11); (I-326) + (S4-1); (I-326) + (S4-2); (I-326) + (S4-3); (I-326) + (S4-4); (I-326) + (S4-5); (I-326) + (S7-1); (I-326) + (S11-1); (I-326) + (S11-2); (I-326) + (S11-3); (I-326) + (S12-1); (I-326) + (S13-1); (I-326) + (S13-2); (I-326) + (S13-3); (I-326) + (S13-4): (I-326) + (S13-5); (I-326) + (S13-6); (I-326) + (S13-7); (I-326) + (S13-8); (I-326) + (S13-9); (I-326) + (S14-1)
(I-327) + (S1-1); (I-327) + (S1-2); (I-327) + (S1-3); (I-327) + (S1-4); (I-327) + (S1-5); (I-327) + (S1-6); (I-327) + (S1-7); (I-327) + (S1-8); (I-327) + (S1-9); (I-327) + (S1-10); (I-327) + (S1-11); (I-327) + (S1-12); (I-327) + (S1-13); (I-327) + (S2-1); (I-327) + (S2-2); (I-327) + (S2-3); (I-327) + (S2-4); (I-327) + (S2-5); (I-327) + (S2-6); (I-327) + (S2-7); (I-327) + (S2-8); (I-327) + (S2-9); (I-327) + (S2-10); (I-327) + (S3-1); (I-327) + (S3-2); (I-327) + (S3-3); (I-327) + (S3-4); (I-327) + (S3-5); (I-327) + (S3-6); (I-327) + (S3-7); (I-327) + (S3-8); (I-327) + (S3-9); (I-327) + (S3-10); (I-327) + (S3-11); (I-327) + (S4-1); (I-327) + (S4-2); (I-327) + (S4-3); (I-327) + (S4-4); (I-327) + (S4-5); (I-327) + (S7-1); (I-327) + (S11-1); (I-327) + (S11-2); (I-327) + (S11-3); (I-327) + (S12-1); (I-327) + (S13-1); (I-327) + (S13-2); (I-327) + (S13-3); (I-327) + (S13-4): (I-327) + (S13-5); (I-327) + (S13-6); (I-327) + (S13-7); (I-327) + (S13-8); (I-327) + (S13-9); (I-327) + (S14-1)
(I-328) + (S1-1); (I-328) + (S1-2); (I-328) + (S1-3); (I-328) + (S1-4); (I-328) + (S1-5); (I-328) + (S1-6); (I-328) + (S1-7); (I-328) + (S1-8); (I-328) + (S1-9); (I-328) + (S1-10); (I-328) + (S1-11); (I-328) + (S1-12); (I-328) + (S1-13); (I-328) + (S2-1); (I-328) + (S2-2); (I-328) + (S2-3); (I-328) + (S2-4); (I-328) + (S2-5); (I-328) + (S2-6); (I-328) + (S2-7); (I-328) + (S2-8); (I-328) + (S2-9); (I-328) + (S2-10); (I-328) + (S3-1); (I-328) + (S3-2); (I-328) + (S3-3); (I-328) + (S3-4); (I-328) + (S3-5); (I-328) + (S3-6); (I-328) + (S3-7); (I-328) + (S3-8); (I-328) + (S3-9); (I-328) + (S3-10); (I-328) + (S3-11); (I-328) + (S4-1); (I-328) + (S4-2); (I-328) + (S4-3); (I-328) + (S4-4); (I-328) + (S4-5); (I-328) + (S7-1); (I-328) + (S11-1); (I-328) + (S11-2); (I-328) + (S11-3); (I-328) + (S12-1); (I-328) + (S13-1); (I-328) + (S13-2); (I-328) + (S13-3); (I-328) + (S13-4): (I-328) + (S13-5); (I-328) + (S13-6); (I-328) + (S13-7); (I-328) + (S13-8); (I-328) + (S13-9); (I-328) + (S14-1)
(I-329) + (S1-1); (I-329) + (S1-2); (I-329) + (S1-3); (I-329) + (S1-4); (I-329) + (S1-5); (I-329) + (S1-6); (I-329) + (S1-7); (I-329) + (S1-8); (I-329) + (S1-9); (I-329) + (S1-10); (I-329) + (S1-11); (I-329) + (S1-12); (I-329) + (S1-13); (I-329) + (S2-1); (I-329) + (S2-2); (I-329) + (S2-3); (I-329) + (S2-4); (I-329) + (S2-5); (I-329) + (S2-6); (I-329) + (S2-7); (I-329) + (S2-8); (I-329) + (S2-9); (I-329) + (S2-10); (I-329) + (S3-1); (I-329) + (S3-2); (I-329) + (S3-3); (I-329) + (S3-4); (I-329) + (S3-5); (I-329) + (S3-6); (I-329) + (S3-7); (I-329) + (S3-8); (I-329) + (S3-9); (I-329) + (S3-10); (I-329) + (S3-11); (I-329) + (S4-1); (I-329) + (S4-2); (I-329) + (S4-3); (I-329) + (S4-4); (I-329) + (S4-5); (I-329) + (S7-1); (I-329) + (S11-1); (I-329) + (S11-2); (I-329) + (S11-3); (I-329) + (S12-1); (I-329) + (S13-1); (I-329) + (S13-2); (I-329) + (S13-3); (I-329) + (S13-4): (I-329) + (S13-5); (I-329) + (S13-6); (I-329) + (S13-7); (I-329) + (S13-8); (I-329) + (S13-9); (I-329) + (S14-1)
(I-330) + (S1-1); (I-330) + (S1-2); (I-330) + (S1-3); (I-330) + (S1-4); (I-330) + (S1-5); (I-330) + (S1-6); (I-330) + (S1-7); (I-330) + (S1-8); (I-330) + (S1-9); (I-330) + (S1-10); (I-330) + (S1-11); (I-330) + (S1-12); (I-330) + (S1-13); (I-330) + (S2-1); (I-330) + (S2-2); (I-330) + (S2-3); (I-330) + (S2-4); (I-330) + (S2-5); (I-330) + (S2-6); (I-330) + (S2-7); (I-330) + (S2-8); (I-330) + (S2-9); (I-330) + (S2-10); (I-330) + (S3-1); (I-330) + (S3-2); (I-330) + (S3-3); (I-330) + (S3-4); (I-330) + (S3-5); (I-330) + (S3-6); (I-330) + (S3-7); (I-330) + (S3-8); (I-330) + (S3-9); (I-330) + (S3-10); (I-330) + (S3-11); (I-330) + (S4-1); (I-330) + (S4-2); (I-330) + (S4-3); (I-330) + (S4-4); (I-330) + (S4-5); (I-330) + (S7-1); (I-330) + (S11-1); (I-330) + (S11-2); (I-330) + (S11-3); (I-330) + (S12-1); (I-330) + (S13-1); (I-330) + (S13-2); (I-330) + (S13-3); (I-330) + (S13-4): (I-330) + (S13-5); (I-330) + (S13-6); (I-330) + (S13-7); (I-330) + (S13-8); (I-330) + (S13-9); (I-330) + (S14-1)
(I-331) + (S1-1); (I-331) + (S1-2); (I-331) + (S1-3); (I-331) + (S1-4); (I-331) + (S1-5); (1 -33 1 ) + (S1-6); (I-331) + (S1-7); (I-331) + (S1-8); (I-331) + (S1-9); (I-331) + (S1-10); (I-331) + (S1-11); (I-331) + (S1-12); (I-331) + (S1-13); (I-331) + (S2-1); (I-331) + (S2-2); (I-331) + (S2-3); (I-331) + (S2-4); (I-331) + (S2-5); (I-331) + (S2-6); (I-331) + (S2-7); (I-331) + (S2-8); (I-331) + (S2-9); (I-331) + (S2-10); (I-331) + (S3-1); (I-331) + (S3-2); (I-331) + (S3-3); (I-331) + (S3-4); (I-331) + (S3-5); (I-331) + (S3-6); (I-331) + (S3-7); (I-331) + (S3-8); (I-331) + (S3-9); (I-331) + (S3-10); (I-331) + (S3-11); (I-331) + (S4-1); (I-331) + (S4-2); (I-331) + (S4-3); (I-331) + (S4-4); (I-331) + (S4-5); (I-331) + (S7-1); (I-331) + (S11-1); (I-331) + (S11-2); (I-331) + (S11-3); (I-331) + (S12-1); (I-331) + (S13-1); (I-331) + (S13-2); (I-331) + (S13-3); (I-331) + (S13-4): (I-331) + (S13-5); (I-331) + (S13-6); (I-331) + (S13-7); (I-331) + (S13-8); (I-331) + (S13-9); (I-331) + (S14-1)
(I-332) + (S1-1); (I-332) + (S1-2); (I-332) + (S1-3); (I-332) + (S1-4); (I-332) + (S1-5); (I-332) + (S1-6); (I-332) + (S1-7); (I-332) + (S1-8); (I-332) + (S1-9); (I-332) + (S1-10); (I-332) + (S1-11); (I-332) + (S1-12); (I-332) + (S1-13); (I-332) + (S2-1); (I-332) + (S2-2); (I-332) + (S2-3); (I-332) + (S2-4); (I-332) + (S2-5); (I-332) + (S2-6); (I-332) + (S2-7); (I-332) + (S2-8); (I-332) + (S2-9); (I-332) + (S2-10); (I-332) + (S3-1); (I-332) + (S3-2); (I-332) + (S3-3); (I-332) + (S3-4); (I-332) + (S3-5); (I-332) + (S3-6); (I-332) + (S3-7); (I-332) + (S3-8); (I-332) + (S3-9); (I-332) + (S3-10); (I-332) + (S3-11); (I-332) + (S4-1); (I-332) + (S4-2); (I-332) + (S4-3); (I-332) + (S4-4); (I-332) + (S4-5); (I-332) + (S7-1); (I-332) + (S11-1); (I-332) + (S11-2); (I-332) + (S11-3); (I-332) + (S12-1); (I-332) + (S13-1); (I-332) + (S13-2); (I-332) + (S13-3); (I-332) + (S13-4): (I-332) + (S13-5); (I-332) + (S13-6); (I-332) + (S13-7); (I-332) + (S13-8); (I-332) + (S13-9); (I-332) + (S14-1)
(I-333) + (S1-1); (I-333) + (S1-2); (I-333) + (S1-3); (I-333) + (S1-4); (I-333) + (S1-5); (I-333) + (S1-6); (I-333) + (S1-7); (I-333) + (S1-8); (I-333) + (S1-9); (I-333) + (S1-10); (I-333) + (S1-11); (I-333) + (S1-12); (I-333) + (S1-13); (I-333) + (S2-1); (I-333) + (S2-2); (I-333) + (S2-3); (I-333) + (S2-4); (I-333) + (S2-5); (I-333) + (S2-6); (I-333) + (S2-7); (I-333) + (S2-8); (I-333) + (S2-9); (I-333) + (S2-10); (I-333) + (S3-1); (I-333) + (S3-2); (I-333) + (S3-3); (I-333) + (S3-4); (I-333) + (S3-5); (I-333) + (S3-6); (I-333) + (S3-7); (I-333) + (S3-8); (I-333) + (S3-9); (I-333) + (S3-10); (I-333) + (S3-11); (I-333) + (S4-1); (I-333) + (S4-2); (I-333) + (S4-3); (I-333) + (S4-4); (I-333) + (S4-5); (I-333) + (S7-1); (I-333) + (S11-1); (I-333) + (S11-2); (I-333) + (S11-3); (I-333) + (S12-1); (I-333) + (S13-1); (I-333) + (S13-2); (I-333) + (S13-3); (I-333) + (S13-4): (I-333) + (S13-5); (I-333) + (S13-6); (I-333) + (S13-7); (I-333) + (S13-8); (I-333) + (S13-9); (I-333) + (S14-1)
(I-334) + (S1-1); (I-334) + (S1-2); (I-334) + (S1-3); (I-334) + (S1-4); (I-334) + (S1-5); (I-334) + (S1-6); (I-334) + (S1-7); (I-334) + (S1-8); (I-334) + (S1-9); (I-334) + (S1-10); (I-334) + (S1-11); (I-334) + (S1-12); (I-334) + (S1-13); (I-334) + (S2-1); (I-334) + (S2-2); (I-334) + (S2-3); (I-334) + (S2-4); (I-334) + (S2-5); (I-334) + (S2-6); (I-334) + (S2-7); (I-334) + (S2-8); (I-334) + (S2-9); (I-334) + (S2-10); (I-334) + (S3-1); (I-334) + (S3-2); (I-334) + (S3-3); (I-334) + (S3-4); (I-334) + (S3-5); (I-334) + (S3-6); (I-334) + (S3-7); (I-334) + (S3-8); (I-334) + (S3-9); (I-334) + (S3-10); (I-334) + (S3-11); (I-334) + (S4-1); (I-334) + (S4-2); (I-334) + (S4-3); (I-334) + (S4-4); (I-334) + (S4-5); (I-334) + (S7-1); (I-334) + (S11-1); (I-334) + (S11-2); (I-334) + (S11-3); (I-334) + (S12-1); (I-334) + (S13-1); (I-334) + (S13-2); (I-334) + (S13-3); (I-334) + (S13-4): (I-334) + (S13-5); (I-334) + (S13-6); (I-334) + (S13-7); (I-334) + (S13-8); (I-334) + (S13-9); (I-334) + (S14-1)
(I-335) + (S1-1); (I-335) + (S1-2); (I-335) + (S1-3); (I-335) + (S1-4); (I-335) + (S1-5); (I-335) + (S1-6); (I-335) + (S1-7); (I-335) + (S1-8); (I-335) + (S1-9); (I-335) + (S1-10); (I-335) + (S1-11); (I-335) + (S1-12); (I-335) + (S1-13); (I-335) + (S2-1); (I-335) + (S2-2); (I-335) + (S2-3); (I-335) + (S2-4); (I-335) + (S2-5); (I-335) + (S2-6); (I-335) + (S2-7); (I-335) + (S2-8); (I-335) + (S2-9); (I-335) + (S2-10); (I-335) + (S3-1); (I-335) + (S3-2); (I-335) + (S3-3); (I-335) + (S3-4); (I-335) + (S3-5); (I-335) + (S3-6); (I-335) + (S3-7); (I-335) + (S3-8); (I-335) + (S3-9); (I-335) + (S3-10); (I-335) + (S3-11); (I-335) + (S4-1); (I-335) + (S4-2); (I-335) + (S4-3); (I-335) + (S4-4); (I-335) + (S4-5); (I-335) + (S7-1); (I-335) + (S11-1); (I-335) + (S11-2); (I-335) + (S11-3); (I-335) + (S12-1); (I-335) + (S13-1); (I-335) + (S13-2); (I-335) + (S13-3); (I-335) + (S13-4): (I-335) + (S13-5); (I-335) + (S13-6); (I-335) + (S13-7); (I-335) + (S13-8); (I-335) + (S13-9); (I-335) + (S14-1)
(I-336) + (S1-1); (I-336) + (S1-2); (I-336) + (S1-3); (I-336) + (S1-4); (I-336) + (S1-5); (I-336) + (S1-6); (I-336) + (S1-7); (I-336) + (S1-8); (I-336) + (S1-9); (I-336) + (S1-10); (I-336) + (S1-11); (I-336) + (S1-12); (I-336) + (S1-13); (I-336) + (S2-1); (I-336) + (S2-2); (I-336) + (S2-3); (I-336) + (S2-4); (I-336) + (S2-5); (I-336) + (S2-6); (I-336) + (S2-7); (I-336) + (S2-8); (I-336) + (S2-9); (I-336) + (S2-10); (I-336) + (S3-1); (I-336) + (S3-2); (I-336) + (S3-3); (I-336) + (S3-4); (I-336) + (S3-5); (I-336) + (S3-6); (I-336) + (S3-7); (I-336) + (S3-8); (I-336) + (S3-9); (I-336) + (S3-10); (I-336) + (S3-11); (I-336) + (S4-1); (I-336) + (S4-2); (I-336) + (S4-3); (I-336) + (S4-4); (I-336) + (S4-5); (I-336) + (S7-1); (I-336) + (S11-1); (I-336) + (S11-2); (I-336) + (S11-3); (I-336) + (S12-1); (I-336) + (S13-1); (I-336) + (S13-2); (I-336) + (S13-3); (I-336) + (S13-4): (I-336) + (S13-5); (I-336) + (S13-6); (I-336) + (S13-7); (I-336) + (S13-8); (I-336) + (S13-9); (I-336) + (S14-1)
(I-337) + (S1-1); (I-337) + (S1-2); (I-337) + (S1-3); (I-337) + (S1-4); (I-337) + (S1-5); (I-337) + (S1-6); (I-337) + (S1-7); (I-337) + (S1-8); (I-337) + (S1-9); (I-337) + (S1-10); (I-337) + (S1-11); (I-337) + (S1-12); (I-337) + (S1-13); (I-337) + (S2-1); (I-337) + (S2-2); (I-337) + (S2-3); (I-337) + (S2-4); (I-337) + (S2-5); (I-337) + (S2-6); (I-337) + (S2-7); (I-337) + (S2-8); (I-337) + (S2-9); (I-337) + (S2-10); (I-337) + (S3-1); (I-337) + (S3-2); (I-337) + (S3-3); (I-337) + (S3-4); (I-337) + (S3-5); (I-337) + (S3-6); (I-337) + (S3-7); (I-337) + (S3-8); (I-337) + (S3-9); (I-337) + (S3-10); (I-337) + (S3-11); (I-337) + (S4-1); (I-337) + (S4-2); (I-337) + (S4-3); (I-337) + (S4-4); (I-337) + (S4-5); (I-337) + (S7-1); (I-337) + (S11-1); (I-337) + (S11-2); (I-337) + (S11-3); (I-337) + (S12-1); (I-337) + (S13-1); (I-337) + (S13-2); (I-337) + (S13-3); (I-337) + (S13-4): (I-337) + (S13-5); (I-337) + (S13-6); (I-337) + (S13-7); (I-337) + (S13-8); (I-337) + (S13-9); (I-337) + (S14-1)
(I-338) + (S1-1); (I-338) + (S1-2); (I-338) + (S1-3); (I-338) + (S1-4); (I-338) + (S1-5); (I-338) + (S1-6); (I-338) + (S1-7); (I-338) + (S1-8); (I-338) + (S1-9); (I-338) + (S1-10); (I-338) + (S1-11); (I-338) + (S1-12); (I-338) + (S1-13); (I-338) + (S2-1); (I-338) + (S2-2); (I-338) + (S2-3); (I-338) + (S2-4); (I-338) + (S2-5); (I-338) + (S2-6); (I-338) + (S2-7); (I-338) + (S2-8); (I-338) + (S2-9); (I-338) + (S2-10); (I-338) + (S3-1); (I-338) + (S3-2); (I-338) + (S3-3); (I-338) + (S3-4); (I-338) + (S3-5); (I-338) + (S3-6); (I-338) + (S3-7); (I-338) + (S3-8); (I-338) + (S3-9); (I-338) + (S3-10); (I-338) + (S3-11); (I-338) + (S4-1); (I-338) + (S4-2); (I-338) + (S4-3); (I-338) + (S4-4); (I-338) + (S4-5); (I-338) + (S7-1); (I-338) + (S11-1); (I-338) + (S11-2); (I-338) + (S11-3); (I-338) + (S12-1); (I-338) + (S13-1); (I-338) + (S13-2); (I-338) + (S13-3); (I-338) + (S13-4): (I-338) + (S13-5); (I-338) + (S13-6); (I-338) + (S13-7); (I-338) + (S13-8); (I-338) + (S13-9); (I-338) + (S14-1)
(I-339) + (S1-1); (I-339) + (S1-2); (I-339) + (S1-3); (I-339) + (S1-4); (I-339) + (S1-5); (I-339) + (S1-6); (I-339) + (S1-7); (I-339) + (S1-8); (I-339) + (S1-9); (I-339) + (S1-10); (I-339) + (S1-11); (I-339) + (S1-12); (I-339) + (S1-13); (I-339) + (S2-1); (I-339) + (S2-2); (I-339) + (S2-3); (I-339) + (S2-4); (I-339) + (S2-5); (I-339) + (S2-6); (I-339) + (S2-7); (I-339) + (S2-8); (I-339) + (S2-9); (I-339) + (S2-10); (I-339) + (S3-1); (I-339) + (S3-2); (I-339) + (S3-3); (I-339) + (S3-4); (I-339) + (S3-5); (I-339) + (S3-6); (I-339) + (S3-7); (I-339) + (S3-8); (I-339) + (S3-9); (I-339) + (S3-10); (I-339) + (S3-11); (I-339) + (S4-1); (I-339) + (S4-2); (I-339) + (S4-3); (I-339) + (S4-4); (I-339) + (S4-5); (I-339) + (S7-1); (I-339) + (S11-1); (I-339) + (S11-2); (I-339) + (S11-3); (I-339) + (S12-1); (I-339) + (S13-1); (I-339) + (S13-2); (I-339) + (S13-3); (I-339) + (S13-4): (I-339) + (S13-5); (I-339) + (S13-6); (I-339) + (S13-7); (I-339) + (S13-8); (I-339) + (S13-9); (I-339) + (S14-1)
(I-340) + (S1-1); (I-340) + (S1-2); (I-340) + (S1-3); (I-340) + (S1-4); (I-340) + (S1-5); (I-340) + (S1-6); (I-340) + (S1-7); (I-340) + (S1-8); (I-340) + (S1-9); (I-340) + (S1-10); (I-340) + (S1-11); (I-340) + (S1-12); (I-340) + (S1-13); (I-340) + (S2-1); (I-340) + (S2-2); (I-340) + (S2-3); (I-340) + (S2-4); (I-340) + (S2-5); (I-340) + (S2-6); (I-340) + (S2-7); (I-340) + (S2-8); (I-340) + (S2-9); (I-340) + (S2-10); (I-340) + (S3-1); (I-340) + (S3-2); (I-340) + (S3-3); (I-340) + (S3-4); (I-340) + (S3-5); (I-340) + (S3-6); (I-340) + (S3-7); (I-340) + (S3-8); (I-340) + (S3-9); (I-340) + (S3-10); (I-340) + (S3-11); (I-340) + (S4-1); (I-340) + (S4-2); (I-340) + (S4-3); (I-340) + (S4-4); (I-340) + (S4-5); (I-340) + (S7-1); (I-340) + (S11-1); (I-340) + (S11-2); (I-340) + (S11-3); (I-340) + (S12-1); (I-340) + (S13-1); (I-340) + (S13-2); (I-340) + (S13-3); (I-340) + (S13-4): (I-340) + (S13-5); (I-340) + (S13-6); (I-340) + (S13-7); (I-340) + (S13-8); (I-340) + (S13-9); (I-340) + (S14-1)
(I-341) + (S1-1); (I-341) + (S1-2); (I-341) + (S1-3); (I-341) + (S1-4); (I-341) + (S1-5); (I-341) + (S1-6); (I-341) + (S1-7); (I-341) + (S1-8); (I-341) + (S1-9); (I-341) + (S1-10); (I-341) + (S1-11); (I-341) + (S1-12); (I-341) + (S1-13); (I-341) + (S2-1); (I-341) + (S2-2); (I-341) + (S2-3); (I-341) + (S2-4); (I-341) + (S2-5); (I-341) + (S2-6); (I-341) + (S2-7); (I-341) + (S2-8); (I-341) + (S2-9); (I-341) + (S2-10); (I-341) + (S3-1); (I-341) + (S3-2); (I-341) + (S3-3); (I-341) + (S3-4); (I-341) + (S3-5); (I-341) + (S3-6); (I-341) + (S3-7); (I-341) + (S3-8); (I-341) + (S3-9); (I-341) + (S3-10); (I-341) + (S3-11); (I-341) + (S4-1); (I-341) + (S4-2); (I-341) + (S4-3); (I-341) + (S4-4); (I-341) + (S4-5); (I-341) + (S7-1); (I-341) + (S11-1); (I-341) + (S11-2); (I-341) + (S11-3); (I-341) + (S12-1); (I-341) + (S13-1); (I-341) + (S13-2); (I-341) + (S13-3); (I-341) + (S13-4): (I-341) + (S13-5); (I-341) + (S13-6); (I-341) + (S13-7); (I-341) + (S13-8); (I-341) + (S13-9); (I-341) + (S14-1)
(I-342) + (S1-1); (I-342) + (S1-2); (I-342) + (S1-3); (I-342) + (S1-4); (I-342) + (S1-5); (I-342) + (S1-6); (I-342) + (S1-7); (I-342) + (S1-8); (I-342) + (S1-9); (I-342) + (S1-10); (I-342) + (S1-11); (I-342) + (S1-12); (I-342) + (S1-13); (I-342) + (S2-1); (I-342) + (S2-2); (I-342) + (S2-3); (I-342) + (S2-4); (I-342) + (S2-5); (I-342) + (S2-6); (I-342) + (S2-7); (I-342) + (S2-8); (I-342) + (S2-9); (I-342) + (S2-10); (I-342) + (S3-1); (I-342) + (S3-2); (I-342) + (S3-3); (I-342) + (S3-4); (I-342) + (S3-5); (I-342) + (S3-6); (I-342) + (S3-7); (I-342) + (S3-8); (I-342) + (S3-9); (I-342) + (S3-10); (I-342) + (S3-11); (I-342) + (S4-1); (I-342) + (S4-2); (I-342) + (S4-3); (I-342) + (S4-4); (I-342) + (S4-5); (I-342) + (S7-1); (I-342) + (S11-1); (I-342) + (S11-2); (I-342) + (S11-3); (I-342) + (S12-1); (I-342) + (S13-1); (I-342) + (S13-2); (I-342) + (S13-3); (I-342) + (S13-4): (I-342) + (S13-5); (I-342) + (S13-6); (I-342) + (S13-7); (I-342) + (S13-8); (I-342) + (S13-9); (I-342) + (S14-1)
(I-343) + (S1-1); (I-343) + (S1-2); (I-343) + (S1-3); (I-343) + (S1-4); (I-343) + (S1-5); (I-343) + (S1-6); (I-343) + (S1-7); (I-343) + (S1-8); (I-343) + (S1-9); (I-343) + (S1-10); (I-343) + (S1-11); (I-343) + (S1-12); (I-343) + (S1-13); (I-343) + (S2-1); (I-343) + (S2-2); (I-343) + (S2-3); (I-343) + (S2-4); (I-343) + (S2-5); (I-343) + (S2-6); (I-343) + (S2-7); (I-343) + (S2-8); (I-343) + (S2-9); (I-343) + (S2-10); (I-343) + (S3-1); (I-343) + (S3-2); (I-343) + (S3-3); (I-343) + (S3-4); (I-343) + (S3-5); (I-343) + (S3-6); (I-343) + (S3-7); (I-343) + (S3-8); (I-343) + (S3-9); (I-343) + (S3-10); (I-343) + (S3-11); (I-343) + (S4-1); (I-343) + (S4-2); (I-343) + (S4-3); (I-343) + (S4-4); (I-343) + (S4-5); (I-343) + (S7-1); (I-343) + (S11-1); (I-343) + (S11-2); (I-343) + (S11-3); (I-343) + (S12-1); (I-343) + (S13-1); (I-343) + (S13-2); (I-343) + (S13-3); (I-343) + (S13-4): (I-343) + (S13-5); (I-343) + (S13-6); (I-343) + (S13-7); (I-343) + (S13-8); (I-343) + (S13-9); (I-343) + (S14-1)
(I-344) + (S1-1); (I-344) + (S1-2); (I-344) + (S1-3); (I-344) + (S1-4); (I-344) + (S1-5); (I-344) + (S1-6); (I-344) + (S1-7); (I-344) + (S1-8); (I-344) + (S1-9); (I-344) + (S1-10); (I-344) + (S1-11); (I-344) + (S1-12); (I-344) + (S1-13); (I-344) + (S2-1); (I-344) + (S2-2); (I-344) + (S2-3); (I-344) + (S2-4); (I-344) + (S2-5); (I-344) + (S2-6); (I-344) + (S2-7); (I-344) + (S2-8); (I-344) + (S2-9); (I-344) + (S2-10); (I-344) + (S3-1); (I-344) + (S3-2); (I-344) + (S3-3); (I-344) + (S3-4); (I-344) + (S3-5); (I-344) + (S3-6); (I-344) + (S3-7); (I-344) + (S3-8); (I-344) + (S3-9); (I-344) + (S3-10); (I-344) + (S3-11); (I-344) + (S4-1); (I-344) + (S4-2); (I-344) + (S4-3); (I-344) + (S4-4); (I-344) + (S4-5); (I-344) + (S7-1); (I-344) + (S11-1); (I-344) + (S11-2); (I-344) + (S11-3); (I-344) + (S12-1); (I-344) + (S13-1); (I-344) + (S13-2); (I-344) + (S13-3); (I-344) + (S13-4): (I-344) + (S13-5); (I-344) + (S13-6); (I-344) + (S13-7); (I-344) + (S13-8); (I-344) + (S13-9); (I-344) + (S14-1)
(I-345) + (S1-1); (I-345) + (S1-2); (I-345) + (S1-3); (I-345) + (S1-4); (I-345) + (S1-5); (I-345) + (S1-6); (I-345) + (S1-7); (I-345) + (S1-8); (I-345) + (S1-9); (I-345) + (S1-10); (I-345) + (S1-11); (I-345) + (S1-12); (I-345) + (S1-13); (I-345) + (S2-1); (I-345) + (S2-2); (I-345) + (S2-3); (I-345) + (S2-4); (I-345) + (S2-5); (I-345) + (S2-6); (I-345) + (S2-7); (I-345) + (S2-8); (I-345) + (S2-9); (I-345) + (S2-10); (I-345) + (S3-1); (I-345) + (S3-2); (I-345) + (S3-3); (I-345) + (S3-4); (I-345) + (S3-5); (I-345) + (S3-6); (I-345) + (S3-7); (I-345) + (S3-8); (I-345) + (S3-9); (I-345) + (S3-10); (I-345) + (S3-11); (I-345) + (S4-1); (I-345) + (S4-2); (I-345) + (S4-3); (I-345) + (S4-4); (I-345) + (S4-5); (I-345) + (S7-1); (I-345) + (S11-1); (I-345) + (S11-2); (I-345) + (S11-3); (I-345) + (S12-1); (I-345) + (S13-1); (I-345) + (S13-2); (I-345) + (S13-3); (I-345) + (S13-4): (I-345) + (S13-5); (I-345) + (S13-6); (I-345) + (S13-7); (I-345) + (S13-8); (I-345) + (S13-9); (I-345) + (S14-1)
(I-346) + (S1-1); (I-346) + (S1-2); (I-346) + (S1-3); (I-346) + (S1-4); (I-346) + (S1-5); (I-346) + (S1-6); (I-346) + (S1-7); (I-346) + (S1-8); (I-346) + (S1-9); (I-346) + (S1-10); (I-346) + (S1-11); (I-346) + (S1-12); (I-346) + (S1-13); (I-346) + (S2-1); (I-346) + (S2-2); (I-346) + (S2-3); (I-346) + (S2-4); (I-346) + (S2-5); (I-346) + (S2-6); (I-346) + (S2-7); (I-346) + (S2-8); (I-346) + (S2-9); (I-346) + (S2-10); (I-346) + (S3-1); (I-346) + (S3-2); (I-346) + (S3-3); (I-346) + (S3-4); (I-346) + (S3-5); (I-346) + (S3-6); (I-346) + (S3-7); (I-346) + (S3-8); (I-346) + (S3-9); (I-346) + (S3-10); (I-346) + (S3-11); (I-346) + (S4-1); (I-346) + (S4-2); (I-346) + (S4-3); (I-346) + (S4-4); (I-346) + (S4-5); (I-346) + (S7-1); (I-346) + (S11-1); (I-346) + (S11-2); (I-346) + (S11-3); (I-346) + (S12-1); (I-346) + (S13-1); (I-346) + (S13-2); (I-346) + (S13-3); (I-346) + (S13-4): (I-346) + (S13-5); (I-346) + (S13-6); (I-346) + (S13-7); (I-346) + (S13-8); (I-346) + (S13-9); (I-346) + (S14-1)
(I-347) + (S1-1); (I-347) + (S1-2); (I-347) + (S1-3); (I-347) + (S1-4); (I-347) + (S1-5); (I-347) + (S1-6); (I-347) + (S1-7); (I-347) + (S1-8); (I-347) + (S1-9); (I-347) + (S1-10); (I-347) + (S1-11); (I-347) + (S1-12); (I-347) + (S1-13); (I-347) + (S2-1); (I-347) + (S2-2); (I-347) + (S2-3); (I-347) + (S2-4); (I-347) + (S2-5); (I-347) + (S2-6); (I-347) + (S2-7); (I-347) + (S2-8); (I-347) + (S2-9); (I-347) + (S2-10); (I-347) + (S3-1); (I-347) + (S3-2); (I-347) + (S3-3); (I-347) + (S3-4); (I-347) + (S3-5); (I-347) + (S3-6); (I-347) + (S3-7); (I-347) + (S3-8); (I-347) + (S3-9); (I-347) + (S3-10); (I-347) + (S3-11); (I-347) + (S4-1); (I-347) + (S4-2); (I-347) + (S4-3); (I-347) + (S4-4); (I-347) + (S4-5); (I-347) + (S7-1); (I-347) + (S11-1); (I-347) + (S11-2); (I-347) + (S11-3); (I-347) + (S12-1); (I-347) + (S13-1); (I-347) + (S13-2); (I-347) + (S13-3); (I-347) + (S13-4): (I-347) + (S13-5); (I-347) + (S13-6); (I-347) + (S13-7); (I-347) + (S13-8); (I-347) + (S13-9); (I-347) + (S14-1)
(I-348) + (S1-1); (I-348) + (S1-2); (I-348) + (S1-3); (I-348) + (S1-4); (I-348) + (S1-5); (I-348) + (S1-6); (I-348) + (S1-7); (I-348) + (S1-8); (I-348) + (S1-9); (I-348) + (S1-10); (I-348) + (S1-11); (I-348) + (S1-12); (I-348) + (S1-13); (I-348) + (S2-1); (I-348) + (S2-2); (I-348) + (S2-3); (I-348) + (S2-4); (I-348) + (S2-5); (I-348) + (S2-6); (I-348) + (S2-7); (I-348) + (S2-8); (I-348) + (S2-9); (I-348) + (S2-10); (I-348) + (S3-1); (I-348) + (S3-2); (I-348) + (S3-3); (I-348) + (S3-4); (I-348) + (S3-5); (I-348) + (S3-6); (I-348) + (S3-7); (I-348) + (S3-8); (I-348) + (S3-9); (I-348) + (S3-10); (I-348) + (S3-11); (I-348) + (S4-1); (I-348) + (S4-2); (I-348) + (S4-3); (I-348) + (S4-4); (I-348) + (S4-5); (I-348) + (S7-1); (I-348) + (S11-1); (I-348) + (S11-2); (I-348) + (S11-3); (I-348) + (S12-1); (I-348) + (S13-1); (I-348) + (S13-2); (I-348) + (S13-3); (I-348) + (S13-4): (I-348) + (S13-5); (I-348) + (S13-6); (I-348) + (S13-7); (I-348) + (S13-8); (I-348) + (S13-9); (I-348) + (S14-1)
(I-349) + (S1-1); (I-349) + (S1-2); (I-349) + (S1-3); (I-349) + (S1-4); (I-349) + (S1-5); (I-349) + (S1-6); (I-349) + (S1-7); (I-349) + (S1-8); (I-349) + (S1-9); (I-349) + (S1-10); (I-349) + (S1-11); (I-349) + (S1-12); (I-349) + (S1-13); (I-349) + (S2-1); (I-349) + (S2-2); (I-349) + (S2-3); (I-349) + (S2-4); (I-349) + (S2-5); (I-349) + (S2-6); (I-349) + (S2-7); (I-349) + (S2-8); (I-349) + (S2-9); (I-349) + (S2-10); (I-349) + (S3-1); (I-349) + (S3-2); (I-349) + (S3-3); (I-349) + (S3-4); (I-349) + (S3-5); (I-349) + (S3-6); (I-349) + (S3-7); (I-349) + (S3-8); (I-349) + (S3-9); (I-349) + (S3-10); (I-349) + (S3-11); (I-349) + (S4-1); (I-349) + (S4-2); (I-349) + (S4-3); (I-349) + (S4-4); (I-349) + (S4-5); (I-349) + (S7-1); (I-349) + (S11-1); (I-349) + (S11-2); (I-349) + (S11-3); (I-349) + (S12-1); (I-349) + (S13-1); (I-349) + (S13-2); (I-349) + (S13-3); (I-349) + (S13-4): (I-349) + (S13-5); (I-349) + (S13-6); (I-349) + (S13-7); (I-349) + (S13-8); (I-349) + (S13-9); (I-349) + (S14-1)
(I-350) + (S1-1); (I-350) + (S1-2); (I-350) + (S1-3); (I-350) + (S1-4); (I-350) + (S1-5); (I-350) + (S1-6); (I-350) + (S1-7); (I-350) + (S1-8); (I-350) + (S1-9); (I-350) + (S1-10); (I-350) + (S1-11); (I-350) + (S1-12); (I-350) + (S1-13); (I-350) + (S2-1); (I-350) + (S2-2); (I-350) + (S2-3); (I-350) + (S2-4); (I-350) + (S2-5); (I-350) + (S2-6); (I-350) + (S2-7); (I-350) + (S2-8); (I-350) + (S2-9); (I-350) + (S2-10); (I-350) + (S3-1); (I-350) + (S3-2); (I-350) + (S3-3); (I-350) + (S3-4); (I-350) + (S3-5); (I-350) + (S3-6); (I-350) + (S3-7); (I-350) + (S3-8); (I-350) + (S3-9); (I-350) + (S3-10); (I-350) + (S3-11); (I-350) + (S4-1); (I-350) + (S4-2); (I-350) + (S4-3); (I-350) + (S4-4); (I-350) + (S4-5); (I-350) + (S7-1); (I-350) + (S11-1); (I-350) + (S11-2); (I-350) + (S11-3); (I-350) + (S12-1); (I-350) + (S13-1); (I-350) + (S13-2); (I-350) + (S13-3); (I-350) + (S13-4): (I-350) + (S13-5); (I-350) + (S13-6); (I-350) + (S13-7); (I-350) + (S13-8); (I-350) + (S13-9); (I-350) + (S14-1)
(I-351) + (S1-1); (I-351) + (S1-2); (I-351) + (S1-3); (I-351) + (S1-4); (I-351) + (S1-5); (I-351) + (S1-6); (I-351) + (S1-7); (I-351) + (S1-8); (I-351) + (S1-9); (I-351) + (S1-10); (I-351) + (S1-11); (I-351) + (S1-12); (I-351) + (S1-13); (I-351) + (S2-1); (I-351) + (S2-2); (I-351) + (S2-3); (I-351) + (S2-4); (I-351) + (S2-5); (I-351) + (S2-6); (I-351) + (S2-7); (I-351) + (S2-8); (I-351) + (S2-9); (I-351) + (S2-10); (I-351) + (S3-1); (I-351) + (S3-2); (I-351) + (S3-3); (I-351) + (S3-4); (I-351) + (S3-5); (I-351) + (S3-6); (I-351) + (S3-7); (I-351) + (S3-8); (I-351) + (S3-9); (I-351) + (S3-10); (I-351) + (S3-11); (I-351) + (S4-1); (I-351) + (S4-2); (I-351) + (S4-3); (I-351) + (S4-4); (I-351) + (S4-5); (I-351) + (S7-1); (I-351) + (S11-1); (I-351) + (S11-2); (I-351) + (S11-3); (I-351) + (S12-1); (I-351) + (S13-1); (I-351) + (S13-2); (I-351) + (S13-3); (I-351) + (S13-4): (I-351) + (S13-5); (I-351) + (S13-6); (I-351) + (S13-7); (I-351) + (S13-8); (I-351) + (S13-9); (I-351) + (S14-1)
(I-352) + (S1-1); (I-352) + (S1-2); (I-352) + (S1-3); (I-352) + (S1-4); (I-352) + (S1-5); (I-352) + (S1-6); (I-352) + (S1-7); (I-352) + (S1-8); (I-352) + (S1-9); (I-352) + (S1-10); (I-352) + (S1-11); (I-352) + (S1-12); (I-352) + (S1-13); (I-352) + (S2-1); (I-352) + (S2-2); (I-352) + (S2-3); (I-352) + (S2-4); (I-352) + (S2-5); (I-352) + (S2-6); (I-352) + (S2-7); (I-352) + (S2-8); (I-352) + (S2-9); (I-352) + (S2-10); (I-352) + (S3-1); (I-352) + (S3-2); (I-352) + (S3-3); (I-352) + (S3-4); (I-352) + (S3-5); (I-352) + (S3-6); (I-352) + (S3-7); (I-352) + (S3-8); (I-352) + (S3-9); (I-352) + (S3-10); (I-352) + (S3-11); (I-352) + (S4-1); (I-352) + (S4-2); (I-352) + (S4-3); (I-352) + (S4-4); (I-352) + (S4-5); (I-352) + (S7-1); (I-352) + (S11-1); (I-352) + (S11-2); (I-352) + (S11-3); (I-352) + (S12-1); (I-352) + (S13-1); (I-352) + (S13-2); (I-352) + (S13-3); (I-352) + (S13-4): (I-352) + (S13-5); (I-352) + (S13-6); (I-352) + (S13-7); (I-352) + (S13-8); (I-352) + (S13-9); (I-352) + (S14-1)
(I-353) + (S1-1); (I-353) + (S1-2); (I-353) + (S1-3); (I-353) + (S1-4); (I-353) + (S1-5); (I-353) + (S1-6); (I-353) + (S1-7); (I-353) + (S1-8); (I-353) + (S1-9); (I-353) + (S1-10); (I-353) + (S1-11); (I-353) + (S1-12); (I-353) + (S1-13); (I-353) + (S2-1); (I-353) + (S2-2); (I-353) + (S2-3); (I-353) + (S2-4); (I-353) + (S2-5); (I-353) + (S2-6); (I-353) + (S2-7); (I-353) + (S2-8); (I-353) + (S2-9); (I-353) + (S2-10); (I-353) + (S3-1); (I-353) + (S3-2); (I-353) + (S3-3); (I-353) + (S3-4); (I-353) + (S3-5); (I-353) + (S3-6); (I-353) + (S3-7); (I-353) + (S3-8); (I-353) + (S3-9); (I-353) + (S3-10); (I-353) + (S3-11); (I-353) + (S4-1); (I-353) + (S4-2); (I-353) + (S4-3); (I-353) + (S4-4); (I-353) + (S4-5); (I-353) + (S7-1); (I-353) + (S11-1); (I-353) + (S11-2); (I-353) + (S11-3); (I-353) + (S12-1); (I-353) + (S13-1); (I-353) + (S13-2); (I-353) + (S13-3); (I-353) + (S13-4): (I-353) + (S13-5); (I-353) + (S13-6); (I-353) + (S13-7); (I-353) + (S13-8); (I-353) + (S13-9); (I-353) + (S14-1)
(I-354) + (S1-1); (I-354) + (S1-2); (I-354) + (S1-3); (I-354) + (S1-4); (I-354) + (S1-5); (I-354) + (S1-6); (I-354) + (S1-7); (I-354) + (S1-8); (I-354) + (S1-9); (I-354) + (S1-10); (I-354) + (S1-11); (I-354) + (S1-12); (I-354) + (S1-13); (I-354) + (S2-1); (I-354) + (S2-2); (I-354) + (S2-3); (I-354) + (S2-4); (I-354) + (S2-5); (I-354) + (S2-6); (I-354) + (S2-7); (I-354) + (S2-8); (I-354) + (S2-9); (I-354) + (S2-10); (I-354) + (S3-1); (I-354) + (S3-2); (I-354) + (S3-3); (I-354) + (S3-4); (I-354) + (S3-5); (I-354) + (S3-6); (I-354) + (S3-7); (I-354) + (S3-8); (I-354) + (S3-9); (I-354) + (S3-10); (I-354) + (S3-11); (I-354) + (S4-1); (I-354) + (S4-2); (I-354) + (S4-3); (I-354) + (S4-4); (I-354) + (S4-5); (I-354) + (S7-1); (I-354) + (S11-1); (I-354) + (S11-2); (I-354) + (S11-3); (I-354) + (S12-1); (I-354) + (S13-1); (I-354) + (S13-2); (I-354) + (S13-3); (I-354) + (S13-4): (I-354) + (S13-5); (I-354) + (S13-6); (I-354) + (S13-7); (I-354) + (S13-8); (I-354) + (S13-9); (I-354) + (S14-1)
(I-355) + (S1-1); (I-355) + (S1-2); (I-355) + (S1-3); (I-355) + (S1-4); (I-355) + (S1-5); (I-355) + (S1-6); (I-355) + (S1-7); (I-355) + (S1-8); (I-355) + (S1-9); (I-355) + (S1-10); (I-355) + (S1-11); (I-355) + (S1-12); (I-355) + (S1-13); (I-355) + (S2-1); (I-355) + (S2-2); (I-355) + (S2-3); (I-355) + (S2-4); (I-355) + (S2-5); (I-355) + (S2-6); (I-355) + (S2-7); (I-355) + (S2-8); (I-355) + (S2-9); (I-355) + (S2-10); (I-355) + (S3-1); (I-355) + (S3-2); (I-355) + (S3-3); (I-355) + (S3-4); (I-355) + (S3-5); (I-355) + (S3-6); (I-355) + (S3-7); (I-355) + (S3-8); (I-355) + (S3-9); (I-355) + (S3-10); (I-355) + (S3-11); (I-355) + (S4-1); (I-355) + (S4-2); (I-355) + (S4-3); (I-355) + (S4-4); (I-355) + (S4-5); (I-355) + (S7-1); (I-355) + (S11-1); (I-355) + (S11-2); (I-355) + (S11-3); (I-355) + (S12-1); (I-355) + (S13-1); (I-355) + (S13-2); (I-355) + (S13-3); (I-355) + (S13-4): (I-355) + (S13-5); (I-355) + (S13-6); (I-355) + (S13-7); (I-355) + (S13-8); (I-355) + (S13-9); (I-355) + (S14-1)
(I-356) + (S1-1); (I-356) + (S1-2); (I-356) + (S1-3); (I-356) + (S1-4); (I-356) + (S1-5); (I-356) + (S1-6); (I-356) + (S1-7); (I-356) + (S1-8); (I-356) + (S1-9); (I-356) + (S1-10); (I-356) + (S1-11); (I-356) + (S1-12); (I-356) + (S1-13); (I-356) + (S2-1); (I-356) + (S2-2); (I-356) + (S2-3); (I-356) + (S2-4); (I-356) + (S2-5); (I-356) + (S2-6); (I-356) + (S2-7); (I-356) + (S2-8); (I-356) + (S2-9); (I-356) + (S2-10); (I-356) + (S3-1); (I-356) + (S3-2); (I-356) + (S3-3); (I-356) + (S3-4); (I-356) + (S3-5); (I-356) + (S3-6); (I-356) + (S3-7); (I-356) + (S3-8); (I-356) + (S3-9); (I-356) + (S3-10); (I-356) + (S3-11); (I-356) + (S4-1); (I-356) + (S4-2); (I-356) + (S4-3); (I-356) + (S4-4); (I-356) + (S4-5); (I-356) + (S7-1); (I-356) + (S11-1); (I-356) + (S11-2); (I-356) + (S11-3); (I-356) + (S12-1); (I-356) + (S13-1); (I-356) + (S13-2); (I-356) + (S13-3); (I-356) + (S13-4): (I-356) + (S13-5); (I-356) + (S13-6); (I-356) + (S13-7); (I-356) + (S13-8); (I-356) + (S13-9); (I-356) + (S14-1)
(I-357) + (S1-1); (I-357) + (S1-2); (I-357) + (S1-3); (I-357) + (S1-4); (I-357) + (S1-5); (I-357) + (S1-6); (I-357) + (S1-7); (I-357) + (S1-8); (I-357) + (S1-9); (I-357) + (S1-10); (I-357) + (S1-11); (I-357) + (S1-12); (I-357) + (S1-13); (I-357) + (S2-1); (I-357) + (S2-2); (I-357) + (S2-3); (I-357) + (S2-4); (I-357) + (S2-5); (I-357) + (S2-6); (I-357) + (S2-7); (I-357) + (S2-8); (I-357) + (S2-9); (I-357) + (S2-10); (I-357) + (S3-1); (I-357) + (S3-2); (I-357) + (S3-3); (I-357) + (S3-4); (I-357) + (S3-5); (I-357) + (S3-6); (I-357) + (S3-7); (I-357) + (S3-8); (I-357) + (S3-9); (I-357) + (S3-10); (I-357) + (S3-11); (I-357) + (S4-1); (I-357) + (S4-2); (I-357) + (S4-3); (I-357) + (S4-4); (I-357) + (S4-5); (I-357) + (S7-1); (I-357) + (S11-1); (I-357) + (S11-2); (I-357) + (S11-3); (I-357) + (S12-1); (I-357) + (S13-1); (I-357) + (S13-2); (I-357) + (S13-3); (I-357) + (S13-4): (I-357) + (S13-5); (I-357) + (S13-6); (I-357) + (S13-7); (I-357) + (S13-8); (I-357) + (S13-9); (I-357) + (S14-1)
(I-358) + (S1-1); (I-358) + (S1-2); (I-358) + (S1-3); (I-358) + (S1-4); (I-358) + (S1-5); (I-358) + (S1-6); (I-358) + (S1-7); (I-358) + (S1-8); (I-358) + (S1-9); (I-358) + (S1-10); (I-358) + (S1-11); (I-358) + (S1-12); (I-358) + (S1-13); (I-358) + (S2-1); (I-358) + (S2-2); (I-358) + (S2-3); (I-358) + (S2-4); (I-358) + (S2-5); (I-358) + (S2-6); (I-358) + (S2-7); (I-358) + (S2-8); (I-358) + (S2-9); (I-358) + (S2-10); (I-358) + (S3-1); (I-358) + (S3-2); (I-358) + (S3-3); (I-358) + (S3-4); (I-358) + (S3-5); (I-358) + (S3-6); (I-358) + (S3-7); (I-358) + (S3-8); (I-358) + (S3-9); (I-358) + (S3-10); (I-358) + (S3-11); (I-358) + (S4-1); (I-358) + (S4-2); (I-358) + (S4-3); (I-358) + (S4-4); (I-358) + (S4-5); (I-358) + (S7-1); (I-358) + (S11-1); (I-358) + (S11-2); (I-358) + (S11-3); (I-358) + (S12-1); (I-358) + (S13-1); (I-358) + (S13-2); (I-358) + (S13-3); (I-358) + (S13-4): (I-358) + (S13-5); (I-358) + (S13-6); (I-358) + (S13-7); (I-358) + (S13-8); (I-358) + (S13-9); (I-358) + (S14-1)
(I-359) + (S1-1); (I-359) + (S1-2); (I-359) + (S1-3); (I-359) + (S1-4); (I-359) + (S1-5); (I-359) + (S1-6); (I-359) + (S1-7); (I-359) + (S1-8); (I-359) + (S1-9); (I-359) + (S1-10); (I-359) + (S1-11); (I-359) + (S1-12); (I-359) + (S1-13); (I-359) + (S2-1); (I-359) + (S2-2); (I-359) + (S2-3); (I-359) + (S2-4); (I-359) + (S2-5); (I-359) + (S2-6); (I-359) + (S2-7); (I-359) + (S2-8); (I-359) + (S2-9); (I-359) + (S2-10); (I-359) + (S3-1); (I-359) + (S3-2); (I-359) + (S3-3); (I-359) + (S3-4); (I-359) + (S3-5); (I-359) + (S3-6); (I-359) + (S3-7); (I-359) + (S3-8); (I-359) + (S3-9); (I-359) + (S3-10); (I-359) + (S3-11); (I-359) + (S4-1); (I-359) + (S4-2); (I-359) + (S4-3); (I-359) + (S4-4); (I-359) + (S4-5); (I-359) + (S7-1); (I-359) + (S11-1); (I-359) + (S11-2); (I-359) + (S11-3); (I-359) + (S12-1); (I-359) + (S13-1); (I-359) + (S13-2); (I-359) + (S13-3); (I-359) + (S13-4): (I-359) + (S13-5); (I-359) + (S13-6); (I-359) + (S13-7); (I-359) + (S13-8); (I-359) + (S13-9); (I-359) + (S14-1)
(I-360) + (S1-1); (I-360) + (S1-2); (I-360) + (S1-3); (I-360) + (S1-4); (I-360) + (S1-5); (I-360) + (S1-6); (I-360) + (S1-7); (I-360) + (S1-8); (I-360) + (S1-9); (I-360) + (S1-10); (I-360) + (S1-11); (I-360) + (S1-12); (I-360) + (S1-13); (I-360) + (S2-1); (I-360) + (S2-2); (I-360) + (S2-3); (I-360) + (S2-4); (I-360) + (S2-5); (I-360) + (S2-6); (I-360) + (S2-7); (I-360) + (S2-8); (I-360) + (S2-9); (I-360) + (S2-10); (I-360) + (S3-1); (I-360) + (S3-2); (I-360) + (S3-3); (I-360) + (S3-4); (I-360) + (S3-5); (I-360) + (S3-6); (I-360) + (S3-7); (I-360) + (S3-8); (I-360) + (S3-9); (I-360) + (S3-10); (I-360) + (S3-11); (I-360) + (S4-1); (I-360) + (S4-2); (I-360) + (S4-3); (I-360) + (S4-4); (I-360) + (S4-5); (I-360) + (S7-1); (I-360) + (S11-1); (I-360) + (S11-2); (I-360) + (S11-3); (I-360) + (S12-1); (I-360) + (S13-1); (I-360) + (S13-2); (I-360) + (S13-3); (I-360) + (S13-4): (I-360) + (S13-5); (I-360) + (S13-6); (I-360) + (S13-7); (I-360) + (S13-8); (I-360) + (S13-9); (I-360) + (S14-1)
(I-361) + (S1-1); (I-361) + (S1-2); (I-361) + (S1-3); (I-361) + (S1-4); (I-361) + (S1-5); (I-361) + (S1-6); (I-361) + (S1-7); (I-361) + (S1-8); (I-361) + (S1-9); (I-361) + (S1-10); (I-361) + (S1-11); (I-361) + (S1-12); (I-361) + (S1-13); (I-361) + (S2-1); (I-361) + (S2-2); (I-361) + (S2-3); (I-361) + (S2-4); (I-361) + (S2-5); (I-361) + (S2-6); (I-361) + (S2-7); (I-361) + (S2-8); (I-361) + (S2-9); (I-361) + (S2-10); (I-361) + (S3-1); (I-361) + (S3-2); (I-361) + (S3-3); (I-361) + (S3-4); (I-361) + (S3-5); (I-361) + (S3-6); (I-361) + (S3-7); (I-361) + (S3-8); (I-361) + (S3-9); (I-361) + (S3-10); (I-361) + (S3-11); (I-361) + (S4-1); (I-361) + (S4-2); (I-361) + (S4-3); (I-361) + (S4-4); (I-361) + (S4-5); (I-361) + (S7-1); (I-361) + (S11-1); (I-361) + (S11-2); (I-361) + (S11-3); (I-361) + (S12-1); (I-361) + (S13-1); (I-361) + (S13-2); (I-361) + (S13-3); (I-361) + (S13-4): (I-361) + (S13-5); (I-361) + (S13-6); (I-361) + (S13-7); (I-361) + (S13-8); (I-361) + (S13-9); (I-361) + (S14-1)
(I-362) + (S1-1); (I-362) + (S1-2); (I-362) + (S1-3); (I-362) + (S1-4); (I-362) + (S1-5); (I-362) + (S1-6); (I-362) + (S1-7); (I-362) + (S1-8); (I-362) + (S1-9); (I-362) + (S1-10); (I-362) + (S1-11); (I-362) + (S1-12); (I-362) + (S1-13); (I-362) + (S2-1); (I-362) + (S2-2); (I-362) + (S2-3); (I-362) + (S2-4); (I-362) + (S2-5); (I-362) + (S2-6); (I-362) + (S2-7); (I-362) + (S2-8); (I-362) + (S2-9); (I-362) + (S2-10); (I-362) + (S3-1); (I-362) + (S3-2); (I-362) + (S3-3); (I-362) + (S3-4); (I-362) + (S3-5); (I-362) + (S3-6); (I-362) + (S3-7); (I-362) + (S3-8); (I-362) + (S3-9); (I-362) + (S3-10); (I-362) + (S3-11); (I-362) + (S4-1); (I-362) + (S4-2); (I-362) + (S4-3); (I-362) + (S4-4); (I-362) + (S4-5); (I-362) + (S7-1); (I-362) + (S11-1); (I-362) + (S11-2); (I-362) + (S11-3); (I-362) + (S12-1); (I-362) + (S13-1); (I-362) + (S13-2); (I-362) + (S13-3); (I-362) + (S13-4): (I-362) + (S13-5); (I-362) + (S13-6); (I-362) + (S13-7); (I-362) + (S13-8); (I-362) + (S13-9); (I-362) + (S14-1)
(I-363) + (S1-1); (I-363) + (S1-2); (I-363) + (S1-3); (I-363) + (S1-4); (I-363) + (S1-5); (I-363) + (S1-6); (I-363) + (S1-7); (I-363) + (S1-8); (I-363) + (S1-9); (I-363) + (S1-10); (I-363) + (S1-11); (I-363) + (S1-12); (I-363) + (S1-13); (I-363) + (S2-1); (I-363) + (S2-2); (I-363) + (S2-3); (I-363) + (S2-4); (I-363) + (S2-5); (I-363) + (S2-6); (I-363) + (S2-7); (I-363) + (S2-8); (I-363) + (S2-9); (I-363) + (S2-10); (I-363) + (S3-1); (I-363) + (S3-2); (I-363) + (S3-3); (I-363) + (S3-4); (I-363) + (S3-5); (I-363) + (S3-6); (I-363) + (S3-7); (I-363) + (S3-8); (I-363) + (S3-9); (I-363) + (S3-10); (I-363) + (S3-11); (I-363) + (S4-1); (I-363) + (S4-2); (I-363) + (S4-3); (I-363) + (S4-4); (I-363) + (S4-5); (I-363) + (S7-1); (I-363) + (S11-1); (I-363) + (S11-2); (I-363) + (S11-3); (I-363) + (S12-1); (I-363) + (S13-1); (I-363) + (S13-2); (I-363) + (S13-3); (I-363) + (S13-4): (I-363) + (S13-5); (I-363) + (S13-6); (I-363) + (S13-7); (I-363) + (S13-8); (I-363) + (S13-9); (I-363) + (S14-1)
(I-364) + (S1-1); (I-364) + (S1-2); (I-364) + (S1-3); (I-364) + (S1-4); (I-364) + (S1-5); (I-364) + (S1-6); (I-364) + (S1-7); (I-364) + (S1-8); (I-364) + (S1-9); (I-364) + (S1-10); (I-364) + (S1-11); (I-364) + (S1-12); (I-364) + (S1-13); (I-364) + (S2-1); (I-364) + (S2-2); (I-364) + (S2-3); (I-364) + (S2-4); (I-364) + (S2-5); (I-364) + (S2-6); (I-364) + (S2-7); (I-364) + (S2-8); (I-364) + (S2-9); (I-364) + (S2-10); (I-364) + (S3-1); (I-364) + (S3-2); (I-364) + (S3-3); (I-364) + (S3-4); (I-364) + (S3-5); (I-364) + (S3-6); (I-364) + (S3-7); (I-364) + (S3-8); (I-364) + (S3-9); (I-364) + (S3-10); (I-364) + (S3-11); (I-364) + (S4-1); (I-364) + (S4-2); (I-364) + (S4-3); (I-364) + (S4-4); (I-364) + (S4-5); (I-364) + (S7-1); (I-364) + (S11-1); (I-364) + (S11-2); (I-364) + (S11-3); (I-364) + (S12-1); (I-364) + (S13-1); (I-364) + (S13-2); (I-364) + (S13-3); (I-364) + (S13-4): (I-364) + (S13-5); (I-364) + (S13-6); (I-364) + (S13-7); (I-364) + (S13-8); (I-364) + (S13-9); (I-364) + (S14-1)
(I-365) + (S1-1); (I-365) + (S1-2); (I-365) + (S1-3); (I-365) + (S1-4); (I-365) + (S1-5); (I-365) + (S1-6); (I-365) + (S1-7); (I-365) + (S1-8); (I-365) + (S1-9); (I-365) + (S1-10); (I-365) + (S1-11); (I-365) + (S1-12); (I-365) + (S1-13); (I-365) + (S2-1); (I-365) + (S2-2); (I-365) + (S2-3); (I-365) + (S2-4); (I-365) + (S2-5); (I-365) + (S2-6); (I-365) + (S2-7); (I-365) + (S2-8); (I-365) + (S2-9); (I-365) + (S2-10); (I-365) + (S3-1); (I-365) + (S3-2); (I-365) + (S3-3); (I-365) + (S3-4); (I-365) + (S3-5); (I-365) + (S3-6); (I-365) + (S3-7); (I-365) + (S3-8); (I-365) + (S3-9); (I-365) + (S3-10); (I-365) + (S3-11); (I-365) + (S4-1); (I-365) + (S4-2); (I-365) + (S4-3); (I-365) + (S4-4); (I-365) + (S4-5); (I-365) + (S7-1); (I-365) + (S11-1); (I-365) + (S11-2); (I-365) + (S11-3); (I-365) + (S12-1); (I-365) + (S13-1); (I-365) + (S13-2); (I-365) + (S13-3); (I-365) + (S13-4): (I-365) + (S13-5); (I-365) + (S13-6); (I-365) + (S13-7); (I-365) + (S13-8); (I-365) + (S13-9); (I-365) + (S14-1)
(I-366) + (S1-1); (I-366) + (S1-2); (I-366) + (S1-3); (I-366) + (S1-4); (I-366) + (S1-5); (I-366) + (S1-6); (I-366) + (S1-7); (I-366) + (S1-8); (I-366) + (S1-9); (I-366) + (S1-10); (I-366) + (S1-11); (I-366) + (S1-12); (I-366) + (S1-13); (I-366) + (S2-1); (I-366) + (S2-2); (I-366) + (S2-3); (I-366) + (S2-4); (I-366) + (S2-5); (I-366) + (S2-6); (I-366) + (S2-7); (I-366) + (S2-8); (I-366) + (S2-9); (I-366) + (S2-10); (I-366) + (S3-1); (I-366) + (S3-2); (I-366) + (S3-3); (I-366) + (S3-4); (I-366) + (S3-5); (I-366) + (S3-6); (I-366) + (S3-7); (I-366) + (S3-8); (I-366) + (S3-9); (I-366) + (S3-10); (I-366) + (S3-11); (I-366) + (S4-1); (I-366) + (S4-2); (I-366) + (S4-3); (I-366) + (S4-4); (I-366) + (S4-5); (I-366) + (S7-1); (I-366) + (S11-1); (I-366) + (S11-2); (I-366) + (S11-3); (I-366) + (S12-1); (I-366) + (S13-1); (I-366) + (S13-2); (I-366) + (S13-3); (I-366) + (S13-4): (I-366) + (S13-5); (I-366) + (S13-6); (I-366) + (S13-7); (I-366) + (S13-8); (I-366) + (S13-9); (I-366) + (S14-1)
(I-367) + (S1-1); (I-367) + (S1-2); (I-367) + (S1-3); (I-367) + (S1-4); (I-367) + (S1-5); (I-367) + (S1-6); (I-367) + (S1-7); (I-367) + (S1-8); (I-367) + (S1-9); (I-367) + (S1-10); (I-367) + (S1-11); (I-367) + (S1-12); (I-367) + (S1-13); (I-367) + (S2-1); (I-367) + (S2-2); (I-367) + (S2-3); (I-367) + (S2-4); (I-367) + (S2-5); (I-367) + (S2-6); (I-367) + (S2-7); (I-367) + (S2-8); (I-367) + (S2-9); (I-367) + (S2-10); (I-367) + (S3-1); (I-367) + (S3-2); (I-367) + (S3-3); (I-367) + (S3-4); (I-367) + (S3-5); (I-367) + (S3-6); (I-367) + (S3-7); (I-367) + (S3-8); (I-367) + (S3-9); (I-367) + (S3-10); (I-367) + (S3-11); (I-367) + (S4-1); (I-367) + (S4-2); (I-367) + (S4-3); (I-367) + (S4-4); (I-367) + (S4-5); (I-367) + (S7-1); (I-367) + (S11-1); (I-367) + (S11-2); (I-367) + (S11-3); (I-367) + (S12-1); (I-367) + (S13-1); (I-367) + (S13-2); (I-367) + (S13-3); (I-367) + (S13-4): (I-367) + (S13-5); (I-367) + (S13-6); (I-367) + (S13-7); (I-367) + (S13-8); (I-367) + (S13-9); (I-367) + (S14-1)
(I-368) + (S1-1); (I-368) + (S1-2); (I-368) + (S1-3); (I-368) + (S1-4); (I-368) + (S1-5); (I-368) + (S1-6); (I-368) + (S1-7); (I-368) + (S1-8); (I-368) + (S1-9); (I-368) + (S1-10); (I-368) + (S1-11); (I-368) + (S1-12); (I-368) + (S1-13); (I-368) + (S2-1); (I-368) + (S2-2); (I-368) + (S2-3); (I-368) + (S2-4); (I-368) + (S2-5); (I-368) + (S2-6); (I-368) + (S2-7); (I-368) + (S2-8); (I-368) + (S2-9); (I-368) + (S2-10); (I-368) + (S3-1); (I-368) + (S3-2); (I-368) + (S3-3); (I-368) + (S3-4); (I-368) + (S3-5); (I-368) + (S3-6); (I-368) + (S3-7); (I-368) + (S3-8); (I-368) + (S3-9); (I-368) + (S3-10); (I-368) + (S3-11); (I-368) + (S4-1); (I-368) + (S4-2); (I-368) + (S4-3); (I-368) + (S4-4); (I-368) + (S4-5); (I-368) + (S7-1); (I-368) + (S11-1); (I-368) + (S11-2); (I-368) + (S11-3); (I-368) + (S12-1); (I-368) + (S13-1); (I-368) + (S13-2); (I-368) + (S13-3); (I-368) + (S13-4): (I-368) + (S13-5); (I-368) + (S13-6); (I-368) + (S13-7); (I-368) + (S13-8); (I-368) + (S13-9); (I-368) + (S14-1)
(I-369) + (S1-1); (I-369) + (S1-2); (I-369) + (S1-3); (I-369) + (S1-4); (I-369) + (S1-5); (I-369) + (S1-6); (I-369) + (S1-7); (I-369) + (S1-8); (I-369) + (S1-9); (I-369) + (S1-10); (I-369) + (S1-11); (I-369) + (S1-12); (I-369) + (S1-13); (I-369) + (S2-1); (I-369) + (S2-2); (I-369) + (S2-3); (I-369) + (S2-4); (I-369) + (S2-5); (I-369) + (S2-6); (I-369) + (S2-7); (I-369) + (S2-8); (I-369) + (S2-9); (I-369) + (S2-10); (I-369) + (S3-1); (I-369) + (S3-2); (I-369) + (S3-3); (I-369) + (S3-4); (I-369) + (S3-5); (I-369) + (S3-6); (I-369) + (S3-7); (I-369) + (S3-8); (I-369) + (S3-9); (I-369) + (S3-10); (I-369) + (S3-11); (I-369) + (S4-1); (I-369) + (S4-2); (I-369) + (S4-3); (I-369) + (S4-4); (I-369) + (S4-5); (I-369) + (S7-1); (I-369) + (S11-1); (I-369) + (S11-2); (I-369) + (S11-3); (I-369) + (S12-1); (I-369) + (S13-1); (I-369) + (S13-2); (I-369) + (S13-3); (I-369) + (S13-4): (I-369) + (S13-5); (I-369) + (S13-6); (I-369) + (S13-7); (I-369) + (S13-8); (I-369) + (S13-9); (I-369) + (S14-1)
(I-370) + (S1-1); (I-370) + (S1-2); (I-370) + (S1-3); (I-370) + (S1-4); (I-370) + (S1-5); (I-370) + (S1-6); (I-370) + (S1-7); (I-370) + (S1-8); (I-370) + (S1-9); (I-370) + (S1-10); (I-370) + (S1-11); (I-370) + (S1-12); (I-370) + (S1-13); (I-370) + (S2-1); (I-370) + (S2-2); (I-370) + (S2-3); (I-370) + (S2-4); (I-370) + (S2-5); (I-370) + (S2-6); (I-370) + (S2-7); (I-370) + (S2-8); (I-370) + (S2-9); (I-370) + (S2-10); (I-370) + (S3-1); (I-370) + (S3-2); (I-370) + (S3-3); (I-370) + (S3-4); (I-370) + (S3-5); (I-370) + (S3-6); (I-370) + (S3-7); (I-370) + (S3-8); (I-370) + (S3-9); (I-370) + (S3-10); (I-370) + (S3-11); (I-370) + (S4-1); (I-370) + (S4-2); (I-370) + (S4-3); (I-370) + (S4-4); (I-370) + (S4-5); (I-370) + (S7-1); (I-370) + (S11-1); (I-370) + (S11-2); (I-370) + (S11-3); (I-370) + (S12-1); (I-370) + (S13-1); (I-370) + (S13-2); (I-370) + (S13-3); (I-370) + (S13-4): (I-370) + (S13-5); (I-370) + (S13-6); (I-370) + (S13-7); (I-370) + (S13-8); (I-370) + (S13-9); (I-370) + (S14-1)
(I-371) + (S1-1); (I-371) + (S1-2); (I-371) + (S1-3); (I-371) + (S1-4); (I-371) + (S1-5); (I-371) + (S1-6); (I-371) + (S1-7); (I-371) + (S1-8); (I-371) + (S1-9); (I-371) + (S1-10); (I-371) + (S1-11); (I-371) + (S1-12); (I-371) + (S1-13); (I-371) + (S2-1); (I-371) + (S2-2); (I-371) + (S2-3); (I-371) + (S2-4); (I-371) + (S2-5); (I-371) + (S2-6); (I-371) + (S2-7); (I-371) + (S2-8); (I-371) + (S2-9); (I-371) + (S2-10); (I-371) + (S3-1); (I-371) + (S3-2); (I-371) + (S3-3); (I-371) + (S3-4); (I-371) + (S3-5); (I-371) + (S3-6); (I-371) + (S3-7); (I-371) + (S3-8); (I-371) + (S3-9); (I-371) + (S3-10); (I-371) + (S3-11); (I-371) + (S4-1); (I-371) + (S4-2); (I-371) + (S4-3); (I-371) + (S4-4); (I-371) + (S4-5); (I-371) + (S7-1); (I-371) + (S11-1); (I-371) + (S11-2); (I-371) + (S11-3); (I-371) + (S12-1); (I-371) + (S13-1); (I-371) + (S13-2); (I-371) + (S13-3); (I-371) + (S13-4): (I-371) + (S13-5); (I-371) + (S13-6); (I-371) + (S13-7); (I-371) + (S13-8); (I-371) + (S13-9); (I-371) + (S14-1)
(I-372) + (S1-1); (I-372) + (S1-2); (I-372) + (S1-3); (I-372) + (S1-4); (I-372) + (S1-5); (I-372) + (S1-6); (I-372) + (S1-7); (I-372) + (S1-8); (I-372) + (S1-9); (I-372) + (S1-10); (I-372) + (S1-11); (I-372) + (S1-12); (I-372) + (S1-13); (I-372) + (S2-1); (I-372) + (S2-2); (I-372) + (S2-3); (I-372) + (S2-4); (I-372) + (S2-5); (I-372) + (S2-6); (I-372) + (S2-7); (I-372) + (S2-8); (I-372) + (S2-9); (I-372) + (S2-10); (I-372) + (S3-1); (I-372) + (S3-2); (I-372) + (S3-3); (I-372) + (S3-4); (I-372) + (S3-5); (I-372) + (S3-6); (I-372) + (S3-7); (I-372) + (S3-8); (I-372) + (S3-9); (I-372) + (S3-10); (I-372) + (S3-11); (I-372) + (S4-1); (I-372) + (S4-2); (I-372) + (S4-3); (I-372) + (S4-4); (I-372) + (S4-5); (I-372) + (S7-1); (I-372) + (S11-1); (I-372) + (S11-2); (I-372) + (S11-3); (I-372) + (S12-1); (I-372) + (S13-1); (I-372) + (S13-2); (I-372) + (S13-3); (I-372) + (S13-4): (I-372) + (S13-5); (I-372) + (S13-6); (I-372) + (S13-7); (I-372) + (S13-8); (I-372) + (S13-9); (I-372) + (S14-1)
(I-372) + (S1-1); (I-372) + (S1-2); (I-372) + (S1-3); (I-372) + (S1-4); (I-372) + (S1-5); (I-372) + (S1-6); (I-372) + (S1-7); (I-372) + (S1-8); (I-372) + (S1-9); (I-372) + (S1-10); (I-372) + (S1-11); (I-372) + (S1-12); (I-372) + (S1-13); (I-372) + (S2-1); (I-372) + (S2-2); (I-372) + (S2-3); (I-372) + (S2-4); (I-372) + (S2-5); (I-372) + (S2-6); (I-372) + (S2-7); (I-372) + (S2-8); (I-372) + (S2-9); (I-372) + (S2-10); (I-372) + (S3-1); (I-372) + (S3-2); (I-372) + (S3-3); (I-372) + (S3-4); (I-372) + (S3-5); (I-372) + (S3-6); (I-372) + (S3-7); (I-372) + (S3-8); (I-372) + (S3-9); (I-372) + (S3-10); (I-372) + (S3-11); (I-372) + (S4-1); (I-372) + (S4-2); (I-372) + (S4-3); (I-372) + (S4-4); (I-372) + (S4-5); (I-372) + (S7-1); (I-372) + (S11-1); (I-372) + (S11-2); (I-372) + (S11-3); (I-372) + (S12-1); (I-372) + (S13-1); (I-372) + (S13-2); (I-372) + (S13-3); (I-372) + (S13-4): (I-372) + (S13-5); (I-372) + (S13-6); (I-372) + (S13-7); (I-372) + (S13-8); (I-372) + (S13-9); (I-372) + (S14-1)
(I-373) + (S1-1); (I-373) + (S1-2); (I-373) + (S1-3); (I-373) + (S1-4); (I-373) + (S1-5); (I-373) + (S1-6); (I-373) + (S1-7); (I-373) + (S1-8); (I-373) + (S1-9); (I-373) + (S1-10); (I-373) + (S1-11); (I-373) + (S1-12); (I-373) + (S1-13); (I-373) + (S2-1); (I-373) + (S2-2); (I-373) + (S2-3); (I-373) + (S2-4); (I-373) + (S2-5); (I-373) + (S2-6); (I-373) + (S2-7); (I-373) + (S2-8); (I-373) + (S2-9); (I-373) + (S2-10); (I-373) + (S3-1); (I-373) + (S3-2); (I-373) + (S3-3); (I-373) + (S3-4); (I-373) + (S3-5); (I-373) + (S3-6); (I-373) + (S3-7); (I-373) + (S3-8); (I-373) + (S3-9); (I-373) + (S3-10); (I-373) + (S3-11); (I-373) + (S4-1); (I-373) + (S4-2); (I-373) + (S4-3); (I-373) + (S4-4); (I-373) + (S4-5); (I-373) + (S7-1); (I-373) + (S11-1); (I-373) + (S11-2); (I-373) + (S11-3); (I-373) + (S12-1); (I-373) + (S13-1); (I-373) + (S13-2); (I-373) + (S13-3); (I-373) + (S13-4): (I-373) + (S13-5); (I-373) + (S13-6); (I-373) + (S13-7); (I-373) + (S13-8); (I-373) + (S13-9); (I-373) + (S14-1)
(I-374) + (S1-1); (I-374) + (S1-2); (I-374) + (S1-3); (I-374) + (S1-4); (I-374) + (S1-5); (I-374) + (S1-6); (I-374) + (S1-7); (I-374) + (S1-8); (I-374) + (S1-9); (I-374) + (S1-10); (I-374) + (S1-11); (I-374) + (S1-12); (I-374) + (S1-13); (I-374) + (S2-1); (I-374) + (S2-2); (I-374) + (S2-3); (I-374) + (S2-4); (I-374) + (S2-5); (I-374) + (S2-6); (I-374) + (S2-7); (I-374) + (S2-8); (I-374) + (S2-9); (I-374) + (S2-10); (I-374) + (S3-1); (I-374) + (S3-2); (I-374) + (S3-3); (I-374) + (S3-4); (I-374) + (S3-5); (I-374) + (S3-6); (I-374) + (S3-7); (I-374) + (S3-8); (I-374) + (S3-9); (I-374) + (S3-10); (I-374) + (S3-11); (I-374) + (S4-1); (I-374) + (S4-2); (I-374) + (S4-3); (I-374) + (S4-4); (I-374) + (S4-5); (I-374) + (S7-1); (I-374) + (S11-1); (I-374) + (S11-2); (I-374) + (S11-3); (I-374) + (S12-1); (I-374) + (S13-1); (I-374) + (S13-2); (I-374) + (S13-3); (I-374) + (S13-4): (I-374) + (S13-5); (I-374) + (S13-6); (I-374) + (S13-7); (I-374) + (S13-8); (I-374) + (S13-9); (I-374) + (S14-1)
(I-375) + (S1-1); (I-375) + (S1-2); (I-375) + (S1-3); (I-375) + (S1-4); (I-375) + (S1-5); (I-375) + (S1-6); (I-375) + (S1-7); (I-375) + (S1-8); (I-375) + (S1-9); (I-375) + (S1-10); (I-375) + (S1-11); (I-375) + (S1-12); (I-375) + (S1-13); (I-375) + (S2-1); (I-375) + (S2-2); (I-375) + (S2-3); (I-375) + (S2-4); (I-375) + (S2-5); (I-375) + (S2-6); (I-375) + (S2-7); (I-375) + (S2-8); (I-375) + (S2-9); (I-375) + (S2-10); (I-375) + (S3-1); (I-375) + (S3-2); (I-375) + (S3-3); (I-375) + (S3-4); (I-375) + (S3-5); (I-375) + (S3-6); (I-375) + (S3-7); (I-375) + (S3-8); (I-375) + (S3-9); (I-375) + (S3-10); (I-375) + (S3-11); (I-375) + (S4-1); (I-375) + (S4-2); (I-375) + (S4-3); (I-375) + (S4-4); (I-375) + (S4-5); (I-375) + (S7-1); (I-375) + (S11-1); (I-375) + (S11-2); (I-375) + (S11-3); (I-375) + (S12-1); (I-375) + (S13-1); (I-375) + (S13-2); (I-375) + (S13-3); (I-375) + (S13-4): (I-375) + (S13-5); (I-375) + (S13-6); (I-375) + (S13-7); (I-375) + (S13-8); (I-375) + (S13-9); (I-375) + (S14-1)
(I-376) + (S1-1); (I-376) + (S1-2); (I-376) + (S1-3); (I-376) + (S1-4); (I-376) + (S1-5); (I-376) + (S1-6); (I-376) + (S1-7); (I-376) + (S1-8); (I-376) + (S1-9); (I-376) + (S1-10); (I-376) + (S1-11); (I-376) + (S1-12); (I-376) + (S1-13); (I-376) + (S2-1); (I-376) + (S2-2); (I-376) + (S2-3); (I-376) + (S2-4); (I-376) + (S2-5); (I-376) + (S2-6); (I-376) + (S2-7); (I-376) + (S2-8); (I-376) + (S2-9); (I-376) + (S2-10); (I-376) + (S3-1); (I-376) + (S3-2); (I-376) + (S3-3); (I-376) + (S3-4); (I-376) + (S3-5); (I-376) + (S3-6); (I-376) + (S3-7); (I-376) + (S3-8); (I-376) + (S3-9); (I-376) + (S3-10); (I-376) + (S3-11); (I-376) + (S4-1); (I-376) + (S4-2); (I-376) + (S4-3); (I-376) + (S4-4); (I-376) + (S4-5); (I-376) + (S7-1); (I-376) + (S11-1); (I-376) + (S11-2); (I-376) + (S11-3); (I-376) + (S12-1); (I-376) + (S13-1); (I-376) + (S13-2); (I-376) + (S13-3); (I-376) + (S13-4): (I-376) + (S13-5); (I-376) + (S13-6); (I-376) + (S13-7); (I-376) + (S13-8); (I-376) + (S13-9); (I-376) + (S14-1)
(I-377) + (S1-1); (I-377) + (S1-2); (I-377) + (S1-3); (I-377) + (S1-4); (I-377) + (S1-5); (I-377) + (S1-6); (I-377) + (S1-7); (I-377) + (S1-8); (I-377) + (S1-9); (I-377) + (S1-10); (I-377) + (S1-11); (I-377) + (S1-12); (I-377) + (S1-13); (I-377) + (S2-1); (I-377) + (S2-2); (I-377) + (S2-3); (I-377) + (S2-4); (I-377) + (S2-5); (I-377) + (S2-6); (I-377) + (S2-7); (I-377) + (S2-8); (I-377) + (S2-9); (I-377) + (S2-10); (I-377) + (S3-1); (I-377) + (S3-2); (I-377) + (S3-3); (I-377) + (S3-4); (I-377) + (S3-5); (I-377) + (S3-6); (I-377) + (S3-7); (I-377) + (S3-8); (I-377) + (S3-9); (I-377) + (S3-10); (I-377) + (S3-11); (I-377) + (S4-1); (I-377) + (S4-2); (I-377) + (S4-3); (I-377) + (S4-4); (I-377) + (S4-5); (I-377) + (S7-1); (I-377) + (S11-1); (I-377) + (S11-2); (I-377) + (S11-3); (I-377) + (S12-1); (I-377) + (S13-1); (I-377) + (S13-2); (I-377) + (S13-3); (I-377) + (S13-4): (I-377) + (S13-5); (I-377) + (S13-6); (I-377) + (S13-7); (I-377) + (S13-8); (I-377) + (S13-9); (I-377) + (S14-1)
(I-378) + (S1-1); (I-378) + (S1-2); (I-378) + (S1-3); (I-378) + (S1-4); (I-378) + (S1-5); (I-378) + (S1-6); (I-378) + (S1-7); (I-378) + (S1-8); (I-378) + (S1-9); (I-378) + (S1-10); (I-378) + (S1-11); (I-378) + (S1-12); (I-378) + (S1-13); (I-378) + (S2-1); (I-378) + (S2-2); (I-378) + (S2-3); (I-378) + (S2-4); (I-378) + (S2-5); (I-378) + (S2-6); (I-378) + (S2-7); (I-378) + (S2-8); (I-378) + (S2-9); (I-378) + (S2-10); (I-378) + (S3-1); (I-378) + (S3-2); (I-378) + (S3-3); (I-378) + (S3-4); (I-378) + (S3-5); (I-378) + (S3-6); (I-378) + (S3-7); (I-378) + (S3-8); (I-378) + (S3-9); (I-378) + (S3-10); (I-378) + (S3-11); (I-378) + (S4-1); (I-378) + (S4-2); (I-378) + (S4-3); (I-378) + (S4-4); (I-378) + (S4-5); (I-378) + (S7-1); (I-378) + (S11-1); (I-378) + (S11-2); (I-378) + (S11-3); (I-378) + (S12-1); (I-378) + (S13-1); (I-378) + (S13-2); (I-378) + (S13-3); (I-378) + (S13-4): (I-378) + (S13-5); (I-378) + (S13-6); (I-378) + (S13-7); (I-378) + (S13-8); (I-378) + (S13-9); (I-378) + (S14-1)
(I-379) + (S1-1); (I-379) + (S1-2); (I-379) + (S1-3); (I-379) + (S1-4); (I-379) + (S1-5); (I-379) + (S1-6); (I-379) + (S1-7); (I-379) + (S1-8); (I-379) + (S1-9); (I-379) + (S1-10); (I-379) + (S1-11); (I-379) + (S1-12); (I-379) + (S1-13); (I-379) + (S2-1); (I-379) + (S2-2); (I-379) + (S2-3); (I-379) + (S2-4); (I-379) + (S2-5); (I-379) + (S2-6); (I-379) + (S2-7); (I-379) + (S2-8); (I-379) + (S2-9); (I-379) + (S2-10); (I-379) + (S3-1); (I-379) + (S3-2); (I-379) + (S3-3); (I-379) + (S3-4); (I-379) + (S3-5); (I-379) + (S3-6); (I-379) + (S3-7); (I-379) + (S3-8); (I-379) + (S3-9); (I-379) + (S3-10); (I-379) + (S3-11); (I-379) + (S4-1); (I-379) + (S4-2); (I-379) + (S4-3); (I-379) + (S4-4); (I-379) + (S4-5); (I-379) + (S7-1); (I-379) + (S11-1); (I-379) + (S11-2); (I-379) + (S11-3); (I-379) + (S12-1); (I-379) + (S13-1); (I-379) + (S13-2); (I-379) + (S13-3); (I-379) + (S13-4): (I-379) + (S13-5); (I-379) + (S13-6); (I-379) + (S13-7); (I-379) + (S13-8); (I-379) + (S13-9); (I-379) + (S14-1)
(I-380) + (S1-1); (I-380) + (S1-2); (I-380) + (S1-3); (I-380) + (S1-4); (I-380) + (S1-5); (I-380) + (S1-6); (I-380) + (S1-7); (I-380) + (S1-8); (I-380) + (S1-9); (I-380) + (S1-10); (I-380) + (S1-11); (I-380) + (S1-12); (I-380) + (S1-13); (I-380) + (S2-1); (I-380) + (S2-2); (I-380) + (S2-3); (I-380) + (S2-4); (I-380) + (S2-5); (I-380) + (S2-6); (I-380) + (S2-7); (I-380) + (S2-8); (I-380) + (S2-9); (I-380) + (S2-10); (I-380) + (S3-1); (I-380) + (S3-2); (I-380) + (S3-3); (I-380) + (S3-4); (I-380) + (S3-5); (I-380) + (S3-6); (I-380) + (S3-7); (I-380) + (S3-8); (I-380) + (S3-9); (I-380) + (S3-10); (I-380) + (S3-11); (I-380) + (S4-1); (I-380) + (S4-2); (I-380) + (S4-3); (I-380) + (S4-4); (I-380) + (S4-5); (I-380) + (S7-1); (I-380) + (S11-1); (I-380) + (S11-2); (I-380) + (S11-3); (I-380) + (S12-1); (I-380) + (S13-1); (I-380) + (S13-2); (I-380) + (S13-3); (I-380) + (S13-4): (I-380) + (S13-5); (I-380) + (S13-6); (I-380) + (S13-7); (I-380) + (S13-8); (I-380) + (S13-9); (I-380) + (S14-1)
(I-381) + (S1-1); (I-381) + (S1-2); (I-381) + (S1-3); (I-381) + (S1-4); (I-381) + (S1-5); (I-381) + (S1-6); (I-381) + (S1-7); (I-381) + (S1-8); (I-381) + (S1-9); (I-381) + (S1-10); (I-381) + (S1-11); (I-381) + (S1-12); (I-381) + (S1-13); (I-381) + (S2-1); (I-381) + (S2-2); (I-381) + (S2-3); (I-381) + (S2-4); (I-381) + (S2-5); (I-381) + (S2-6); (I-381) + (S2-7); (I-381) + (S2-8); (I-381) + (S2-9); (I-381) + (S2-10); (I-381) + (S3-1); (I-381) + (S3-2); (I-381) + (S3-3); (I-381) + (S3-4); (I-381) + (S3-5); (I-381) + (S3-6); (I-381) + (S3-7); (I-381) + (S3-8); (I-381) + (S3-9); (I-381) + (S3-10); (I-381) + (S3-11); (I-381) + (S4-1); (I-381) + (S4-2); (I-381) + (S4-3); (I-381) + (S4-4); (I-381) + (S4-5); (I-381) + (S7-1); (I-381) + (S11-1); (I-381) + (S11-2); (I-381) + (S11-3); (I-381) + (S12-1); (I-381) + (S13-1); (I-381) + (S13-2); (I-381) + (S13-3); (I-381) + (S13-4): (I-381) + (S13-5); (I-381) + (S13-6); (I-381) + (S13-7); (I-381) + (S13-8); (I-381) + (S13-9); (I-381) + (S14-1)
(I-382) + (S1-1); (I-382) + (S1-2); (I-382) + (S1-3); (I-382) + (S1-4); (I-382) + (S1-5); (I-382) + (S1-6); (I-382) + (S1-7); (I-382) + (S1-8); (I-382) + (S1-9); (I-382) + (S1-10); (I-382) + (S1-11); (I-382) + (S1-12); (I-382) + (S1-13); (I-382) + (S2-1); (I-382) + (S2-2); (I-382) + (S2-3); (I-382) + (S2-4); (I-382) + (S2-5); (I-382) + (S2-6); (I-382) + (S2-7); (I-382) + (S2-8); (I-382) + (S2-9); (I-382) + (S2-10); (I-382) + (S3-1); (I-382) + (S3-2); (I-382) + (S3-3); (I-382) + (S3-4); (I-382) + (S3-5); (I-382) + (S3-6); (I-382) + (S3-7); (I-382) + (S3-8); (I-382) + (S3-9); (I-382) + (S3-10); (I-382) + (S3-11); (I-382) + (S4-1); (I-382) + (S4-2); (I-382) + (S4-3); (I-382) + (S4-4); (I-382) + (S4-5); (I-382) + (S7-1); (I-382) + (S11-1); (I-382) + (S11-2); (I-382) + (S11-3); (I-382) + (S12-1); (I-382) + (S13-1); (I-382) + (S13-2); (I-382) + (S13-3); (I-382) + (S13-4): (I-382) + (S13-5); (I-382) + (S13-6); (I-382) + (S13-7); (I-382) + (S13-8); (I-382) + (S13-9); (I-382) + (S14-1)
(I-383) + (S1-1); (I-383) + (S1-2); (I-383) + (S1-3); (I-383) + (S1-4); (I-383) + (S1-5); (I-383) + (S1-6); (I-383) + (S1-7); (I-383) + (S1-8); (I-383) + (S1-9); (I-383) + (S1-10); (I-383) + (S1-11); (I-383) + (S1-12); (I-383) + (S1-13); (I-383) + (S2-1); (I-383) + (S2-2); (I-383) + (S2-3); (I-383) + (S2-4); (I-383) + (S2-5); (I-383) + (S2-6); (I-383) + (S2-7); (I-383) + (S2-8); (I-383) + (S2-9); (I-383) + (S2-10); (I-383) + (S3-1); (I-383) + (S3-2); (I-383) + (S3-3); (I-383) + (S3-4); (I-383) + (S3-5); (I-383) + (S3-6); (I-383) + (S3-7); (I-383) + (S3-8); (I-383) + (S3-9); (I-383) + (S3-10); (I-383) + (S3-11); (I-383) + (S4-1); (I-383) + (S4-2); (I-383) + (S4-3); (I-383) + (S4-4); (I-383) + (S4-5); (I-383) + (S7-1); (I-383) + (S11-1); (I-383) + (S11-2); (I-383) + (S11-3); (I-383) + (S12-1); (I-383) + (S13-1); (I-383) + (S13-2); (I-383) + (S13-3); (I-383) + (S13-4): (I-383) + (S13-5); (I-383) + (S13-6); (I-383) + (S13-7); (I-383) + (S13-8); (I-383) + (S13-9); (I-383) + (S14-1)
(I-384) + (S1-1); (I-384) + (S1-2); (I-384) + (S1-3); (I-384) + (S1-4); (I-384) + (S1-5); (I-384) + (S1-6); (I-384) + (S1-7); (I-384) + (S1-8); (I-384) + (S1-9); (I-384) + (S1-10); (I-384) + (S1-11); (I-384) + (S1-12); (I-384) + (S1-13); (I-384) + (S2-1); (I-384) + (S2-2); (I-384) + (S2-3); (I-384) + (S2-4); (I-384) + (S2-5); (I-384) + (S2-6); (I-384) + (S2-7); (I-384) + (S2-8); (I-384) + (S2-9); (I-384) + (S2-10); (I-384) + (S3-1); (I-384) + (S3-2); (I-384) + (S3-3); (I-384) + (S3-4); (I-384) + (S3-5); (I-384) + (S3-6); (I-384) + (S3-7); (I-384) + (S3-8); (I-384) + (S3-9); (I-384) + (S3-10); (I-384) + (S3-11); (I-384) + (S4-1); (I-384) + (S4-2); (I-384) + (S4-3); (I-384) + (S4-4); (I-384) + (S4-5); (I-384) + (S7-1); (I-384) + (S11-1); (I-384) + (S11-2); (I-384) + (S11-3); (I-384) + (S12-1); (I-384) + (S13-1); (I-384) + (S13-2); (I-384) + (S13-3); (I-384) + (S13-4): (I-384) + (S13-5); (I-384) + (S13-6); (I-384) + (S13-7); (I-384) + (S13-8); (I-384) + (S13-9); (I-384) + (S14-1)
(I-385) + (S1-1); (I-385) + (S1-2); (I-385) + (S1-3); (I-385) + (S1-4); (I-385) + (S1-5); (I-385) + (S1-6); (I-385) + (S1-7); (I-385) + (S1-8); (I-385) + (S1-9); (I-385) + (S1-10); (I-385) + (S1-11); (I-385) + (S1-12); (I-385) + (S1-13); (I-385) + (S2-1); (I-385) + (S2-2); (I-385) + (S2-3); (I-385) + (S2-4); (I-385) + (S2-5); (I-385) + (S2-6); (I-385) + (S2-7); (I-385) + (S2-8); (I-385) + (S2-9); (I-385) + (S2-10); (I-385) + (S3-1); (I-385) + (S3-2); (I-385) + (S3-3); (I-385) + (S3-4); (I-385) + (S3-5); (I-385) + (S3-6); (I-385) + (S3-7); (I-385) + (S3-8); (I-385) + (S3-9); (I-385) + (S3-10); (I-385) + (S3-11); (I-385) + (S4-1); (I-385) + (S4-2); (I-385) + (S4-3); (I-385) + (S4-4); (I-385) + (S4-5); (I-385) + (S7-1); (I-385) + (S11-1); (I-385) + (S11-2); (I-385) + (S11-3); (I-385) + (S12-1); (I-385) + (S13-1); (I-385) + (S13-2); (I-385) + (S13-3); (I-385) + (S13-4): (I-385) + (S13-5); (I-385) + (S13-6); (I-385) + (S13-7); (I-385) + (S13-8); (I-385) + (S13-9); (I-385) + (S14-1)
(I-386) + (S1-1); (I-386) + (S1-2); (I-386) + (S1-3); (I-386) + (S1-4); (I-386) + (S1-5); (I-386) + (S1-6); (I-386) + (S1-7); (I-386) + (S1-8); (I-386) + (S1-9); (I-386) + (S1-10); (I-386) + (S1-11); (I-386) + (S1-12); (I-386) + (S1-13); (I-386) + (S2-1); (I-386) + (S2-2); (I-386) + (S2-3); (I-386) + (S2-4); (I-386) + (S2-5); (I-386) + (S2-6); (I-386) + (S2-7); (I-386) + (S2-8); (I-386) + (S2-9); (I-386) + (S2-10); (I-386) + (S3-1); (I-386) + (S3-2); (I-386) + (S3-3); (I-386) + (S3-4); (I-386) + (S3-5); (I-386) + (S3-6); (I-386) + (S3-7); (I-386) + (S3-8); (I-386) + (S3-9); (I-386) + (S3-10); (I-386) + (S3-11); (I-386) + (S4-1); (I-386) + (S4-2); (I-386) + (S4-3); (I-386) + (S4-4); (I-386) + (S4-5); (I-386) + (S7-1); (I-386) + (S11-1); (I-386) + (S11-2); (I-386) + (S11-3); (I-386) + (S12-1); (I-386) + (S13-1); (I-386) + (S13-2); (I-386) + (S13-3); (I-386) + (S13-4): (I-386) + (S13-5); (I-386) + (S13-6); (I-386) + (S13-7); (I-386) + (S13-8); (I-386) + (S13-9); (I-386) + (S14-1)
(I-387) + (S1-1); (I-387) + (S1-2); (I-387) + (S1-3); (I-387) + (S1-4); (I-387) + (S1-5); (I-387) + (S1-6); (I-387) + (S1-7); (I-387) + (S1-8); (I-387) + (S1-9); (I-387) + (S1-10); (I-387) + (S1-11); (I-387) + (S1-12); (I-387) + (S1-13); (I-387) + (S2-1); (I-387) + (S2-2); (I-387) + (S2-3); (I-387) + (S2-4); (I-387) + (S2-5); (I-387) + (S2-6); (I-387) + (S2-7); (I-387) + (S2-8); (I-387) + (S2-9); (I-387) + (S2-10); (I-387) + (S3-1); (I-387) + (S3-2); (I-387) + (S3-3); (I-387) + (S3-4); (I-387) + (S3-5); (I-387) + (S3-6); (I-387) + (S3-7); (I-387) + (S3-8); (I-387) + (S3-9); (I-387) + (S3-10); (I-387) + (S3-11); (I-387) + (S4-1); (I-387) + (S4-2); (I-387) + (S4-3); (I-387) + (S4-4); (I-387) + (S4-5); (I-387) + (S7-1); (I-387) + (S11-1); (I-387) + (S11-2); (I-387) + (S11-3); (I-387) + (S12-1); (I-387) + (S13-1); (I-387) + (S13-2); (I-387) + (S13-3); (I-387) + (S13-4): (I-387) + (S13-5); (I-387) + (S13-6); (I-387) + (S13-7); (I-387) + (S13-8); (I-387) + (S13-9); (I-387) + (S14-1)
(I-388) + (S1-1); (I-388) + (S1-2); (I-388) + (S1-3); (I-388) + (S1-4); (I-388) + (S1-5); (I-388) + (S1-6); (I-388) + (S1-7); (I-388) + (S1-8); (I-388) + (S1-9); (I-388) + (S1-10); (I-388) + (S1-11); (I-388) + (S1-12); (I-388) + (S1-13); (I-388) + (S2-1); (I-388) + (S2-2); (I-388) + (S2-3); (I-388) + (S2-4); (I-388) + (S2-5); (I-388) + (S2-6); (I-388) + (S2-7); (I-388) + (S2-8); (I-388) + (S2-9); (I-388) + (S2-10); (I-388) + (S3-1); (I-388) + (S3-2); (I-388) + (S3-3); (I-388) + (S3-4); (I-388) + (S3-5); (I-388) + (S3-6); (I-388) + (S3-7); (I-388) + (S3-8); (I-388) + (S3-9); (I-388) + (S3-10); (I-388) + (S3-11); (I-388) + (S4-1); (I-388) + (S4-2); (I-388) + (S4-3); (I-388) + (S4-4); (I-388) + (S4-5); (I-388) + (S7-1); (I-388) + (S11-1); (I-388) + (S11-2); (I-388) + (S11-3); (I-388) + (S12-1); (I-388) + (S13-1); (I-388) + (S13-2); (I-388) + (S13-3); (I-388) + (S13-4): (I-388) + (S13-5); (I-388) + (S13-6); (I-388) + (S13-7); (I-388) + (S13-8); (I-388) + (S13-9); (I-388) + (S14-1)
(I-389) + (S1-1); (I-389) + (S1-2); (I-389) + (S1-3); (I-389) + (S1-4); (I-389) + (S1-5); (I-389) + (S1-6); (I-389) + (S1-7); (I-389) + (S1-8); (I-389) + (S1-9); (I-389) + (S1-10); (I-389) + (S1-11); (I-389) + (S1-12); (I-389) + (S1-13); (I-389) + (S2-1); (I-389) + (S2-2); (I-389) + (S2-3); (I-389) + (S2-4); (I-389) + (S2-5); (I-389) + (S2-6); (I-389) + (S2-7); (I-389) + (S2-8); (I-389) + (S2-9); (I-389) + (S2-10); (I-389) + (S3-1); (I-389) + (S3-2); (I-389) + (S3-3); (I-389) + (S3-4); (I-389) + (S3-5); (I-389) + (S3-6); (I-389) + (S3-7); (I-389) + (S3-8); (I-389) + (S3-9); (I-389) + (S3-10); (I-389) + (S3-11); (I-389) + (S4-1); (I-389) + (S4-2); (I-389) + (S4-3); (I-389) + (S4-4); (I-389) + (S4-5); (I-389) + (S7-1); (I-389) + (S11-1); (I-389) + (S11-2); (I-389) + (S11-3); (I-389) + (S12-1); (I-389) + (S13-1); (I-389) + (S13-2); (I-389) + (S13-3); (I-389) + (S13-4): (I-389) + (S13-5); (I-389) + (S13-6); (I-389) + (S13-7); (I-389) + (S13-8); (I-389) + (S13-9); (I-389) + (S14-1)
(I-390) + (S1-1); (I-390) + (S1-2); (I-390) + (S1-3); (I-390) + (S1-4); (I-390) + (S1-5); (I-390) + (S1-6); (I-390) + (S1-7); (I-390) + (S1-8); (I-390) + (S1-9); (I-390) + (S1-10); (I-390) + (S1-11); (I-390) + (S1-12); (I-390) + (S1-13); (I-390) + (S2-1); (I-390) + (S2-2); (I-390) + (S2-3); (I-390) + (S2-4); (I-390) + (S2-5); (I-390) + (S2-6); (I-390) + (S2-7); (I-390) + (S2-8); (I-390) + (S2-9); (I-390) + (S2-10); (I-390) + (S3-1); (I-390) + (S3-2); (I-390) + (S3-3); (I-390) + (S3-4); (I-390) + (S3-5); (I-390) + (S3-6); (I-390) + (S3-7); (I-390) + (S3-8); (I-390) + (S3-9); (I-390) + (S3-10); (I-390) + (S3-11); (I-390) + (S4-1); (I-390) + (S4-2); (I-390) + (S4-3); (I-390) + (S4-4); (I-390) + (S4-5); (I-390) + (S7-1); (I-390) + (S11-1); (I-390) + (S11-2); (I-390) + (S11-3); (I-390) + (S12-1); (I-390) + (S13-1); (I-390) + (S13-2); (I-390) + (S13-3); (I-390) + (S13-4): (I-390) + (S13-5); (I-390) + (S13-6); (I-390) + (S13-7); (I-390) + (S13-8); (I-390) + (S13-9); (I-390) + (S14-1)
(I-391) + (S1-1); (I-391) + (S1-2); (I-391) + (S1-3); (I-391) + (S1-4); (I-391) + (S1-5); (I-391) + (S1-6); (I-391) + (S1-7); (I-391) + (S1-8); (I-391) + (S1-9); (I-391) + (S1-10); (I-391) + (S1-11); (I-391) + (S1-12); (I-391) + (S1-13); (I-391) + (S2-1); (I-391) + (S2-2); (I-391) + (S2-3); (I-391) + (S2-4); (I-391) + (S2-5); (I-391) + (S2-6); (I-391) + (S2-7); (I-391) + (S2-8); (I-391) + (S2-9); (I-391) + (S2-10); (I-391) + (S3-1); (I-391) + (S3-2); (I-391) + (S3-3); (I-391) + (S3-4); (I-391) + (S3-5); (I-391) + (S3-6); (I-391) + (S3-7); (I-391) + (S3-8); (I-391) + (S3-9); (I-391) + (S3-10); (I-391) + (S3-11); (I-391) + (S4-1); (I-391) + (S4-2); (I-391) + (S4-3); (I-391) + (S4-4); (I-391) + (S4-5); (I-391) + (S7-1); (I-391) + (S11-1); (I-391) + (S11-2); (I-391) + (S11-3); (I-391) + (S12-1); (I-391) + (S13-1); (I-391) + (S13-2); (I-391) + (S13-3); (I-391) + (S13-4): (I-391) + (S13-5); (I-391) + (S13-6); (I-391) + (S13-7); (I-391) + (S13-8); (I-391) + (S13-9); (I-391) + (S14-1)
(I-392) + (S1-1); (I-392) + (S1-2); (I-392) + (S1-3); (I-392) + (S1-4); (I-392) + (S1-5); (I-392) + (S1-6); (I-392) + (S1-7); (I-392) + (S1-8); (I-392) + (S1-9); (I-392) + (S1-10); (I-392) + (S1-11); (I-392) + (S1-12); (I-392) + (S1-13); (I-392) + (S2-1); (I-392) + (S2-2); (I-392) + (S2-3); (I-392) + (S2-4); (I-392) + (S2-5); (I-392) + (S2-6); (I-392) + (S2-7); (I-392) + (S2-8); (I-392) + (S2-9); (I-392) + (S2-10); (I-392) + (S3-1); (I-392) + (S3-2); (I-392) + (S3-3); (I-392) + (S3-4); (I-392) + (S3-5); (I-392) + (S3-6); (I-392) + (S3-7); (I-392) + (S3-8); (I-392) + (S3-9); (I-392) + (S3-10); (I-392) + (S3-11); (I-392) + (S4-1); (I-392) + (S4-2); (I-392) + (S4-3); (I-392) + (S4-4); (I-392) + (S4-5); (I-392) + (S7-1); (I-392) + (S11-1); (I-392) + (S11-2); (I-392) + (S11-3); (I-392) + (S12-1); (I-392) + (S13-1); (I-392) + (S13-2); (I-392) + (S13-3); (I-392) + (S13-4): (I-392) + (S13-5); (I-392) + (S13-6); (I-392) + (S13-7); (I-392) + (S13-8); (I-392) + (S13-9); (I-392) + (S14-1)
(I-393) + (S1-1); (I-393) + (S1-2); (I-393) + (S1-3); (I-393) + (S1-4); (I-393) + (S1-5); (I-393) + (S1-6); (I-393) + (S1-7); (I-393) + (S1-8); (I-393) + (S1-9); (I-393) + (S1-10); (I-393) + (S1-11); (I-393) + (S1-12); (I-393) + (S1-13); (I-393) + (S2-1); (I-393) + (S2-2); (I-393) + (S2-3); (I-393) + (S2-4); (I-393) + (S2-5); (I-393) + (S2-6); (I-393) + (S2-7); (I-393) + (S2-8); (I-393) + (S2-9); (I-393) + (S2-10); (I-393) + (S3-1); (I-393) + (S3-2); (I-393) + (S3-3); (I-393) + (S3-4); (I-393) + (S3-5); (I-393) + (S3-6); (I-393) + (S3-7); (I-393) + (S3-8); (I-393) + (S3-9); (I-393) + (S3-10); (I-393) + (S3-11); (I-393) + (S4-1); (I-393) + (S4-2); (I-393) + (S4-3); (I-393) + (S4-4); (I-393) + (S4-5); (I-393) + (S7-1); (I-393) + (S11-1); (I-393) + (S11-2); (I-393) + (S11-3); (I-393) + (S12-1); (I-393) + (S13-1); (I-393) + (S13-2); (I-393) + (S13-3); (I-393) + (S13-4): (I-393) + (S13-5); (I-393) + (S13-6); (I-393) + (S13-7); (I-393) + (S13-8); (I-393) + (S13-9); (I-393) + (S14-1)
(I-394) + (S1-1); (I-394) + (S1-2); (I-394) + (S1-3); (I-394) + (S1-4); (I-394) + (S1-5); (I-394) + (S1-6); (I-394) + (S1-7); (I-394) + (S1-8); (I-394) + (S1-9); (I-394) + (S1-10); (I-394) + (S1-11); (I-394) + (S1-12); (I-394) + (S1-13); (I-394) + (S2-1); (I-394) + (S2-2); (I-394) + (S2-3); (I-394) + (S2-4); (I-394) + (S2-5); (I-394) + (S2-6); (I-394) + (S2-7); (I-394) + (S2-8); (I-394) + (S2-9); (I-394) + (S2-10); (I-394) + (S3-1); (I-394) + (S3-2); (I-394) + (S3-3); (I-394) + (S3-4); (I-394) + (S3-5); (I-394) + (S3-6); (I-394) + (S3-7); (I-394) + (S3-8); (I-394) + (S3-9); (I-394) + (S3-10); (I-394) + (S3-11); (I-394) + (S4-1); (I-394) + (S4-2); (I-394) + (S4-3); (I-394) + (S4-4); (I-394) + (S4-5); (I-394) + (S7-1); (I-394) + (S11-1); (I-394) + (S11-2); (I-394) + (S11-3); (I-394) + (S12-1); (I-394) + (S13-1); (I-394) + (S13-2); (I-394) + (S13-3); (I-394) + (S13-4): (I-394) + (S13-5); (I-394) + (S13-6); (I-394) + (S13-7); (I-394) + (S13-8); (I-394) + (S13-9); (I-394) + (S14-1)
(I-395) + (S1-1); (I-395) + (S1-2); (I-395) + (S1-3); (I-395) + (S1-4); (I-395) + (S1-5); (I-395) + (S1-6); (I-395) + (S1-7); (I-395) + (S1-8); (I-395) + (S1-9); (I-395) + (S1-10); (I-395) + (S1-11); (I-395) + (S1-12); (I-395) + (S1-13); (I-395) + (S2-1); (I-395) + (S2-2); (I-395) + (S2-3); (I-395) + (S2-4); (I-395) + (S2-5); (I-395) + (S2-6); (I-395) + (S2-7); (I-395) + (S2-8); (I-395) + (S2-9); (I-395) + (S2-10); (I-395) + (S3-1); (I-395) + (S3-2); (I-395) + (S3-3); (I-395) + (S3-4); (I-395) + (S3-5); (I-395) + (S3-6); (I-395) + (S3-7); (I-395) + (S3-8); (I-395) + (S3-9); (I-395) + (S3-10); (I-395) + (S3-11); (I-395) + (S4-1); (I-395) + (S4-2); (I-395) + (S4-3); (I-395) + (S4-4); (I-395) + (S4-5); (I-395) + (S7-1); (I-395) + (S11-1); (I-395) + (S11-2); (I-395) + (S11-3); (I-395) + (S12-1); (I-395) + (S13-1); (I-395) + (S13-2); (I-395) + (S13-3); (I-395) + (S13-4): (I-395) + (S13-5); (I-395) + (S13-6); (I-395) + (S13-7); (I-395) + (S13-8); (I-395) + (S13-9); (I-395) + (S14-1)
(I-396) + (S1-1); (I-396) + (S1-2); (I-396) + (S1-3); (I-396) + (S1-4); (I-396) + (S1-5); (I-396) + (S1-6); (I-396) + (S1-7); (I-396) + (S1-8); (I-396) + (S1-9); (I-396) + (S1-10); (I-396) + (S1-11); (I-396) + (S1-12); (I-396) + (S1-13); (I-396) + (S2-1); (I-396) + (S2-2); (I-396) + (S2-3); (I-396) + (S2-4); (I-396) + (S2-5); (I-396) + (S2-6); (I-396) + (S2-7); (I-396) + (S2-8); (I-396) + (S2-9); (I-396) + (S2-10); (I-396) + (S3-1); (I-396) + (S3-2); (I-396) + (S3-3); (I-396) + (S3-4); (I-396) + (S3-5); (I-396) + (S3-6); (I-396) + (S3-7); (I-396) + (S3-8); (I-396) + (S3-9); (I-396) + (S3-10); (I-396) + (S3-11); (I-396) + (S4-1); (I-396) + (S4-2); (I-396) + (S4-3); (I-396) + (S4-4); (I-396) + (S4-5); (I-396) + (S7-1); (I-396) + (S11-1); (I-396) + (S11-2); (I-396) + (S11-3); (I-396) + (S12-1); (I-396) + (S13-1); (I-396) + (S13-2); (I-396) + (S13-3); (I-396) + (S13-4): (I-396) + (S13-5); (I-396) + (S13-6); (I-396) + (S13-7); (I-396) + (S13-8); (I-396) + (S13-9); (I-396) + (S14-1)
(I-397) + (S1-1); (I-397) + (S1-2); (I-397) + (S1-3); (I-397) + (S1-4); (I-397) + (S1-5); (I-397) + (S1-6); (I-397) + (S1-7); (I-397) + (S1-8); (I-397) + (S1-9); (I-397) + (S1-10); (I-397) + (S1-11); (I-397) + (S1-12); (I-397) + (S1-13); (I-397) + (S2-1); (I-397) + (S2-2); (I-397) + (S2-3); (I-397) + (S2-4); (I-397) + (S2-5); (I-397) + (S2-6); (I-397) + (S2-7); (I-397) + (S2-8); (I-397) + (S2-9); (I-397) + (S2-10); (I-397) + (S3-1); (I-397) + (S3-2); (I-397) + (S3-3); (I-397) + (S3-4); (I-397) + (S3-5); (I-397) + (S3-6); (I-397) + (S3-7); (I-397) + (S3-8); (I-397) + (S3-9); (I-397) + (S3-10); (I-397) + (S3-11); (I-397) + (S4-1); (I-397) + (S4-2); (I-397) + (S4-3); (I-397) + (S4-4); (I-397) + (S4-5); (I-397) + (S7-1); (I-397) + (S11-1); (I-397) + (S11-2); (I-397) + (S11-3); (I-397) + (S12-1); (I-397) + (S13-1); (I-397) + (S13-2); (I-397) + (S13-3); (I-397) + (S13-4): (I-397) + (S13-5); (I-397) + (S13-6); (I-397) + (S13-7); (I-397) + (S13-8); (I-397) + (S13-9); (I-397) + (S14-1)
(I-398) + (S1-1); (I-398) + (S1-2); (I-398) + (S1-3); (I-398) + (S1-4); (I-398) + (S1-5); (I-398) + (S1-6); (I-398) + (S1-7); (I-398) + (S1-8); (I-398) + (S1-9); (I-398) + (S1-10); (I-398) + (S1-11); (I-398) + (S1-12); (I-398) + (S1-13); (I-398) + (S2-1); (I-398) + (S2-2); (I-398) + (S2-3); (I-398) + (S2-4); (I-398) + (S2-5); (I-398) + (S2-6); (I-398) + (S2-7); (I-398) + (S2-8); (I-398) + (S2-9); (I-398) + (S2-10); (I-398) + (S3-1); (I-398) + (S3-2); (I-398) + (S3-3); (I-398) + (S3-4); (I-398) + (S3-5); (I-398) + (S3-6); (I-398) + (S3-7); (I-398) + (S3-8); (I-398) + (S3-9); (I-398) + (S3-10); (I-398) + (S3-11); (I-398) + (S4-1); (I-398) + (S4-2); (I-398) + (S4-3); (I-398) + (S4-4); (I-398) + (S4-5); (I-398) + (S7-1); (I-398) + (S11-1); (I-398) + (S11-2); (I-398) + (S11-3); (I-398) + (S12-1); (I-398) + (S13-1); (I-398) + (S13-2); (I-398) + (S13-3); (I-398) + (S13-4): (I-398) + (S13-5); (I-398) + (S13-6); (I-398) + (S13-7); (I-398) + (S13-8); (I-398) + (S13-9); (I-398) + (S14-1)
(I-399) + (S1-1); (I-399) + (S1-2); (I-399) + (S1-3); (I-399) + (S1-4); (I-399) + (S1-5); (I-399) + (S1-6); (I-399) + (S1-7); (I-399) + (S1-8); (I-399) + (S1-9); (I-399) + (S1-10); (I-399) + (S1-11); (I-399) + (S1-12); (I-399) + (S1-13); (I-399) + (S2-1); (I-399) + (S2-2); (I-399) + (S2-3); (I-399) + (S2-4); (I-399) + (S2-5); (I-399) + (S2-6); (I-399) + (S2-7); (I-399) + (S2-8); (I-399) + (S2-9); (I-399) + (S2-10); (I-399) + (S3-1); (I-399) + (S3-2); (I-399) + (S3-3); (I-399) + (S3-4); (I-399) + (S3-5); (I-399) + (S3-6); (I-399) + (S3-7); (I-399) + (S3-8); (I-399) + (S3-9); (I-399) + (S3-10); (I-399) + (S3-11); (I-399) + (S4-1); (I-399) + (S4-2); (I-399) + (S4-3); (I-399) + (S4-4); (I-399) + (S4-5); (I-399) + (S7-1); (I-399) + (S11-1); (I-399) + (S11-2); (I-399) + (S11-3); (I-399) + (S12-1); (I-399) + (S13-1); (I-399) + (S13-2); (I-399) + (S13-3); (I-399) + (S13-4): (I-399) + (S13-5); (I-399) + (S13-6); (I-399) + (S13-7); (I-399) + (S13-8); (I-399) + (S13-9); (I-399) + (S14-1)
(I-400) + (S1-1); (I-400) + (S1-2); (I-400) + (S1-3); (I-400) + (S1-4); (I-400) + (S1-5); (I-400) + (S1-6); (I-400) + (S1-7); (I-400) + (S1-8); (I-400) + (S1-9); (I-400) + (S1-10); (I-400) + (S1-11); (I-400) + (S1-12); (I-400) + (S1-13); (I-400) + (S2-1); (I-400) + (S2-2); (I-400) + (S2-3); (I-400) + (S2-4); (I-400) + (S2-5); (I-400) + (S2-6); (I-400) + (S2-7); (I-400) + (S2-8); (I-400) + (S2-9); (I-400) + (S2-10); (I-400) + (S3-1); (I-400) + (S3-2); (I-400) + (S3-3); (I-400) + (S3-4); (I-400) + (S3-5); (I-400) + (S3-6); (I-400) + (S3-7); (I-400) + (S3-8); (I-400) + (S3-9); (I-400) + (S3-10); (I-400) + (S3-11); (I-400) + (S4-1); (I-400) + (S4-2); (I-400) + (S4-3); (I-400) + (S4-4); (I-400) + (S4-5); (I-400) + (S7-1); (I-400) + (S11-1); (I-400) + (S11-2); (I-400) + (S11-3); (I-400) + (S12-1); (I-400) + (S13-1); (I-400) + (S13-2); (I-400) + (S13-3); (I-400) + (S13-4): (I-400) + (S13-5); (I-400) + (S13-6); (I-400) + (S13-7); (I-400) + (S13-8); (I-400) + (S13-9); (I-400) + (S14-1)
(I-401) + (S1-1); (I-401) + (S1-2); (I-401) + (S1-3); (I-401) + (S1-4); (I-401) + (S1-5); (I-401) + (S1-6); (I-401) + (S1-7); (I-401) + (S1-8); (I-401) + (S1-9); (I-401) + (S1-10); (I-401) + (S1-11); (I-401) + (S1-12); (I-401) + (S1-13); (I-401) + (S2-1); (I-401) + (S2-2); (I-401) + (S2-3); (I-401) + (S2-4); (I-401) + (S2-5); (I-401) + (S2-6); (I-401) + (S2-7); (I-401) + (S2-8); (I-401) + (S2-9); (I-401) + (S2-10); (I-401) + (S3-1); (I-401) + (S3-2); (I-401) + (S3-3); (I-401) + (S3-4); (I-401) + (S3-5); (I-401) + (S3-6); (I-401) + (S3-7); (I-401) + (S3-8); (I-401) + (S3-9); (I-401) + (S3-10); (I-401) + (S3-11); (I-401) + (S4-1); (I-401) + (S4-2); (I-401) + (S4-3); (I-401) + (S4-4); (I-401) + (S4-5); (I-401) + (S7-1); (I-401) + (S11-1); (I-401) + (S11-2); (I-401) + (S11-3); (I-401) + (S12-1); (I-401) + (S13-1); (I-401) + (S13-2); (I-401) + (S13-3); (I-401) + (S13-4): (I-401) + (S13-5); (I-401) + (S13-6); (I-401) + (S13-7); (I-401) + (S13-8); (I-401) + (S13-9); (I-401) + (S14-1)
(I-402) + (S1-1); (I-402) + (S1-2); (I-402) + (S1-3); (I-402) + (S1-4); (I-402) + (S1-5); (I-402) + (S1-6); (I-402) + (S1-7); (I-402) + (S1-8); (I-402) + (S1-9); (I-402) + (S1-10); (I-402) + (S1-11); (I-402) + (S1-12); (I-402) + (S1-13); (I-402) + (S2-1); (I-402) + (S2-2); (I-402) + (S2-3); (I-402) + (S2-4); (I-402) + (S2-5); (I-402) + (S2-6); (I-402) + (S2-7); (I-402) + (S2-8); (I-402) + (S2-9); (I-402) + (S2-10); (I-402) + (S3-1); (I-402) + (S3-2); (I-402) + (S3-3); (I-402) + (S3-4); (I-402) + (S3-5); (I-402) + (S3-6); (I-402) + (S3-7); (I-402) + (S3-8); (I-402) + (S3-9); (I-402) + (S3-10); (I-402) + (S3-11); (I-402) + (S4-1); (I-402) + (S4-2); (I-402) + (S4-3); (I-402) + (S4-4); (I-402) + (S4-5); (I-402) + (S7-1); (I-402) + (S11-1); (I-402) + (S11-2); (I-402) + (S11-3); (I-402) + (S12-1); (I-402) + (S13-1); (I-402) + (S13-2); (I-402) + (S13-3); (I-402) + (S13-4): (I-402) + (S13-5); (I-402) + (S13-6); (I-402) + (S13-7); (I-402) + (S13-8); (I-402) + (S13-9); (I-402) + (S14-1)
(I-403) + (S1-1); (I-403) + (S1-2); (I-403) + (S1-3); (I-403) + (S1-4); (I-403) + (S1-5); (I-403) + (S1-6); (I-403) + (S1-7); (I-403) + (S1-8); (I-403) + (S1-9); (I-403) + (S1-10); (I-403) + (S1-11); (I-403) + (S1-12); (I-403) + (S1-13); (I-403) + (S2-1); (I-403) + (S2-2); (I-403) + (S2-3); (I-403) + (S2-4); (I-403) + (S2-5); (I-403) + (S2-6); (I-403) + (S2-7); (I-403) + (S2-8); (I-403) + (S2-9); (I-403) + (S2-10); (I-403) + (S3-1); (I-403) + (S3-2); (I-403) + (S3-3); (I-403) + (S3-4); (I-403) + (S3-5); (I-403) + (S3-6); (I-403) + (S3-7); (I-403) + (S3-8); (I-403) + (S3-9); (I-403) + (S3-10); (I-403) + (S3-11); (I-403) + (S4-1); (I-403) + (S4-2); (I-403) + (S4-3); (I-403) + (S4-4); (I-403) + (S4-5); (I-403) + (S7-1); (I-403) + (S11-1); (I-403) + (S11-2); (I-403) + (S11-3); (I-403) + (S12-1); (I-403) + (S13-1); (I-403) + (S13-2); (I-403) + (S13-3); (I-403) + (S13-4): (I-403) + (S13-5); (I-403) + (S13-6); (I-403) + (S13-7); (I-403) + (S13-8); (I-403) + (S13-9); (I-403) + (S14-1)
(I-404) + (S1-1); (I-404) + (S1-2); (I-404) + (S1-3); (I-404) + (S1-4); (I-404) + (S1-5); (I-404) + (S1-6); (I-404) + (S1-7); (I-404) + (S1-8); (I-404) + (S1-9); (I-404) + (S1-10); (I-404) + (S1-11); (I-404) + (S1-12); (I-404) + (S1-13); (I-404) + (S2-1); (I-404) + (S2-2); (I-404) + (S2-3); (I-404) + (S2-4); (I-404) + (S2-5); (I-404) + (S2-6); (I-404) + (S2-7); (I-404) + (S2-8); (I-404) + (S2-9); (I-404) + (S2-10); (I-404) + (S3-1); (I-404) + (S3-2); (I-404) + (S3-3); (I-404) + (S3-4); (I-404) + (S3-5); (I-404) + (S3-6); (I-404) + (S3-7); (I-404) + (S3-8); (I-404) + (S3-9); (I-404) + (S3-10); (I-404) + (S3-11); (I-404) + (S4-1); (I-404) + (S4-2); (I-404) + (S4-3); (I-404) + (S4-4); (I-404) + (S4-5); (I-404) + (S7-1); (I-404) + (S11-1); (I-404) + (S11-2); (I-404) + (S11-3); (I-404) + (S12-1); (I-404) + (S13-1); (I-404) + (S13-2); (I-404) + (S13-3); (I-404) + (S13-4): (I-404) + (S13-5); (I-404) + (S13-6); (I-404) + (S13-7); (I-404) + (S13-8); (I-404) + (S13-9); (I-404) + (S14-1)
(I-405) + (S1-1); (I-405) + (S1-2); (I-405) + (S1-3); (I-405) + (S1-4); (I-405) + (S1-5); (I-405) + (S1-6); (I-405) + (S1-7); (I-405) + (S1-8); (I-405) + (S1-9); (I-405) + (S1-10); (I-405) + (S1-11); (I-405) + (S1-12); (I-405) + (S1-13); (I-405) + (S2-1); (I-405) + (S2-2); (I-405) + (S2-3); (I-405) + (S2-4); (I-405) + (S2-5); (I-405) + (S2-6); (I-405) + (S2-7); (I-405) + (S2-8); (I-405) + (S2-9); (I-405) + (S2-10); (I-405) + (S3-1); (I-405) + (S3-2); (I-405) + (S3-3); (I-405) + (S3-4); (I-405) + (S3-5); (I-405) + (S3-6); (I-405) + (S3-7); (I-405) + (S3-8); (I-405) + (S3-9); (I-405) + (S3-10); (I-405) + (S3-11); (I-405) + (S4-1); (I-405) + (S4-2); (I-405) + (S4-3); (I-405) + (S4-4); (I-405) + (S4-5); (I-405) + (S7-1); (I-405) + (S11-1); (I-405) + (S11-2); (I-405) + (S11-3); (I-405) + (S12-1); (I-405) + (S13-1); (I-405) + (S13-2); (I-405) + (S13-3); (I-405) + (S13-4): (I-405) + (S13-5); (I-405) + (S13-6); (I-405) + (S13-7); (I-405) + (S13-8); (I-405) + (S13-9); (I-405) + (S14-1)
(I-406) + (S1-1); (I-406) + (S1-2); (I-406) + (S1-3); (I-406) + (S1-4); (I-406) + (S1-5); (I-406) + (S1-6); (I-406) + (S1-7); (I-406) + (S1-8); (I-406) + (S1-9); (I-406) + (S1-10); (I-406) + (S1-11); (I-406) + (S1-12); (I-406) + (S1-13); (I-406) + (S2-1); (I-406) + (S2-2); (I-406) + (S2-3); (I-406) + (S2-4); (I-406) + (S2-5); (I-406) + (S2-6); (I-406) + (S2-7); (I-406) + (S2-8); (I-406) + (S2-9); (I-406) + (S2-10); (I-406) + (S3-1); (I-406) + (S3-2); (I-406) + (S3-3); (I-406) + (S3-4); (I-406) + (S3-5); (I-406) + (S3-6); (I-406) + (S3-7); (I-406) + (S3-8); (I-406) + (S3-9); (I-406) + (S3-10); (I-406) + (S3-11); (I-406) + (S4-1); (I-406) + (S4-2); (I-406) + (S4-3); (I-406) + (S4-4); (I-406) + (S4-5); (I-406) + (S7-1); (I-406) + (S11-1); (I-406) + (S11-2); (I-406) + (S11-3); (I-406) + (S12-1); (I-406) + (S13-1); (I-406) + (S13-2); (I-406) + (S13-3); (I-406) + (S13-4): (I-406) + (S13-5); (I-406) + (S13-6); (I-406) + (S13-7); (I-406) + (S13-8); (I-406) + (S13-9); (I-406) + (S14-1)

Im Rahmen der vorliegenden Erfindung sind besonders bevorzugt Kombinationen der Verbindungen der allgemeinen Formel (I) mit den folgenden Safenern: Daimuron (S14-1), Benoxacor (S3-4), Furilazol [(S3-10) bzw. (S3-11)], Fluxofenim (S11-2), Fenchlorazol(-ethylester) (S1-7), Mefenpyr-diethyl (S1-1), Cloquintocet-mexyl (S2-1), Isoxadifen-ethyl (S1-11), Cyprosulfamide (S4-1), Flurazole (S13-3), Oxabetrinil (S11-1), Dichlormid (S3-1) und Dietholate (S13-8).

Im Rahmen der vorliegenden Erfindung sind ganz besonders bevorzugt Kombinationen der Verbindungen der allgemeinen Formel (I) mit den folgenden Safenern: Mefenpyr-diethyl (S1-1), Isoxadifen-ethyl (S1-11), Cyprosulfamide (S4-1), Fenchlorazol-ethylester (S1-7), Benoxacor (S3-4), Cloquintocet-mexyl (S2-1), Fluxofenim (S11-2) und Furilazol [(S3-10) bzw. (S3-11)].

Im Rahmen der vorliegenden Erfindung sind insbesondere bevorzugt Kombinationen der Verbindungen der allgemeinen Formel (I) mit den folgenden Safenern Isoxadifen-ethyl (S1-11) oder Cyprosulfamide (S4-1).

Im Rahmen der vorliegenden Erfindung sind Kombinationen der Verbindungen der allgemeinen Formel (I) mit dem Safenern Cyprosulfamide (S4-1) hervorgehoben.

Bevorzugt sind Herbizid-Safener-Kombinationen, enthaltend (A) eine herbizid wirksame Menge an einer oder mehrerer Verbindungen der Formel (I) oder deren Salzen, und (B) eine antidotisch-wirksame Menge an einem oder mehreren Safenern.

Herbizid wirksame Menge bedeutet im Sinne der Erfindung eine Menge an einem oder mehreren Herbiziden, die geeignet ist, den Pflanzenwuchs negativ zu beeinflussen. Antidotisch wirksame Menge bedeutet im Sinne der Erfindung eine Menge an einem oder mehreren Safenern, die geeignet ist, die phytotoxische Wirkung von Pflanzenschutzmittelwirkstoffen (z.B. von Herbiziden) an Kulturpflanzen zu reduzieren.

Die Safener (B) eignen sich zur Reduktion phytotoxischer Effekte, die beim Einsatz von Herbiziden der allgemeinen Formel (I) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert z.B. auf Kulturen, in denen bisher ein Einsatz der Herbizide nicht möglich oder nur beschränkt möglich war.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 2,5 kg Wirkstoff je Hektar.

Die herbiziden Wirkstoffe der allgemeinen Formel (I) (A) und die Safener (B) können zusammen (z.B. als fertige Formulierung oder im Tank-mix-Verfahren) oder in beliebiger Reihenfolge nacheinander ausgebracht werden, z.B. durch Sprüh-, Gieß- und Spritzanwendung oder durch Granulatstreuung. Das Gewichtsverhältnis Herbizid der allgemeinen Formel (I) (A) : Safener (B) kann innerhalb weiter Grenzen variieren und liegt vorzugsweise im Bereich von 1:10000 bis 10000:1, insbesondere von 1:1000 bis 1000:1. Die jeweils optimalen Mengen an der allgemeinen Formel (I) (A) und Safener (B) sind vom Typ des verwendeten Herbizids und des verwendeten Safeners sowie von der Art und dem Entwicklungsstadium des zu behandelnden Pflanzenbestandes abhängig und lassen sich von Fall zu Fall durch einfache, routinemäßige Vorversuche ermitteln.

Die in der erfindungsgemäßen Herbizid-Safener-Kombination enthaltenen Safener (B) können je nach ihren Eigenschaften zur Vorbehandlung des Saatgutes der Kulturpflanze (z.B. zur Beizung des Saatguts) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche (einschließlich eventuell auf der Anbaufläche befindlichen Wassers, z.B. bei Reisapplikationen) vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

In einer bevorzugten Ausführungsform werden das Saatgut (z.B. Körner, Samen oder vegetative Vermehrungsorgane wie Knollen oder Sprossteile mit Knospen) oder Setzlinge mit den Safenern (B), gegebenenfalls in Kombination mit anderen agrochemischen Wirkstoffen, vorbehandelt. Zur Vorbehandlung des Saatguts können die Wirkstoffe z.B. durch Beizung an das Saatgut gebracht oder die Wirkstoffe und das Saatgut können in Wasser oder andere Lösungsmittel gegeben, und die Wirkstoffe z.B. durch Anlagerung oder Diffusion im Tauchverfahren oder durch Quellen oder Vorkeimen aufgenommen werden. Zur Vorbehandlung von Setzlingen können die jungen Pflanzen z.B. durch Spritzen, Tauchen oder Gießen mit den Safenern, gegebenenfalls in Kombination mit anderen agrochemischen Wirkstoffen, in Kontakt gebracht und anschließend verpflanzt und gegebenenfalls mit den Herbiziden (A) nachbehandelt werden.

Die Saatgut- oder Setzlingsbehandlung kann mit den Safenern (B) alleine oder gemeinsam mit anderen agrochemischen Wirkstoffen - wie Fungiziden, Insektiziden oder Mitteln zur Pflanzenstärkung, Düngung oder zur Beschleunigung der Quell- und Keimungsvorgänge - erfolgen. Dabei können die Safener nach der Vorbehandlungsanwendung anschließend nochmals vor, nach oder gemeinsam mit einem oder mehreren Herbiziden der Formel (I) eventuell auch in Kombination mit anderen bekannten Herbiziden angewandt werden. Durch die Vorbehandlung des Saatguts oder der Setzlinge kann eine verbesserte Langzeitwirkung der Safener erzielt werden.

Gegenstand der vorliegenden Erfindung ist somit weiterhin ein Verfahren zur Bekämpfung von unerwünschten Pflanzen in Pflanzenkulturen, das dadurch gekennzeichnet ist, dass die Komponenten (A) und (B) der erfindungsgemäßen Herbizid-Safener-Kombination auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden, z.B. gemeinsam oder getrennt. Dabei können einer oder mehrere Safener (B), vorzugsweise eine oder mehrere, insbesondere eine, Verbindung der Gruppen (S1) bis (S14) vor, nach oder gleichzeitig mit dem oder den Herbizid(en) der allgemeinen Formel (I) (A) auf die Pflanzen, das Saatgut oder die Fläche, auf der die Pflanzen wachsen (z.B. die Anbaufläche), appliziert werden. In einer bevorzugten Ausführungsform werden die Safener (B) zur Saatgutbehandlung eingesetzt.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind.

Monokotyle Unkräuter entstammen z.B. den Gattungen Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera. Dikotyle Unkräuter entstammen z.B. den Gattungen Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum, Euphorbia.

Bevorzugt wird in dem erfindungsgemäßen Verfahren eine wirksame Menge der Komponenten (A) und (B) zur Bekämpfung von Schadpflanzen angewendet in Pflanzenkulturen, beispielsweise in wirtschaftlich bedeutenden Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen.

Gegenstand der Erfindung ist auch die Verwendung der erfindungsgemäßen Herbizid-Safener-Kombinationen zur Bekämpfung von unerwünschtem Pflanzenwuchs, vorzugsweise in Pflanzenkulturen.

Die erfindungsgemäßen Herbizid-Safener-Kombinationen können nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Anwendung gebracht werden, oder als sogenannte Tankmischungen durch gemeinsame Verdünnung der getrennt formulierten oder partiell getrennt formulierten Einzelkomponenten mit Wasser hergestellt werden. Ebenfalls möglich ist die zeitlich versetzte Anwendung (Splitapplikation) der getrennt formulierten oder partiell getrennt formulierten Einzelkomponenten. Möglich ist auch die Anwendung der Einzelkomponenten oder der Herbizid-Safener-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination.

Die erfindungsgemäße Herbizid-Safener-Kombination kann auch zur Bekämpfung von Schadpflanzen in Kulturen von bekannten oder noch zu entwickelnden gentechnisch veränderten Pflanzen eingesetzt werden.

Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt. Weitere besondere Eigenschaften können in einer Toleranz oder Resistenz gegen abiotische Stressoren z. B. Hitze, Kälte, Trockenheit, Salz und ultraviolette Strahlung liegen.

Bevorzugt ist die Anwendung der erfindungsgemäßen Herbizid-Safener-Kombinationen oder deren Salze in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten. Vorzugsweise können die Verbindungen der Formel (I) als Herbizide in Nutzpflanzenkulturen eingesetzt werden, welche gegenüber den phytotoxischen Wirkungen der Herbizide resistent sind bzw. gentechnisch resistent gemacht worden sind.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche gegen bestimmte Herbizide vom Typ Glufosinate (vgl. z. B. EP-A-0242236, EP-A-242246) oder Glyphosate (WO 92/00377) oder der Sulfonylharnstoffe (EP-A-0257993, US-A-5013659) resistent sind,
- transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).
- gentechnisch veränderte Kulturpflanzen mit neuen Inhalts- oder Sekundärstoffen z. B. neuen Phytoalexinen, die eine erhöhte Krankheitsresistenz verursachen (EPA 309862, EPA0464461)
- gentechnisch veränderte Pflanzen mit reduzierter Photorespiration, die höhere Erträge und höhere Stresstoleranz aufweisen (EPA 0305398).
- Transgene Kulturpflanzen, die pharmazeutisch oder diagnostisch wichtige Proteine produzieren ("molecular pharming")
- transgene Kulturpflanzen, die sich durch höhere Erträge oder bessere Qualitat auszeichnen
- transgene Kulturpflanzen die sich durch eine Kombinationen z. B. der o. g. neuen Eigenschaften auszeichnen ("gene stacking")

Zahlreiche molekularbiologische Techniken, mit denen neue transgene Pflanzen mit veränderten Eigenschaften hergestellt werden können, sind im Prinzip bekannt; siehe z. B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z. B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h., sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Herbizid-Safener-Kombinationen in transgenen Kulturen eingesetzt werden, welche gegen Wuchsstoffe, wie z. B. Dicamba oder gegen Herbizide, die essentielle Pflanzenenzyme, z. B. Acetolactatsynthasen (ALS), EPSP Synthasen, Glutaminsynthasen (GS) oder Hydroxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, resistent sind.

Bei der Anwendung der erfindungsgemäßen Herbizid-Safener-Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Herbizid-Safener-Kombinationen zur Bekämpfung von Schadpflanzen in transgenen Kulturpflanzen.

Bevorzugt ist die Anwendung der erfindungsgemäßen Kombinationen in wirtschaftlich bedeutenden transgenen Kulturen von Nutz- und Zierpflanzen, z. B. von Getreide (z.B. Weizen, Gerste, Roggen, Hafer), Hirse, Reis, Maniok und Mais oder auch Kulturen von Zuckerrübe, Baumwolle, Soja, Raps, Kartoffel, Tomate, Erbse und anderen Gemüsekulturen.

Gegenstand der Erfindung ist deshalb auch die Verwendung der erfindungsgemäßen Herbizid-Safener-Kombinationen zur Bekämpfung von Schadpflanzen in transgenen Kulturpflanzen oder Kulturpflanzen, die Toleranz durch Selektionszüchtung aufweisen.

Die Herbizide (A) und die Safener (B) können gemeinsam oder getrennt in übliche Formulierungen z.B. zur Sprüh-, Gieß-, Spritz- und Saatgutbeizanwendung übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 Gew.-%.

Die Herbizide (A) und die Safener (B) können als solche oder in ihren Formulierungen auch in Mischung mit anderen agrochemischen Wirkstoffen, wie bekannten Herbiziden, zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.

Auch Mischungen mit anderen bekannten Wirkstoffen wie Fungiziden, Insektiziden, Akariziden, Nematiziden, Schutzstoffen gegen Vogelfraß, Pflanzennährstoffen und Bodenstrukturverbesserungsmitteln sind möglich, ebenso mit im Pflanzenschutz üblichen Zusatzstoffen und Formulierungshilfsmitteln.

Die Herbizide (A) und die Safener (B) können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht üblicherweise, z.B. durch Gießen, Spritzen, Sprühen, Streuen.

Die Wirkstoffe können auf die Pflanzen, Pflanzenteile, das Saatgut oder die Anbaufläche (Ackerboden) ausgebracht werden, vorzugsweise auf das Saatgut oder die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame Formulierung der erfindungsgemäßen Kombination an Wirkstoffen (A) und (B) hat den Vorteil der leichteren Anwendbarkeit, weil die Mengen der Komponenten bereits im optimalen Verhältnis zueinander eingestellt werden können. Außerdem können die Hilfsmittel in der Formulierung aufeinander optimal abgestimmt werden.

Als Kombinationspartner für die erfindungsgemäße Herbizid-Safener-Kombination in Mischungsformulierungen oder im Tank-Mix sind beispielsweise bekannte, vorzugsweise herbizide Wirkstoffe, die auf einer Inhibition von beispielsweise Acetolactat-Synthase, Acetyl-Coenzym-A-Carboxylase, PS I, PS II, HPPD, Phytoene-Desaturase, Protoporphyrinogen-Oxidase, Glutamine-Synthetase, Cellulosebiosynthese, 5-Enolpyruvylshikimat-3-phosphat-Synthetase beruhen, einsetzbar. Solche Verbindungen und auch andere einsetzbare Verbindungen mit teilweise unbekanntem oder anderem Wirkungsmechanismus sind z.B. in Weed Research 26, 441-445 (1986), oder in dem Handbuch "The Pesticide Manual", 12. Auflage 2000, oder 13. Auflage 2003 oder 14. Auflage 2006/2007, oder in dem entsprechenden "e-Pesticide Manual", Version 4.1 (2007-08), jeweils herausgegeben vom British Crop Protection Council, (im Folgenden auch kurz "PM"), und dort zitierter Literatur beschrieben. Listen von "Common names" sind auch in "The Compendium of Pesticide Common Names" im Internet verfügbar. Als literaturbekannte Herbizide, die mit den erfindungsgemäßen Mischungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere. Dabei sind eine und zum Teil auch mehrere Anwendungsformen genannt):
2,4-D, Acetochlor, Acifluorfen, Acifluorfen-sodium, Aclonifen, Alachlor, Alloxydim, Alloxydim-sodium, Ametryn, Amicarbazone, Amidosulfuron, Aminocyclopyrachlor, Aminopyralid, Amitrole, Anilofos, Asulam, Atrazine, Azafenidin, Azimsulfuron, Beflubutamid, Benazolin, Benazolin-ethyl, Benfuresate, Bensulfuron-methyl, Bentazone, Benzfendizone, Benzobicyclon, Benzofenap, Bicyclopyrone, Bifenox, Bilanafos, Bispyribac-natrium, Bromacil, Bromobutide, Bromofenoxim, Bromoxynil, Butachlor, Butafenacil, Butenachlor, Butralin, Butroxydim, Butylate, Cafenstrole, Carbetamide, Carfentrazone-ethyl, Chlomethoxyfen, Chloridazon, Chlorimuron-ethyl, Chlornitrofen, Chlorotoluron, Chlorsulfuron, Cinidon-ethyl, Cinmethylin, Cinosulfuron, Clefoxydim, Clethodim, Clodinafop-propargyl, Clomazone, Clomeprop, Clopyralid, Cloransulam-methyl, Cumyluron, Cyanazine, Cyclosulfamuron, Cycloxydim, Cyhalofop-butyl, Desmedipham, Dicamba, Dichlobenil, Dichlorprop, Dichlorprop-P, Diclofop-methyl, Diclosulam, Difenzoquat, Diflufenican, Diflufenzopyr, Dikegulacsodium, Dimefuron, Dimepiperate, Dimethachlor, Dimethametryn, Dimethenamid, Triaziflam, Diquat-dibromide, Dithiopyr, Diuron, Dymron, EPTC, Esprocarb, Ethalfluralin, Ethametsulfuron-methyl, Ethofumesate, Ethoxyfen, Ethoxysulfuron, Etobenzanid, Fenoxaprop-ethyl, Fenoxaprop-P-ethyl, Fenoxasulfone, Fentrazamide, Flamprop-M-isopropyl, Flamprop-M-methyl, Flazasulfuron, Florasulam, Fluazifop, Fluazifop-butyl, Fluazifop-P-butyl, Fluazolate, Flucarbazone-sodium, Flucetosulfuron, Fluchloralin, Flufenacet, Flufenpyr, Flumetsulam, Flumiclorac-pentyl, Flumioxazin, Fluometuron, Fluorochloridone, Fluoroglycofen-ethyl, Flupoxam, Flupyrsulfuronmethyl-sodium, Fluridone, Fluroxypyr, Fluroxypyr-butoxypropyl, Fluroxypyr-meptyl, Flurprimidol, Flurtamone, Fluthiacet-methyl, Fomesafen, Foramsulfuron, Glufosinate, Glufosinate-P, Glufosinate-ammonium, Glufosinate-P-ammonium, Glufosinate-P-sodium, Glyphosate, Halosulfuron-methyl, Haloxyfop, Haloxyfop-ethoxyethyl, Haloxyfop-methyl, Haloxyfop-P-methyl, Hexazinone, Imazamethabenz-methyl, Imazamox, Imazapic, Imazapyr, Imazaquin, Imazethapyr, Imazosulfuron, Indanofan, Indaziflam, Iodosulfuron-methyl-natrium, Ioxynil, Isoproturon, Isouron, Isoxaben, Isoxachlortole, Isoxaflutole, Ketospiradox, Lactofen, Lenacil, Linuron, MCPA, Mecoprop, Mecoprop-P, Mefenacet, Mesosulfuron-methyl, Mesotrione, Metamifop, Metamitron, Metazachlor, Metazosulfuron, Methabenzthiazuron, Methiozolin, Methyldymron, Metobromuron, Metolachlor, Metosulam, Metoxuron, Metribuzin, Metsulfuron-methyl, Molinate, Monolinuron, Naproanilide, Napropamide, Neburon, Nicosulfuron, Norflurazon, Orbencarb, Oryzalin, Oxadiargyl, Oxadiazon, Oxasulfuron, Oxaziclomefone, Oxyfluorfen, Paraquat, Pelargonic acid, Pendimethalin, Pendralin, Penoxsulam, Pentoxazone, Pethoxamid, Phenmedipham, Picloram, Picolinafen, Pinoxaden, Piperophos, Pretilachlor, Primisulfuron-methyl, Profluazol, Profoxydim, Prometryn, Propachlor, Propanil, Propaquizafop, Propisochlor, Propoxycarbazone-sodium, Propyrisulfuron, Propyzamide, Prosulfocarb, Prosulfuron, Pyraclonil, Pyraflufen-ethyl, Pyrazolate, Pyrazosulfuronethyl, Pyrazoxyfen, Pyribenzoxim, Pyributicarb, Pyridafol, Pyridate, Pyriftalid, Pyriminobac-methyl, Pyrithiobac-sodium, Quinclorac, Quinmerac, Quinoclamine, Quizalofop-ethyl, Quizalofop-P-ethyl, Quizalofop-P-tefuryl, Rimsulfuron, Saflufenacil, Sethoxydim, Simazine, Simetryn, S-Metolachlor, Sulcotrione, Sulfentrazone, Sulfometuron-methyl, Sulfosate, Sulfosulfuron, Tebuthiuron, Tepraloxydim, Terbuthylazine, Terbutryn, Thenylchlor, Thiazopyr, Thifensulfuron-methyl, Thiobencarb, Tiocarbazil, Tralkoxydim, Triallate, Triasulfuron, Tribenuron-methyl, Triclopyr, Tridiphane, Trifloxysulfuron, Trifluralin, Triflusulfuron-methyl und Tritosulfuron.

### Weitere mögliche Mischungspartner sind

Pyroxasulfone, Pyroxsulam, Orthosulfamuron, Pyrimisulfan, Prohexadione-Calcium, Bencarbazone, SYN-523, IDH-100, SYP-249, Monosulfuron, Ipfencarbazone (HOK-201), Pyribambenz-Isopropyl, Tefuryltrione, Bencarbazone, Tembotrione, Pyrasulfotole und Thiencarbazone-Methyl.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

### Biologische Beispiele:

### Herbizidwirkung und Safenerwirkung im Nachauflauf

Samen bzw. Rhizomstücke von mono- und dikotylen Schadpflanzen und von Kulturpflanzen werden in Torftöpfen in sandiger Lehmerde ausgelegt, mit Erde abgedeckt und im Gewächshaus unter guten Wachstumsbedingungen angezogen. Alternativ hierzu werden im Paddy-Reisanbau vorkommende Schadpflanzen in Töpfen kultiviert, in denen Wasser bis zu 2 cm über der Bodenoberfläche steht. Zehn bis zwanzig Tage nach der Aussaat werden die Versuchspflanzen im ein bis Dreiblattstadium behandelt. Die als wasserlösliche Pulver oder Suspensionen formulierten erfindungsgemäßen Herbizid-Safener-Wirkstoffkombinationen sowie in parallelen Versuchen die entsprechend formulierten Einzelwirkstoffe werden in verschiedenen Dosierungen mit einer Wasseraufwandmenge von umgerechnet 300 l/ha auf die grünen Pflanzenteile gesprüht und nach 2-3 Wochen Standzeit der Versuchspflanzen im Gewächshaus unter optimalen Wachstumsbedingungen die Wirkung der Präparate optisch im Vergleich zu unbehandelten Kontrollen bonitiert. Bei Reis oder bei Schadpflanzen, die im Reisanbau vorkommen, werden die Wirkstoffe auch direkt ins Bewässerungswasser gegeben (Applikation in Analogie zur sogenannten Granulatanwendung) oder auf Pflanzen und ins Bewässerungswasser gesprüht.

### Herbizidwirkung und Safenerwirkung im Vorauflauf

Samen bzw. Rhizomstücke von mono- und dikotylen Unkrautpflanzen und Kulturpflanzen wurden in Torftöpfen in sandiger Lehmerde ausgelegt und mit Erde abgedeckt. Die als wasserlösliche Pulver oder Suspensionen formulierten erfindungsgemäßen Herbizid-Safener-Wirkstoffkombinationen sowie in parallelen Versuchen die entsprechend formulierten Einzelwirkstoffe wurden dann in verschiedenen Dosierungen mit einer Wasseraufwandmenge von umgerechnet 600 bis 800 l/ha auf die Oberfläche der Abdeckerde appliziert.

Nach der Behandlung wurden die Töpfe im Gewächshaus aufgestellt und unter guten Wachstumsbedingungen für die Unkräuter und die Kulturpflanzen gehalten. Die optische Bonitur der Pflanzen- bzw. Auflaufschäden erfolgte nach dem Auflaufen der Versuchspflanzen nach einer Versuchszeit von 2 bis 4 Wochen im Vergleich zu unbehandelten Kontrollen.

### Saatgutbehandlung

Saatkörner von Kulturpflanzen wurden mit den als Suspensions- oder Emulsionskonzentraten formulierten erfindungsgemäßen Safenern und Wasser in Flaschen gemischt und gut geschüttelt, so dass die Saatkörner gleichmäßig mit der Formulierung des jeweiligen Safeners beschichtet wurden. Die Saatkörner bzw. die aufgelaufenen Pflanzen wurden dann im Vorauflauf- oder Nachauflaufverfahren entsprechend den Versuchen nach Beispielen 3.3 bzw. 3.2 mit Herbiziden getestet.

### Versuchsreihe I (Verbindung I-128):

### Weizen (Triso)

| Verabreichung | Herbizid | Dosierung Herbizid g (a.i./ha) | % Wirkung (ohne Safener) | Safener (SA) | Dosierung Safener g a.i./ha | % Wirkung (mit Safener) | % Reduktion |
|---|---|---|---|---|---|---|---|
| Vorauflauf | I-128 | 100 | 50 | Mefenpyr-diethyl | 200 | 25 | 50 |
| Vorauflauf | I-128 | 100 | 50 | Isoxadifenethyl | 200 | 35 | 30 |
| Vorauflauf | I-128 | 100 | 50 | Cyprosulfamide | 200 | 35 | 30 |
| Vorauflauf | I-128 | 100 | 50 | Cloquintocetmexyl | 200 | 30 | 40 |
| Vorauflauf | I-128 | 100 | 50 | Benoxacor | 200 | 20 | 60 |
| Vorauflauf | I-128 | 100 | 50 | Furilazole | 200 | 20 | 60 |
| Vorauflauf | I-128 | 100 | 50 | Fluxofenim | 200 | 40 | 20 |
| Vorauflauf | I-128 | 100 | 50 | Fenchlorazole | 200 | 30 | 40 |

### Versuchsreihe II (Verbindung I-128):

### Weizen (Triso)

| Verabreichung | Herbizid | Dosierung Herbizid g (a.i./ha) | % Wirkung (ohne Safener) | Safener (SA) | Dosierung Safener g a.i./ha | % Wirkung (mit Safener) | % Reduktion |
|---|---|---|---|---|---|---|---|
| Nachauflauf | I-128 | 50 | 40 | Mefenpyr-Diethyl | 100 | 30 | 25 |
| Nachauflauf | I-128 | 50 | 40 | Benoxacor | 100 | 30 | 25 |
| Nachauflauf | I-128 | 50 | 40 | Isoxadifenethyl | 100 | 30 | 25 |
| Nachauflauf | I-128 | 50 | 40 | Cyprosulfamide | 100 | 20 | 50 |
| Nachauflauf | I-128 | 50 | 40 | Cloquintocetmexyl | 100 | 30 | 25 |
| Nachauflauf | I-128 | 50 | 40 | Furilazole | 100 | 30 | 25 |
| Nachauflauf | I-128 | 50 | 40 | Fluxofenim | 100 | 30 | 25 |
| Nachauflauf | I-128 | 50 | 40 | Fenchlorazole | 100 | 30 | 25 |

### Versuchsreihe III (Verbindung I-128):

### Gerste (Adonis)

| Verabreichung | Herbizid | Dosierung Herbizid g (a.i./ha) | % Wirkung (ohne Safener) | Safener (SA) | Dosierung Safener g a.i./ha | % Wirkung (mit Safener) | % Reduktion |
|---|---|---|---|---|---|---|---|
| Nachauflauf | I-128 | 50 | 20 | Isoxadifenethyl | 100 | 10 | 50 |
| Nachauflauf | I-128 | 25 | 30 | Cyprosulfamide | 50 | 20 | 33 |
| Nachauflauf | I-128 | 25 | 30 | Cloquintocetmexyl | 50 | 20 | 33 |
| Nachauflauf | I-128 | 25 | 30 | Furilazole | 50 | 20 | 33 |
| Nachauflauf | I-128 | 25 | 30 | Fluxofenim | 50 | 20 | 33 |
| Nachauflauf | I-128 | 25 | 30 | Fenchlorazole | 50 | 20 | 33 |

### Versuchsreihe IV (Verbindung I-128):

### Mais (Aventura)

| Verabreichung | Herbizid | Dosierung Herbizid g (a.i./ha) | % Wirkung (ohne Safener) | Safener (SA) | Dosierung Safener g a.i./ha | % Wirkung (mit Safener) | % Reduktion |
|---|---|---|---|---|---|---|---|
| Vorauflauf | I-128 | 25 | 50 | Isoxadifenethyl | 50 | 40 | 20 |
| Vorauflauf | I-128 | 50 | 65 | Benoxacor | 100 | 50 | 23 |
| Nachauflauf | I-128 | 100 | 40 | Mefenpyr-diethyl | 200 | 20 | 50 |
| Nachauflauf | I-128 | 100 | 40 | Cyprosulfamide | 200 | 20 | 50 |
| Nachauflauf | I-128 | 100 | 40 | Cloquintocetmexyl | 200 | 10 | 75 |
| Nachauflauf | I-128 | 100 | 40 | Furilazole | 200 | 20 | 50 |
| Nachauflauf | I-128 | 100 | 40 | Fenchlorazole | 200 | 30 | 25 |

### Zusammensetzung, enthaltend

(A) eine oder mehrere Verbindungen der Formel (I) oder deren Salze, 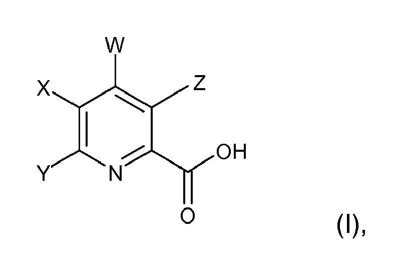 in welchen
   - X: für Wasserstoff, Halogen, C₁-C₆-Alkyl, C₁-C₆-Alkoxy, C₁-C₆-Alkylthio, Aryloxy, Nitro, C₁-C₆-Haloalkyl, C₁-C₆-Haloalkoxy, Thiocyano oder Cyano steht;
   - Y: für eine Aryl-Gruppe, ausgewählt aus einer Gruppe, bestehend aus Phenyl, Indanyl und Naphthyl. oder für eine Heteroaryl-Gruppe, ausgewählt aus der Gruppe 5- und 6-gliedriger heteroaromatischer Ringe, enthaltend ein oder mehrere Heteroatome, wobei die heteroaromatischen Ringe optional mit einem anderen aromatischen System annelliert sein können, steht; die Aryl-Gruppe oder die Heteroaryl-Gruppe kann unsubstituiert oder substituiert sein mit einem oder mehreren Substituenten aus einer Gruppe bestehend aus Halogen, Hydroxy, Nitro, Cyano, Aryloxy, Formyl, C₁-C₆-Alkyl, Cyclopropyl, C₂-C₆-Alkenyl, C₂-C₆-Alkinyl, C₁-C₆-Alkoxy, halogeniertes C₁-C₆-Alkyl, C₁-C₄-Alkoxy-substituiertes C₁-C₄-Alkyl, halogeniertes C₁-C₆-Alkoxy, C₁-C₄-Alkoxy-substituiertes C₁-C₄-Alkoxy, C₁-C₆-Acyl, fluoriertes Acetyl, fluoriertes Propionyl, wobei die beiden letztgenannten Gruppen jeweils mehrere Fluoratome im Alkylrest enthalten können, C₁-C₆-Alkylthio, C₁-C₆-Alkylsulfinyl, C₁-C₆-Alkylsulfonyl, halogeniertes C₁-C₆-Alkylthio, Aryl, Amino, C₁-C₄-Monoalkylamino, C₂-C₈-Dialkylamino, C₁-C₆-Alkylcarbonyloxy, C₁-C₆-Alkylcarbonylamino, (C=O)OH, C₁-C₆-Alkoxycarbonyl, (C=O)NH₂, C₁-C₆-Alkylaminocarbonyl, C₁-C₆-Dialkylaminocarbonyl, -CH₂CH₂O-, CH₂CH₂CH₂O-, -OCH₂O-, -O(CH₂)₂O-;
   - Z: für Halogen, C₁-C₆-Alkyl, C₁-C₆-Alkoxy, C₁-C₆-Alkylthio, Aryloxy, Nitro, C₁-C₆-Haloalkyl, C₁-C₆-Haloalkoxy, Thiocyano oder Cyano steht;
   - W: für NO₂, N₃, NR¹R², N=CR³R⁴ oder NHN=CR³R⁴ steht;
   - R¹ und R²: unabhängig voneinander für Wasserstoff, C₁-C₆-Alkyl, C₃-C₆-Alkenyl, C₃-C₆-Alkinyl, Aryl, Heteroaryl, Hydroxy, C₁-C₆-Alkoxy, Amino, C₁-C₆-Acyl, C₁-C₆-Alkoxycarbonyl, C₁-C₆-Alkylaminocarbonyl, C₁-C₆-Alkylsulfonyl, C₁-C₆-Trialkylsilyl oder C₁-C₆-Dialkylphosphonyl stehen; oder
   - R¹ und R²: zusammen mit N für einen fünf- oder sechsgliedrigen gesättigten oder ungesättigten Ring, der optional zusätzlich O-, S- oder N-Heteroatome enthalten kann, stehen;
   - R³ und R⁴: unabhängig voneinander für Wasserstoff, C₁-C₆-Alkyl, C₃-C₆-Alkenyl, C₃-C₆-Alkinyl, Aryl oder Heteroaryl stehen; oder
   - R³ und R⁴: zusammen mit =C für einen fünf- oder sechsgliedrigen gesättigten Ring stehen;
   oder herbizid-aktive Derivate der Carbonsäure-Gruppe,
   sowie
(B) einen oder mehrere Safener, ausgewählt aus der Gruppe, bestehend aus
S1) Verbindungen aus der Gruppe heterocyclischer Carbonsäurederivate:
   S1^{a}) Verbindungen vom Typ der Dichlorphenylpyrazolin-3-carbonsäure (S1^{a});
   S1^{b}) Derivate der Dichlorphenylpyrazolcarbonsäure (S1^{b});
   S1^{c}) Derivate der 1,5-Diphenylpyrazol-3-carbonsäure (S1^{c});
   S1^{d}) Verbindungen vom Typ der Triazolcarbonsäuren (S1^{d});
   S1^{e}) Verbindungen vom Typ der 5-Benzyl- oder 5-Phenyl-2-isoxazolin-3- carbonsäure, oder der 5,5-Diphenyl-2-isoxazolin-3-carbonsäure(S1^{e}).
S4) Verbindungen aus der Klasse der Acylsulfonamide (S4):
   S4^{a}) N-Acylsulfonamide der Formel (S4^{a}) und deren Salze, 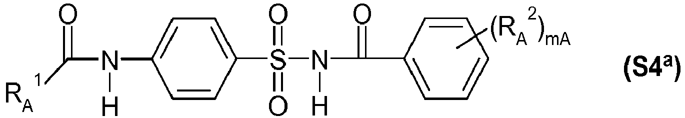 worin
      - R_{A}¹: (C₁-C₆)Alkyl, (C₃-C₆)Cycloalkyl, wobei die 2 letztgenannten Reste durch v_{A} Substituenten aus der Gruppe Halogen, (C₁-C₄)Alkoxy, (C₁-C₆)Haloalkoxy und (C₁-C₄)Alkylthio und im Falle cyclischer Reste auch durch (C₁-C₄)Alkyl und (C₁-C₄)Haloalkyl substituiert sind;
      - R_{A}²: Halogen, (C₁-C₄)Alkyl, (C₁-C₄)Alkoxy, CF₃;
      - m_{A}: 1 oder 2;
      - v_{A}: ist 0, 1, 2 oder 3 bedeuten;
   S4^{b}) Verbindungen vom Typ der 4-(Benzoylsulfamoyl)benzamide der Formel (S4^{b}) und deren Salze, 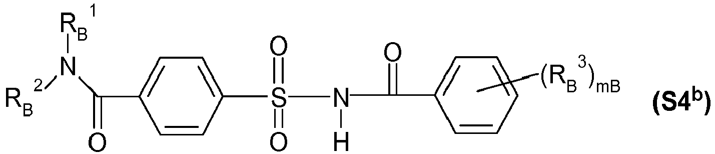 worin
      - R_{B}¹, R_{B}²: unabhängig voneinander Wasserstoff, (C₁-C₆)Alkyl, (C₃-C₆)Cycloalkyl, (C₃-C₆)Alkenyl, (C₃-C₆)Alkinyl,
      - R_{B}³: Halogen, (C₁-C₄)Alkyl, (C₁-C₄)Haloalkyl oder (C₁-C₄)Alkoxy und
      - m_{B}: 1 oder 2 bedeuten.
   S4^{c}) Verbindungen aus der Klasse der Benzoylsulfamoylphenylharnstoffe der Formel (S4^{c}), 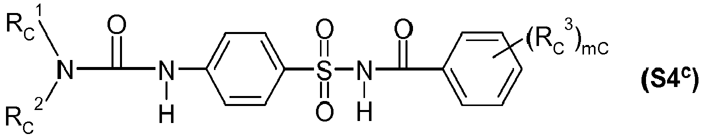 worin
      - R_{C}¹, R_{C}²: unabhängig voneinander Wasserstoff, (C₁-C₈)Alkyl, (C₃-C₈)Cycloalkyl, (C₃-C₆)Alkenyl, (C₃-C₆)Alkinyl,
      - R_{C}³: Halogen, (C₁-C₄)Alkyl, (C₁-C₄)Alkoxy, CF₃
      - m_{C}: 1 oder 2 bedeuten.
S2) Verbindungen aus der Gruppe der 8-Chinolinyloxyderivate (S2):
   S2^{a}) Verbindungen vom Typ der 8-Chinolinoxyessigsäure (S2^{a});
   S2^{b}) Verbindungen vom Typ der (5-Chlor-8-chinolinoxy)malonsäure (S2^{b}).
S3) Wirkstoffe vom Typ der Dichloracetamide (S3).
S5) Wirkstoffe aus der Klasse der Hydroxyaromaten und der aromatischaliphatischen Carbonsäurederivate (S5).
S6) Wirkstoffe aus der Klasse der 1,2-Dihydrochinoxalin-2-one (S6).
S7) Verbindungen aus der Klasse der Diphenylmethoxyessigsäurederivate (S7).
S8) Verbindungen der Formel (S8) 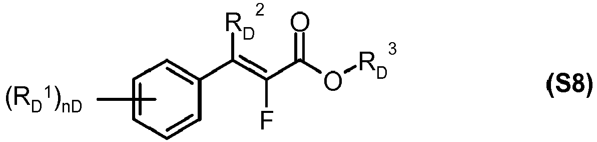 worin die Symbole und Indizes folgende Bedeutungen haben:
   - R_{D}¹: ist Halogen, (C₁-C₄)Alkyl, (C₁-C₄)Haloalkyl, (C₁-C₄)Alkoxy, (C₁-C₄)Haloalkoxy,
   - R_{D}²: ist Wasserstoff oder (C₁-C₄)Alkyl
   - R_{D}³: ist Wasserstoff, (C₁-C₈)Alkyl, (C₂-C₄)Alkenyl, (C₂-C₄)Alkinyl, oder Aryl, wobei jeder der vorgenannten C-haltigen Reste unsubstituiert oder durch einen oder mehrere Reste aus der Gruppe, bestehend aus Halogen und Alkoxy substituiert ist; oder deren Salze
   - n_{D}: ist eine ganze Zahl von 0 bis 2.
S9) Wirkstoffe aus der Klasse der 3-(5-Tetrazolylcarbonyl)-2-chinolone (S9).
S10) Verbindungen der Formeln (S10^{a}) oder (S10^{b}) 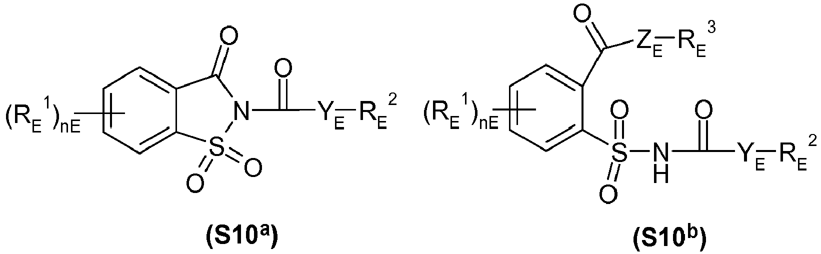 worin
   - R_{E}¹: Halogen, (C₁-C₄)Alkyl, Methoxy, Nitro, Cyano, CF₃, OCF₃
   - Y_{E}, Z_{E}: unabhängig voneinander O oder S,
   - n_{E}: eine ganze Zahl von 0 bis 4,
   - R_{E}²: (C₁-C₁₆)Alkyl, (C₂-C₆)Alkenyl, (C₃-C₆)Cycloalkyl, Aryl; Benzyl, Halogenbenzyl,
   - R_{E}³: Wasserstoff oder (C₁-C₆)Alkyl bedeuten.
S11) Wirkstoffe vom Typ der Oxyimino-Verbindungen (S11), die als Saatbeizmittel bekannt sind.
S12) Wirkstoffe aus der Klasse der Isothiochromanone (S12).
S13) Eine oder mehrere Verbindungen aus Gruppe (S13):
   "Naphthalic anhydrid" (1,8-Naphthalindicarbonsäureanhydrid) (S13-1),
   "Fenclorim" (4,6-Dichlor-2-phenylpyrimidin) (S13-2), "Flurazole"
   (Benzyl-2-chlor-4-trifluormethyl-1,3-thiazol-5-carboxylat) (S13-3),
   "CL 304415" (CAS-Reg.Nr. 31541-57-8)
   (4-Carboxy-3,4-dihydro-2H-1-benzopyran-4-essigsäure) (S13-4),
   "MG 191" (CAS-Reg.Nr. 96420-72-3) (2-Dichlormethyl-2-methyl-1,3-dioxolan) (S13-5), "MG-838" (CAS-Reg.Nr. 133993-74-5)
   (2-propenyl 1-oxa-4-azaspiro[4.5]decane-4-carbodithioate) (S13-6),
   "Disulfoton" (O,O-Diethyl S-2-ethylthioethyl phosphordithioat) (S13-7),
   "Dietholate" (O,O-Diethyl-O-phenylphosphorotioat) (S13-8),
   "Mephenate" (4-Chlorphenyl-methylcarbamat) (S13-9).
S14) Wirkstoffe, die neben einer herbiziden Wirkung gegen Schadpflanzen auch Safenerwirkung an Kulturpflanzen wie Reis aufweisen,
wobei Zusammensetzungen ausgeschlossen sind, die folgende Kombinationen weiterer herbizider Wirkstoffe und Safener enthalten:
- Pinoxaden und Cloquintocet-mexyl,
- Pyroxsulam und Cloquintocet-mexyl,
- Clodinafop-propargyl und Cloquintocet-mexyl,
- Mesosulfuron-methyl und Iodosulfuron-methyl-natrium und Mefenpyr-diethyl,
- Fenoxaprop-P-ethyl und Mefenpyr-diethyl.

Zusammensetzung wie zuvor beschrieben, dadurch gekennzeichnet, dass in der Verbindung der allgemeinen Formel (I)
- X: für Wasserstoff oder Fluor steht.

Zusammensetzung wie zuvor beschrieben, dadurch gekennzeichnet, dass in der Verbindung der allgemeinen Formel (I)
- Y: für eine Phenyl-Gruppe oder für eine Pyridinyl-, Benzofuranyl-, Benzothienyl-, Thienyl- oder Thiazolylgruppe steht, wobei die Phenyl-Gruppe oder die Heteroaryl-Gruppe substituiert sein kann mit einem oder mehreren Substituenten, ausgewählt aus der Gruppe, bestehend aus Halogen, C₁-C₂-Alkyl, C₁-C₂-Alkoxy, C₁-C₂-Halogenalkyl und C₁-C₂-Halogenalkoxy.

Zusammensetzung wie zuvor beschrieben, dadurch gekennzeichnet, dass in der Verbindung der allgemeinen Formel (I)
- Z: für Halogen steht.

Zusammensetzung wie zuvor beschrieben, dadurch gekennzeichnet, dass in der Verbindung der allgemeinen Formel (I)
- W: für NH₂ oder N(R¹)(R²)
steht, wobei
R¹ und R², jeweils unabhängig voneinander, für C₁-C₆-Alkyl stehen.

Zusammensetzung wie zuvor beschrieben, dadurch gekennzeichnet, dass der Safener ausgewählt ist aus der Gruppe, bestehend aus Daimuron (S14-1), Benoxacor (S3-4), Furilazol [(S3-10) bzw. (S3-11)], Fluxofenim (S11-2), Fenchlorazol(-ethylester) (S1-7), Mefenpyr-diethyl (S1-1), Cloquintocet-mexyl (S2-1), Isoxadifen-ethyl (S1-11), Cyprosulfamide (S4-1), Flurazole (S13-3), Oxabetrinil (S11-1), Dichlormid (S3-1) und Dietholate (S13-8).

Zusammensetzung wie zuvor beschrieben, dadurch gekennzeichnet, dass der Safener ausgewählt ist aus der Gruppe, bestehend aus Mefenpyr-diethyl (S1-1), Isoxadifen-ethyl (S1-11), Cyprosulfamide (S4-1), Fenchlorazol-ethylester (S1-7), Benoxacor (S3-4), Cloquintocet-mexyl (S2-1), Fluxofenim (S11-2) und Furilazol [(S3-10) bzw. (S3-11)].

Zusammensetzung wie zuvor beschrieben, enthaltend als Komponente (A) die Verbindung 4-Amino-3-chlor-6-(4-chlor-2-fluor-3-methoxyphenyl)pyridin-2-carbonsäuremethylester und als Komponente (B) Isoxadifen-Ethyl.

Zusammensetzung wie zuvor beschrieben, enthaltend als Komponente (A) die Verbindung 4-Amino-3-chlor-6-(4-chlor-2-fluor-3-methoxyphenyl)pyridin-2-carbonsäuremethylester und als Komponente (B) Cyprosulfamide.

Verfahren zur Bekämpfung von unerwünschten Pflanzen, worin die Verbindung der allgemeinen Formel (I) und mindestens eine Verbindung aus der Gruppe (B) wie zuvor beschrieben, gemeinsam oder getrennt appliziert werden.

Verfahren wie zuvor beschrieben, dadurch gekennzeichnet, dass die Pflanzenkulturen aus der Gruppe der Ackerbaukulturen, Gemüsekulturen oder Dauer- und Plantagenkulturen stammen.

Verfahren wie zuvor beschrieben, dadurch gekennzeichnet, dass die Pflanzenkulturen transgen sind oder Toleranz durch Selektionszüchtung aufweisen.

Verwendung einer Zusammensetzung wie zuvor beschrieben zur Bekämpfung von Schadpflanzen.

## Patentansprüche

1. Zusammensetzung, enthaltend
(A) die Verbindung 4-Amino-3-chlor-6-(4-chlor-2-fluor-3-methoxyphenyl)-pyridin-2-carbonsäuremethylester
sowie
(B) einen oder mehrere Safener, ausgewählt aus der Gruppe, bestehend aus
Cyprosulfamide und
S4^{c}) Verbindungen aus der Klasse der Benzoylsulfamoylphenylharnstoffe der Formel (S4^{c}), 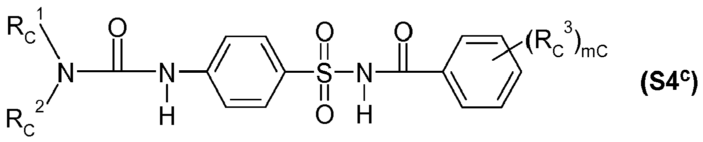 worin
R_{C}¹, R_{C}² unabhängig voneinander Wasserstoff, (C₁-C₈)Alkyl, (C₃-C₈)Cycloalkyl, (C₃-C₆)Alkenyl, (C₃-C₆)Alkinyl,
R_{C}³ Halogen, (C₁-C₄)Alkyl, (C₁-C₄)Alkoxy, CF₃
m_{C} 1 oder 2 bedeuten.

2. Zusammensetzung gemäß Anspruch 1, wobei die Verbindungen aus der Klasse der Benzoylsulfamoylphenylharnstoffe der Formel (S4c) ausgewählt ist aus der Gruppe bestehend aus
1-[4-(N-2-Methoxybenzoylsulfamoyl)phenyl]-3-methylharnstoff,
1-[4-(N-2-Methoxybenzoylsulfamoyl)phenyl]-3,3-dimethylharnstoff und
1-[4-(N-4,5-Dimethylbenzoylsulfamoyl)phenyl]-3-methylharnstoff.

3. Zusammensetzung nach Anspruch 1, enthaltend als Komponente (A) die Verbindung 4-Amino-3-chlor-6-(4-chlor-2-fluor-3-methoxyphenyl)pyridin-2-carbonsäuremethylester und als Komponente (B) Cyprosulfamide.

4. Verfahren zur Bekämpfung von unerwünschten Pflanzen, worin die Verbindung der allgemeinen Formel (I) und mindestens eine Verbindung aus der Gruppe (B) gemäß einem der Ansprüche 1 bis 3, gemeinsam oder getrennt appliziert werden.

5. Verfahren gemäß Anspruch 4, **dadurch gekennzeichnet, dass** die Pflanzenkulturen aus der Gruppe der Ackerbaukulturen, Gemüsekulturen oder Dauer- und Plantagenkulturen stammen.

6. Verfahren gemäß Anspruch 4 oder 5, **dadurch gekennzeichnet, dass** die Pflanzenkulturen transgen sind oder Toleranz durch Selektionszüchtung aufweisen.

7. Verwendung einer Zusammensetzung gemäß einem der Ansprüche 1 bis 3 zur Bekämpfung von Schadpflanzen.
